# EUROPÄISCHE PATENTSCHRIFT

(11) **EP 3 445 205 B1**
(45) Veröffentlichungstag und Bekanntmachung des Hinweises auf die Patenterteilung: **09.02.2022**
(21) Anmeldenummer: 17717674.0
(22) Anmeldetag: 12.04.2017
(51) Int. Cl.: A46B 3/04, A46B 3/06, A46B 9/04, A46B 9/06, A46D 3/04

(54) **BÜRSTENPRODUKT**
BRUSH PRODUCT
PRODUIT DE TYPE BROSSE

(30) Priorität: 20.04.2016 EP 16166248; 19.08.2016 EP 16184981
(43) Veröffentlichungstag der Anmeldung: 27.02.2019
(60) Teilanmeldung: 21217509.5
(73) Patentinhaber: Trisa Holding AG, 6234 Triengen (CH)
(72) Erfinder: STRÄHLER, Reto, 6043 Adligenswil (CH); LÖTSCHER, Jost, 6233 Büron (CH); TREVISAN, Oskar, 4665 Oftringen (CH); ZWIMPFER, Martin, 6004 Luzern (CH)
(74) Vertreter: Latscha Schöllhorn Partner AG
(86) Internationale Anmeldenummer: PCT/EP2017/058757
(87) Internationale Veröffentlichungsnummer: WO 2017/182355

(56) Entgegenhaltungen:
- EP-A1- 0 472 857
- DE-A1- 4 027 288
- DE-A1- 4 029 610
- JP-A- 2000 342 334
- US-A1- 2002 004 964
- US-A1- 2011 138 560

## Beschreibung

Die Erfindung betrifft ein Bürstenprodukt, insbesondere eine Zahnbürste, bei dem bzw. der das Borstenfeld aus mehreren unterschiedlichen Gruppen von Reinigungselementen gebildet wird.

Aus der US 2002/0004964 A1 ist eine Zahnbürste bekannt, welche eine gewisse Variabilität hinsichtlich der Anordnung von verschiedenartigen Borstentypen aufweist, um einerseits einen effizienten Zahnreinigungseffekt zu erzielen sowie um andererseits, durch die Verwendung von Einzelborsten mit relativ grossem Durchmesser und entsprechend grossen Abständen zwischen den einzelnen Borsten, eine schnelle Trocknung der Zahnbürste nach dem Gebrauch herbeiführen zu können.

US 2011/138560 offenbart eine Zahnbürste deren Kopf spritzgegossen wird, um mit Borstenbüscheln zu befüllende Borstenbüschellöcher zu erhalten, in die die Borstenbüschel dann eingesetzt und in einigen Ausführungsformen mit einem Ankerdraht befestigt werden. Im Bereich der freien Enden werden die Borstenbüschel anschließend auf die richtige Länge zugeschnitten und abgerundet. Um die unterschiedlichen Borstenbüschel auf die gewünschte Länge zuschneiden zu können (d.h. im Endbereich), können diverse Verdränger verwendet werden, die den Borstenbereich seitlichdurchlaufen und bestimmte Reinigungselemente seitlich verschieben oder wegbiegen, so dass ausgewählte Büschel bearbeitet werden können, während die weggebogenen Büschel nicht bearbeitet werden. Dabei kann davon ausgegangen werden, dass die Konfiguration des Kopfes auch beim ankerfreien Tufting (AFT-Verfahren) vorteilhaft ist.

Die EP 0 165 546 B1 offenbart eine weitere Zahnbürste, welche mittels eines vielgestaltigen Borstenbesatzes bei der Zahnpflege unterschiedliche Wirkungen erzielen kann und welcher unterschiedlichen Abnutzungserscheinungen Rechnung trägt.

In der EP 0 150 785 B1 wird ein Verfahren zum Verbinden von Borsten beschrieben, mit einem Borstenträger, die jeweils aus thermoplastischem Kunststoff bestehen, indem die Borsten an ihrem einen Ende und der Borstenträger an seiner Borstenaufnahmeseite aufgeschmolzen, anschließend Borsten und Borstenträger zusammengeführt und in dieser Lage gegebenenfalls bis zum Erstarren der Schmelze gehalten werden, wobei die Borstenenden so erwärmt werden, dass eine Rückbildung der orientierten, gestreckten Moleküle in die nicht orientierte geknäuelte Molekülform erfolgt und sich dadurch eine Verdickung am Borstenende bildet, und wobei die Borsten mit ihrem verdickten Ende in den aufgeschmolzenen Borstenträger eingedrückt werden, bis dessen Schmelze hinter dem verdickten Ende wieder zusammenfließt. Vor dem oder anlässlich des Erwärmens der Aufnahmeseite des Borstenträgers können in diesen Ausnehmungen zum Einsetzen der Borsten eingeformt werden. Ein solches Verfahren wird allgemein als Hot-Tufting-Verfahren bzw. HT-Verfahren bezeichnet.

In der DE 20 2016 102 996 U1 wird eine Vorrichtung zum Herstellen einer zumindest eine Borste oder zumindest ein Borstenbüschel aufweisenden Bürste beschrieben, wobei die Bürste einen Borstenträger mit zumindest einer Verankerungsöffnung für die zumindest eine Borste oder das zumindest eine Borstenbüschel besitzt, wobei die Vorrichtung eine Halterung für den Borstenträger sowie ein als Pressstempel ausgebildetes Werkzeugteil mit zumindest einer Aufnahmeöffnung für die zumindest eine Borste oder das zumindest eine Borstenbüschel aufweist, wobei die Aufnahmeöffnung auf der dem Borstenträger zugewandten Stirnseite des Werkzeugteils mündet, und wobei das Werkzeugteil eine zumindest Abschnitte der Stirnseite erwärmende Heizung besitzt, die so ausgebildet und so geregelt ist, dass die Stirnseite auf eine Temperatur von maximal 140°C, insbesondere maximal 130°C aufgeheizt wird. Das zumindest eine Borstenbüschel wird an seinen rückseitigen Borstenenden angeschmolzen und wird in die entsprechende Verankerungsöffnung des Borstenträgers eingeführt. Anschließend wird mit dem als Pressstempel ausgebildete Werkzeugteil Druck und Wärme auf den Borstenträger ausgeübt wobei sich der Kunststoff des Borstenträgers plastisch verformt und damit die Verankerungsöffnung um das Borstenbüschel so schließt, dass das Borstenbüschel unlösbar am Borstenträger verankert wird. Dabei bildet die Borstenschmelze an den rückseitigen Enden des Borstenbüschels mit einer größeren Basis als der Borstenbüschel Querschnitt eine Verankerungshilfe. Auch bei diesem Verfahren handelt es sich um ein HT-Verfahren.

Weitere Verfahren zum Befestigen von Borsten an bzw. in einem Borstenträger werden in EP 0 346 646 B2, WO 00/28856, EP 0 812 143 B1, WO 93/12690 oder US 6,752,949 B2 beschrieben.

Aus der WO 2014/092674 A1 ist weiterhin ein Mundpflegegerät bekannt, welches einen Körper mit einem Kopfabschnitt mit einer Vorder- und einer Rückseite aufweist, wobei mindestens ein Reinigungselement an der Vorderseite des Kopfabschnitts des Körpers angeordnet ist, und mit einem Rand, welcher sich von der Rückseite des Kopfteils des Körpers erstreckt, wobei der Rand einen oder mehrere geschwächte Abschnitte aufweist und sich entlang eines Umfangsbereichs des Kopfabschnitts des Körpers erstreckt und wobei elastisches Material an der Rückseite des Kopfabschnitts des Körpers angeordnet ist und der Rand um wenigstens einen Teil des elastischen Materials herum angeordnet ist.

Die WO 2016/008576 A1 beschreibt ein Trägerplättchen für etwa eine Zahnbürste mit einer Mehrzahl von das Trägerplättchen durchsetzenden Lochungen, in die aus Borsten bestehende Borstenbündel einsetzbar und an dem Trägerplättchen ankerlos befestigbar sind, wobei das Trägerplättchen an seiner den in die Lochungen eingeführten Borstenbündeln abgewandten Rückseite eine Mehrzahl von Materialvorsprüngen aufweist, wobei die Materialvorsprünge aufschmelzbar und zur Befestigung der Borstenbündel an dem Trägerplättchen in eine Bündelbefestigungsebene pressbar sind.

In der DE 10 2013 100 194 A1 werden eine Vorrichtung und ein Verfahren zum Herstellen von Bürsten, insbesondere Zahnbürsten, beschrieben, welche mehrere zu Borstenbüscheln zusammengefasste Borsten aufweisen. Dabei ist zumindest ein Büschelträger vorhanden, der mehrere Löcher zum Einschieben von Borstenbüscheln aufweist, deren Lochbild dem Büschelmuster der herzustellenden Bürste entspricht. Mittels einer Schweißvorrichtung werden die Borsten von in den Büschelträger eingeschobenen Büscheln auf der Rückseite des Büschelträgers miteinander geschmolzen und unter Bildung einer Schicht von Borstenschmelze miteinander verschweißt. Der Büschelträger wird dann samt Borstenbüschel mittels Schweissen (z.B. Ultraschallschweissen) mit dem Bürstengriff unlösbar verbunden. Vorzugsweise verfügt der Bürstengriff über eine entsprechende Ausnehmung zur Verankerung des Büschelträgers.

Aus der WO 2012/000689 A1 ist ein Verfahren zum Herstellen von Bürsten mittels einer Vorrichtung bekannt, bei dem zunächst entweder wenigstens ein vorgefertigtes Basisteil vorgesehen wird, an dem Borstenbüschel befestigt sind und das einen Abschnitt der fertigen Bürste bildet, wobei am Basisteil rückseitig eine separate Stützschicht aufgebracht ist, oder wenigstens eines vorgefertigten Basisteils, das durch Umspritzen von mehreren Borstenbüscheln mit zuvor miteinander verschmolzenen Borstenenden gebildet ist, wobei anschliessend das beborstete Basisteil einem Spritzgusswerkzeug zugeführt und darin positioniert wird, wobei jedes Basisteil in einer Kavität einer Formhälfte des Spritzgusswerkzeugs mit seinem Rand am Rand einer von der zugeordneten Kavität ausgehenden Öffnung aufliegt und die Borstenbüschel in die Öffnung ragen, und wobei schliesslich ein Bürstenabschnitt an die Rückseite des Basisteils angespritzt wird.

Die WO 2012/123004 A1 offenbart Verfahren zum Herstellen von insbesondere Zahnbürsten mittels einer Vorrichtung, welches die folgenden Schritte aufweist: sequenzielles Entnehmen von Borstenbüscheln aus einem Borstenvorrat, in welchem die Borsten parallel gepackt untergebracht sind; Transportieren des entnommenen Borstenbüschels mittels einer Transporteinrichtung zu einem, einen Teil der fertigen Bürste bildenden Basisteil, welches Öffnungen zur Aufnahme von einzelnen Borstenbüscheln hat; sequenzielles Einstoßen des Borstenbüschels in die zugeordnete Öffnung von der Rückseite des Basisteils aus, wobei zwischen der Transporteinrichtung und der Rückseite des Basisteils eine Führungsplatte mit Umlenkkanälen vorgesehen ist, durch die Borstenbüschel in die Öffnung im Basisteil gestoßen werden; und ankerfreies Befestigen der Borstenbüschel am Basisteil.

In der WO 2013/050181 A1 werden ein Verfahren und eine Vorrichtung zum Herstellen von Bürsten, insbesondere Zahnbürsten, beschrieben, welche vorsehen, dass Öffnungen für Borstenbüschel in einem Borstenträger vorhanden sind, die an ihrer vorderseitigen und rückseitigen Mündung versetzte Flächenschwerpunkte haben und/oder andere Geometrien.

Schliesslich offenbart die WO 2013/159799 A1 eine Borstenträger-Spritzgießvorrichtung zum Spritzgießen eines Borstenträgers einer Bürste, der Öffnungen aufweist, in die Borstenbüschel gestopft werden, wobei die Vorrichtung eine erste und eine zweite Spritzgussformhälfte umfasst, die in geschlossenem Zustand zwischen sich wenigstens eine einen Borstenträger abbildende, mit flüssigem Kunststoff zu befüllende Kavität begrenzen, wobei die erste Formhälfte eine die Rückseite des Borstenträgers bildende erste Fläche und die zweite Formhälfte eine die Vorderseite des Borstenträgers bildende zweite Fläche hat. Zur Bildung der Öffnungen sind von der ersten und/oder zweiten Fläche ausgehende, vorstehende Vorsprünge vorhanden. Der Querschnitt des Vorsprungs einer Öffnung am Übergang der ersten Fläche zum angrenzenden Vorsprung ist anders als der Querschnitt des derselben Öffnung zugeordneten Vorsprungs am Übergang der zweiten Fläche zum zugeordneten Vorsprung, d.h. es ist etwa eine andere Querschnittform vorgesehen oder eine andere Anzahl von Querschnitten, weil sich der Vorsprung aufzweigt.

Es ist die Aufgabe der vorliegenden Erfindung, Bürstenprodukte bereitzustellen, deren Borstenfelder noch variabler sind und eine nochmals verbesserte Reinigungsleistung aufweisen.

Diese Aufgabe wird erfindungsgemäss gelöst mittels eines Bürstenprodukts, insbesondere einer Zahnbürste, gemäß Anspruch 1. Bevorzugte Ausführungsformen sind in den abhängigen Ansprüchen definiert. Bei AFT Verfahren wird ein Bündel im Trägerplättchen der Bürste aus konventionellen, extrudierten Borsten gebildet welche vorzugsweise durch eine einzelne zusammenhängende Lochung und vorzugsweise auch durch einen zusammenhängenden Schmelzteppich gebildet werden zu welchem mindestens die Borsten des einen Bündels an ihren rückseitigen Enden geschmolzen werden.

Ein weiteres mögliches Verfahren (HT-Verfahren) zur Herstellung umfasst zumindest die folgenden Schritte: (a) Spritzen eines Grundkörpers aus einem oder mehreren Hart- und/oder Weichmaterialien und/oder Material für gespritzte Borsten mit Sacklöchern und/oder Aussparungen für Borstenbündel im Kopfteil; optional werden am Grundkörper Weichelemente und/oder gespritzten Borsten angespritzt (b) Bereitstellen der Borsten mittels chem. Bearbeiten und/oder mechanisch. Bearbeiten und/oder Schneiden und/oder Verrunden und/oder Zusammenführen und/oder Aufteilen von Bündeln (Picks) in die gewünschte Form, beispielsweise in Form von Puck-Bündeln und/oder in Form von Mini-Bündeln und/oder in Form von Raster-Bündeln und/oder in Form von Langen Bündeln und/oder in Form von Konventionellen Bündeln und einbringen der Bündel in eine Halte-/Pressvorrichtung; (c) Verschmelzen der Borsten an Ihren zur Montage im Borstenträger vorgesehen rückseitigen Enden der Borstenbündel und Bildung einer vorzugsweise zusammenhängenden Borstenschmelze; (d) Einführen der verschmolzenen Borstenbündel mittels einer Halte-/Pressvorrichtung in die entsprechenden Sacklöcher und/oder Aussparungen im Grundkörper, wobei der Grundkörper vor dem Einführen der Borstenbündel bereits vorgewärmt sein kann; (e) jedenfalls teilweises Erwärmen des Borstenträgers vorzugsweise mittels der Halte-/Pressvorrichtung; und (f) Montage der Borsten unter Ausübung von Druck und unter Einfluss von Wärme durch die Halte-/Pressvorrichtung auf das Kopfteil derart, dass sich der Kunststoff des Kopfteils so verformt, dass jedenfalls die Geometrie der Sacklöcher und/oder Aussparungen jedenfalls teilweise die Form einer Verankerung annimmt. Die Borstenschmelze an den rückseitigen Enden der Borstenbündel bilden dabei eine Verankerungshilfe.

Bei HT Verfahren wird ein Bündel in einem Sackloch des Grundkörpers der Bürste aus konventionellen, extrudierten Borsten gebildet welche vorzugsweise durch ein einzelnes zusammenhängendes Sackloch und vorzugsweise auch durch eine zusammenhängende Borstenschmelze gebildet werden, zu welcher mindestens die Borsten des einen Bündels an ihren rückseitigen Enden geschmolzen werden.

Der Kunststoff des Borstenträgers wird bei der Montage (f) vorzugsweise auf eine Temperatur die gleich oder etwas höher ist als seine Glasübergangstemperatur aber unterhalb seiner Schmelztemperatur liegt, erwärmt.

Vorzugsweise wird der Kunststoff des Borstenträgers erwärmt auf eine Temperatur (gerechnet in Grad Kelvin), welche zwischen 2% und 12%, weiter vorzugsweise zwischen 4% und 10% und noch bevorzugter zwischen 6% und 8% oberhalb seiner Glasübergangstemperatur liegt. Dies gilt insbesondere für Borstenträgermaterialien deren Glasübergangstemperatur grösser gleich 300° Kelvin beträgt. Bei Borstenträgermaterialien mit einer Glasübergangstemperatur von kleiner 300° K zwischen 10% und 40%, vorzugsweise zwischen 20% und 30% über der Glasübergangstemperatur (wiederum in Grad Kelvin gerechnet). Bei sehr hohen Drücken kann allerdings auch unterhalb der Glasübergangstemperatur gearbeitet werden

Bevorzugt weist die Halte-/Pressvorrichtung an ihrer Stirnseite eine entsprechende Heizvorrichtung auf (das Erwärmen kann aber auch mittels einer separaten Heizvorrichtung erfolgen) mit welcher regelmässig die gesamte Kontaktfläche zwischen der Halte-/Pressvorrichtung und dem Borstenträger aufgeheizt wird. Der Borstenträger kann optional auch bereits vor der Bündelmontage mittels einer zusätzlichen Vorrichtung vorgewärmt werden. Dies kann die Geschwindigkeit und damit den Durchsatz zusätzlich erhöhen.

Die Kontaktzeit zwischen der Halte-/Pressvorrichtung und dem Borstenträger beträgt vorzugsweise zwischen 7 Sekunden und 9 Sekunden, weiter vorzugsweise zwischen 7,5 Sekunden und 8,5 Sekunden und noch bevorzugter 7,75 Sekunden bis 8,25 Sekunden.

Die Halte-/Pressvorrichtung übt vorzugsweise einen Druck von 250 bar bis 350 bar auf den Borstenträger auf, weiter vorzugsweise zwischen 275 bar und 325 bar (d.h. insbesondere je nach Material und Kontaktzeit) . Vor allem wenn unterhalb der Glasübergangstemperatur des jeweiligen Materials gearbeitet werden soll, kommen mit Vorteil Druckbereiche von 420 bar bis 620 bar, bevorzugter von 460 bar bis 580 bar und noch bevorzugter von 500 bar bis 540 bar zur Anwendung.

Erfindungsgemäß sind im zentralen Trägerbereich die Reinigungselemente einer Gruppe von Reinigungselementen im Wesentlichen symmetrisch angeordnet, im oberen Trägerbereich sind die Reinigungselemente einer Gruppe von Reinigungselementen oberhalb der Querachse des Borstenträgers angeordnet, im unteren Trägerbereich sind die Reinigungselemente einer Gruppe von Reinigungselementen unterhalb der Querachse des Borstenträgers angeordnet, im rechten Trägerbereich sind die Reinigungselemente einer Gruppe von Reinigungselementen rechts von der Längsachse des Borstenträgers angeordnet und im linken Trägerbereich sind die Reinigungselemente einer Gruppe von Reinigungselementen links von der Längsachse des Borstenträgers angeordnet.

Unter im Wesentlichen symmetrisch ist vorliegend zu verstehen, dass die entsprechenden Reinigungselemente einer Gruppe von Reinigungselementen im zentralen Trägerbereich spiegelsymmetrisch, vorzugsweise zu der Längs- und/oder der Querachse des Borstenträgers, und/oder punktsymmetrisch, vorzugsweise zu dem Schnittpunkt der Längsachse und der Querachse des Borstenträgers angeordnet sind.

Vorzugsweise sind die Reinigungselemente im unteren und oberen Trägerbereich spiegelsymmetrisch zu der Querachse des Borstenträgers und/oder punktsymmetrisch zu dem Schnittpunkt der Längsachse und der Querachse des Borstenträgers angeordnet. Weiter vorzugsweise sind die Reinigungselemente im linken und rechten Trägerbereich spiegelsymmetrisch zu der Längsachse des Borstenträgers angeordnet und/oder punktsymmetrisch zu dem Schnittpunkt der Längsachse und der Querachse des Borstenträgers.

In einer weiteren bevorzugten Ausführungsform ist der zentrale Trägerbereich etwas versetzt in Richtung des unteren und/oder des oberen und/oder des rechten und/oder des linken Trägerbereichs des Borstenträgers angeordnet. Er kann sich aber auch in jeden dieser Trägerbereiche hineinerstrecken, d.h. sowohl in den unteren und/oder den oberen und/oder den rechten und/oder den linken Trägerbereich des Borstenträgers.

Erfindungsgemäß wird das Borstenfeld von vier verschiedenen Gruppen von Reinigungselementen gebildet. Hierdurch kann eine besonders gute Abstimmung zwischen einer hohen Variabilität des Borstenträgers einerseits und einer effektiven Reinigungswirkung andererseits erreicht werden. Gemäß der vorliegenden Erfindung umfasst die erste Gruppe von Reinigungselementen Puck-Bündel, die zweite Gruppe von Reinigungselementen Raster-Bündel, die dritte Gruppe von Reinigungselementen Lange Bündel und die vierte Gruppe von Reinigungselementen Konventionelle Bündel. Diese Gruppen von Reiningungselementen zeichnen sich allgemein durch ein gutes Zusammenwirken und eine Steigerung der Reinigungswirkung aus. In einer weiteren bevorzugten Ausführungsform der vorliegenden Erfindung weisen jedenfalls die Puck-Bündel und/oder die Raster-Bündel und/oder die Langen Bündel und/oder die Konventionellen Bündel aneinander liegende Borsten auf. Die Bündel bilden damit auch optisch eine Einheit. Auf diese Weise können der entsprechende Reinigungseffekt der Bündel und die Herstellung der Bündel optimal gestaltet werden. Beim Aufschmelzen der rückseitigen (nicht nutzungsseitigen) Enden verbinden sich diese Borsten und bilden eine Einheit. Vorzugsweise im AFT Verfahren kann sich die Borstenschmelze der Einzelnen Bündel zu einem sog. Schmelzteppich, welcher mindestens einen Teil der Rückseite des Trägerplättchens bedeckt, verbinden. In einer weiteren bevorzugten Ausführungsform der vorliegenden Erfindung können in jedem der Trägerbereiche eine oder mehrere der Gruppen von Reinigungselementen angeordnet sein. Vorzugsweise sind in einem Trägerbereich maximal vier Gruppen von Reinigungselementen angeordnet, weiter vorzugsweise maximal drei Gruppen von Reinigungselementen und noch bevorzugter maximal zwei Gruppen von Reinigungselementen. Auch hierdurch lässt sich der jeweils gewünschte Reinigungseffekt sehr fein einstellen und optimieren.

In einer weiteren Ausführungsform sind die Weichelemente und/oder gespritzten Borsten der ersten Gruppe von Reinigungselementen mittels Spritzguss und vorzugsweise aus zumindest einer Weichmaterialkomponente und/oder zumindest einem Material für gespritzte Borsten gebildet.

Die Weichelemente und/oder gespritzten Borsten der ersten Gruppe von Reinigungselementen werden vorliegend mittels Spritzguss sowie ohne konventionelle, extrudierte Borsten hergestellt (diese werden vorzugsweise verwendet für die Reinigungselemente der Gruppen zwei bis sechs). Sie bestehen vorzugsweise aus Weichmaterial bzw. aus Borstenmaterial für gespritzte Borsten.

Der besondere Vorteil dieser ersten Gruppe von Reinigungselementen liegt darin, dass sie als Massageelemente zur Massage und/oder Reinigung etwa des Gaumens verwendet werden können (Weichelemente) sowie zur Flächenreinigung der Zahnoberfläche und zur Reinigung der Interdentalbereiche (hierzu werden die gespritzten Borsten vorzugsweise konisch ausgebildet und aus einem speziellen Material gefertigt).

Die Weichelemente und/oder gespritzten Borsten der ersten Gruppe von Reinigungselementen werden vorzugsweise am Hartmaterial verankert (d.h. etwa gemäss dem AFT-, IMT- bzw. HT-Verfahren).

Die Weichelemente und/oder gespritzten Borsten der ersten Gruppe von Reinigungselementen können als Einzelelemente (d.h. etwa ein Weichelement mit einer Grundfläche) oder als Formationen (d.h. mehrere Weichelemente oder mehrere gespritzte Borsten mit jeweils einer eigenen Grundfläche) vorgesehen sein.

Die Grundfläche(n) können dabei Ausnehmung(en) aufweisen. Diese Ausnehmungen können leer sein oder aber es können andere Reinigungselemente darin enthalten sein. Leere Ausnehmungen bzw. Freiräume dienen grundsätzlich einem verbesserten Bewegungsspielraum für die Borsten und generell für die Reinigungselemente (d.h. wo dies erwünscht ist).

Die Weichelemente und/oder gespritzten Borsten der ersten Gruppe von Reinigungselementen können weiterhin so ausgebildet sein, dass sie zumindest teilweise der Aussenkontur des Bürstenkopfes (welche im Wesentlichen dessen äusserem Rand entspricht) folgen und zwar vorzugsweise zumindest rund 20% oder 30% oder 40% oder 50% der entsprechenden Aussenkonturlänge.

Die gespritzten Borsten bilden bevorzugt regelmässige Formen auf einer Grundfläche aus, d.h. sie sind beispielsweise Reihen-förmig, Wellen-förmig, Gitter-förmig (offen oder geschlossen), Fischgrät-förmig (mit geraden oder schrägen Gräten), Stern-förmig, Rauten-förmig, Sanduhr-förmig, Halbmond-förmig, Kreis-förmig, Kreisring-förmig, Kreissegment-förmig, Halbkreisring-förmig, Viertelkreisring-förmig bzw. auf einer Linie der Kontur der Grundfläche folgend, ausgebildet.

Vorzugsweise sind im Falle von mehreren Weichelementen und/oder gespritzten Borsten innerhalb eines Borstenfeldes diese symmetrisch zueinander angeordnet, d.h. etwa spiegelsymmetrisch zur Längsachse und/oder zur Querachse des Borstenträgers oder aber punktsymmetrisch etwa zum Schnittpunkt der Längsachse und der zur Querachse.

Formationen von Weichelementen und/oder gespritzten Borsten (d.h. mehrere Grundflächen) sind bevorzugt strukturiert angeordnet. Sie können beispielsweise einer Linie folgen und dabei etwa eine Welle bzw. Wellenform bilden. Die Formationen können auch einer Geometrie folgen und beispielsweise einen Kreis oder ein Oval bilden. Die Formationen weisen bevorzugt auch eine eigene Symmetrie auf d.h. sie sind etwa spiegelsymmetrisch und/oder punktsymmetrisch angeordnet.

Die Weichelemente und/oder gespritzten Borsten (sowohl als Einzelelemente oder als Formationen) weisen vorzugsweise eine Topografie auf. Diese kann flach, Dom-förmig, Wannen-förmig, Cup-förmig, Zinnen-förmig, Minarett-förmig, Reihen-förmig, Kreisring-förmig, in Form von Logos oder Buchstaben, erhaben, eingelassen etc. ausgebildet sein.

Innerhalb der Topografie von Weichelementen und/oder gespritzten Borsten treten bevorzugt sich wiederholende und kombinierte Muster wie etwa Waben, Gitter, Längsprofile oder Querprofile auf.

Die Oberflächenstruktur der Weichelemente und/oder gespritzten Borsten ist vorzugsweise poliert, erodiert, oder strukturiert ausgestaltet.

Die Weichelemente und/oder gespritzten Borsten weisen eine Höhe auf, welche vorzugsweise 1, 2 oder 3 mm kürzer ist als die Höhe von konventionellen, extrudierten Borsten.

Die Stellung der Weichelemente und/oder gespritzten Borsten ist vorzugsweise senkrecht zum Bürstenkopf (d.h. in Entformungsrichtung des Spritzgiesswerkzeugs) oder aber winklig, wobei auch eine Konusform öffnend oder schliessend ausgestaltet sein kann.

Spezielle Eigenschaften können für die Weichelemente und/oder gespritzten Borsten durch Zugabe von speziellen Masterbatches (z.B. abrasiven Partikeln) oder aber durch die Verwendung von wasserlöslichen Polymeren bereitgestellt werden.

Die Herstellung der Weichelemente und/oder gespritzten Borsten erfolgt bevorzugt zusammen mit der Hartmaterial des Bürstenkopfs (HT, IMT) bzw. der Hartmaterial des Trägerplättchens (AFT) (Mehrkomponentenspritzguss). Alternativ kann auch ein separater Spritzgussprozess und ein anschliessendes Einsetzen bzw. Verbinden der Weichelemente und/oder gespritzten Borsten am Bürstenkopf bzw. Trägerplättchen vor oder nach der Montage der Borstenbündel vorgesehen werden. In diesem Fall können das Weichelement und/oder die gespritzten Borsten als EinKomponenten-Teil nur bestehend aus einem Material (Weichelement aus Weichmaterial bzw. die gespritzten Borsten aus einem Material für gespritzte Borsten) hergestellt sein oder aber als Zwei-Komponenten-Teil (Weichelement aus Weichmaterial und Hartmaterial im 2k Spritzguss bzw. gespritzte Borsten aus Material für gespritzte Borsten und Hartmaterial auch im 2k Spritzguss) vorgesehen werden, wobei das Hartmaterial zur Verankerung mit dem Hartmaterial des Bürstenkopfs bzw. Trägerplättchens dient (etwa mittels Schweissen, Kleben, mechanischen oder thermischen Verfahren oder Kombinationen davon) .

In einer weiteren bevorzugten Ausführungsform der vorliegenden Erfindung nehmen die Puck-Bündel der zweiten Gruppe von Reinigungselementen eine Fläche auf dem Borstenträger von zumindest 25 mm², vorzugsweise zumindest 50 mm² und besonders bevorzugt von zumindest 75 mm² ein.

Unter Puck-Bündeln, d.h. der zweiten Gruppe von Reinigungselementen, versteht man vorliegend eines oder einige wenige grosse zusammenhängende Bündel mit hoher Borstendichte im Borstenfeld sowie vorzugsweise mit einer grossen Anzahl von Borsten in einem einzelnen Bündel. Die einzelnen Borsten liegen in hoher Dichte aneinander an. Die Borsten des Bündels sind in der Regel über einen zusammenhängenden Schmelzteppich bzw. eine Borstenschmelze miteinander verbunden. Beim AFT Verfahren können noch weitere (auch nicht Puck-Bündel) mit demselben Schmelzteppich verbunden sein. Beim HT Verfahren bildet ein Punk-Bündel in der Regel eine von anderen Bündeln nicht verbundene Borstenschmelze.

Die Borstendichte in einem Puck-Bündel beträgt vorzugsweise 70 bis 200 Borsten/mm², weiter vorzugsweise 100 bis 170 Borsten/mm².

Die Anzahl an Borstenenden pro Puck-Bündel beträgt vorzugsweise 200 bis 10000, weiter vorzugsweise 500 bis 5000 noch bevorzugter 800 bis 5000 und noch weiter bevorzugt 1000 bis 4000. Bei sehr grossen Puck Bündeln welche einen wesentlichen Anteil des Borstenfeldes bedecken können 10000 Borstenenden überschritten werden

Die Dichte der Puck-Bündel auf dem Bürstenkopf beträgt 1, 2, 3, 4, 5 oder 6 vorzugsweise 1 bis 4 weiter vorzugsweise 2 bis 3 Puck-Bündel pro Bürstenkopf.

Auf diese Weise kann eine hohe Borstendichte und damit eine besonders wirksame Flächenreinigung erzielt werden.

Die Puck-Bündel weisen vorzugsweise ein dickeres Schmelzbad als andere Bündelformen sowie einen Verankerungsrand auf. Sie können im IMT, AFT-Verfahren oder aber auch im Hot Tufting bzw. HT-Verfahren hergestellt werden.

Auch die Puck-Bündel können als Einzelelemente (d.h. mit einer Grundfläche) oder als Formationen (d.h. mit mehreren Grundflächen) vorgesehen sein.

Die Puck-Bündel können ebenfalls eine, zwei, drei, vier, fünf, sechs oder mehrere Ausnehmungen bzw. Freiräume aufweisen bzw. umschliessen, wobei die Ausnehmungen leer bzw. unbesetzt (nicht mit Borsten besetzt) sein können oder andere Reinigungselemente bzw. Bündelformen (z.B. Mini-Bündel, Konventionelle Bündel) enthalten können.

Die Puck-Bündel bzw. ihre Grundflächen können Kreisförmig, Kreisring-förmig, Kreissegment-förmig Sternförmig, dreieckig, polygonförmig, rechteckig oder quadratisch (jeweils auch mit einer vorzugsweise mittig angeordneten Ausnehmung), etc. ausgebildet sein.

Vorzugsweise folgen die Aussenkonturen der Punk-Bündel im Wesentlichen mind. teilweise den Aussenkonturen des Bürstenkopfes.Die Puck-Bündel bzw. deren Rand ist vorzugsweise teilweise parallel der Aussenkontur des Bürstenkopfes folgend angeordnet. Sie können zumindest rund 20%, 30%, 40% oder 50% der entsprechenden Kontourlänge folgen.

Für die Puck-Bündel werden vorzugsweise gleiche Borsten verwendet, weiter vorzugsweise zugespitzte Borsten. Dabei werden möglichst feine zugespitzte Borsten mit einem Nenndurchmesser des nicht zugespitzten Borstenteils von 0.025 - 0.175 mm vorzugsweise 0.05 - 0.125 mm verwendet. Dies garantiert eine feine Struktur trotz der sehr hohen Borstendichte. Es können aber auch unterschiedliche Borstentypen gemischt werden. Die Unterschiede können dabei bestehen im Durchmesser, der bzw. den Farben, dem verwendeten Masterbatch und dessen Eigenschaften, der Herstellung bzw. Anzahl verwendete Materialien (konventionell extrudiert oder co-extrudiert oder Borsten aus mehreren Materialkomponenten), der Form der Spitzen (zugespitzt bzw. abgerundet), den verwendeten Materialien oder der Querschnittsform, etc.

Es können somit jedenfalls unterschiedliche Borsten in verschiedenen Puck-Bündeln innerhalb eines Borstenfeldes eingesetzt werden oder aber auch innerhalb eines einzelnen Puck-Bündels.

Die Puck-Bündel sind innerhalb eines Borstenfeldes vorzugsweise spiegelsymmetrisch zur Längsachse und/oder zur Querachse des Borstenträgers und/oder punktsymmetrisch (vorzugsweise zum Schnittpunkt der beiden Achsen) angeordnet.

Die Topografie (in dieser Schrift zu verstehen als Oberfläche gebildet durch nutzungsseitige Borstenenden oder Reinigungselementen) innerhalb eines Puck-Bündels ist vorzugsweise flach, Dom-förmig, Wannen-förmig, Cup-förmig, Zinnen-förmig, Minarett-förmig, Reihen-förmig, in Form von Logos oder Buchstaben, erhaben, eingelassen etc. ausgestaltet.

Die Topografien werden weiter vorzugsweise mittels unterschiedlichen Borstenfarben, Borstentypen und/oder unterschiedlichen Borstendurchmessern innerhalb eines Puck-Bündels unterstützt. D.h. verschiedene Borstenlängen können über unterschiedliche Eigenschaften verfügen, wobei gleiche Borstenlängen über gleiche Eigenschaften verfügen können.

Die Topografie eines Puck-Bündels bildet vorzugsweise Muster aus. Dabei kann es sich um regelmässige, sich wiederholende Muster wie etwa Waben, Gitter, Längs-Profile, Quer-Profile oder aber Längs- und Quer-Profile handeln.

Die Symmetrie der Topografie innerhalb eines Puck-Bündels kann spiegelsymmetrisch zur Längs- und/oder Querachse des Borstenträgers sein und oder punktsymmetrisch (vorzugsweise zum Schnittpunkt der beiden Achsen).

Die Stellung der Borsten eines Puck-Bündels gegenüber dem Bürstenkopf kann konisch ausgestaltet sein (Borsten stehen in Winkeln zur Verankerungsebene bzw. auch zueinander) und zwar sich konisch öffnend oder konisch schliessend (z.B. mit runder Basisfläche als Kegelstumpf). Alternativ kann das Puck-Bündel etwa eine Schrägstellung einnehmen. In diesem Fall würden die Borsten im Wesentlichen denselben Winkel gegenüber dem Bürstenkopf einnehmen z.B. mit rechteckiger Basisfläche als Parallelepiped (3D-Rombus). Selbstverständlich können für diese Art Puck-Bündel jegliche Grundflächen eingesetzt werden (mögliche Formen von Grundflächen siehe weiter oben).

In einer bevorzugten Ausführungsform sind Puck-Bündel mit frei liegender Borstenschmelze vorgesehen. Die Form derartiger Ausnehmungen bzw. Freiräume kann etwa kreisförmig, oval, quadratisch, dreieckig, rechteckig, sternförmig, linienförmig, rasterförmig, etc. sein. Die Zonen frei liegender Borstenschmelze können flächig sein oder nur dünne Linien einnehmen. Die Zonen frei liegender Borstenschmelze können eine sich wiederholende Struktur ausbilden (rasterförmig, schachbrettartig etc.) Die sich wiederholenden Strukturen können auch in Teilbereichen der freilegenden Borstenschmelze vorkommen. Weiter vorzugsweise folgen sie der Kontur des Puck-Bündels. Die frei liegende Borstenschmelze ist hierbei als aufgeschmolzenes Borstenmaterial (Borstenschmelze) zu verstehen, welches alleine einen Teil der nutzungsseitigen Oberfläche im Borstenfeld einnimmt. Die freiliegende Borstenschmelze wird in diesem Sinne nicht nutzungsseitig von einem Material der Trägerplatte (AFT) oder Borstenträgers (HT, IMT) abgedeckt und ist in der Regel von der Nutzungsseite her erreichbar.

Vorzugsweise beträgt die Bündeldichte bei den Puck-Bündeln 5 Bündel auf 450 mm² vorzugsweise auf 750 mm² (d.h. im Schnitt 90 mm² pro Bündel vorzugsweise 150 mm² pro Bündel).

Die Verankerung der Puck-Bündel erfolgt vorzugsweise mittels eines AFT-, HT- oder IMT-Verfahrens (In Mould Tufting).

Vorliegend wird unter dem Begriff Pick (oder Bündel Pick) eine maschinenseitige Einheit zur Bildung von Borstenbündel (die Ausführungen gelten selbstverständlich für alle beschriebenen Bündel Formen) verstanden. Im konventionellen Ankerstanzverfahren bildet ein Pick ein Borstenbündel aus.

Beim Ankerstanzverfahren wird ein Bündel in einem Sackloch des Grundkörpers der Bürste aus konventionellen, extrudierten Borsten gebildet. Ein Bündel im Bürstenkopf weist in der Regel die gleiche Anzahl an Borsten auf wie ein Pick (Bündel) der Stanzmaschine. Die konventionellen Borsten werden gefaltet und mittels Anker im Sackloch befestigt.

Bei Ankerlosen Verfahren (HT, AFT, IMT) können einzelne Picks im nachfolgenden Prozess weiter aufgeteilt oder zusammengeführt werden um die gewünschte Bündelform bzw. Bündelgrösse zu erreichen. Die Grösse des Picks kann mit modernen Herstellungsanlagen variiert werden, beispielsweise mit einem sog. variablen Kreisbogen kann dabei ein grosses Spektrum in der Anzahl der abgeteilten Borsten erreicht werden. Ein Pick kann so in der Regel 20 bis 150 Borsten umfassen, vorzugsweise 30 bis 130, dies je nach Anwendung/Verfahrenstechnik etc. Innerhalb eines Picks können der Borstentyp, die Borstenfarbe sowie der Borstendurchmesser unterschiedlich sein. Die unterschiedlichen Typen werden entsprechend gemischt der Herstellungsmaschine zugeführt oder mittels speziellem Verfahren auf der Herstellungsmaschine während dem Abteilen gemischt.

Die Borsten können vor dem Abteilen in Picks bearbeitet, abgerundet oder zugespitzt werden. Das Abteilen für Puck-Bündel kann in einem Arbeitsgang erfolgen, d.h. die Borsten für das Puck-Bündel werden in einem Arbeitsgang zu einer Einheit abgeteilt (ein Pick) oder aber das Puck-Bündel wird aus mehreren (einzelnen) Picks zusammengefügt.

Die Borstenschmelze bildet, insbesondere im HT-Verfahren, mindestens innerhalb des Puck-Bündels vorzugsweise eine zusammenhängende, stabile Schicht (da sie auf einer grösseren Fläche nicht gestützt wird). Die Dicke der Borstenschmelze ist grundsätzlich grösser als jene beim AFT-Verfahren, vorzugsweise um 0.5 - 1.5 mm, noch bevorzugter um 1 mm.

Bei den Puck-Bündeln werden bevorzugt die rückseitigen Borstenenden angeschmolzen (optional können sie vorab auch geschnitten werden). Bei überschüssiger Borstenschmelze an den Aussenrändern (dahin wird sie verdrängt) wird diese optional auf die gewünschte Kontur geformt, beispielsweise mittels Stanzen, Schneiden etc. und/oder es wird ein Rand erzeugt für eine Verankerung.

Optional kann innerhalb eines Puck-Bündels mit einem werkzeugseitigen Stützstift frei liegende Schmelze erzeugt werden. Vorzugsweise bleibt dabei Schmelze über dem Stützstift zusammenhängend (bei AFT- oder IMT-Verfahren) oder es wird ein Loch zur Verankerung gebildet (bei HT-Verfahren). Die Dicke der freiliegenden Schmelze beträgt vorzugsweise von 0.1 mm bis 1 mm. Eine Montage kann im AFT-Verfahren etwa mittels einem dünnem Rahmen als Trägerplatte geschehen. Alternativ können aber auch die Puck-Bündel separat gefertigt werden und als Montageteil in die AFT- oder HT-Maschine zugeführt und montiert werden.

In einer weiteren Ausführungsform weisen die Mini-Bündel der dritten Gruppe von Reinigungselementen eine Anzahl Borsten pro Bündel von höchstens 20, vorzugsweise von höchstens 18 und besonders bevorzugt von höchstens 16 auf. Unter Mini-Bündeln werden vorliegend kleinste Bündel mit sehr wenigen konventionellen, extrudierten aneinander anliegenden Borsten verstanden. Die Mini-Bündel sind vorzugsweise in Formationen/Gruppen (mehrere Grundflächen) angeordnet. Sie können jedoch auch einzeln angeordnet sein (eine Grundfläche). Die Anzahl Bündel pro Formation beträgt dabei vorzugsweise 2, 3, 4, 5, 6, 7, 8, 9, 10, 11 oder 12. Weiter vorzugsweise beträgt die Anzahl Borsten pro Bündel unter 20 vorzugsweise unter 18, ganz besonders bevorzugt unter 16.

Die Anzahl der Mini-Bündel Formationen pro Borstenfeld beträgt vorzugsweise 1, 2, 3, 4, 5, 6, 7, 8 oder 9.

Der grosse Vorteil der Mini-Bündel liegt in der sehr effizienten Interdentalreinigungswirkung, zudem wird durch den Einsatz von Minibündeln eine Teppichbildung (im Borstenfeld) verhindert.

Die Verankerung der Borsten erfolgt bei den Mini-Bündeln wie auch bei konventionellen Bündeln vorzugsweise mittels dem AFT- oder HT-Verfahren. Es können bevorzugt Formationen mit unterschiedlichen Borsten gebildet werden.

Die Grundfläche der Mini-Bündel ist vorzugsweise kreisrund, sie kann aber auch oval, quadratisch, polygonal, sichelförmig, rechteckig oder mehreckig sein.

Vorzugsweise werden für die Mini-Bündel die gleichen Borsten pro Bündel verwendet. Die Mini-Bündel bestehen weiter bevorzugt aus einem einzigen Pick oder einem Teil eines Picks (z.B. 1/2 Pick, 1/3 Pick oder 1/4 Pick). Es ist wie oben beschrieben auch möglich maschinenseitig kleinste mögliche Picks weiter aufzuteilen, um auf die sehr geringe Anzahl Borsten pro Mini-Bündel zu kommen. Das Aufteilen kann nach dem Pick in einem zusätzlichen Verfahrensschritt gemacht werden.

In unterschiedlichen Mini-Bündeln können unterschiedliche Borsten verwendet werden. Die Unterschiede bestehen etwa im Durchmesser, den Farben, dem Masterbatch, der Borstenart (konventionelle extrudierte oder co-extrudierte Borsten), der Form der Borsten (zugespitzt oder abgerundet), den verwendeten Materialien oder aber im Querschnitt.

Einzelne Minibündel können Formationen (Gruppen) bilden.

Eine Formation von Mini-Bündeln wird aus Mini-Bündeln mit einer ähnlichen Anzahl Borsten gebildet und/oder ist strukturiert angeordnet und/oder verfügt über gleiche Grundflächen.

Innerhalb einer Formation von Mini-Bündeln können in den einzelnen Mini-Bündeln unterschiedliche Borsten bzw. Borsten verwendet werden (z.B. konventionelle Borsten und zugespitzte Borsten können in einer Formation von Mini-Bündeln eingesetzt werden).

Die einzelnen Mini-Bündel oder die Formationen von Mini-Bündeln setzen sich bezüglich Distanz und/oder geometrischer Ausgestaltung von den anderen Reinigungselementen der anderen Gruppen von Reinigungselementen ab.

Die Formationen können strukturiert angeordnet sein und zwar etwa einer Linie folgend, sie können z.B. eine Welle bilden. Sie können aber auch einer bestimmten Geometrie folgen und etwa einen Kreis, eine Ellipse, ein Dreieck, ein Rechteck, ein Quadrat oder ein Polygon bilden (jeweils eng ausgefüllt oder mit Zwischen- bzw. Freiräumen). Die Formationen können auch Symmetrien aufweisen (d.h. etwa Punktsymmetrie und/oder Spiegelsymmetrie).

Eine Formation von Mini-Bündeln kann einer Line folgen und zwar mindestens teilweise entlang der Aussenkontur des Bürstenkopfes, was vorzugsweise zumindest rund 20%, 30%, 40% oder 50% der entsprechenden Kontourlänge umfasst.

Die Symmetrie der Anordnung von mehreren Formationen aus Mini-Bündeln innerhalb eines Borstenfeldes weist vorzugsweise eine Symmetrie bezüglich der Längsachse und/oder der Querachse und/oder eine Punktsymmetrie auf. Auf dem Borstenfeld können mehrere identische Formationen von Mini-Bündeln angeordnet sein.

Die Topografie innerhalb einer Formation von Mini-Bündeln kann beispielsweise flach, Dom-förmig, Wannen-förmig, Cup-förmig, Zinnen-förmig, Minarett-förmig, Reihen-förmig, in Form von Logos oder von Buchstaben, erhaben, eingelassen etc. ausgestaltet sein.

Die Topografien können mittels unterschiedlichen Borstenfarben, Borstentypen sowie unterschiedlichen Durchmessern innerhalb einer Formation von Minibündeln unterstützt werden.

Als Muster innerhalb der Topografie einer Formation von Mini-Bündeln können sich wiederholende Muster wie etwa Waben, Gitter, Längs-Profile, Quer-Profile sowie Längs- und Quer-Profile vorgesehen sein.

Die Symmetrie der Topografie innerhalb einer Formation von Mini-Bündeln kann als Spiegel-Symmetrie bezüglich der Längs- und/oder Querachse und/oder als Punktsymmetrie ausgestaltet sein.

Hinsichtlich der Borsten-Stellung können unterschiedliche Stellungen der Mini-Bündel innerhalb einer Formation vorgesehen sein, wie etwa eine V-Stellung, eine X-Stellung, Bündel mit senkrechter Stellung kombiniert mit Bündeln welche gegenüber dem Bürstenkopf geneigt sind oder aber Bündel welche konisch gegen aussen weg vom Zentrum geneigt sind.

Die Verankerung der Mini-Bündel erfolgt bevorzugt mittels AFT-, IMT- oder HT-Verfahren.

Das Abrunden und/oder Zuspitzen der Mini-Bündel erfolgt bevorzugt vor dem Abteilen in Picks. Abteilungsvorrichtungen bzw. -verfahren, welche besonders für Mini-Bündel geeignet sind umfassen beispielsweise einen speziell für diese Zwecke ausgestalteten variablen Kreisbogen, auf den an dieser Stelle nicht eingegangen wird (bestimmt den Bereich der Variabilität) und/ oder das zusätzliche Aufteilen der Picks im anschliessenden Prozessablauf auf der Herstellungsmaschine.

Bei den Mini-Bündeln sollten sich insbesondere beim AFT Verfahren die Borstenschmelze vorzugsweise verbinden, sonst fallen die Mini-Bündel (aufgrund der reduzierten Grösse) aus.

Optional kann innerhalb einer Mini-Bündel-Formation auch frei liegende Schmelze vorgesehen sein. Dies wird v.a. bei Mini-Bündel-Formation, wobei die Mini-Bündel sehr eng zusammenstehen, vorgeschlagen.

Erfindungsgemäß weisen die Raster-Bündel der zweiten Gruppe von Reinigungselementen eine aus Borsten gebildete raster- oder wabenförmige Struktur auf, wobei die Seitenwände im Querschnitt dieser Struktur eine Breite von höchstens 12 Borsten, vorzugsweise von höchstens 8 Borsten und besonders bevorzugt von höchstens 5 Borsten aufweisen. Unter Raster-Bündeln ist vorliegend eine vorzugsweise zusammenhängende Raster-, insbesondere eine Wabenstruktur aus konventionellen, extrudierten Borsten (bzw. Borsten) zu verstehen. Die Raster-Bündel weisen relativ dünne Seitenwände auf, d.h. vorzugsweise mit einer (Rasterwand-) Breite von weniger als 12 Borsten, weiter vorzugsweise von weniger als 8 Borsten und besonders bevorzugt von weniger als 5 Borsten.

Ein Raster-Bündel umfasst vorzugsweise 1, 2, 3, 4, 5, 6, 7, 8, 9, 10, 11 oder 12 Raster-Bündel-Strukturelemente.

Ein Strukturelement ist dabei ein kleinster, sich wiederholender Baustein des Rasters. Pro Rasterbündel können mehrere Strukturelemente unterschiedlicher Form und/oder Grösse verwendet werden. D.h. Dreiecke können mit Rechtecken im selben Rasterbündel verwendet werden.

Die Stabilität der Raster-Bündel wird mit der Verbindung im oder am Borstenträger erreicht. Der Vorteil der Raster-Bündel liegt insbesondere in der sehr guten Interdentalreinigung (aufgrund der dünnen Seitenwände). Zudem verhindern auch die Raster-Bündel eine Teppichbildung. Die Wabenstruktur dient ggf. darüber hinaus als Reservoir für Zahnpasta.

Die Verankerung der Raster-Bündel erfolgt wie bei konventionellen Bündeln vermittels AFT-, IMT- oder HT-Verfahren. Einzelne Raster-Bündel-Strukturelemente eines Raster-Bündels (d.h. etwa einzelne Polygone, Ellipsen, Rauten, Kreise, Ringe, Waben, Dreiecke oder Quadrate) können über unterschiedliche Borsten verfügen.

Auch die Raster-Bündel können als Einzelelemente (d.h. mit einer Grundfläche) oder als Formationen (d.h. mit mehreren Grundflächen) vorgesehen sein.

Die Formen der Raster-Bündel entsprechen den Grundflächen der einzelnen bzw. zusammengesetzten Strukturelementen (mit anderen Worten, ein Raster-Bündel kann aus einem einzelnen Strukturelement oder aber aus mehreren zusammengesetzten Strukturelementen bestehen), wobei die zusammengesetzten Strukturelemente etwa Polygon-Muster, Ketten, Olympia-Ring-Muster, Ellipsen-Muster, Rautenmuster, Wabenmuster, Dreieckmuster oder Quadratmuster, etc. bilden. Dabei weisen einzelne Strukturelemente vorzugsweise die gleiche Form auf - mit gleicher oder aber mit unterschiedlicher Orientierung.

Vorzugsweise werden pro Strukturelement jeweils gleiche Borsten verwendet. Einzelne Seitenwände von Strukturelemente welche ein Polygon bilden können jedoch unterschiedliche Filamente aufweisen. Die einzelnen Strukturelemente bestehen bevorzugt aus mehreren Picks. Bei Polygonen bilden die einzelnen Picks jeweils vorzugsweise eine Seitenwand.

In unterschiedlichen Strukturelementen desselben Rasterbündels können unterschiedliche Borsten (bzw. Borsten) verwendet werden. Die Unterschiede können dabei umfassen den Durchmesser, die Farben, den Masterbatch, die Borstenart (konventionelle oder co-extrudierte Borsten), die Form (zugespitzte oder abgerundete Borsten), die verwendeten Materialien oder die Querschnittsform, etc.

In den Raster-Bündeln können innerhalb der einzelnen Struktur-Elemente auch unterschiedliche Borsten verwendet werden (z.B. abgerundete und zugespitzte Borsten in einzelnen Strukturelementen des Raster-Bündels).

An einem Bürstenkopf (bzw. an einem Borstenträger) können ein einzelnes Raster-Bündel oder mehrere Raster-Bündel angeordnet sein. Die Raster-Bündel setzen sich von anderen Reinigungselementen der Gruppen von Reinigungselementen hinsichtlich Distanz und geometrischer Anordnung ab.

Die Raster-Bündel können etwa auch einer Linie folgend abgeordnet sein (z.B. eine Welle bildend). Sie können einer Geometrie folgen (z.B. Kreis bilden) und sie können eine Symmetrie aufweisen.

Die Symmetrie der Anordnung mehrerer Raster-Bündel innerhalb eines Borstenfeldes umfasst vorzugsweise eine Spiegel-Symmetrie bezüglich der Längs- und/oder der Querachse und/oder eine Punktsymmetrie. Auf dem Borstenträger können auch mehrere identische Raster-Bündel angeordnet sein.

Die Topografie innerhalb eines Raster-Bündels kann z.B. flach, Dom-förmig, Wannen-förmig, Cup-förmig, Zinnen-förmig, Minarett-förmig, Reihen-förmig, in Form von Logos oder Buchstaben, erhaben, eingelassen etc. sein.

Die Topografien können mittels unterschiedlichen Borstenfarben, Borstentypen sowie unterschiedlichen Durchmessern innerhalb eines Rasterbündels unterstützt werden. Gleiche Borstenlängen verfügen vorzugsweise über gleiche Eigenschaften.

Als Muster innerhalb der Topografie eines Raster-Bündels können sich wiederholende Muster wie etwa Waben, Gitter, Längs-Profile, Quer-Profile oder Längs- und Quer-Profile vorgesehen sein. Die Topografie-Muster können sich mind. in Teilbereichen regelmässig wiederholen.

Die Symmetrie der Topografie innerhalb eines Raster-Bündels ist vorzugsweise als Spiegel-Symmetrie bezüglich der Längs- und/oder Querachse und/oder als Punkt-Symmetrie ausgestaltet.

Innerhalb eines Raster-Bündels können unterschiedliche Stellungen der Borsten zur Bürstenkopfoberfläche (z.B. der Seitenwände) vorgesehen sein. Es können Borsten mit senkrechter Stellung kombiniert werden mit Borsten, welche zum Bürstenkopf geneigt sind oder aber mit Borsten, welche konisch gegen aussen weg vom Zentrum oder gegen innen hin zum Zentrum geneigt sind.

Raster-Bündel können neben «geraden» Rastern (d.h. mit geraden Linien der Struktur-Elemente) auch gekrümmte Raster (d.h. mit gekrümmten Linien der Struktur-Elemente) umfassen.

Es können weiter vorzugsweise konzentrische Elemente bzw. Strukturelemente ein konzentrisches Raster ergeben. Dabei können die verschiedenen konzentrischen Elemente verschiedene Topographien und Höhen aufweisen.

Abstände zwischen den konzentrischen Elementen betragen bevorzugt 0.5 mm bis 3 mm. Die einzelnen konzentrischen Elemente können dabei verschiedene Formen aufweisen. Konzentrische Elemente können Kreise, Ellipsen, Polygone, Dreiecke, Quadrate, Rechtecke oder auch unregelmässige Elemente sein etc.

Die Verankerung der Rasterbündel erfolgt vorzugsweise mittels AFT-, IMT- oder HT-Verfahren.

Die Borsten können vor dem Abteilen abgerundet oder zugespitzt werden.

Das Abteilen der Borsten erfolgt bevorzugt in mehreren Picks, welche später während der Borstenmontage wieder zusammengefügt werden und dann den Raster ausbilden. Dabei können der Borstentyp, die Borstenfarbe sowie der Borstendurchmesser pro Pick unterschiedlich sein.

Im HT-Verfahren kann ein Leerraum etwa durch eine Erhebung im Grundkörper erzeugt werden, wobei eine Ausnehmung zur Verankerung des Borstenbündels geschaffen werden kann.

Im AFT-Verfahren kann auch hier mit einem werkzeugseitigen Stützstift freiliegende Schmelze innerhalb eines Raster-Bündels erzeugt werden, wobei vorzugsweise die Schmelze über dem Stift zusammenhängend bleibt (d.h. beim AFT- oder IMT-Verfahren).

In einer weiteren bevorzugten Ausführungsform der vorliegenden Erfindung umfassen die Langen Bündel der dritten Gruppe von Reinigungselementen eine zusammenhängende Struktur aus zumindest 6 Picks, vorzugsweise von zumindest 10 Picks und besonders bevorzugt von zumindest 15 Picks.

Unter Langen Bündeln werden vorliegend Bündel verstanden, welche aus extrudierten Borsten bestehen und eine wesentliche Ausdehnung auf dem Bürstenkopf (mit zusammenhängender Borstenschmelze oder einem zusammenhängenden Schmelzteppich) aufweisen. Auch die Langen Bündel weisen relativ dünne Seitenwände mit einer Breite von weniger als 12 Borsten vorzugsweise von weniger als 8 Borsten und besonders bevorzugt von weniger als 5 Borsten auf. Ein Langes Bündel enthält allerdings - im Unterschied zu den Raster-Bündeln - keine geschlossenen, sich wiederholende Elemente.

Die Langen Bündel weisen ebenfalls signifikante Vorteile bei der Interdentalreinigung (insbesondere aufgrund der relativ dünnen Seitenwände) auf. Ausserdem verhindern sie eine Teppichbildung und dienen als Reservoir für Zahnpasta. Die Zahnpasta kann aufgrund der vorzugsweise vorhandenen Öffnung noch besser gereinigt werden.

Die Verankerung der Langen Bündel erfolgt wie bei konventionellen Bündeln mittels AFT-, IMT- oder HT-Verfahren. Lange Bündel können über unterschiedliche Borsten verfügen.

Die Grundflächen der Langen Bündel sind insbesondere lang und schmal ausgebildet. Dabei ist die Länge um ein mehrfaches grösser als die Breite (Faktor 10, bevorzugt Faktor 15-40). Dabei sind auch sich wiederholende Strukturen, offene Strukturen sowie geschlossene Strukturen möglich (sich wiederholende geschlossene Strukturen gehören zu den Raster-Bündeln). Mögliche Formgebungen sind dabei Fishgräten-förmig, Wellen-förmig, Gitter-förmig (offen), Spiral-förmig, Linien-förmig, oval oder rechteckig, etc.

Die für die Langen Bündel verwendeten Borsten bestehen aus mehreren Picks, wobei unterschiedliche Borsten verwendet werden können. Die Unterschiede bestehen dabei im Durchmesser, den Farben, dem Masterbatch, der Borstenart (konventionell extrudiert oder co-extrudiert), der Form (zugespitzt oder abgerundet), den Materialien oder im Querschnitt, etc.

Es können einzelne Lange Bündel oder mehrere Lange Bündel pro Bürstenkopf eingesetzt werden. Vorzugsweise werden 1, 2, 3, 4 oder mehrere Lange Bündel auf einem Bürstenkopf eingesetzt. Die Langen Bündel setzen sich von anderen Reinigungselementen der anderen Gruppen von Reinigungselementen bezüglich der Distanz sowie geometrisch ab.

Die Symmetrie der Anordnung mehrerer Langer Bündel innerhalb eines Borstenfeldes ist vorzugsweise spiegelsymmetrisch bezüglich der Längs- und/oder der Querachse und/oder punktsymmetrisch ausgestaltet. Auf dem Borstenfeld können mehrere identische Lange Bündel angeordnet sein.

Die Orientierung bzw. Ausrichtung der Langen Bündel kann insbesondere auch längs oder quer oder aber auch um einen Punkt (z.B. in Form einer Spirale) sein.

Die Topografie innerhalb eines Langen Bündels kann beispielsweise flach, gegen ein Ende ansteigend, gegen ein Ende absteigend, Dom-förmig, Wannen-förmig, Cup-förmig, Zinnen-förmig, Minarett-förmig, Reihen-förmig, Wellen-förmig, Sägezahn-förmig, in Form von Logos und/oder Buchstaben, erhaben oder eingelassen etc. sein.

Die Topografien können mittels unterschiedlichen Borstenfarben, Borstentypen sowie unterschiedlichen Durchmessern innerhalb eines Langen Bündels unterstützt werden. Gleiche Borstenlängen werden wiederum vorzugsweise mit gleichen Eigenschaften versehen.

Als Muster innerhalb der Topografie eines Langen Bündels können vorgesehen sein sich wiederholende Muster wie etwa Waben, Gitter, Längs-Profile, Quer-Profile oder Längs- und Quer-Profile.

Die Symmetrie der Topografie innerhalb eines Langen Bündels ist vorzugsweise spiegelsymmetrisch bezüglich der Längs- und/oder Quer-Achse und/oder punktsymmetrisch ausgestaltet.

Innerhalb eines Langen Bündels sind unterschiedliche Stellungen der Borsten gegenüber der Bürstenkopfoberfläche (z.B. bei den Seitenwänden) denkbar. Es können Borsten mit senkrechter Stellung kombiniert werden mit Borsten, welche zum Bürstenkopf-Zentrum geneigt sind oder aber mit Borsten, welche konisch gegen aussen weg vom Zentrum geneigt sind. Unterschiedliche Winkelstellungen werden vorzugsweise auch mit unterschiedlichen Borstenlängen kombiniert.

Grundsätzlich ist auch eine Bürste mit einem einzigen Langen Bündel möglich, d.h. eine durchgehende Form mit einem gewundenen Borstenbündel. Die Windungen können dabei in Längsrichtung des Bürstenkopfs verlaufen oder aber in Querrichtung des Bürstenkopfs oder mind. teilweise der Aussenkontur des Bürstenkopfes folgend verlaufen. Es ist auch eine durchgehende schneckenförmige bzw. spiralförmige Ausgestaltung oder aber eine durchgehende gitterförmige (offen) oder aber eine durchgehende fischgrätenförmige (mit geraden oder schrägen Gräten bzw. Seitenarmen) Ausgestaltung möglich.

Bei den Langen Bündeln ist weiterhin eine Fächerung möglich (d.h. die Borstenenden bedecken - in der Draufsicht - mehr Fläche als die Borstenbasis) . Bei einer entsprechenden winkligen Anordnung der Borsten, stehen die Borsten mindestens teilweise in einem Winkel zur Senkrechten. Der Winkel gegenüber der Senkrechten liegt dabei vorzugsweise zwischen 1° und 30°, weiter vorzugsweise zwischen 5° und 25° und noch bevorzugter zwischen 10° und 20°.

Die Verankerung der Langen Bündel erfolgt mittels einem AFT-, IMT- oder HT-Verfahren.

Vor dem Abteilen erfolgt vorzugsweise ein Abrunden oder Zuspitzen der freien Borstenenden. Weiter vorzugsweise erfolgt das Abteilen in mehreren Picks, welche später wieder zusammengefügt werden. Dabei können pro Pick der Borstentyp, die Borstenfarbe sowie der Borstendurchmesser unterschiedlich sein. Im Rahmen des AFT- und HT-Verfahrens ist innerhalb eines Langen Bündels auch freiliegende Schmelze möglich. In einer weiteren bevorzugten Ausführungsform der vorliegenden Erfindung umfassen die Konventionellen Bündel der vierten Gruppe von Reinigungselementen höchstens 5 Picks, vorzugsweise 3 Picks und besonders bevorzugt 1 Pick. Unter Konventionellen Bündeln werden werden vorliegend Bündel verstanden mit 20 bis 40 Loch pro Borstenfeld, wenn das Borstenfeld rein aus Bündeln dieser vierten Gruppe gestaltet wird. Die Konventionellen Bündel bestehen regelmässig aus wenigen Picks. Einige konventionelle ankerlose Bündel sind bekannt und werden in ankerlosen Bürsten eingesetzt.

Die Konventionellen Bündel können verschiedene Grundflächen aufweisen beispielsweise Halbmond-förmig, Halbkreisring-förmig, Kreis-förmig, oval, dreieckig, quadratisch, rechteckig, fünf- und mehreckig, Pfeilspitzen-förmig oder aber in Form eines abgerundeten Stumpfs, etc. ausgebildet sein.

Die Konventionellen Bündel können aus unterschiedlichen Borsten gebildet werden (zugespitzte oder abgerundete freie Borstenenden), welche ggf. auch verschiedene Farben aufweisen.

Auch bei den Konventionellen Bündeln sind verschiedene Stellungen gegenüber dem Bürstenkopf denkbar, d.h. Winkel gegenüber der Senkrechten (vgl. oben), ggf. in Form einer 3D-Fächerung (d.h. mit einer trompetentrichterartigen Geometrie).

Die Konventionellen Bündel können mittels AFT-, IMT- oder HT-Verfahren hergestellt werden.

Die extrudierten (konventionellen) Borsten, welche vorliegend für die Gruppen zwei bis sechs der o.g. Gruppen von Reinigungselementen verwendet werden können, werden nachfolgend hinsichtlich des Aufbaus, der Herstellung, der möglichen Formen sowie der Anordnung beschrieben.

Die (konventionellen) extrudierten Borsten (zugespitzt oder zylindrisch) werden aus Hart- und/oder Weichmaterial gebildet und zwar bevorzugt aus Polyamid (PA) oder Polyester (PBT).

Die Herstellung kann erfolgen durch Extrusion eines Materials oder durch Extrusion von mehr als einem Material (Co-Extrusion).

Im Gegensatz zu gespritzten Borsten oder gummielastischen Massage- und/oder Reinigungselementen, welche mit Spritzguss hergestellt sind, werden konventionelle Borsten extrudiert, geschnitten, bearbeitet und am Borstenträger mittels einem geeigneten Verfahren eingesetzt (s. dazu weiter unten).

Die Längsform der Borsten kann zylindrisch, mechanisch zugespitzt, chemisch zugespitzt (vor allem bei Polyester (PBT)), gewellt, gedreht oder wendelförmig sein. Bevorzugte Querschnittsformen sind kreisförmig, rund, dreieckig, rechteckig, quadratisch, elliptisch, polygonförmig, trapezförmig, parallelogrammförmig oder rombusförmig.

Für Mundhygiene-Produkte reicht der Durchmesser von 0,075 mm bis 0,25 mm und die Querschnitts-Fläche von 0,002 mm² bis 0,2 mm².

Für Kosmetik-Produkte reicht der Durchmesser von 0,025 mm bis 0,2 mm und die Querschnitts-Fläche 0,001 mm² bis 0,15 mm².

Die Oberfläche der Borsten ist glatt oder texturiert. Die Borsten werden regelmässig zu Bündeln zusammengefasst.

In diesem Zusammenhang sei erwähnt, dass vorliegend mögliche Zungenreiniger aus Hartmaterial und/oder aus Weichmaterial und/oder Kombinationen von Hartmaterial und Weichmaterial und/oder Material für gespritzte Borsten gebildet werden. Die Herstellung erfolgt im Spritzgussverfahren. Die Anordnung von Zungenreinigern kann beispielsweise auf der Rückseite des Bürstenkopfs erfolgen.

In einer weiteren bevorzugten Ausführungsform der vorliegenden Erfindung ist bzw. sind das Kopfteil, das Griffteil und/oder das Halsteil aus mindestens einer Hart- und/oder einer oder mehreren Weichmaterialkomponenten gebildet.

In einer weiteren bevorzugten Ausführungsform der vorliegenden Erfindung ist bzw. sind die Hartmaterialkomponente(n) aus Styrolpolymerisaten wie Styrolacrylnitril (SAN), Polystyrol (PS), Acrylnitrilbutadienstyrol (ABS), Styrolmethylmethacrylat (SMMA) oder Styrolbudien (SB); Polyolefinen wie Polypropylen (PP) oder Polyethylen (PE) (vorzugsweise auch in Form von High Density Polyethylen (HDPE) oder Low Density Polyethylen (LDPE)); Polyestern wie Polyethylenterephthalat (PET) in Form von säuremodifiziertem Polyethylenteraphthalat (PETA) oder glycolmodifiziertem Polyethylenterephthalat(PETG), Polybutylenterephthalat (PBT), säuremodifiziertem Polycyclohexylendimethylenterephthalat (PCT-A) oder glycolmodifiziertem Polycyclohexylendimethylenterephthalat (PCT-G); Cellulosederivaten wie Celluloseacetat (CA), Celluloseacetobutyrat (CAB), Celluloseproprionat (CP), Celluloseacetatphthalat (CAP) oder Cellulosebutyrat (CB); Polyamiden (PA) wie PA 6.6, PA 6.10 oder PA 6.12; Polymethylmethacrylat (PMMA); Polycarbonat (PC); Polyoxymethylen (POM); Polyvinychlorid (PVC); Polyurethan (PUR) und/oder aus Polyamid (PA) gebildet.

In einer weiteren bevorzugten Ausführungsform der vorliegenden Erfindung ist die Hartmaterialkomponente aus Polypropylen (PP) mit einem Elastizitätsmodul von 1000 bis 2400 N/mm², vorzugsweise von 1200 bis 2000 N/mm² und besonders bevorzugt von 1300 bis 1800 N/mm² gebildet. Diese Materialien zeichnen sich in der Praxis durch besonders geeignete Flexibilitätscharakteristika aus.

Hartmaterial wird vorzugsweise für bzw. in instabilen strukturtragenden Elementen eingesetzt, d.h. beispielsweise im Griffteil, im Halsteil sowie im Kopfteil.

Werden mehrere Hartmaterialien eingesetzt (beispielsweise im Zwei- oder Mehr-Komponenten-Spritzguss) oder werden Materialien mittels Ultraschallschweissen verbunden, bilden die eingesetzten Hartmaterialien untereinander vorzugweise einen Materialschluss.

Alternativ können mehrere Materialien eingesetzt werden, welche im Zwei- oder Mehrkomponenten-Spritzguss keinen Materialschluss eingehen. Bei diesen Paarungen wird ein Formschluss vorgesehen (Hinterschnitte und/oder Durchbrüche und/oder teilweise und/oder vollständige Umspritzung, etc.).

Das zweite verspritzte Hartmaterial schwindet dann bei der Abkühlung auf das erste verspritzte Hartmaterial auf und bildet eine Schwundverbindung. Beispiele für mögliche Hartmaterialpaarungen, welche keinen Materialschluss eingehen sind Polypropylen und Polyester oder aber Polypropylen und Styrolacrylnitril.

In einer weiteren bevorzugten Ausführungsform der vorliegenden Erfindung ist bzw. sind die Weichmaterialkomponente(n) aus einem thermoplastischem Styrolelastomer (TPE-S) (vorzugsweise einem Styrolethylenbutylenstyrolcopolymer (SEBS) oder Styrolbutadienstyrolcopolymer (SBS)); einem thermoplastischem Polyurethanelastomer (TPE-U); einem thermoplastischem Polyamidelastomer (TPE-A); einem thermoplastischem Polyolefinelastomer (TPE-O); thermoplastischem Polyesterelastomer (TPE-E) und/oder Silikonen gebildet.

Polyethylen (PE) und Polyurethan (PU) können sowohl als Hartmaterial- als auch als Weichmaterialkomponente eingesetzt werden.

Weichmaterialien sind vorliegend besonders bevorzugt thermoplastische Elastomere (TPE's) mit einer Shore A Härte kleiner 90, vorzugsweise von kleiner 50 und noch weiter vorzugsweise von kleiner 30.

Weichmaterialien bilden mit Hartmaterialien beim Überspritzen im Zwei- oder Mehrkomponenten-Spritzgiessverfahren bevorzugt einen Materialschluss.

In einer weiteren bevorzugten Ausführungsform der vorliegenden Erfindung werden das bzw. die Material(ien) für die gespritzten Borsten gebildet aus einem thermoplastischen Polyamidelastormer (TPE-A), vorzugsweise Grilflex EG 5930 von der EMS Chemie AG; einem thermoplastischen Polyesterelastomer (TPE-E), vorzugsweise Riteflex 672 AF Nat oder Riteflex RKX 193 RF Nat von Ticona Polymers oder Hytrel 7248 von DuPont; und besonders bevorzugt aus einem thermoplastischen PolyurethanElastomer (TPE-U).

Die vorliegend besonders bevorzugten TPE-U Materialien weisen gegenüber den Alternativen bessere Fliesseigenschaften auf sowie eine schnellere Erstarrung (d.h. eine schnellere Kristallisation wobei sich die Molekülketten schon bei hohen Temperaturen verbinden).

Die Materialien für gespritzte Borsten sind weiter vorzugsweise thermoplastische Elastomere und weisen eine Shore D Härte von 0 bis 100 vorzugsweise von 30 bis 80 auf. Für gespritzte Borsten werden spezielle Formen von Weichmaterialien eingesetzt, welche in der Regel höhere Shore Härten aufweisen als Weichmaterialien, aus welchen weichelastische Reinigungs-/Massageelemente oder Handgriffzonen oder etwa Zungenreiniger hergestellt werden.

Während dem Spritzgussprozess (Zwei- oder Mehrkomponenten-Spritzguss) gehen Materialien für gespritzte Borsten in der Regel mit den anderen eingesetzten Weich- und/oder Hartmaterialien (z.B. mit dem Trägerplättchen oder dem Bürstenkopf) keinen Materialschluss ein. Folglich wird für allfällige Verbindungen mit anderen Hart- beziehungsweise Weichmaterialien ein Formschluss vorgesehen (Hinterschnitte und/oder Durchbrüche und/oder teilweise und/oder vollständige Umspritzungen, etc.). Das als zweites verspritzte Material für gespritzte Borsten schwindet bei der Abkühlung auf das erste verspritzte Hart- oder Weichmaterial auf und bildet so eine Schwundverbindung.

Als spezielle Materialien können vorliegend generell zum Einsatz kommen sogenannte Biokunststoffe (also Kunststoffe, die aus nachwachsenden Rohstoffen bestehen) oder aber auch wasserlösliche Polymere.

Biokunststoffe bestehen aus Rohstoffen und Grundstoffen. Als Rohstoffe in Frage kommen beispielsweise: Mais, Hanf, Zucker, Rizinusöl, Palmöl, Kartoffeln, Weizen, Zuckerrohr, Kautschuk, Holz, Castor Pflanze/Wunderbaum. Beispiele von Grundstoffen aus den Rohstoffen sind: Cellulose, Stärke, Milchsäure (PLA), Glucose, Chitin, Chitosan.

Der Einsatz von Biokunststoffen ist im vorliegenden HT-Verfahrens gegenüber anderen Verfahren besonders vorteilhaft weil keine Metallanker eingesetzt werden, die mit dem Körper eine minimale Verankerung für die Borstenbündel schaffen müssen; neben dem Spritzgiessen des Borstenträgers keine speziellen Verbindungsverfahren wie umspritzen der Borsten oder Ultraschall-Schweissen des Trägerplättchens zur Anwendung kommen und im HT-Verfahren nur ein plastisches Verformen des Trägerkörpers angewendet wird, um die Borsten zu verankern. Vorteilhafterweise wird nicht nur für den Bürstengriff, sondern auch für die Borsten ein Biokunststoff verwendet damit die Bürste zu fast vollständig aus Biokunststoff besteht.

In einer bevorzugten Ausführungsform des HT Verfahrens weist zum Bewirken der Verformung der Geometrie der Sacklöcher und/oder Aussparungen die Halte-/Pressvorrichtung, korrespondierend mit dem Bereich der Sacklöcher und/oder Aussparungen im Borstenträger, einen oder mehrere Vorsprünge auf, welche bei der Druckausübung in das Kopfteil eindringen und so eine Materialverdrängung bewirken, durch welche die Borstenbündel fest umschlossen bzw. verankert werden. Auf diese Weise kann insbesondere eine besonders effektive seitliche Klemmung der Borstenbündel erzielt werden. In einer weiteren bevorzugten Ausführungsform des Verfahrens sind der eine oder die mehreren Vorsprünge des Halte-/Presswerkzeugs welche beispielsweise im Querschnitt gesehen dreieckförmig oder wulstförmig ausgebildet sein können. Diese Ausgestaltungen haben sich als besonders geeignet zur Erzeugung einer starken seitlichen Klemmung erwiesen. Sie tragen zusätzlich auch zu einer besseren Verankerungsgeometrie im Bereich der verschmolzenen Borstenenden bei. In einer weiteren bevorzugten Ausführungsform des Verfahrens werden zum Bewirken der Verformung der Geometrie der Sacklöcher und/oder Aussparungen in Schritt (a) im Bereich der Sacklöcher und/oder Aussparungen am Borstenträger ein oder mehrere zusätzliche Materialreservoirs in Form von Erhebungen gespritzt, welche bei der Druckausübung durch die Halte-/Pressvorrichtung in das Kopfteil eingedrückt werden (d.h. sich plastisch verformen) und so eine Materialverdrängung bewirken, durch welche die Borstenbündel fest umschlossen werden. Auch auf diese Weise kann eine überdurchschnittlich gute (seitliche) Klemmung wie auch eine bessere Verankerungsgeometrie im Bereich der verschmolzenen Borstenenden im Borstenträger erreicht werden.

Umgekehrt kann können im Borstenträger auch Ausnehmungen vorgesehen werden, welche nicht mit Borstenbündeln besetzt werden. Diese Ausnehmungen können dann während der Materialverdrängung überschüssiges Material aufnehmen und sich ganz oder nur teilweise schliessen.

Eine weitere Ausführungsform des HT Verfahrens betrifft die Montage von zusätzlichen nicht borstentragenden (Reinigungs-) Elemente oder Applikatoren auf dem Borstenträger. Diese werden im Herstellungsprozess zusätzlich zu den Borstenbündeln in die Halte-/Pressvorrichtung eingeführt werden und mit den an den rückseitigen Enden angeschmolzenen Borstenbündeln in Schritt d) in die Ausnehmungen des Borstenträgers geführt und dann analog den Borstenbündeln im weiteren Prozess verankert. Vorzugsweise erfolgt das Anschmelzen der Borstenbündel bevor die zusätzlichen nicht borstentragenden Elemente in die Halte-/Pressvorrichtung eingeführt werden.

Vorzugsweise bestehen zusätzliche Elemente aus einem Unterteil aus Hartmaterial und einem Oberteil aus Weichmaterial oder sonstigen für die Applikation sinnvollen Materialien (z.B. Schaumstoff, textiles Element, etc.). Das Unterteil aus Hartmaterial dient v.a. der Verankerung und bildet am Unterteil wie die Borstenbündel eine Verankerungshilfe aus (z.B. wie die Borstenschmelze des Borstenbündels).

Je nach Stabilität ist es aber auch denkbar, dass Oberteil direkt in die Ausnehmung des Borstenträgers eingeführt wird und das Unterteil damit nicht notwendig ist.

Die in dieser Schrift beschriebenen Reinigungselemente bzw. Bündelformen, können einzeln oder in jeder möglichen Kombination von mehreren bis allen der in dieser Schrift beschriebenen Reinigungselemente bzw. Bündelformen auf dem Bürstenkopf verwendet werden ohne den Rahmen dieser Erfindung zu verlassen. Insbesondere können die in dieser Schrift beschriebenen Reinigungselemente bzw. Bündelformen, einzeln, in Kombination von zwei, drei, vier, fünf, sechs oder weiteren Reinigungselemente bzw. Bündelformen in einem Borstenfeld verwendet werden. Die aufgeführten und im Detail beschriebenen Kombinationen bzw. Kategorien zeigen Beispiele mit besonders guter Reinigungswirkung.

Die bisher beschriebenen Reinigungselemente können auch mit weiteren in dieser Schrift nicht beschriebenen Reinigungselementen kombiniert werden ohne den Rahmen dieser Erfindung zu verlassen.

Die in dieser Schrift beschriebenen Herstellungsverfahren zur Verankerung und/oder Herstellung von Reinigungselementen bzw. Bündelformen auf einem Bürstenkopf, können einzeln oder in jeder möglichen Kombination von mehreren bis allen der in dieser Schrift beschriebenen Herstellungsverfahren zur Verankerung und/oder Herstellung von Reinigungselementen auf einem Bürstenkopf verwendet werden ohne den Rahmen dieser Erfindung zu verlassen. Insbesondere können die in dieser Schrift beschriebenen Herstellungsverfahren zur Verankerung und/oder Herstellung von Reinigungselementen auf einem Bürstenkopf einzeln, in Kombination von zwei, drei, vier, fünf, sechs oder weiteren Herstellverfahren zur Verankerung und/oder Herstellung von Reinigungselementen kombiniert verwendet werden.

Ausführungsformen mit besonders hoher Reinigungs- und Pflegeleistung umfassen insbesondere weiterhin die folgenden Kombinationen der oben beschriebenen Gruppen von Reinigungselementen, welche vorliegend als Kategorien A bis M definiert werden. Selbstverständlich können bei diesen bevorzugten Kategorien A bis M auch einzelne Typen/Formen von Reinigungselementen weggelassen werden oder zusätzliche Typen/Formen von Reinigungselementen ergänzt werden, ohne den Rahmen der Erfindung zu verlassen.

### Kategorie A

Borstenträger der Kategorie A umfassen vorzugsweise zumindest Reinigungselemente der ersten Gruppe von Reinigungselementen (Weichelemente und/oder gespritzte Borsten), der zweiten Gruppe von Reinigungselementen (Puck-Bündel) und der dritten Gruppe von Reinigungselementen (Mini-Bündel). Borstenträger der Kategorie A können weiter vorzugsweise auch noch Reinigungselemente der sechsten Gruppe von Reinigungselementen (Konventionelle Bündel) umfassen. Weiter vorzugsweise sind bei der Kategorie A zwei Puck-Bündel vorgesehen, wobei eines im oberen Trägerbereich angeordnet ist und eines im unteren Trägerbereich angeordnet ist. Alternativ kann auch nur ein Puck-Bündel im zentralen Trägerbereich angeordnet sein. Bei beiden Varianten, kann das Puck-Bündel bzw. können die Puck-Bündel Ausnehmungen aufweisen in welche etwa eines oder mehrere Mini-Bündel oder eines oder mehrere Konventionelle Bündel oder aber eines oder mehrere Weichelemente und/oder Formationen von gespritzten Borsten eingesetzt sind.

Weiter vorzugsweise können bei der Kategorie A eines oder mehrere Weichelemente und/oder Formationen von gespritzten Borsten zwischen den beiden Puck-Bündeln angeordnet sein (d.h. im Wesentlichen im zentralen Trägerbereich mit ggf. einer räumlichen Ausdehnung in den linken und rechten Trägerbereich). Es ist aber auch möglich, dass die Weichelemente und/oder Formationen von gespritzten Borsten nur im rechten und linken Trägerbereich angeordnet sind. Bei der Variante mit einem Puck-Bündel sind die Weichelemente und/oder gespritzten Borsten bevorzugt um das Puck-Bündel herum angeordnet.

Die Mini-Bündel sind bei der Kategorie A weiter vorzugsweise in Formationen im zentralen Trägerbereich angeordnet, mit ggf. einer räumlichen Ausdehnung in den linken und rechten Trägerbereich. Die Mini-Bündel können aber auch der Aussenkontur des Borstenträgers jedenfalls teilweise folgen.

Die Konventionellen Bündel sind bei der Kategorie A weiter bevorzugt ganz vorne im vordersten Trägerbereich angeordnet, ggf. zusätzlich auch ganz hinten im hinteren Trägerbereich. Des Weiteren sind die Konventionellen Bündel bevorzugt im Bereich um die Puck-Bündel herum oder in Ausnehmungen von Puck-Bündeln angeordnet.

### Kategorie B

Borstenträger der Kategorie B umfassen vorzugsweise zumindest Reinigungselemente der ersten Gruppe von Reinigungselementen (Weichelemente und/oder gespritzte Borsten), der dritten Gruppe von Reinigungselementen (Mini-Bündel) sowie der fünften Gruppe von Reinigungselementen (Lange Bündel). Borstenträger der Kategorie B können weiter vorzugsweise auch noch Reinigungselemente der sechsten Gruppe von Reinigungselementen (Konventionelle Bündel) umfassen.

Weiter vorzugsweise sind bei der Kategorie B zwei Lange Bündel vorgesehen, wobei eines im oberen Trägerbereich angeordnet ist und eines im unteren Trägerbereich angeordnet ist. Es können die beiden Langen Bündel allerdings auch im linken und rechten Trägerbereich angeordnet sein.

Alternativ kann auch nur ein Langes Bündel im zentralen Trägerbereich angeordnet sein, welches sich ggf. räumlich noch in den oberen und unteren Trägerbereich ausdehnt. Bei beiden Varianten, kann das Lange Bündel bzw. können die Langen Bündel freie Bereiche aufweisen in welche etwa eines oder mehrere Mini-Bündel oder aber eines oder mehrere Weichelemente und/oder Formationen von gespritzten Borsten eingesetzt sind oder zumindest teilweise hineinragen und/oder diese mindestens teilweise umschlossen werden.

In einer weiteren Alternative kann ein Langes Bündel der Aussenkontur des Borstenträgers folgen und die übrigen Bündel zumindest teilweise einschliessen. Es ist aber auch denkbar, dass dieses Lange Bündel noch mindestens teilweise von Mini-Bündeln umgeben ist.

Weiter vorzugsweise können bei der Kategorie B eines oder mehrere Weichelemente und/oder Formationen von gespritzten Borsten zwischen den beiden Langen Bündeln angeordnet sein (d.h. im Wesentlichen im zentralen Trägerbereich mit ggf. einer räumlichen Ausdehnung in den linken und rechten Trägerbereich). Es ist aber auch möglich, dass die Weichelemente und/oder gespritzten Borsten nur im rechten und linken Trägerbereich oder nur im oberen und unteren Trägerbereich angeordnet sind.

Bei der Variante mit einem Langen Bündel welches die übrigen Bündel zumindest teilweise ein- bzw. umschliesst sind die Weichelemente und/oder gespritzten Borsten bzw. das Weichelement bevorzugt zentral innerhalb des Langen Bündels angeordnet. Bei einem zentral angeordneten Langen Bündel können allerdings die Weichelemente und/oder gespritzten Borsten im linken und rechten sowie im oberen und unteren Trägerbereich angeordnet sein.

Die Mini-Bündel sind bei der Kategorie B weiter vorzugsweise in Formationen im zentralen Trägerbereich angeordnet, mit ggf. einer räumlichen Ausdehnung in den linken und rechten sowie den oberen und unteren Trägerbereich. Die Mini-Bündel können aber auch der Aussenkontur des Borstenträgers jedenfalls teilweise folgen.

Die Konventionellen Bündel sind bei der Kategorie B weiter bevorzugt ganz vorne im vordersten Trägerbereich angeordnet, ggf. zusätzlich auch ganz hinten im hinteren Trägerbereich. Des Weiteren sind die Konventionellen

Bündel bevorzugt im Bereich um die Weichelemente und/oder gespritzten Borsten herum angeordnet.

### Kategorie C

Borstenträger der Kategorie C umfassen vorzugsweise zumindest Reinigungselemente der zweiten Gruppe von Reinigungselementen (Puck-Bündel), der dritten Gruppe von Reinigungselementen (Mini-Bündel) sowie der sechsten Gruppe von Reinigungselementen (Konventionelle Bündel).

Weiter vorzugsweise sind bei der Kategorie C ein oder zwei Puck-Bündel vorgesehen, welche einen wesentlichen Teil der Fläche des Borstenträgers einnehmen, d.h. mehr als 1/3 der Borstenträgerfläche weiter bevorzugt mehr als 40 % der Borstenträgerfläche und noch bevorzugter mehr als 50% der Borstenträgerfläche. Es können aber auch mehrere spiegelsymmetrisch zueinander angeordnete Puck-Bündel vorgesehen werden, welche den o.g. wesentlichen Teil der Borstenträgerfläche einnehmen.

Im Fall von einem Puck-Bündel ist dieses vorzugsweise zentral angeordnet, erstreckt sich aber aufgrund seiner Grösse auch deutlich in den oberen, unteren, linken und rechten Trägerbereich hinein. Alternativ kann das eine grosse Puck-Bündel auch um den Borstenträger herum verlaufen auch eine zentrale Ausnehmung aufweisen.

Im Fall von zwei Puck-Bündeln sind diese bevorzugt im oberen sowie im unteren Trägerbereich angeordnet und lassen einen kleineren zentralen Trägerbereich frei (welcher i.d.R. kleiner ist als eines der Puck-Bündel).

Denkbar sind auch Varianten mit zwei kleineren Puck-Bündeln und einem grösseren Puck-Bündel, wobei von den kleineren Puck-Bündeln eines im oberen Trägerbereich angeordnet ist und das andere im unteren Trägerbereich und wobei das grössere Puck-Bündel im zentralen Trägerbereich angeordnet ist. Das grössere Puck-Bündel kann wiederum eine Ausnehmung aufweisen.

Die Mini-Bündel sind bei der Kategorie C vorzugsweise in den Ausnehmungen der grossen Puck-Bündel angeordnet. Im Fall von zwei oder mehreren Puck-Bündeln können die Mini-Bündel aber auch im zentralen Trägerbereich, vorzugsweise in Formationen, angeordnet sein. Bei einem grossen zentral angeordneten Puck-Bündel können die Mini-Bündel flankierend im der linken und rechten Trägerbereich angeordnet sein (ggf. auch als Formation) oder aber sie können der Aussenkontur des Borstenträgers folgen und etwa das grosse Puck-Bündel umschliessen.

Die Konventionellen Bündel sind bei der Kategorie C bevorzugt ganz vorne im vordersten Trägerbereich angeordnet, ggf. zusätzlich auch ganz hinten im hinteren Trägerbereich. Des Weiteren sind die Konventionellen Bündel bevorzugt im Bereich um die Puck-Bündel herum angeordnet. Sie können aber auch in den Ausnehmungen der grossen Puck-Bündel (ggf. zusammen mit Mini-Bündeln) angeordnet sein. Im Fall von zwei grossen Puck-Bündeln im oberen und unteren Trägerbereich sind die Konventionellen Bündel vorzugsweise links bzw. rechts von dem zentralen Trägerbereich angeordnet.

### Kategorie D

Borstenträger der Kategorie D umfassen vorzugsweise zumindest Reinigungselemente der ersten Gruppe von Reinigungselementen (Weichelemente und/oder gespritzte Borsten), der zweiten Gruppe von Reinigungselementen (Puck-Bündel) und der sechsten Gruppe von Reinigungselementen (Konventionelle Bündel). Es ist grundsätzlich auch denkbar, dass anstelle der Konventionellen Bündel Reinigungselemente der dritten Gruppe von Reinigungselementen (Mini-Bündel) verwendet werden.

Weiter vorzugsweise sind bei der Kategorie D ein oder zwei Puck-Bündel vorgesehen, welche einen wesentlichen Teil der Fläche des Borstenträgers einnehmen, d.h. mehr als 1/3 der Borstenträgerfläche weiter bevorzugt mehr als 40 % der Borstenträgerfläche und noch bevorzugter mehr als 50% der Borstenträgerfläche. Es können aber auch mehrere symmetrisch zueinander angeordnete Puck-Bündel vorgesehen werden, welche den o.g. wesentlichen Teil der Borstenträgerfläche einnehmen.

Im Fall von einem grossen Puck-Bündel kann dieses um den Borstenträger herum verlaufen und eine zentrale Ausnehmung aufweisen.

Im Fall von zwei Puck-Bündeln sind diese bevorzugt im oberen sowie im unteren Trägerbereich angeordnet und lassen einen kleineren zentralen Trägerbereich frei (welcher i.d.R. kleiner ist als eines der Puck-Bündel).

Im Fall von mehreren kleineren symmetrisch angeordneten Puck-Bündeln, können diese in allen Trägerbereichen angeordnet sein, allerdings werden jeweils Zwischenräume für Konventionelle Bündel bzw. Weichelemente und/oder Formationen von gespritzten Borsten gelassen.

Die Weichelemente und/oder Formationen von gespritzten Borsten sind bei der Kategorie D vorzugsweise in den Ausnehmungen der grossen Puck-Bündel angeordnet. Im Fall von zwei oder mehreren Puck-Bündeln können die Weichelemente und/oder gespritzten Borsten aber gerade auch im zentralen Trägerbereich angeordnet sein.

Die Konventionellen Bündel sind bei der Kategorie D bevorzugt ganz vorne im vordersten Trägerbereich angeordnet, ggf. zusätzlich auch ganz hinten im hinteren Trägerbereich. Sie können aber auch in den Ausnehmungen der grossen Puck-Bündel (ggf. zusammen mit Weichelementen und/oder gespritzten Borsten) angeordnet sein.

Im Fall von mehreren kleineren symmetrisch angeordneten Puck-Bündeln sind die Konventionellen Bündel sowie die Weichelemente und/oder Formationen von gespritzten Borsten vorzugsweise in den Zwischenräumen angeordnet (i.d.R. zentral oder der Aussenkontur folgend).

### Kategorie E

Borstenträger der Kategorie E umfassen vorzugsweise zumindest Reinigungselemente der ersten Gruppe von Reinigungselementen (Weichelemente und/oder gespritzte Borsten), der dritten Gruppe von Reinigungselementen (Mini-Bündel) und der sechsten Gruppe von Reinigungselementen (Konventionelle Bündel). Es ist grundsätzlich auch denkbar, dass zusätzlich Reinigungselemente der fünften Gruppe von Reinigungselementen (Lange Bündel) verwendet werden.

Weiter vorzugsweise sind bei der Kategorie E ein zentrales Weichelemente und/oder Formationen von gespritzten Borsten angeordnet. Es können aber auch mehrere Weichelemente und/oder Formationen von gespritzten Borsten symmetrisch zueinander angeordnet sein, etwa eines im oberen, unteren und zentralen Trägerbereich. Es können auch auf der linken und rechten Seite des Trägerbereichs zwei zueinander symmetrische Weichelemente und/oder Formationen von gespritzten Borsten angeordnet sein. Weiter vorzugsweise ist/sind ein Weichelement und/oder gespritzte Borsten im zentralen Trägerbereich angeordnet.

Im Fall eines zentral angeordneten Weichelements und/oder gespritzte Borsten kann dieses von Mini-Bündeln umgeben sein und/oder das Weichelemente und/oder Formationen von gespritzten Borsten umschliessen die Mini-Bündel bzw. die Mini-Bündel sind in Zwischenräumen oder Ausnehmungen der Weichelemente und/oder gespritzten Borsten angeordnet (d.h. einzeln oder in Formationen).

Die Konventionellen Bündel sind bei der Kategorie E bevorzugt ganz vorne im vordersten Trägerbereich angeordnet, ggf. zusätzlich auch ganz hinten im hinteren Trägerbereich. Bevorzugt umgeben die Weichelemente und/oder gespritzten Borsten Mini-Bündel welche im zentralen Trägerbereich angeordnet sind.

### Kategorie F

Borstenträger der Kategorie F umfassen vorzugsweise zumindest Reinigungselemente der ersten Gruppe von Reinigungselementen (Weichelemente und/oder gespritzte Borsten), der vierten Gruppe von Reinigungselementen (Raster-Bündel) und der sechsten Gruppe von Reinigungselementen (Konventionelle Bündel). Weiter vorzugsweise umfasst die Kategorie F zusätzlich noch Reinigungselemente der dritten Gruppe von Reinigungselementen (Mini-Bündel). Es ist grundsätzlich auch denkbar, dass anstelle der Konventionellen Bündel Reinigungselemente der zweiten Gruppe von Reinigungselementen (Puck-Bündel) verwendet werden.

Die Raster-Bündel sind gemäss der Kategorie F bevorzugt in Form von zusammengesetzten Strukturelementen im zentralen Trägerbereich angeordnet. Es können auch im oberen sowie im unteren Trägerbereich zusammengesetzte Strukturelemente angeordnet sein. In einer weiteren bevorzugten Ausführungsform sind die zusammengesetzten Strukturelemente in den einzelnen Trägerbereichen durch Konventionelle Bündel und/oder Weichelemente und/oder Formationen von gespritzten Borsten getrennt. Des Weiteren können innerhalb der von den einzelnen Strukturelementen umschlossenen Flächen Konventionelle Borsten und/oder Mini-Bündel angeordnet sein. Darüber hinaus ist es auch möglich, dass in dem linken und rechten Trägerbereich jeweils Raster-Bündel in Form von zusammengesetzten Strukturelementen vorhanden sind. Dabei können die zusammengesetzten Strukturelemente der Aussenkontur des Borstenträgers folgen. Die Weichelemente und/oder gespritzten Borsten können dann den zentralen Trägerbereich einnehmen. In den seitlichen Trägerbereichen können jeweils auch einzelne Strukturelemente angeordnet sein, welche ggf. von Weichelementen und/oder gespritzte Borsten getrennt werden.

Im Bereich der Weichelemente und/oder gespritzten Borsten sind bei der Kategorie F vorzugsweise Mini-Bündel in Formationen angeordnet. Es ist jedoch auch denkbar, dass die Mini-Bündel jedenfalls teilweise der Aussenkontur des Borstenträgers folgen.

Die Konventionellen Bündel sind bei der Kategorie F bevorzugt ganz vorne im vordersten Trägerbereich angeordnet, ggf. zusätzlich auch ganz hinten im hinteren Trägerbereich. Die Konventionellen Bündel können hier auch in Form von kleinen Puck-Bündeln vorliegen (d.h. wenn etwa die Raster-Bündel relativ wenig Platz einnehmen, z.B. weniger als 50% der Fläche des Borstenträgers).

### Kategorie G

Borstenträger der Kategorie G umfassen vorzugsweise zumindest Reinigungselemente der ersten Gruppe von Reinigungselementen (Weichelemente und/oder gespritzte Borsten), der fünften Gruppe von Reinigungselementen (Lange Bündel) und der sechsten Gruppe von Reinigungselementen (Konventionelle Bündel). Weiter vorzugsweise umfasst die Kategorie G zusätzlich noch Reinigungselemente der dritten Gruppe von Reinigungselementen (Mini-Bündel). In einer noch weiteren bevorzugten Ausführungsform kann die Kategorie G zusätzlich noch Reinigungselemente der zweiten Gruppe von Reinigungselementen (Puck-Bündel) umfassen.

Vorzugsweise sind bei der Kategorie G die Weichelemente und/oder gespritzten Borsten im zentralen Trägerbereich angeordnet und weiter vorzugsweise von einem oder mehreren Langen Bündeln umschlossen. Im umschlossenen Bereich können zudem Mini-Bündel (bevorzugt in Formationen) und Konventionelle Bündel angeordnet sein. Die Mini-Bündel können aber auch ein Langes Bündel umschliessen und jedenfalls teilweise der Aussenkontur des Borstenträgers folgen.

In einer Variante kann aber etwa auch ein Langes Bündel zentral angeordnet sein und von Weichelementen und/oder gespritzten Borsten sowie ggf. von Konventionellen Bündeln umgeben sein. Es kann weiter vorzugsweise auch ein Langes Bündel im unteren Trägerbereich ein oder mehrere Konventionelle Bündel umgeben. In einer noch weiteren bevorzugten Ausführungsform kann im oberen und im unteren Trägerbereich jeweils auch ein Puck-Bündel angeordnet sein, welches in Zwischenräume des Langen Bündels hineinragt.

Die Konventionellen Bündel sind bei der Kategorie G bevorzugt ganz vorne im vordersten Trägerbereich angeordnet, ggf. zusätzlich auch ganz hinten im hinteren Trägerbereich.

### Kategorie H

Borstenträger der Kategorie H umfassen vorzugsweise zumindest Reinigungselemente der zweiten Gruppe von Reinigungselementen (Puck-Bündel), der dritten Gruppe von Reinigungselementen (Mini-Bündel), der vierten Gruppe von Reinigungselementen (Raster-Bündel) und der sechsten Gruppe von Reinigungselementen (Konventionelle Bündel). Weiter vorzugsweise kann die Kategorie G zusätzlich noch Reinigungselemente der ersten Gruppe von Reinigungselementen (Weichelemente und/oder gespritzte Borsten) umfassen.

Gemäss der Kategorie H ist vorzugsweise im oberen und im unteren Trägerbereich jeweils ein Puck-Bündel angeordnet und im zentralen Trägerbereich ein Raster-Bündel in Form von zusammengesetzten Strukturelementen. In den von den einzelnen Strukturelementen umschlossenen Freiräumen sind vorzugsweise noch Konventionelle Bündel und/oder Mini-Bündel (einzeln oder in Formation) angeordnet.

Alternativ kann bei der Kategorie H ein längliches Puck-Bündel vorgesehen sein, welches mittig angeordnet ist und sich über den oberen, den zentralen und den unteren Trägerbereich erstreckt. Seitlich davon sind bevorzugt jeweils ein oder zwei Raster-Bündel in Form von zusammengesetzten Strukturelementen angeordnet sowie ggf. eines oder mehrere Konventionelle Bündel. In den von den einzelnen Strukturelementen umschlossenen Freiräumen sind vorzugsweise noch Mini-Bündel (einzeln oder in Formation) angeordnet.

Die Mini-Bündel und die Konventionellen Bündel können aber auch in Zwischenräumen zwischen den Puck-Bündeln und den Raster-Bündeln angeordnet sein.

### Kategorie I

Borstenträger der Kategorie I umfassen vorzugsweise zumindest Reinigungselemente der dritten Gruppe von Reinigungselementen (Mini-Bündel), der fünften Gruppe von Reinigungselementen (Lange Bündel) und der sechsten Gruppe von Reinigungselementen (Konventionelle Bündel). Weiter vorzugsweise kann die Kategorie I zusätzlich noch Reinigungselemente der ersten Gruppe von Reinigungselementen (Weichelemente und/oder gespritzte Borsten) umfassen.

Bei der Kategorie I sind vorzugsweise ein oder zwei Lange Bündel vorgesehen. Im Fall von einem Langen Bündel ist dieses bevorzugt zentral angeordnet und weist eine Punkt- oder Spiegelsymmetrie auf. Das eine Lange Bündel kann sich auch ausdehnen in den oberen und unteren Trägerbereich und/oder in den linken und rechten Trägerbereich. Das Lange Bündel kann zudem seitlich flankiert werden von Mini-Bündeln und/oder von Konventionellen Bündeln. Die Mini-Bündel und/oder die Konventionellen Bündel können auch in Zwischenräumen der Langen Bündel angeordnet sein, ggf. auch in entsprechend angepassten Geometrien bzw. Formationen.

Im Fall von zwei Langen Bündeln sind diese vorzugsweise spiegelsymmetrisch zueinander angeordnet. Wiederum können in den Zwischenräumen Mini-Bündel und/oder Konventionelle Bündel (ggf. zusätzlich auch Weichelemente und/oder gespritzte Borsten) angeordnet sein, bevorzugt jeweils auch in entsprechend angepassten Geometrien bzw. Formationen.

Es können jeweils die Langen Bündel eine zentrale Formation von Mini-Bündeln umschliessen und ggf. ihrerseits von Mini-Bündeln umschlossen werden, welche jedenfalls teilweise der Aussenkontur des Borstenträgers folgen.

Die Konventionellen Bündel sind bei der Kategorie I weiter vorzugsweise ganz vorne im vordersten Trägerbereich angeordnet, ggf. zusätzlich auch ganz hinten im hinteren Trägerbereich.

### Kategorie J

Borstenträger der Kategorie J umfassen vorzugsweise zumindest Reinigungselemente der dritten Gruppe von Reinigungselementen (Mini-Bündel), der vierten Gruppe von Reinigungselementen (Raster-Bündel) und der sechsten Gruppe von Reinigungselementen (Konventionelle Bündel). Weiter vorzugsweise kann die Kategorie J zusätzlich noch Reinigungselemente der ersten Gruppe von Reinigungselementen (Weichelemente und/oder gespritzte Borsten) umfassen.

Die Raster-Bündel sind bei der Kategorie J vorzugsweise aus mehreren zusammengesetzten Strukturelementen gebildet, welche in ihrer Umgebung eine Vielzahl von sie umgebenden Mini-Bündeln aufweisen. Die Mini-Bündel können die Raster-Bündel dabei zumindest teilweise umgeben oder aber sie können in Formationen in Zwischenräumen der Raster-Bündel angeordnet sein. Es kann des Weiteren auch ein Raster-Bündel vorgesehen sein, welches der Aussenkontur des Borstenträgers folgt und mehrere Mini-Bündel bzw. Formationen von Mini-Bündeln einschliesst.

In den von den einzelnen Strukturelementen der Raster-Bündel umschlossenen Freiräumen können zudem Konventionelle Bündel und/oder Weichelemente und/oder Formationen von gespritzten Borsten angeordnet sein.

Die Konventionellen Bündel sind bei der Kategorie J weiter vorzugsweise ganz vorne im vordersten Trägerbereich angeordnet, ggf. zusätzlich auch ganz hinten im hinteren Trägerbereich.

### Kategorie K

Borstenträger der Kategorie K umfassen vorzugsweise zumindest Reinigungselemente der zweiten Gruppe von Reinigungselementen (Puck-Bündel), der fünften Gruppe von Reinigungselementen (Lange Bündel) und der sechsten Gruppe von Reinigungselementen (Konventionelle Bündel). Weiter vorzugsweise kann die Kategorie K zusätzlich Mini-Bündel oder Weichelemente und/oder Formationen von gespritzten Borsten umfassen.

Vorzugsweise sind bei der Kategorie K jeweils ein Puck-Bündel im oberen Trägerbereich und ein Puck-Bündel im unteren Trägerbereich angeordnet. Die beiden Puck-Bündel können weiter vorzugsweise von einem Langen Bündel umschlossen sein und optional zwischen sich angeordnete Konventionelle Bündel aufweisen.

Sind die beiden Puck-Bündel nicht von einem Langen Bündel umschlossen, ist zwischen ihnen bevorzugt ein Langes Bündel, d.h. vorzugsweise im zentralen Trägerbereich, angeordnet. Das Lange Bündel kann sich dabei auch in den oberen und unteren Trägerbereich und/oder in den rechten und linken Trägerbereich erstrecken.

Weiter vorzugsweise können auch vier Puck-Bündel vorgesehen sein, welche sich im oberen, unteren, rechten und linken Trägerbereich befinden mit ggf. einem zentral dazwischen verlaufenden Langen Bündel und/oder Konventionellen Bündeln.

Weiter vorzugsweise können zudem vier Puck-Bündel vorgesehen sein, welche sich im rechten und linken oberen Trägerbereich sowie im rechten und linken unteren Trägerbereich befinden, mit ggf. einem zentral dazwischen verlaufenden Langen Bündel und/oder Konventionellen Bündeln.

### Kategorie L

Borstenträger der Kategorie L umfassen vorzugsweise zumindest Reinigungselemente der vierten Gruppe von Reinigungselementen (Raster-Bündel) und der sechsten Gruppe von Reinigungselementen (Konventionelle Bündel). Weiter vorzugsweise kann die Kategorie L zusätzlich noch Reinigungselemente der ersten Gruppe von Reinigungselementen (Weichelemente und/oder gespritzte Borsten) oder der dritten Gruppe von Reinigungselementen (Mini-Bündel) umfassen. Anstelle von oder zusammen mit den Raster-Bündeln können auch Reinigungselemente der fünften Gruppe von Reinigungselementen (Lange Bündel) vorgesehen sein.

Das besondere Kennzeichen dieser Kategorie sind zentral angeordnete Form-in-Form-Strukturen sowie Verbindungen verschiedener Formen, welche jeweils aus Raster-Bündeln und/oder Langen Bündeln gebildet werden.

Die Konventionellen Bündel sind bei der Kategorie L weiter vorzugsweise ganz vorne im vordersten Trägerbereich angeordnet, ggf. zusätzlich auch ganz hinten im hinteren Trägerbereich. Sie können die Form-in-Form-Strukturen sowie Form-Verbindungen auch seitlich flankieren.

Die Mini-Bündel und die Weichelemente und/oder Formationen von gespritzten Borsten verlaufen vorzugsweise entlang der Aussenkontur. Die Weichelemente und/oder Formationen von gespritzten Borsten können auch innerhalb grösserer Form-in-Form-Strukturen angeordnet sein.

### Kategorie M

Borstenträger der Kategorie M umfassen vorzugsweise zumindest Reinigungselemente der zweiten Gruppe von Reinigungselementen (Puck-Bündel), welche weiter vorzugsweise Ausnehmungen oder Freiräume aufweisen bzw. umschliessen.

Die Ausnehmungen oder Freiräume innerhalb der Puck-Bündel können leer gelassen werden. Vorzugsweise sind aber in den Ausnehmungen oder Freiräumen Weichelemente und/oder Formationen von gespritzten Borsten angeordnet. Weiter können in den Freiräumen Mini-Bündel angeordnet sein.

Es kann ein sehr grosses Puck-Bündel vorgesehen sein, welches etwa zwei symmetrisch angeordnete Ausnehmungen aufweist. Es können aber auch zwei Puck-Bündel vorgesehen sein, vorzugsweise im oberen und unteren Trägerbereich, wobei ein Puck-Bündel eine Ausnehmung aufweist und das andere Puck-Bündel zwei Ausnehmungen.

Weiter vorzugsweise können zwischen zwei Puck-Bündeln zusätzlich noch Mini-Bündel angeordnet sein.

### Zahnbürstengrundkörper

Im Folgenden wird die bevorzugte Ausgestaltung eines erfindungsgemässen Zahnbürsten-Grundkörpers bzw. seiner einzelnen Teile beschrieben.

Der Borstenträger kann als eigenständiges Teil realisiert werden und etwa mit einem Bürstenkopf Wechselmechanismus kombiniert werden. Der Borstenträger kann zudem mit einer Schnittstelle ausgestattet werden, über welche eine spätere Montage stattfindet oder/aber Bevorzugt wird der Borstenträger als Teil des Grundkörpers des Handgriffs einer Bürste bzw. Zahnbürste realisiert (d.h. einstückig).

Die Borstenlöcher (welche vorliegend im Wesentlichen runde Sacklöcher und Aussparungen mit anderweitigen Querschnitten umfassen) weisen für die Bündelgrösse von «normalen» bzw. konventionellen Bündeln Längen- bzw. Breitenabmessungen von 0.8 mm bis 3 mm, vorzugsweise von 1 mm bis 2 mm, auf.

Spezifisch für das Hot-Tufting- bzw. HT-Verfahren weisen die Borstenlöcher in der Draufsicht gesehen grundsätzlich geschlossene Konturen auf, wobei alle möglichen geometrischen Formen Anwendung finden können.

Im Längsschnitt betrachtet sind die Seitenwände der Borstenlöcher (bzw. der Sacklöcher und der Aussparungen) parallel ausgebildet. In einer bevorzugten Ausführungsform sind die Seitenwände sich gegen das offene Ende öffnend ausgestaltet, was in einem Borstenbündel resultiert, wobei die äusseren Borsten des Bündels in einem entsprechenden Winkel nach aussen geneigt sind.

Die Geometrie im Bodenbereich der Borstenlöcher (bzw. der Sacklöcher und der Aussparungen) kann eben ausgestaltet sein oder aber der Bodenbereich kann mit einem Profil versehen sein; dabei kann die Mitte versenkt oder erhöht ausgebildet sein, es kann aber auch ein Verlauf mehrerer konzentrischer Ringe beziehungsweise Formen vorgesehen sein, welche der Aussenkontur folgen. Der Übergang vom Boden zu den Wänden kann eckig oder gerundet ausgeführt sein.

Die Tiefe der Borstenlöcher (bzw. der Sacklöcher und der Aussparungen) reicht von 1 mm bis 5 mm, vorzugsweise von 2 mm bis 4 mm.

Die Oberflächen in den Borstenlöchern (bzw. den Sacklöchern und Aussparungen) kann glatt oder rau ausgebildet sein.

Der Minimalabstand von den Borstenlöchern (bzw. den Sacklöchern und der Aussparungen) zum Rand des Borstenträgers beträgt von 1 mm bis 3 mm, vorzugsweise von 1 mm bis 2 mm.

Vorzugsweise können Stege- und/oder Querschnitte zwischen den Borstenlöchern (bzw. den Sacklöchern und den Aussparungen) vorgesehen sein. Die jeweilige Breite der Stege ist vom Spritzgiessprozess und vom Verarbeitungswerkzeug abhängig.

Die Stege- und/oder Querschnitte können Materialreservoir-Elemente aufweisen und zwar in Form von Schmelzstrukturen bzw. von überhohen Strukturen (d.h. etwa eine grössere Kopfdicke im Rohzustand als im Endzustand) oder auch in Form von Vertiefungen zur Aufnahme von überschüssigem verdrängtem Material.

Der Borstenträger weist regelmässig eine konstante Kopfhöhe auf. Dabei sind die Vorderseite und die Rückseite im Wesentlichen parallel zueinander.

Es kann aber auch eine variable Kopfhöhe vorgesehen werden, d.h. es gibt verschiedene Höhen im Bürstenkopf. Dabei kann beispielweise die Höhe gegen Kopfende hin abnehmen, was etwas mehr an Flexibilität bringt.

Die Abmessungen des Borstenträgers liegen zwischen 3 mm bis 8 mm, vorzugsweise zwischen 3 mm bis 5 mm.

Folgende bevorzugte Borstenträger-Varianten sind ausserdem denkbar.

Zunächst kann Weichmaterial am Borstenträger vorgesehen werden. An der Vorderseite kann dies in Form von Massage- und/oder Reinigungselementen geschehen. Es kann aber auch bzw. zusätzlich die Rückseite mit Weichmaterial abgedeckt werden (z.B. bei transparenter Geometrie). Weiter kann das Weichmaterial als Zungenreiniger geformt sein.

Am Seitenrand sind bevorzugt Dämpfungselemente bzw. Stossdämpfer aus Weichmaterial vorgesehen.

Generell werden beim HT-Verfahren Abstützflächen integriert bzw. Geometrien so ausgestaltet, dass das Weichmaterial auf der Rückseite nicht verfahren wird. Der Grund hierfür ist, dass die Vereinigung vom Borstenträger mit den Borsten mittels Wärme und Druck passiert. Vorzugsweise werden Inseln aus Hartmaterial vorgesehen welche werkzeugseitig abgestützt werden, die durch das Weichmaterial ragen oder aber Ausnehmungen im Weichmaterial, die bis auf den Grundkörper aus Hartmaterial reichen.

Wenn Weichmaterial auf der Oberfläche des Borstenträgers vorgesehen wird kann dies in Form von Ringen bzw. Rahmen um die Borstenlöcher erfolgen, die von der Oberfläche abstehen (sog. «boots»).

Es kann ansonsten auch die Oberfläche (Vorderseite) jedenfalls teilweise mit Weichmaterial überzogen sein.

Die Schichtdicke des Weichmaterials reicht von von 0.1 mm bis 2 mm, vorzugweise von 0.5 mm bis 1 mm.

In die Oberflächen am Borstenträger können beim HT-Verfahren Strukturen eingebracht werden. Das Ziel solcher Strukturen ist es die Rückseite abzudecken, wodurch generell ein optischer Effekt erzielt wird (durch das Einbringen der Struktur wird etwa ein transparentes Material transluzent).

Vorzugsweise geschieht dies bei der Montage der Borstenbündel im Borstenträger. Der Ablauf ist dabei wie folgt: der Borstenträger ist erwärmt und wird bei der Montage in der Kavität gehalten, wobei in die Kavität eine Struktur eingebracht ist, anschliessend wird der Borstenträger in die Struktur gedrückt, woraufhin sich die Struktur auf dem Borstenträger abformt bzw. eingeprägt wird. Voraussetzung für diesen Prozess ist, dass die Rückseite des Borstenträgers auch erwärmt und somit verformbar ist.

Mögliche Strukturen, welche in den Borstenträger eingebracht werden, umfassen eine Erodierstruktur (d.h. eine Rauigkeit) oder aber grössere Strukturen mit effektiven Höhenunterschieden.

Die Löcher bzw. Aussparungen im Borstenträger haben folgende mögliche Funktionen: sie können zum Durchspülen dienen oder aber zur Zahnpasta-Dosierung (z.B. in Kombination mit einer umgebenden Borstenstruktur). Die Zahnpasta kann von vorne oder via ein Loch im Grundkörper in die Borstenstruktur bzw. das Borstenbündel eingebracht werden. Die Grösse der Struktur entspricht dabei dem Volumen bzw. der Menge an benötigter Zahnpasta für einen Reinigungsvorgang.

In bevorzugter Ausgestaltung umfasst die Borstenbündelgrundfläche dieselbe Geometrie wie die Ausnehmung (z.B. ein wabenförmiges Loch in einem raster- bzw. wabenförmigen Borstenbündel).

Das Borstenfeld umfasst zunächst als erste Gruppe von Reinigungselementen die Weichelemente und/oder gespritzten Borsten (vgl. Beschreibung oben), welche als Massageelemente für etwa das Zahnfleisch bzw. zur Zahnreinigung dienen.

Das Borstenfeld umfasst weiterhin vorzugsweise als zweite Gruppe von Reinigungselementen Puck-Bündel, als dritte Gruppe von Reinigungselementen Mini-Bündel, als vierte Gruppe von Reinigungselementen Raster-Bündel, als fünfte Gruppe von Reinigungselementen Lange Bündel und als sechste Gruppe von Reinigungselementen Konventionelle Bündel (vgl. Beschreibung oben).

Zusätzlich können noch die zuvor erwähnten nicht borstentragenden (Reinigungs-) Elemente oder Applikatoren ins Borstenfeld eingebracht werden.

Für die Borstenbündel, insbesondere gemäss den Gruppen zwei bis sechs, gilt vorliegend, dass immer mehrere Borsten direkt aneinander anliegen.

Weitere Formen, welche mit den vorstehend genannten Gruppen von Reinigungselementen gestaltet werden können umfassen zum Beispiel Scherenschnittformen, Ornamente, Tribal Tattoos, Kristallformen (wie etwa Eis/Schneekristalle), Turbinenformen und Kornkreise etc.

Die Abmessungen der Borstenhöhen reichen vorzugsweise von 4 mm bis 17 mm, weiter vorzugsweise von 8 mm bis 13 mm.

Es besteht auch die Möglichkeiten Höhenstufen vorzusehen, wobei die Stufenhöhe reicht von 0.5 mm bis 5 mm (d.h. im Bündel selbst).

Die Bündelbreite beträgt minimal 0.3 mm bis 1 mm, vorzugsweise 0.5 mm bis 0.8 mm (beim AFT-Verfahren vorzugsweise 0.6 mm breite Bündel).

Der Minimalabstand zwischen den einzelnen Borstenbündeln beträgt 0.4 mm, was gleichzeitig der Minimalbreite der Stege entspricht.

Die seitlichen Abschlüsse der Borstenbündel können winklig ausgestaltet sein, so dass sich ein fächerartiges Aussehen ergibt.

Generell gilt, dass die Strukturen auch in einem Teil des Borstenfeldes realisiert sein können, um zu verhindern, dass ein «Teppich» geformt wird (d.h. es soll verhindert werden, dass ein zu flächiges bzw. zu dicht gepacktes Borstenfeld entsteht).

Insgesamt können durch ein günstiges Verhältnis von der Kopfbreite maximale beborstete Breitenanteile bereitgestellt werden, so dass eine sehr grosse Ausfüllung des Borstenträgers erreicht wird.

In weiteren bevorzugten Ausführungsformen kann als Zusatzteil am/im Borstenbündel vorgesehen werden ein Weichmaterialmantel um das Borstenbündel, beispielsweise in Form einer Weichmaterialfolie um das Bündel oder innerhalb des Bündels. Das Anbringen am/im Borstenbündel erfolgt vor dem Einbringen in den Borstenträger und das Fixieren zusammen mit dem Borstenbündel im Körper (d.h. direkt im gleichen Sackloch bzw. der gleichen Aussparung).

Weiter vorzugsweise können auch Zusatzteile im Borstenfeld vorgesehen werden. Die Montage solcher Zusatzteile stellt grundsätzlich einen weiteren Prozessschritt dar, welcher vor dem Anbringen der Borsten oder aber auch nach dem Anbringen der Borsten ausgeführt wird.

Als Fixierungsvariante kommt in Betracht eine Einklick-Montage. Diese kann erfolgen mit Beweglichkeit (in Längs- oder in Querrichtung) . Es kann aber auch eine Rundum-Führung vorgesehen sein (z.B. durch Montage eines weichelastischen Reinigungs- und/oder Massageelements nach dem Fixieren der Beborstung bzw. durch Einklicken in ein Loch).

Es kann allerdings auch ein Fixieren analog der Borstenfixierung vorgesehen werden (d.h. das Montageende wird im Körper eingepresst).

Das Zusatzteil ist vorzugsweise als zweiteiliges Element ausgebildet mit einem Grundteil sowie mit einem Funktionsteil. Das Grundteil wird dabei im Borstenträger fixiert und ist vorzugsweise aus einem Hartmaterial gebildet. Das Funktionsteil wird auf dem Grundteil montiert und ist vorzugsweise ausgebildet in Form von gespritzten Borstenschaumstoffteilen, gespritzten Borsten oder gespritzten Lamellen d.h. gespritzten Weichelementen. Das Funktionsteil ist vorzugsweise ein Zwei-Komponenten-Spritzgussteil. Das Zusatzteil kann vorne und/oder hinten auf dem Borstenträger montiert sein.

Für den fertigen Bürstenkopf ergeben sich auf diese Weise verschiedene Ausprägungen hinsichtlich des Borstenträgers, der Borstenbündel sowie hinsichtlich der Zusatzteile.

Das Griffteil kann in einem Ein- oder Mehrkomponentenspritzgiessverfahren gebildet werden. Dabei können die Komponenten nur im Griff oder auch in den Kopf geführt werden.

Im Folgenden soll das Herstellverfahren generell sowie anhand von diversen bevorzugten Ausgestaltungsvarianten beschrieben werden.

Das Spritzgiessen wird in einem Spritzgusswerkzeug (bzw. einer entsprechenden Maschine) vorzugsweise in Form eines Mehrkomponenten-Spritzgusses ausgeführt. Dabei können sich die Materialien verbinden und zwar durch Materialschluss oder durch Stoffschluss. Es ist aber auch möglich, dass sich die Materialien nicht verbinden, d.h. es wird etwa mittels Formschluss eine Schwundverbindung mit Beweglichkeit bzw. einem Gelenk erzeugt.

Es können generell sowohl Heisskanal-, Kaltkanal- oder Co-Injektions-Verfahren angewandt werden.

Bei den bevorzugten Beborstungsverfahren handelt es sich um ankerlose Verfahren.

Generell ist hierzu anzumerken, dass die Borsten nicht gefaltet werden und dass kein Ankerstanzdraht verwendet wird. Die Borsten haben mithin, verglichen mit den Borsten aus dem Ankerstanzverfahren, nur die halbe Länge.

Der Ablauf einer ersten bevorzugten Verfahrensvariante ist wie folgt: Zunächst werden die Borstenbündel vereinzelt, anschliessend werden die Borstenenden verschmolzen und danach werden die Borstenenden direkt umspritzt. Die Borstenbündel können hier generell zusammengeführt d.h. zu einem grösseren Bündel vereinigt werden.

Wenn das Umspritzen auch das Spritzgiessen des Griffs beinhaltet spricht man vom sogenannten In Mold Tufting Verfahren (IMT-Verfahren). Werden zuerst die Borsten mit Plättchen umspritzt und anschliessend die Plättchen mit dem Griff umspritzt spricht man von Integrated Anchorless Production

Der Ablauf einer zweiten bevorzugten Verfahrensvariante ist wie folgt: Zunächst erfolgt das Spritzgiessen der Borstenplättchen mit Durchgangslöchern, anschliessend werden die Borsten bereitgestellt und durch das Borstenplättchen geführt, danach werden die Borsten auf der Rückseite verschmolzen und mit dem Borstenplättchen verschmolzen, schliesslich wird das beborstete Borstenplättchen mit separat hergestelltem Griff mittels Ultraschall verschweisst.

Können Borstenbündel im Prozess zusammengeführt werden, so kann das sogenannte Anchor Free Tufting Verfahren (AFT-Verfahren) im Einsatz sein.

Der Ablauf einer dritten bevorzugten Verfahrensvariante ist wie folgt: Zunächst erfolgt das Spritzgiessen des Grundkörpers mit Durchgangslöchern für Borsten im Kopfbereich, anschliessend werden die Borsten bereitgestellt und durch die Durchgangslöcher im Kopfbereich geführt, dann werden die Borsten auf der Rückseite verschmolzen und anschliessend wird die Borstenschmelze mit Weichmaterial überspritzt (AMR-Verfahren, d.h. Ankerlos Mit Runden Löchern).

Der Ablauf der vierten, vorliegend am meisten bevorzugten Verfahrensvariante ist wie folgt: Zunächst wird ein Grundkörper mit Sacklöchern bzw. Aussparungen im Kopfbereich gespritzt, anschliessend werden die Borsten bündelweise bereitgestellt, danach werden die Borsten bündelweise verschmolzen, anschliessend wird der Grundkörper im Kopfbereich (d.h. der Borstenträger) etwa auf Glastemperatur erwärmt und schliesslich werden die verschmolzenen Borstenenden in die Sacklöcher bzw. Aussparungen eingeführt und die Borstenbündel mit Druck in dem Borstenträger verankert (d.h. die Grösse der Sacklöcher wird reduziert bzw. die Geometrie verformt und die Borstenbündel so verankert). Hier spricht man vom Hot Tufting Verfahren (HT-Verfahren), wie bereits oben beschrieben.

Im Folgenden sollen einzelne Belange des HT-Verfahrens noch einmal etwas weiter spezifiziert werden.

Die Bereitstellung der Borstenbündel umfasst vorzugsweise, dass den Borstenbündeln beim Ansengen eine Form gegeben wird. Die Form wird dabei vor dem Einführen in den Borstenträger gegeben, indem Druck auf die Borstenschmelze ausgeübt wird. So können beispielsweise schräge Borstenbündel oder fächer-artige Borstenbündel erzeugt werden.

Generell ist anzumerken, dass wiederum mehrere Picks ein Borstenbündel bilden können.

Die Erwärmung des Borstenträgers kann gezielt bzw. gesteuert erfolgen. Es muss beispielsweise nicht der ganze Kopf bzw. Borstenträger erwärmt werden. Des Weiteren kann die Halte-/Pressvorrichtung etwa in verschiedenen Bereichen mit verschiedenen Formen und Temperaturen versehen sein. In diesem Kontext kann etwa ein Kühlschwert verwendet werden, welches auf gewisse Stellen des Borstenträgers gelegt oder in den Borstenträger eingefahren werden kann (d.h. zur partiellen Kühlung).

In einem optionalen Zwischenschritt dieser Verfahrensvariante kann eine Zwischenschicht zwischen den Borstenbündeln und dem Borstenträger eingebracht werden.

Hierzu kann einerseits eine Folie eingelegt werden, d.h. die Borstenbündel werden durch die Folie geführt und die Folie so ins Borstenloch gezogen (d.h. die Folie wird mittels der Borstenbündel durch die Oberfläche «gestanzt»).

Andererseits kann auch eine Schicht appliziert werden. Hierbei werden die Borstenbündel erst in ein Fluid getunkt und dann erst in den Borstenträger eingeführt (hierfür wird regelmässig ein zähflüssiges Fluid wie etwa Wachs verwendet). Alternativ kann der Bürstenkörper auch mit einem Fluid besprüht werden.

Die Funktion der Zwischenschicht kann bestehen in der Abgabe von Mitteln bzw. Wirkstoffen (Chemical Release). Des Weiteren kann die Haftung zwischen Borstenbündel und Grundkörper (etwa durch Additive) verbessert werden. Ausserdem kann mittels der Zwischenschicht der Zwischenraum zwischen Borstenbündel und Borstenträger komplett ausgefüllt werden, beispielsweise um eine verbesserte Verankerung zu erreichen. Schliesslich kann mittels der Zwischenschicht auch ein optischer Effekt in einem transparenten Borstenträger bereitgestellt werden (z.B. eine Farbänderung durch die Zugabe von hoch empfindlichen Additiven mit entsprechender Anpressdruckkontrolle) .

Bevorzugte Varianten zum Vereinigen/Fixieren/Pressen der Borstenbündel werden nachstehend beschrieben.

Vorzugsweise wird den Borstenbündeln beim Vereinigen eine Form geben. Das Borstenbündel wird in den Borstenträger eingebracht bzw. das Borstenbündel ergibt sich in Form (der Druck auf die Borsten erzeugt Druck auf die Schmelze mit dem Ziel einer Verformung).

Des Weiteren kann die Aufnahme für den Bürstenkopf fahrbar sein. Durch ein seitliches Zufahren kann etwa ein mehr seitliches Einpressen von den Borstenbündeln erreicht werden. Es kann auch eine variable Presszone auf der Unterseite des Bürstenkopfs vorgesehen sein.

Beim Pressschritt kann auch etwa ein Ausstanzen erfolgen, so dass sich für ein Spritzgussteil mehrere Endprodukte ergeben können. Dies kann für Single-Tuft Mundhygiene-Produkte oder auch für Kosmetik-Applikatoren wie z.B. Nagellackpinsel von Interesse sein. Diese können auf diese Weise bis zum Beborsten zusammen verarbeitet werden und mit dem Beborsten zu einzelnen Produkten aufgetrennt werden.

Weiterhin kann beim Pressschritt auch ein Prägevorgang erfolgen, d.h. es kann mittels Druck etwa ein Logo in den Borstenträger bzw. das Kopfteil eingebracht werden.

Es können auch weitere Strukturen eingebracht werden. Beispielsweise kann eine Oberflächenrauigkeit geschaffen werden, etwa in Form einer Rauigkeit am Borstenträger bzw. Kopfteil. Hierdurch kann einerseits ein optischer Effekt erzielt werden dergestalt, dass die Rückseite der Borstenbündel weniger sichtbar ist. Andererseits kann etwa auch ein funktionaler Effekt in Form eines Zungenreinigers erreicht werden.

Des Weiteren können abweichende Formen des Borstenträgers geschaffen werden wie etwa eine (besonders) flache Herstellung; es kann auch eine Topographie nachgedrückt werden.

Beim Schliessen der Sacklöcher bzw. Aussparungen können zum einen schräggestellte Borstenbündel geschaffen werden. In einer ersten Variante wird eine winklige Ausnehmung durch Schaffen eines entformbaren Sacklochs bzw. einer Aussparung erzeugt. Der Borstenträger bekommt dadurch ein vorstehendes Materialreservoir. Die Borstenbündel kommen in das Sackloch bzw. die Aussparung und anschliessend wird das Sackloch bzw. die Aussparung durch das aufgeschmolzene Materialreservoir geschlossen.

In einer zweiten Variante wird eine asymmetrische Verformung geschaffen, wodurch der Borstenträger asymmetrische Materialreservoirs bekommt. Beim Pressen werden die Materialreservoirs verdrückt, so dass das Sackloch bzw. die Aussparung asymmetrisch wird; die Borstenbündel stehen im Endeffekt schräg und werden zwangsentformt (Entnahme aus dem Werkzeug).

Beim Schliessen der Sacklöcher bzw. Aussparungen können andererseits Borstenbündel in Form von Fächern geschaffen werden. Hierzu müssen die Borstenbündel vorzugsweise rund, d.h. etwa in einem runden Sackloch bereitgestellt werden. Die Schliesselemente bzw. Materialreservoirs sind hier i.d.R. nicht konzentrisch zum Sackloch, sondern länglich ausgebildet (d.h. die Schliesselemente bzw. Materialreservoirs verlaufen links und rechts des Sacklochs).

Das Zusammendrücken der Schliesselemente bzw. Materialreservoirs bringt mit sich, dass sich ein Fächer bildet und zwar entweder ein regelmässiger Fächer oder aber ein Fächer mit einem stärkerem bzw. etwas breiterem Zentrum (vgl. oben).

Die Formung von Widerhaken bzw. von Verankerungen für die Borstenbündel erfolgt durch Materialverdrängung (d.h. im erwärmten Material). Dabei wird in einer ersten Variante ein ursprünglich gespritztes Materialreservoir bzw. eine später gebildete Materialansammlung verdrückt.

In einer zweiten Variante kann eine Verdrängung von Material aus einem ebenen Borstenträger erfolgen. Hierzu kann das Halte-/Presswerkzeug an seiner Stirnseite entsprechende Vorsprünge aufweisen (z.B. zackenförmige Vorsprünge oder aber wulstartige Vorsprünge). Es kann jedoch bereits ausreichen, dass entsprechend erwärmte Material mittels einer flach ausgebildeten Stirnseite des Halte-/Presswerkzeugs zu verdrücken, um eine ausreichend gute Halterung bzw. Verankerung der Borstenbündel zu erreichen.

In einer weiteren bevorzugten Variante wird der ganze Borstenträger (ggf. auch der gesamte Grundkörper) inklusive der Borstenbündel nach deren Befestigung verformt.

Die vorliegende Erfindung findet generell Anwendung bei Bürstenprodukten für die Körperpflege, für medizintechnische Bürstenprodukte sowie bei Bürstenprodukten für den Haushalt.

Bezüglich der Mundhygiene sind umfasst manuelle Zahnbürsten in Form von Mehrwegzahnbürsten (inklusive Wechselkopfzahnbürsten) oder Einwegzahnbürsten. Als spezielle Form sind Single Tuft Zahnbürsten (für die Interdental-Reinigung) umfasst.

Weiterhin sind umfasst elektrische Zahnbürsten mit diversen Bewegungsformen des Bürstenkopfes bzw. der Aufsteckbürste wie etwa Oszillierend, Schwenkend oder Translatorisch oder Vibrierend (oder Kombinationen und Überlagerungen der vorgenannten Bewegungsformen).

Auch Interdentalreiniger, ob kombiniert mit gespritzten Elementen oder ohne, sind umfasst sowie Zungenreiniger (d.h. Nur-Zungenreiniger oder auf einer Zahnbürste angeordnete Zungenreiniger).

Im Kosmetikbereich sind umfasst Mascarabürsten, Nagellack-Applikatoren bzw. Nagellack-Pinsel (sehr gut geeignet für HT-Verfahren, da einfacher als AFT). Die Herstellung umfasst das Stielspritzen mit den Ausnehmungen vorne am Stiel, wobei zum Beborsten seitlich abgestützt werden sollte. Weitere Kosmetikprodukte umfassen Gesichtsbürsten, Applikatoren, Massagegeräte, Makeup-Pinsel, Rasierpinsel, Strähnchenpinsel, Haarbürsten oder Nagelbürsten.

Weiter umfasst sind Applikatoren für die Medizinaltechnik sowie Abwaschbürsten, Bodenwischer und Besen für den Haushalt.

Bei elektrischen Zahnbürsten sind im Übrigen folgende Antriebe denkbar: ein Getriebe mit 1:1 Untersetzung oder 1:1 Übersetzung, ein Schwinganker (die oszillierende Bewegung des Schwingankers wird direkt auf die Aufsteckbürste übertragen, die Drehachse des Bürstenkopfes steht im Wesentlichen parallel zur Längsachse der Elektrozahnbürste.) oder ein Elektromotor (die kontinuierliche 360° Drehbewegung des Elektromotors wird mittel Getriebe in eine oszillierende Drehbewegung des Bürstenkopfes umgesetzt, die Drehachse des Bürstenkopfes steht im Wesentlichen senkrecht zur Längsachse der Elektrozahnbürste. Als Energiespeicher werden vorzugsweise verwendet Einwegbatterien oder Akkumulatoren (NiMh, Li-Ion). Die Ladung erfolgt vorzugsweise induktiv oder aber direkt mit Steckverbindung.

Im Hinblick auf Nomenklatur sei an dieser Stelle allgemein angemerkt, dass vorliegend als Ober- oder Vorderseite der Zahnbürste jene Seite der Bürste bezeichnet wird, auf welcher der Daumen aufgelegt wird. Die Ober- oder Vorderseite ist normalerweise auch jene Seite, auf welcher das Borstenfeld gerichtet ist.

Als Unter- oder Rückseite der Zahnbürste wird die dem Borstenfeld entgegengesetzte Seite der Zahnbürste bezeichnet.

Als linke Seite der Zahnbürste wird jene Seite bezeichnet, welche links liegt, wenn man senkrecht auf die Vorderseite der Zahnbürste draufschaut. Die rechte Seite liegt in diesem Fall rechts.

Als Unterseite des Kopf- bzw. Trägerplättchens wird jene Seite bezeichnet, welche in die Ausnehmung des Grundkörpers gelegt wird und in Richtung der Unterseite der Zahnbürste zeigt. Entsprechend zeigt die Oberseite des Kopfplättchens in Richtung der Oberseite der Zahnbürste.

Weiter vorzugsweise ist vorliegend umfasst ein Bürstenprodukt, insbesondere Zahnbürste, aufweisend einen Grundkörper mit einem Kopfteil mit einer Vorder- und einer Rückseite, welches einen Borstenträger mit einem von der Vorderseite abstehenden Borstenfeld umfasst; einem Griffteil; sowie einem das Kopfteil mit dem Griffteil verbindenden Halsteil; wobei der Borstenträger ankerlos beborstet ist und wobei das Kopfteil zumindest teilweise aus einer flexiblen Materialkomponente gebildet ist.

Bevorzugt wird dieses Bürstenprodukt im AMR-Verfahren (AMR: Ankerlos mit runden Löchern) hergestellt. Beispiele für mögliche weitere mögliche Herstellungsverfahren sind IMT (In Mold Tufting), AFT oder IAP (Integrated Anchorless Production).

Beim AFT- Verfahren (Anchor Free Tufting) werden die konventionellen, zylindrischen oder zugespitzten Borsten beziehungsweise die Borstenbündel ohne Hilfe eines Ankers am Kopfteil oder an einem Trägerplättchen befestigt. Die gerundeten Borsten werden dabei bündelweise profiliert und mit ihrem dem freien Nutzende gegenüberliegenden Ende durch Durchlässe im Borstenträger hindurchgeführt, so dass ein Endbereich der Borstenbündel über die Unterseite des Borstenträgers hinausragt. An diesem über die Unterseite des Borstenträgers hinausragenden Endbereich der Borsten werden diese durch Aufschmelzen, Verkleben oder Verschweissen befestigt. Der Borstenträger wird anschliessend mit den darin befestigten konventionellen Borsten in der Ausnehmung des Kopfbereichs der Zahnbürste verankert, beispielsweise durch Ultraschall-Schweissen. Die Ausnehmung im Kopfbereich ist dabei speziell an die Geometrie des Borstenträgers angepasst. Neben den konventionellen Borsten kann der Borstenträger oder auch der Kopfbereich der Zahnbürste weichelastische Massage- und Reinigungselemente enthalten.

Im IMT-Verfahren werden die konventionellen Pflegeborsten in einer Spritzgussmaschine zur Verankerung mittels Kunststoff umspritzt (In Mould Tufting IMT).

Ein weiterer Typ einer Beborstungsmaschine zur Herstellung ankerloser Zahnbürsten ist aus DE 10 2006 026 712 bekannt. Diese kombiniert die bereits oben erwähnten Verfahren. Ein mit Borstenbüscheln versehenes Borstentragplättchen (analog einem beborsteten Borstentragplättchen aus dem AFT-Prozess) wird in eine Kavität einer Spritzgussform eingelegt, in welche anschliessend, zur Verankerung und zur Bildung des restlichen Teils des Bürstenkopfs, Kunststoff eingespritzt wird.

Es werden vorliegend insbesondere die folgenden Bürstenprodukte hergestellt: manuelle Zahnbürsten (Einwegzahnbürsten oder Mehrwegzahnbürsten bzw. Wechselkopfzahnbürsten), Interdentalreiniger (Interdentalbürsten, Flosser), elektrische Zahnbürsten (in allen Bewegungsformen wie beispielsweise rotierend oszillierend, seitwärts schwenkend, translatorisch, vibrierend, Kombinationen und Überlagerungen der erwähnten Bewegungen), Zungenreiniger (blosse Zungenreiniger oder auf Zahnbürste angeordnet), Körperpflege- oder Kosmetikbürsten wie z.B. Haarbürsten, Gesichtsbürsten, Mascarabürsten, Nagellackpinsel, Massagegeräte, Make-up Applikatoren (wie Make-up Pinsel), Rasierpinsel, Strähnchenpinsel, medizinaltechnische Applikatoren sowie Haushaltbürsten wie z.B. Abwaschbürsten, Bodenwäscher oder Besen.

In einer bevorzugten Ausführungsform der Erfindung ist bzw. sind das Kopfteil, das Griffteil und/oder das Halsteil aus mindestens einer Hart- und/oder einer oder mehreren Weichmaterialkomponenten gebildet. Dies hängt jeweils von der konkret gewünschten Ausgestaltung des jeweiligen Bürstenprodukts ab.

In einer weiteren bevorzugten Ausführungsform der vorliegenden Erfindung ist bzw. sind die Hartmaterialkomponente(n) aus Styrolpolymerisaten wie Styrolacrylnitril (SAN), Polystyrol (PS), Acrylnitrilbutadienstyrol (ABS), Styrolmethylmethacrylat (SMMA) oder Styrolbudien (SB); Polyolefinen wie Polypropylen (PP) oder Polyethylen (PE) (vorzugsweise auch in Form von High Density Polyethylen (HDPE) oder Low Density Polyethylen (LDPE)); Polyestern wie Polyethylenterephthalat (PET) in Form von säuremodifiziertem Polyethylenteraphthalat (PETA) oder glycolmodifiziertem Polyethylenterephthalat(PETG), Polybutylenterephthalat (PBT), säuremodifiziertem Polycyclohexylendimethylenterephthalat (PCT-A) oder glycolmodifiziertem Polycyclohexylendimethylenterephthalat (PCT-G); Cellulosederivaten wie Celluloseacetat (CA), Celluloseacetobutyrat (CAB), Celluloseproprionat (CP), Celluloseacetatphthalat (CAP) oder Cellulosebutyrat (CB); Polyamiden (PA) wie PA 6.6, PA 6.10 oder PA 6.12; Polymethylmethacrylat (PMMA); Polycarbonat (PC); Polyoxymethylen (POM); Polyvinychlorid (PVC); und/oder aus Polyurethan (PUR) gebildet (d.h. Thermoplasten). Diese Materialien haben sich in der Fertigung als besonders geeignet erwiesen; es sind allerdings auch andere Hartmaterialkomponenten denkbar.

In einer weiteren bevorzugten Ausführungsform der vorliegenden Erfindung ist bzw. sind die Weichmaterialkomponente(n) aus einem thermoplastischem Polyurethanelastomer (TPE-U); einem thermoplastischem Styrolelastomer (TPE-S) (wie vorzugsweise etwa einem Styrolethylenbutylenstyrolcopolymer (SEBS) oder Styrolbutadienstyrolcopolymer (SBS)); einem thermoplastischem Polyamidelastomer (TPE-A); einem thermoplastischem Polyolefinelastomer (TPE-O) und/oder einem thermoplastischem Polyesterelastomer (TPE-E) gebildet (d.h. thermoplastische Elastomere). Diese Materialien haben sich in der Fertigung als besonders geeignet erwiesen; es sind allerdings auch andere Weichmaterialkomponenten denkbar.

In einer weiteren bevorzugten Ausführungsform der vorliegenden Erfindung weist bzw. weisen die Weichmaterialkomponente(n) eine Shore A Härte von weniger als 90 auf. Insbesondere im Hinblick auf die Verwendung als Reinigungs-/Massageelemente oder als Zungenreiniger kann auf diese Weise eine schonende Behandlung des Zahnfleischs bzw. des Zungengewebes gewährleistet werden.

In einer weiteren bevorzugten Ausführungsform der vorliegenden Erfindung ist die Hartmaterialkomponente aus Polypropylen (PP) mit einem Elastizitätsmodul von 1000 bis 2400 N/mm², bevorzugt von 1200 bis 2000 N/mm² und weiter vorzugsweise von 1300 bis 1800 N/mm² gebildet. Hierdurch kann eine für die Handhabung des Bürstenprodukts sowie für die Zahnreinigung besonders geeignete Flexibilität bereitgestellt werden. Weiter bevorzugt wird hiermit ein thermoplastisches Styrolelastomer (TPE-S), wie vorzugsweise etwa ein Styrolethylenbutylenstyrolcopolymer (SEBS) oder ein Styrolbutadienstyrolcopolymer (SBS), verwendet.

Weiter vorzugsweise können die Thermoplaste Polyethylen (PE) und Polyurethan (PUR) im Rahmen der vorliegenden Erfindung sowohl als Hartmaterialkomponente als auch als Weichmaterialkomponente eingesetzt werden.

In einer weiteren bevorzugten Ausführungsform der vorliegenden Erfindung bilden die Weichmaterialkomponente(n) mit der/den Hartmaterialkomponente(n) einen Materialschluss, vorzugsweise mittels Überspritzen im Zwei- oder Mehrkomponenten-Spritzgussverfahren. Auf diese Weise kann eine besonders stabile Verbindung zwischen den einzelnen Komponenten sichergestellt werden.

In einer weiteren bevorzugten Ausführungsform der vorliegenden Erfindung umfasst das Borstenfeld konventionelle, extrudierte Borsten und/oder gummielastische Massage-/Reinigungselemente und/oder gespritzte Borsten. Hiermit kann eine möglichst hohe Gestaltungsfreiheit erzielt werden. Die konventionellen, extrudierten Borsten werden vorzugsweise in Form von (kreis-)runden Borstenbündeln bzw. in geometrisch anderweitig gestalteten Borstenbündeln zusammengefasst (ggf. dreieckigen, rechteckigen, quadratischen, rombusförmigen, trapezförmigen, sichelförmigen, elliptisch, polygonförmig, länglichen, eckigen oder gebogenen Geometrien) vor.

In einer weiteren Ausführungsform weist das Material aus welchem die gespritzten Borsten (d.h. mittels Spritzguss hergestellte Borsten) gebildet sind eine Shore D Härte von 0 bis 100, vorzugsweise von 20 bis 90, bevorzugter von 30 bis 80 und weiter vorzugsweise von 40 bis 70 auf. In diesen Bereichen kann eine besonders effektive Reinigungswirkung erzielt werden. Weiter vorzugsweise werden hierbei die gespritzten Borsten gebildet aus einem Polyamidelastormer, vorzugsweise Grillflex EG 5930 von der EMS Chemie AG; einem Polyesterelastomer, vorzugsweise Riteflex 672 AF Nat oder Riteflex RKX 193 RF Nat von Ticona Polymers oder Hytrel 7248 von DuPont; und besonders bevorzugt aus einem thermoplastischen Polyurethan (TPU), vorzugsweise Elastollan von BASF oder Desmopan von Bayer. Diese Materialen weisen u.a. eine hohe Verschleiss- und Abriebfestigkeit auf.

In einer weiteren bevorzugten Ausführungsform der vorliegenden Erfindung sind die konventionellen, extrudierten Borsten aus Polyamid (PA) oder Polyester (PBT) gebildet. Auch hiermit werden eine gute Reinigungswirkung (d.h. bei Zahnbürsten) sowie eine gute Haltbarkeit gewährleistet. Konventionelle, extrudierte Borsten verfügen in der Regel über eine im Wesentlichen zylindrische Form. Das nutzungsseitige Ende wird vor, während oder nach dem Borstenverankerungsprozess bearbeitet um gegebenenfalls scharfe Kanten zu entfernen und ein möglichst halbkugelartiges Borstenende zu erhalten.

Die konventionellen, extrudierten Borsten können aber auch eine zugespitzte Form aufweisen (kegelförmig) um mit den spitzen Enden eine hohe Interdentalreinigung zu entfalten.

Gespritzte und konventionelle Borsten weisen Querschnittflächen mit ähnlichen Dimensionen auf (z.B. 0.02 - 0.5mm²).

Die gummielastische Massage-/Reinigungselemente sind im Übrigen vorzugsweise aus einer der vorerwähnten Weichmaterialkomponenten gebildet. Sie weisen in der Regel deutlich grössere Querschnitte (Querschnittfläche > 0.5mm²) auf als die gespritzten Borsten und werden aus Materialien mit deutlich geringerer Shore Härte hergestellt.

Weiter vorzugsweise sind im Rahmen der vorliegenden Erfindung als Hart-, Weichkomponente oder zur Borstenherstellung Bio-Kunststoffe einsetzbar, d.h. Kunststoffe die aus nachwachsenden Rohstoffen hergestellt sind (z.B. Celluloseacetat (CA), Polymilchsäure (PLA), Polyhydroxybuttersäure (PHB) oder thermoplastische Stärke).

In einer weiteren bevorzugten Ausführungsform der vorliegenden Erfindung sind die konventionellen, extrudierten Borsten bzw. Borstenbündel an deren nutzungsseitig abgewandten Enden, an der Rückseite des Borstenträgers aufgeschmolzen und der dadurch entstandene Borstenschmelzteppich ist mit einer Abdeckung (vorzugsweise zumindest teilweise aus einer der vorerwähnten Materialkomponenten) überspritzt. Der Anspritzpunkt befindet sich vorzugsweise auf der Rückseite des Bürstenkopfes oder im Halsbereich.

Vorzugsweise wird dazu eine Weichmaterialkomponente verwendet und damit gleichzeitig und im selben Arbeitsgang auch Reinigungs-/Massageelemente und/oder als Zungenreiniger gebildet.

Alternativ wird dazu das Material, aus welchem die gespritzten Borsten hergestellt wird, verwendet und damit gleichzeitig und im selben Arbeitsgang auch die gespritzten Borsten gebildet.

Alternativ wird dazu ein Hartmaterial verwendet welches gleichzeitig und im selben Arbeitsgang eine Zone im Halsbereich und oder im Griffbereich bildet.

Auf diese Weise kann eine besonders effiziente Fertigung erzielt werden (d.h. etwa ohne Schweissen etwa eines AFT-Plättchens und den damit einhergehenden Platzverlust für beispielsweise die Beborstung).

Das Material der gespritzten Borsten bildet in der Regel keinen Materialschluss mit dem Hart-, Weichmaterial oder dem Schmelzteppich der konventionellen, extrudierten Borsten. Um dennoch eine einwandfreie Verbindung zu erzeugen wird in der Regel ein Formschloss z.B. mittels Hinterschnitten, Durchganslöchern oder Umspritzen erzeugt.

Das Hart- und das Weichmaterial bilden in der Regel keinen Materialschluss mit dem Material der gespritzten Borsten oder dem Schmelzteppich der konventionellen, extrudierten Borsten. Um dennoch eine einwandfreie Verbindung zu erzeugen wird in der Regel ein Formschloss z.B. mittels Hinterschnitten, Durchganslöchern oder Umspritzen erzeugt.

In einer weiteren bevorzugten Ausführungsform der vorliegenden Erfindung weist das Kopfteil des Bürstenprodukts im Querschnitt gesehen einen schichtartigen Aufbau auf, bei dem der Borstenträger (ohne den Begrenzungsrand bzw. betrachtet neben dem Begrenzungsrand) einen Anteil an der Gesamtdicke (D) von 25% bis 35% aufweist, der Schmelzteppich einen Anteil von 15% bis 25% und die Abdeckung einen Anteil von 40% bis 60%.

In einer weiteren bevorzugten Ausführungsform der vorliegenden Erfindung beträgt die Gesamtdicke (D) des (fertigen) Kopfteils von 2 bis 6 mm, vorzugsweise von 2,5 bis 4 mm. Auch Gesamtdicken unterhalb von 2,5 mm sind möglich.

Bei einem sehr dünnen Aufbau (d.h. im Bereich von 2,5 bis 4 mm oder kleiner) weist der Borstenträger einen Anteil an der Gesamtdicke (D) von 15% bis 25% auf, der Schmelzteppich einen Anteil von 15% bis 25% und die Abdeckung einen Anteil von 50 % bis 70%.

An sehr flexiblen Stellen (d.h. Stellen mit einer Materialschwächung bzw. einem Filmscharnier o.ä.) weist der Borstenträger einen Anteil an der Gesamtdicke (D) von 25% bis 45% auf, der Schmelzteppich einen Anteil von 0% bis 35% und die Abdeckung einen Anteil von 30% bis 55%. Der Schmelzteppich kann an diesen Stellen ausgesetzt werden oder über eine vorgesehene Schwächung verfügen.

In einer weiteren bevorzugten Ausführungsform der vorliegenden Erfindung sind auf der Vorderseite des Kopfteils Reinigungs-/Massageelemente wie z.B. lamellenartige Strukturen aus einer Weichmaterialkomponente angeordnet und weiter vorzugsweise auf der Rückseite des Kopfteils ein Zungenreiniger (ebenfalls) aus einer Weichmaterialkomponente. Hierdurch wird die Vielseitigkeit und Anwendungseffizienz der Bürste erhöht.

In einer weiteren bevorzugten Ausführungsform der vorliegenden Erfindung erstreckt sich das Borstenfeld bis in den Halsteil des Bürstenprodukts hinein. Dies bewirkt zusätzliche positive Reinigungseffekte. Das Borstenfeld kann verschiedenartig geformte (konventionelle extrudierte) Borstenbündel umfassen. Es kann des Weiteren gespritzte Borsten und/oder weichelastische Reinigungs-/Massageelemente umfassen.

In einer weiteren bevorzugten Ausführungsform der vorliegenden Erfindung ist der Borstenträger als separat hergestelltes Kopfplättchen ausgebildet. Das Kopfplättchen wird dann vorzugsweise in eine korrespondierende Ausnehmung im Kopfteil eingesetzt. Bei der Ausnehmung kann es sich um eine durchgehende Öffnung handeln oder aber um eine nutartige Aussparung (d.h. mit einem Boden, welcher ggf. seinerseits Öffnungen aufweist). Die Montage des Kopfplättchens um Kopfteil erfolgt bevorzugt mittels Umspritzen mit Weichmaterial. Denkbar ist grundsätzlich auch eine Montage beziehungsweise Fixierung mittels (Ultraschall-) Schweissen, Verkleben oder aber mittels einer mechanischen Montage (etwa mittels Verrasten bzw. Einschnappen am Kopfteil).

In einer weiteren bevorzugten Ausführungsform der Erfindung weist der Borstenträger (bzw. das Kopfplättchen) Borstenlöcher (insbesondere für die runden Borstenbündel) und/oder Öffnungen (insbesondere für die ggf. dreieckigen, rechteckigen, quadratischen, rombusförmigen, trapezförmigen, sichelförmigen, elliptisch, polygonförmig, länglichen, eckigen Borstenbündel) zum Hindurchführen der (konventionellen) Borsten auf. Die gespritzten Borsten können etwa (auch) durch die Borstenlöcher bzw. Öffnungen des Borstenträgers (bzw. das Kopfplättchen) hindurch gespritzt werden. Alternativ wird auf der Vorderseite des Borstenträgers welcher vorzugsweise aus Hartmaterial besteht eine Schicht aus Material der gespritzten Borsten gebildet.

Die Borstenlöcher bzw. Öffnungen der erfindungsgemässen Borstenträger weisen im Falle von eckigen Geometrien abgerundete Eckbereiche mit einem Radius von 0.2 mm bis 2 mm vorzugsweise von 0.2 mm bis 0.8 mm auf. Die Borstenlöcher bzw. Öffnungen weisen weiter vorzugsweise Einlaufschrägen für die (konventionellen) Borstenbündel auf und zwar jeweils zumindest an der Seite von welcher her die Borsten bzw. Borstenbündel in den Borstenträger eingeführt werden. Auch für die gespritzten Borsten können entsprechende Schrägen am Borstenträger vorgesehen sein, welche als eine Art Düse fungieren können (sie können ggf. noch stärker ausgeprägt sein als die Einlaufschrägen zum Einführen der konventionellen Borsten).

Generell sei bezüglich der Nomenklatur an dieser Stelle angemerkt, dass die Ober- bzw. Vorderseite regelmässig auch jene Seite ist, von welcher das Borstenfeld absteht (d.h. mit seinen freien Nutzenden).

Besonders bevorzugt weist der Borstenträger (bzw. das Kopfplättchen) auf seiner Rückseite einen umlaufenden Begrenzungsrand für die Borstenschmelze bzw. das Abdeckmaterial auf. Der Begrenzungsrand dient bevorzugt auch zum Herstellen einer materialschlüssigen Verbindung mit der Abdeckkomponente. Dies insbesondere wenn der Borstenträger aus Hartmaterial und die Abdeckkomponente aus Weichmaterial besteht.

Als Unter- bzw. Rückseite des Bürstenprodukts bzw. Zahnbürste wird wiederum die dem Borstenfeld (mit seinen freien Nutzenden) abgewandte Seite bezeichnet.

Als linke Seite des Bürstenprodukts bzw. Zahnbürste wird wiederum jene Seite bezeichnet, welche, wenn man senkrecht auf die Ober bzw. Vorderseite draufschaut und das Griffteil in Richtung Betrachter orientiert ist, links liegt. Die rechte Seite des Bürstenprodukts bzw. Zahnbürste liegt in diesem Fall rechts.

Als Unter- bzw. Rückseite des Kopfplättchens (d.h. im Falle eines separat hergestellten Borstenträgers) wird jene Seite bezeichnet, welche in die entsprechende Ausnehmung des Kopfteils eingelegt wird und in Richtung Unter- bzw. Rückseite der Zahnbürste zeigt. Entsprechend zeigt die Ober- bzw. Vorderseite des Kopfplättchens in Richtung der Ober- bzw. Vorderseite des Bürstenprodukts bzw. der Zahnbürste.

In weiterer Ausgestaltung der vorliegenden Offenbarung ist ausserdem umfasst:
Verfahren zur Herstellung eines Bürstenprodukts, insbesondere einer Zahnbürste, aufweisend einen Grundkörper mit einem Kopfteil mit einer Vorder- und einer Rückseite, welches einen Borstenträger mit einem von der Vorderseite abstehenden Borstenfeld umfasst und mit einem Griffteil sowie mit einem das Kopfteil mit dem Griffteil verbindenden Halsteil, mit den folgenden Schritten:
   (a) Spritzgiessen des Grundkörpers zusammen mit dem Borstenträger aus einer oder mehreren Hart- und/oder Weichmaterialkomponenten;
   (b) Einbringen des Grundkörpers mit dem Borstenträger als einem Teil in eine erste Hälfte eines Werkzeugs zur Beborstung;
   (c) Hindurchführen von Borsten bzw. Borstenbündeln durch Borstenlöcher bzw. Öffnungen in dem Borstenträger in korrespondierende Borstenausnehmungen der ersten Werkzeughälfte;
   (d) Aufschmelzen der über den Borstenträger hinausstehenden Befestigungsenden (gegenüberliegendes Ende der Nutzseite) der Borsten bzw. Borstenbündel auf den Borstenträger;
   (e) Erstellen einer Spritzgiesskavität durch Aufbringen einer zweiten Werkzeughälfte auf die erste Werkzeughälfte;
   (f) Spritzgiessen einer weiteren Materialkomponente, vorzugsweise einer Weichmaterialkomponente oder Materialkomponente zur Herstellung von gespritzten Borsten zur Abdeckung der Borstenschmelze. Optional können im Schritt (f) mit der eingesetzten Materialkomponente im selben Arbeitsgang bereits weitere Reinigungs-/Massageelemente und/oder Massagestrukturen und/oder Zungenreiniger und/oder gespritzte Borsten und/oder Zonen im Hals oder Handgriff und/oder weiteren Griffkomponenten hergestellt werden.

Vorzugsweise wird gemäss dem weiteren Schritt (g) die zweite Werkzeughälfte gewechselt oder das Produkt wird in ein anderes Werkzeug umgelegt und eine weitere Materialkomponente spritzgegossen und zwar vorzugsweise eine weitere Materialkomponente vorzugsweise eine Weichmaterialkomponente oder einer Materialkomponente zur Herstellung von gespritzten Borsten zur Ausformung einer fertigen Abdeckung. Der Schritt (g) kann beliebig oft wiederholt werden (d.h. etwa zur Erzeugung von weiteren Reinigungs-/Massageelemente und/oder Massagestrukturen und/oder Zungenreiniger und/oder weiteren Zonen im Handgriff und/oder weiteren Griffkomponenten und/oder gespritzte Borsten; bezüglich der möglichen Materialkomponenten wird auf die obigen Auflistungen verwiesen), bevor das Bürstenprodukt final aus dem Spritzgiess-Werkzeug entnommen und verpackt wird.

Der Schritt (f) umfasst vorzugsweise einen sogenannten Safety-Shot, d.h. eine erste vorläufige Abdeckung der Borstenschmelze mit ggf. einer relativ kleinen Materialmenge vorzugsweise Weichmaterialmenge. Der Schritt (g) umfasst, wenn der Schritt (f) als Safety-Shot ausgestaltet ist, den sogenannten Forming-Shot, durch welchen eine vollständige Abdeckung erzeugt wird. Es ist aber auch möglich, dass bereits mit dem Schritt (f) die vollständige Abdeckung gespritzt wird. Es ist aber auch denkbar, dass im Schritt (f) mit der Abdeckung wie oben erwähnt bereits weitere Elemente gebildet werden. Der Schritt (f) wäre in diesem Fall vergleichbar mit einem Schritt (g).

Anstelle des Schrittes (f) kann der Schmelzteppich (Borstenschmelze) auch mit einer vorfabrizierten Abdeckkappe vorzugsweise aus Hartmaterial abgedeckt werden. Die Abdeckkappe wird dann unlösbar mit dem Hartmaterial in Verbindung gebracht (z.B. mittels Ultraschallschweissung oder mechanischer Montage (z.B. mittels Einrasten).

Eine weitere Verfahrens-Variante umfasst: Ein Verfahren zur Herstellung eines Bürstenprodukts, insbesondere einer Zahnbürste, aufweisend einen Grundkörper mit einem Kopfteil mit einer Vorder- und einer Rückseite, welches einen Borstenträger mit einem von der Vorderseite abstehenden Borstenfeld umfasst und mit einem Griffteil sowie mit einem das Kopfteil mit dem Griffteil verbindenden Halsteil, mit den folgenden Schritten:
(a) Spritzgiessen des Borstenträgers aus einer oder mehreren Hart- und/oder Weichmaterialkomponenten;
(b) separates Spritzgiessen des Grundkörpers aus einer oder mehreren Hart- und/oder Weichmaterialkomponenten;
(c) Einbringen des Borstenträger in eine erste Hälfte eines Werkzeugs zur Beborstung;
(d) Hindurchführen von Borsten bzw. Borstenbündeln durch Borstenlöcher bzw. Öffnungen in dem Borstenträger in korrespondierende Borstenausnehmungen der ersten Werkzeughälfte;
(e) Aufschmelzen der über den Borstenträger hinausstehenden Befestigungsenden der Borsten bzw. Borstenbündel auf den Borstenträger;
(f) Erstellen einer Spritzgiesskavität durch Aufbringen einer zweiten Werkzeughälfte auf die erste Werkzeughälfte;
(h) Spritzgiessen einer weiteren Materialkomponente, vorzugsweise einer Weichmaterialkomponente zur Abdeckung der Borstenschmelze (optional können im Schritt (h) mit der eingesetzten Materialkomponente im selben Arbeitsgang bereits weitere Reinigungs-/Massageelemente und/oder Massagestrukturen und/oder Zungenreiniger und/oder gespritzte Borsten und/oder Zonen im Hals oder Handgriff und/oder weiteren Griffkomponenten hergestellt werden);
(i) Zusammenfügen des Borstenträgers und des Grundkörpers;
(j) Umlegen oder Wechseln der zweiten Werkzeughälfte und Spritzgiessen einer weiteren Materialkomponente, vorzugsweise einer weiteren Weichmaterialkomponente und/oder Materialkomponente zur Herstellung von gespritzten Borsten zur Ausformung einer weiteren Abdeckung.

Der Schritt (j) kann beliebig oft wiederholt werden (d.h. etwa zur Erzeugung von weiteren Reinigungs-/Massageelemente und/oder Massagestrukturen und/oder Zungenreiniger und/oder weiteren Zonen im Handgriff und/oder weiteren Griffkomponenten und/oder gespritzte Borsten; bezüglich der möglichen Materialkomponenten wird auf die obigen Auflistungen verwiesen), bevor das Bürstenprodukt aus dem Werkzeug entnommen und verpackt wird.

Der Schritt (h) umfasst vorzugsweise einen sogenannten Safety-Shot, d.h. eine erste vorläufige Abdeckung der Borstenschmelze (des Schmelzteppichs) mit ggf. einer relativ kleinen Weichmaterialmenge. Der Schritt (j) umfasst, wenn der Schritt (h) als Safety-Shot ausgestaltet ist, den sogenannten Forming-Shot, durch welchen eine vollständige Abdeckung erzeugt wird. Es ist aber auch möglich, dass bereits mit dem Schritt (h) die vollständige Abdeckung gespritzt wird. Es ist aber auch denkbar, dass im Schritt (h) mit der Abdeckung wie oben erwähnt bereits weitere Elemente gebildet werden. Der Schritt (h) wäre in diesem Fall vergleichbar mit einem Schritt (j).

In einer bevorzugten Ausführungsform kann der Schritt (i) auch bereits nach dem Schritt (e) erfolgen, wobei sich die Schritte (h) und ggf. (j) anschliessen. Vorzugsweise wird beim Zusammenfügen des Borstenträgers und des Grundkörpers gemäss Schritt (i) der Borstenträger (etwa in Form eines Kopfplättchens) in eine mit ihm korrespondierend ausgestaltete Öffnung des Kopfteils (welche etwa durch ein Rahmenelement definiert wird) eingelegt oder eingeklickt. Gegebenenfalls wird dann mit einem weiteren Spritzgiessschritt (vorzugsweise mit Weichmaterial und/oder Material zur Herstellung von gespritzten Borsten) eine Verbindung mit dem Kopfteil (und ggf. auch dem Halsteil) geschaffen.

In einer günstigen und damit reduzierten Variante können die Schritte (h) und (j) auch ganz weggelassen werden.

Es kann aber auch mittels eines weiteren Werkzeugteils bzw. weiteren Werkzeugteilen (und/oder entsprechend gestalteten Schiebern) ein vorgefertigter Griff mit einem Halsteil an den separat hergestellten Borstenträger angeformt werden, so dass der Borstenträger (alleine) das Kopfteil des fertigen Bürstenprodukts bildet (d.h. ohne Rahmenelement).

Zwischen den Verfahrensschritten können jeweils Unterbrüche mit Zwischenlagerungen oder auch Pufferungen der Halbfabrikate passieren.

Selbstverständlich ist ein Fördern ebenfalls mindestens zwischen gewissen Schritten nötig, damit die Abfolge passieren kann.

Nicht weiter beschrieben ist das Bereitstellen der Borsten. Dies passiert wie beispielsweise im Zusammenhang mit EP 2'130'454 A1 beschrieben.

Des Weiteren ist erfindungsgemäss umfasst ein Werkzeug zur Herstellung eines Bürstenprodukts, insbesondere einer Zahnbürste, aufweisend einen Grundkörper mit einem Kopfteil mit einer Vorder- und einer Rückseite, welches einen Borstenträger mit einem von der Vorderseite abstehenden Borstenfeld umfasst und mit einem Griffteil sowie mit einem das Kopfteil mit dem Griffteil verbindenden Halsteil, wobei das Werkzeug aufweist:
eine erste Werkzeughälfte zur Beborstung eines Borstenträgers mit Borstenausnehmungen zur Aufnahme von Borsten bzw. Borstenbündeln sowie mit einer Einlegeaussparung für den Borstenträger, wobei das Werkzeug sowohl zum Beborsten wie auch zum Spritzgiessen genutzt werden kann;
eine zweite Werkzeughälfte zum Spritzgiessen, welche auf die erste Werkzeughälfte aufbringbar ist, und welche einen Hohlraum umfasst, welcher, gegebenenfalls zusammen mit freien Bereichen der Einlegeaussparung der ersten Werkzeughälfte, eine Spritzgiesskavität definiert.

Bevorzugt erstrecken sich die Borstenausnehmungen ausgehend vom Boden der Einlegeaussparung aus in den Körper der ersten Werkzeughälfte hinein. Die Borstenausnehmungen können dabei unterschiedliche oder gleiche Längen aufweisen (dies hängt von dem jeweils gewünschten Borstenprofil ab). Weiter vorzugsweise weisen die Borstenausnehmungen Borsteneinlassöffnungen welche bevorzugt mit den Borstenlöchern bzw. Öffnungen im eingelegten Borstenträger korrespondieren. Es können so beliebige Borstenbündelformen verarbeitet werden (runde Bündel, dreieckige Bündel, rechteckige Bündel, quadratische Bündel, rombusförmige Bündel, trapezförmige Bündel, sichelförmige Bündel, elliptische Bündel, polygonförmige Bündel, gebogene Bündel etc.). Die Borstenausnehmungen erstrecken sich in der Regel senkrecht in den Werkzeugkörper hinein, es sind aber auch Ausgestaltungen mit schräggestellten Borstenausnehmungen möglich.

Besonders bevorzugt sind alle oder zumindest einige der Borstenausnehmungen durchgehend ausgebildet (d.h. sie sind an beiden Seiten des Werkzeugkörpers offen). Für die durchgehenden Borstenausnehmungen sind weiter vorzugsweise Stifte (mit unterschiedlichen Längen) vorgesehen, welche von der den Borsteneinlassöffnungen gegenüberliegenden Seite der ersten Werkzeughälfte her in die jeweils korrespondierenden Borstenausnehmungen einbringbar sind. Auf diese Weise wird die Einbringtiefe der Borsten bzw. Borstenbündel begrenzt und es können mit grosser Variabilität Borsten-Topographien bzw. -profile erstellt werden. Vorzugsweise werden die Stifte bis zu einem Anschlag im Werkzeugkörper in die Borstenausnehmungen eingesteckt sind dann nicht weiter beweglich in den Borstenausnehmungen. Die Stifte weisen vorzugsweise einen Stiftkopf und einen Stiftschaft auf. Der Stiftschaft weist an seinem freien Ende bevorzugt eine konkave Ausnehmung bzw. Abrundung auf.

Die zweite Werkzeughälfte ist besonders bevorzugt für ein Mehrkomponeneten-Spritzgiessen geeignet bzw. ausgestattet. Dabei können Heisskanal-, Kaltkanal- sowie Co-Injektions-Technologien etc. umfasst sein. Weiter vorzugsweise korrespondiert der Hohlraum der zweiten Werkzeughälfte mit der Einlegeausnehmung der ersten Werkzeughälfte und dem in der ersten Werkzeughälfte befindlichen Körper.

Im Folgenden sollen weitere bevorzugte Ausgestaltungsvarianten bzw. -elemente für das Bürstenprodukt, das Verfahren sowie das Werkzeug gemäss der vorliegenden Erfindung beschrieben werden.

### Borstenträger

Der Borstenträger umfasst vorzugsweise Borstenlöcher (bzw. Öffnungen), Stege zwischen den Borstenlöchern (bzw. Öffnungen), einen umlaufenden Begrenzungsrand (bevorzugt an seiner Rückseite) sowie ggf. Massage-/Reinigungselemente aus Weichmaterial und/oder gespritzte Borsten aus der entsprechenden Materialkomponente. Der Borstenträger kann verschiedenartige geometrische Ausgestaltungen aufweisen, z.B. plättchenförmig (eben), gebogen bzw. gewölbt oder gewellt (jeweils in Längs- oder Querrichtung).

Die Borstenträger sind vorzugsweise aus einer Hartmaterialkomponente geformt.

Der Borstenträger kann, etwa aus materialverbindungstechnischen Gründen, weil das Material für weitere Verarbeitungsschritte benötigt wird, aus einem sehr dünnen Hartmaterial (d.h. mit Dicken von 1 mm oder weniger) gebildet sein. Andererseits kann das (dünne) Hartmaterial aber auch mind. teilweise mit Weichmaterial und/oder Material zur Bildung von gespritzten Borsten überspritzt sein, um eine Kombination aus Flexibilität und Stabilität bereitzustellen.

In einer Variante kann der Borstenträger auch aus einem Weichmaterial (z.B. einem TPE) oder Material zur Herstellung von gespritzten Borsten geformt sein. Die konventionellen, extrudierten Borsten sind dann nicht in einem Hartmaterial fixiert. Der Borstenträger weist dann also eine Weichmaterialfläche mit Borstenlöchern bzw. Öffnungen darin auf und ist entsprechend (sehr) flexibel ausgebildet. Die Borsten werden durch das Weichmaterial hindurchgeführt.

Optional ist für den Borstenträger auch eine Kombination der genannten Materialien und den entsprechenden Eigenschaften denkbar.

Der Begrenzungsrand umgibt den Borstenträger bzw. dessen borstentragende Rückseite wie ein Rahmen. Der Begrenzungsrand ist aus Stabilitätsgründen vorzugsweise aus Hartmaterial gebildet, dies ist aber nicht zwingend erforderlich. Der Borstenträger weist hier also in etwa die Gestalt eines Tennisschlägerkopfs auf, d.h. einen harten Begrenzungsrand sowie ein relativ weiches, flexibles (etwa trampolinartiges) Innenleben.

Der Schichtaufbau im Querschnitt (d.h. nicht am Rand) gesehen (von oben nach unten) ist dabei wie folgt: Weichmaterial - Schmelzteppich - Weichmaterial. Mit anderen Worten, der Schmelzteppich ist gemäss dieser Ausführungsform in einem Weichmaterial-Sandwich angeordnet. Es können hierbei auch verschiedene Weichmaterialien für die obere und untere Schicht eingesetzt werden. Die Borsten sind durch das

Weichmaterial (z.B. TPE) hindurchgeführt. Anstelle des Weichmaterials kann optional ein- oder beidseitig des Schmelzteppichs Material für gespritzte Borsten vorgesehen sein.

In einer weiteren Variante umfasst der Borstenträger Hülsen und Weichmaterial. Dabei sind die Hülsen aus einer Hartmaterialkomponente gebildet. Die Verbindung bzw. der Zwischenraum zwischen den einzelnen Hülsen ist bevorzugt aus Weichmaterial gebildet. Die Verbindung kann membranartig (d.h. durchgehend flächig zwischen den einzelnen Hülsen) oder aber netzartig (d.h. es gibt einzelne Verbindungen bzw. Verbindungsstege zwischen den Hülsen aber keine durchgehend flächige Verbindung) ausgestaltet sein. Jedes Borstenbündel bzw. jede Borstenfläche ist dabei in einer Hülse angeordnet.

Die rückseitige Überspritzung (bzw. Abdeckung) kann vollflächig ausgeführt sein, oder nur im Wesentlichen hinter den Hülsen oder hinter den Hülsen und auf den Verbindungsstegen (bei der netzartigen Ausgestaltung).

Generell gilt, dass wenn Weichmaterial im Borstenfeld eingesetzt wird, die weichelastischen Elemente (Reinigungs-/Massageelemente) im Borstenfeld vorzugsweise vor dem Beborsten gestaltet werden. Das gleiche gilt für gespritzte Borsten hergestellt aus der entsprechenden Materialkomponente.

In einer noch weiteren Variante kann der Borstenträger transparent gestaltet sein (sowie auch der Bürstenproduktgriff). Der Borstenträger ist dann entsprechend aus einem transparenten oder transluzenten Material gefertigt, d.h. es wird ein quasi volltransparentes Bürstenprodukt realisiert (dies ist vorliegend einfacher möglich als beim Anchor Free Tufting (AFT-Verfahren)).

Das Weichmaterial für die Abdeckung (d.h. der Kunststoff der überspritzt wird) kann transluzent oder opak sein. Die einzige Intransparenz an dem Bürstenprodukt wäre somit der Schmelzteppich und/oder der Kunststoff, der überspritzt wird. Allenfalls kann der Grundkörper des Bürstenprodukts im Bereich des Halses und im Grenzbereich zum Bürstenkopf durch die Bearbeitung/das Herstell-Verfahren etwas spröde werden. Die Brüchigkeit kann jedoch durch eine gezielte Anwendung eines Reck-Prozesses vermindert werden (wie es etwa in der EP 2 347 673 A1 beschrieben ist).

Bezüglich der Geometrie/Form des Borstenträgers gibt es im Rahmen der vorliegenden Erfindung, wie oben bereits erwähnt, unterschiedliche Varianten.

So kann der Borstenträger bestimmte Borstenlöcher bzw. Öffnungen aufweisen, welche nicht mit konventionellen, extrudierten Borsten bzw. Borstenbündeln gefüllt werden. Dies bringt ggf. Durchgangslöcher im Schmelzteppich mit sich, welcher ansonsten durch die angeschmolzenen bzw. angeschweissten Enden der Borsten in den anderen Borstenlöchern bzw. Öffnungen gebildet wird. Die nicht gefüllten Borstenlöcher bzw. Öffnungen können etwa wie folgt genutzt werden: Es kann die Weichkomponente bzw. Komponente der Abdeckung durch den mit Öffnungen versehenen (lückenhaften) Schmelzteppich bzw. die Durchgangslöcher gespritzt werden (zum Beispiel um Reinigungs-/Massageelemente aus Weichmaterial und/oder gespritzte Borsten aus der entsprechenden Materialkomponente zwischen den konventionellen Borstenbündeln zu bilden) oder die Durchgangslöcher werden im Endprodukt belassen (zum Beispiel zum Spülen mit Wasser oder um Medien/Flüssigkeiten/Pasten durch die Öffnungen hindurch zu Spenden).

Die Topographie des Borstenträgers kann als Form etwa ein (nicht gerades) Längsprofil, ein (nicht gerades) Querprofil oder eine Kombination aus (nicht geraden) Längs- und Querprofil (3-D Profil) aufweisen.

Eine Variante umfasst ein Profil in Form einer Welle (oder auch mehreren Wellen), welche sich über die Länge und/oder die Breite des Borstenträgers erstreckt (bzw. erstrecken).

Die Ausgestaltung in Form einer Welle ist nur exemplarisch zu betrachten und soll hier beispielhaft für nicht gerade bzw. nicht flache Topographie besprochen werden. Selbstverständlich gelten die besprochenen Ausführungen auch für nicht gerade bzw. nicht flache Topographien.

Im Herstell-Verfahren wird dabei zum Beispiel eine entsprechend gewellt ausgeführte Spritzgiesskavität verwendet. Die Welle des Borstenträgers ist sicher auf der Vorderseite des Borstenträgers ausgeformt. Vorzugsweise ist sie auch auf der Rückseite ausgeformt, es ist aber auch möglich, dass die Rückseite flach gestaltet ist und nur die Dicke des Borstenträgers variiert. Der Ansengstempel (bzw. Heizstempel) zum Verschmelzen der Borsten kann in diesem Fall entsprechend gewellt oder flach ausgeführt sein. Das Fixieren im Grundkörper passiert im Falle der gewellten Ausbildung eines Kopfplättchens als Borstenträgers mittels Spritzgiessen, da ein Schweissen nicht oder nur sehr schwer möglich ist.

In einer weiteren Variante stehen alle Borsten gleich weit von der Vorderseite des Borstenträgers ab (das Borstenprofil entspricht also der Topographie des Borstenträgers, jedenfalls an dessen Vorderseite). Es besteht auch die Möglichkeit, dass nur die Vorderseite des Borstenträgers eine Topographie aufweist, nicht aber die Rückseite des Borstenträgers. Es kann aber auch auf der Vorderseite und auf der Rückseite des Borstenträgers eine Topographie vorhanden sein (war mit Schweissen nicht möglich, da Schweissgeometrie gebunden).

In einer weiteren möglichen Variante kann der Borstenträger einen oder mehrere durchgehende Einkerbungen und/oder Schlitze aufweisen. Er kann beispielsweise ein Schlitz im Borstenträger ein gespaltenes Kopfteil definieren (d.h. in Längsrichtung), um eine besondere Flexibilität bereitzustellen. Der Schlitz kann gerade, gewellt, zackenförmig oder zinnenförmig ausgebildet sein.

Der Schlitz kann auch seitlich ins Kopfteil eindringen. Sie können oder in einem spitzen bzw. stupfen Winkel senkrecht zur Längsachse angeordnet sein. Es können auch mehrere Schlitze im Kopf vorgesehen sein.

Im Hinblick auf eine weitere Flexibilität im Borstenfeld können etwa Filmscharniere im Bereich des Borstenträgers (d.h. im Bereich der Verbindungsflächen bzw. -stege zwischen den Borstenlöchern bzw. Öffnungen) und/oder dem Begrenzungsrand vorgesehen sein. Mit Filmscharnier ist vorliegend eine Reduktion der Materialstärke in gewissen Bereichen gemeint. Es können dabei bezogen auf die Längsachse des Borstenfeldes quer- oder längsverlaufende Scharniere gebildet werden oder aber Kombinationen davon. Dabei bringen Querscharniere eine Flexibilität in Längsrichtung. Längsscharniere bringen eine seitliche Flexibilität, etwa in Form von seitlichen Flügeln.

In einer Variante können die Scharniere auch kleeblattförmig angeordnet sein, d.h. es sind mehrere bezüglich der Längsachse des Borstenfeldes nicht gerade, d.h. senkrecht oder parallel orientierte Scharniere vorgesehen, welche beispielsweise runde bzw. elliptische Teilborstenflächen ausformen. Die Scharniere können auch schräg, etwa X-förmig oder sternförmig angeordnet sein. Es können natürlich auch die oben erwähnten durchgehenden Einkerbungen bzw. Schlitze mit Filmscharnieren kombiniert werden. Auch können die die Enden der Einkerbungen bzw. Schlitze in Bereiche mit reduzierter Materialstärke übergehen.

Vorzugsweise sind die Filmscharniere (und ggf. die durchgehenden Schlitze oder Einkerbungen), wenn sie sowohl in den Verbindungsflächen bzw. -stegen als auch im Begrenzungsrand vorgesehen sind, in Längs- bzw. Querrichtung jeweils in derselben Position angeordnet.

In den Zonen der Materialschwächungen, bzw. den Filmscharnieren kann Hart- und/oder Weichmaterial vorgesehen sein.

Als weitere Variante können die Filmscharniere jeweils zumindest teilweise mit Weichmaterial überdeckt oder ausgefüllt sein. Beispielsweise können so Hart- /Weichbrücken im Borstenträger gebildet werden, d.h. dünne Hartmaterialbrücken (Filmscharniere) sind mit Weichmaterial überspritzt.

In den Zonen der Materialschwächungen, bzw. Filmscharnieren können Reinigungs-/Massageelemente aus Weichmaterial und/oder gespritzte Borsten aus dem entsprechenden Material vorgesehen sein.

Als weitere Variante können auch (reine) Weichmaterialbrücken im Träger vorgesehen sein. Dies bedeutet, dass mehrere Teilbereiche bzw. Elemente des Borstenträgers nur durch Weichmaterial miteinander verbunden sind (und ggf. eine entsprechende geometrische Gestaltung).

In einer weiteren Variante ist ein unterbrochener Begrenzungsrand vorgesehen. Da der Begrenzungsrand einem Rahmen ähnlich ist, verleiht dieser dem Borstenträger Stabilität. Der Begrenzungsrand könnte aber auch an einer oder mehreren Stellen unterbrochen oder geschwächt sein, das heisst reduziert bis zur Verbindungsfläche bzw. den Verbindungsstegen des Borstenträgers. Dies kann etwa auch in Kombination mit Filmscharnieren geschehen. Der Begrenzungsrand kann auch aus unterschiedlichen Materialien bestehen. So kann dieser in einer flexiblen Zone aus einem weicheren (z.B. Weichmaterial oder Material für gespritzte Borsten) und in einer steifen Zone aus einem härteren Material (z.B. Hartmaterial) bestehen.

In einer weiteren Variante weist der Borstenträger einen oder mehrere durchgehende Längs- oder Querschlitze auf, so dass sich ein gespaltenes Kopfteil ergibt (vgl. oben). Ein solches wäre wiederum mit der konventionellen AFT-Technologie schwieriger zu realisieren, weil der Kopf zu gross würde, da an den Rändern Schweissflächen/-abstände nötig wären (im Übrigen würden die Abstände im Bereich der Längsspalte zwischen den einzelnen Borstenbündeln zu gross und das Borstenfeld somit löchrig). Zudem sind, aufgrund der Grösse, die einzelnen Flügel des gespaltenen Kopfteils etwas flexibel, so dass ein AFT-Plättchen ggf. nicht optimal halten würde.

Der gespaltene Kopf definiert regelmässig eine offene Geometrie, d.h. der Schlitz geht bis nach aussen (bzw. ist an seinem äusseren Ende offen). Die Schlitze sind vorzugsweise gerade, wellenförmig, zinnenförmig oder zackenförmig ausgebildet.

Der Bürstenproduktkopf wird durch die Schlitze mehrteilig (d.h. mehrere Borstenträgerteilsegmente enthalten konventionelle, extrudierte Borsten bzw. Borstenbündel und/oder auch andere Reinigungs- und Massageelemente und/oder auch gespritzte Borsten).

In einer Variante weist der Kopf bzw. das Kopfteil des Bürstenprodukts eine kleeblattförmige Ausgestaltung auf, d.h. die entsprechenden Einkerbungen sind schräg nach innen, d.h. im Wesentlichen in Richtung des Zentrums der Borstengeometrie, gerichtet.

In einer Variante wird ein gespaltener Kopf am Griffteil angebracht. Der Borstenträger wird dabei (nur) an seinem nicht gespaltenen Ende mit dem Halsteil verbunden, wobei das Halsteil bis zum freien Bürstenende läuft und der Übergang zum Kopfteil an diesem freien Bürstenende passiert. Die Flügel des gespaltenen Borstenträgers stehen in Richtung zum Bürstenproduktgriff frei ab vom Hals- bzw. Griffteil, und sind gegenüber dem vorderen Ende flexibel beweglich (d.h. in der Regel zumindest in Richtung des Hals- und Griffteils). Ähnliches kann auch mit Borstenträgern mit Einkerbungen realisiert werden.

In einer weiteren Variante geht der Schlitz bzw. eine Ausnehmung nicht bis nach Aussen durch (d.h. über die Borstentraggeometrie hinaus), es liegt also eine geschlossene Geometrie vor. Auch diese Variante ist aus den vorgenannten Gründen mit der AFT-Technologie schwieriger realisierbar. Der Schlitz weist in einer Variante eine U-Form auf, so dass innerhalb der Ebene des Borstenträgers eine flexible Zunge ausgebildet wird, welche innerhalb des Borstenfeldes liegt.

Es können allerdings auch flexible Strukturen des Borstenträgers mit Strukturen kombiniert sein, die fix sind. So müssen nicht alle Borstenbündel sich gegenüber dem späteren Bürstenprodukt-Griffteil bewegen können; es kann z.B. ein fixes Element in der Mitte des Borstenträgers angeordnet sein und flexible Elemente aussen.

In einer weiteren Variante der vorliegenden Erfindung können eine oder mehrere Hartmaterialinseln auf der Rückseite des Borstenträgers angeordnet sein. Diese können zum einen im Endprodukt durch die Abdeckung ragen, um Zungenreinigerelemente oder aber stabilisierende Elemente für die Weiterverbreitung auszubilden.

Andererseits können die Hartmaterialinseln auch von der Abdeckung überdeckt werden. Hierbei kann es sich etwa um Kunststoffverankerungsstellen handeln (d.h. zum Herstellen einer Verbindung zwischen dem Überdeckungskunststoff und dem Borstenträger) oder aber um Opferstrukturen zum Halten, bzw. Verankern des Schmelzteppichs (d.h. die Opferstrukturen werden vom Heizstempel verformt und über bzw. in das Schmelzbad «gedrückt»). Es können Niet oder Pilzartige Strukturen entstehen.

### Borstenlöcher bzw. Öffnungen (im Borstenträger)

Die Anordnung der Borstenlöcher bzw. durchgehenden Öffnungen in der Borstentraggeometrie ist grundsätzlich frei, sie kann etwa symmetrisch, asymmetrisch, etc. sein. Grundsätzlich sind vorliegend mit Borstenlöchern runde Löcher für die Aufnahme von runden Borstenbündeln bestehend aus konventionellen, extrudierten Borsten gemeint und mit Öffnungen andere geometrische Formen für zum Beispiel dreieckige, rechteckige, quadratische, rombusförmige, trapezförmige, sichelförmige, elliptische, polygonförmige, gebogene, längliche oder eckige Borstenbündel bestehend aus konventionellen, extrudierten Borsten oder ggf. für einzelne Borsten bestehend aus konventionellen, extrudierten Borsten.

Bezüglich des Borsten- bzw. Bündelabstands zur Aussenkante gilt grundsätzlich, dass die Borsten bzw. Borstenbündel nah am Aussenrand des Bürstenprodukts angeordnet werden können, da gemäss dem vorliegenden Verfahren eben keine Flächen für eine allfällige Schweissung nötig sind (wiederum im Vgl. mit AFT), es ist allenfalls der Begrenzungsrand (d.h. auf der Rückseite) vorgesehen. Es kann somit ein vergleichsweise schmalerer Bürstenkopf realisiert werden. Es können zudem mehr Borstenbündel auf engerem Raum realisiert werden, d.h. die Abstände zwischen den einzelnen Bündeln können geringer sein. Dies ergibt eine grössere Bündeldichte.

Die Abstände von der äussersten Kante des Borstenträgers zu dem bzw. den äussersten Bündel(n) betragen bevorzugt von 0,5 mm bis 3 mm, weiter vorzugsweise von 0.5 mm bis 1,5 mm.

Die Borstenlöcher können sich bis in das Halsteil erstrecken. Dies stellt eine neue Möglichkeit dar, da gemäss der vorliegenden Technologie nicht geschweisst wird (Schweissen kann zu Brüchigkeit des Kunststoffkörpers führen). Dies wird durch das Um- bzw. Überspritzen der Rückseite des Borstenträgers (Herstellung einer Abdeckung der Borstenschmelze) ermöglicht.

Als Formen für die Borstenlöcher bzw. Öffnungen kommen dreieckige, rechteckige, quadratische, rombusförmige, trapezförmige, sichelförmige, elliptische, polygonförmige, (kreis-)runde, ovale oder n-eckige Formen (diese müssen jedoch grundsätzlich eine geschlossene Kontur ergeben) in Betracht. Konkrete weitere Ausführungsformen sind Öffnungen in Form von gebogenen Konturen oder Einzelborsten bzw. Mikrobündel oder aber Borstenbündel mit flächigem Borstenteppich (sehr grosse Borstenbündel).

Folgende Massangaben werden im Rahmen der vorliegenden Erfindung bevorzugt: Die Länge der Borstenlöcher bzw. Öffnungen beträgt von 0,5 mm bis 4 mm vorzugsweise von 1 mm bis 2 mm (dies entspricht auch dem Mass des jeweiligen Borstenbündels). Für die Breite der Borstenlöcher bzw. Öffnungen gelten dieselben Massangaben wie für die Länge.

Die (Querschnitts-) Fläche der Borstenlöcher bzw. Öffnungen beträgt von 0,5 mm² bis 25 mm², vorzugsweise von 2 mm² bis 6 mm².

Kleinstbündel (Mikrobündel) verfügen über eine sehr geringe Anzahl von konventionellen, extrudierten Borsten. Diese können 2 bis 25, vorzugsweise 3 bis 20 konventionelle Borsten beinhalten.

Borstenbündel mit flächigem Borstenteppich verfügen über eine sehr grosse Anzahl von konventionellen, extrudierten einzelnen Borsten. Diese können 200 bis 2000, vorzugsweise 500 bis 1500 konventionelle Borsten beinhalten.

Für die Stege/Verbindungsflächen zwischen den Borstenlöchern bzw. Öffnungen gilt, dass sie die einzelnen Borstenbündel separieren und gleichzeitig den Halterrahmen für die Bündel bzw. den Schmelzteppich bilden.

Die Stege/Verbindungsflächen weisen zumindest eine Breite von 0,3 mm bis 2 mm, vorzugsweise von 0,4 mm bis 1,3 mm auf (Mass zwischen den Borstenlöchern, gemessen auf der Vorderseite des Borstenträgers). Die Stege/Verbindungsflächen weisen zumindest eine Höhe von 0,3 mm bis 2 mm, vorzugsweise von 0,5 mm bis 1,5 mm auf (Gesamthöhe des einzelnen Stegs). Allerdings haben nicht alle Stege/Verbindungsflächen diese Dimensionen, diese sind als Minimal-Dimensionen zu verstehen.

Als weitere Variante sind gespritzte Borsten auf den Stegen beziehungsweise Verbindungsflächen zwischen den Borstenlöchern oder zwischen den Borstenlöchern und dem Aussenrand vorgesehen. Diese können aus demselben Material hergestellt sein wie der Borstenträger (bzw. der Steg/die Verbindungsfläche) oder können aus anderem Material gespritzt sein. Das Material muss aber für die Ausbildung von gespritzten Borsten geeignet sein.

Vorzugsweise wird auf der Vorderseite eine flächige Struktur aus Material für gespritzte Borsten gebildet. Anstelle oder zusätzlich zu den gespritzten Borsten können natürlich in den gleichen Zonen auch Reinigungs-/Massageelemente aus Weichmaterial vorgesehen werden.

Es können auch verschiedene Höhen der Stege bzw. Verbindungsflächen in einem Borstenträger auf der Rückseite vorgesehen sein. Das Ziel hierbei ist es Abgrenzungen im Schmelzteppich zu bilden. Der Schmelzteppich wird sozusagen durch die Stege in verschiedene Zonen unterteilt, d.h. die abgetrennten Bereiche laufen nicht zusammen. Es bilden sich also verschiedene Schmelzteppiche auf dem Borstenträger. Dies bringt beispielsweise Vorteile im Hinblick auf die Flexibilität. Die Schmelzteppiche können sich auch auf unterschiedlichen Ebenen befinden.

Die Höhenerhebung muss auch nicht zwingend den ganzen Steg betreffen, sie kann lediglich eine Partie (beispielsweise eine mittige Partie betreffen). Somit wird es möglich, dass die Schmelze dennoch mindestens teilweise auf dem Steg aufliegen kann.

Die bevorzugte Anzahl von Borstenbündeln in einem Schmelzteppichbereich (bei Unterteilung) liegt zwischen 1 bis 40, weiter vorzugsweise zwischen 2 bis 10.

### Begrenzungsrand

Die die konventionellen, extrudierten Borsten bzw. Borstenbündel tragende Rückseite des Borstenträgers weist bevorzugt einen äusseren Begrenzungsrand auf. Der Borstenträger bildet so zusammen mit dem Begrenzungsrand eine Art Becken. Die Gründe dafür sind, dass der aus den angeschmolzenen bzw. angeschweissten Borstenenden gebildete Schmelzteppich im aufgeschmolzenen Zustand (d.h. das Schmelzbad bzw. Borstenschmelze) nicht über den Begrenzungsrand verdrängt wird. Er verleiht ausserdem Stabilität. Es entsteht vorzugsweise keine Verbindung (Materialschluss) zwischen der Borstenschmelze und anderen Kunststoffkomponenten (d.h. der Überspritzung), vielmehr verbindet sich die Kunststoffkomponente der Abdeckung bzw. Umspritzung am Begrenzungsrand mittels Materialschluss und ist so verankert. Zusätzlich kann sich Abdeckung bzw. Umspritzung auch mit allfälligen Opferstrukturen mittels Materialschluss verbinden.

Der Begrenzungsrand steht bevorzugt senkrecht von der Rückseite des Borstenträgers ab. Falls eine Neigung vorgesehen ist, kann diese gegen innen (d.h. in Richtung des Zentrums des Borstenträgers) oder gegen aussen (über den Aussenrand der Borstentraggeometrie hinaus) realisiert sein. Der bevorzugte Neigungswinkel beträgt in jedem Fall von 30° bis 90°, vorzugsweise von 60° bis 90°.

Der Begrenzungsrand weist, gesehen parallel zum Schmelzbad, einen grösstenteils uniformen, konstanten Querschnitt auf. Gegen das freie Ende des Kopfs hin nimmt der Querschnitt vorzugsweise jedoch ab.

Der Verlauf der Begrenzungsrandhöhe kann (unabhängig von der Topographie des Borstenträgers) etwa gerade oder wellig sein. Es können aber auch Unterbrechungen beziehungsweise Stellen ohne Begrenzungsrand oder Stellen bestehend aus einem anderen Material vorgesehen sein, z.B. in Form von Einkerbungen oder Ausnehmungen - für mehr Flexibilität. Falls der Borstenträger einteilig mit dem Griffteil verbunden ist, kann der Begrenzungsrand in den Halsteil übergehen, d.h. der Begrenzungsrand wird nicht mehr als solcher wahrgenommen.

Der Begrenzungsrand weist im Querschnitt, gesehen parallel zum Schmelzbad, eine Breite von 0,3 mm bis 2 mm, vorzugsweise von 0,5 mm bis 1,2 mm auf. Die Höhe des Begrenzungsrands (gemessen zwischen der Rückseite des Borstenträgers und dem freien Ende des Begrenzungsrandes) beträgt von 0,2 mm bis 3 mm, vorzugsweise von 0,5 mm bis 2,5 mm.

In einer möglichen Variante weist der Borstenträger keinen Begrenzungsrand auf. Hier wird dann die Überspritzungskomponente, über den äusseren Rand der Rückseite des Borstenträgers beziehungsweise auf dessen Seitenfläche in Richtung der Vorderseite des Borstenträgers gezogen. Weiter ist es möglich, wenn kein Begrenzungsrand vorhanden ist, dass der Borstenträger seitlich frei liegt und nicht mit Borstenschmelze überdeckt ist. Diese Fläche bildet dann wieder eine Verbindungsmöglichkeit mittels Materialschluss mit der Umspritzung (Abdeckung).

Eine Topographie des Begrenzungsrands (Begrenzungsrand liegt nicht in einer Ebene) wäre mit der AFT-Technologie wiederum schwierig realisierbar, da eine 3D-Schweissung weniger praktikabel oder auch nicht stabil/sicher genug wäre.

Der Borstenträger kann direkt mit Massage- /Reinigungselementen aus Weichmaterial und/oder gespritzten Borsten aus dem entsprechenden Materialversehen werden. Diese werden in einem Spritzgiessschritt zusätzlich/nachträglich zum Schritt der Herstellung des Borstenträgers hergestellt.

### Borstenfeld

Grundsätzlich werden die konventionellen, extrudierten Borsten bzw. Borstenbündel durch den Borstenträger hindurchgeführt. Die Borsten werden auf der Rückseite des Borstenträgers aufgeschmolzen (bzw. verschweisst). Die geschmolzenen Borstenenden bilden so auf der Rückseite des Borstenträgers den Schmelzteppich. Bei der Vereinzelung der Borsten entspricht ein Fassen/Abtrennen von einer Gruppe von konventionellen extrudierten Borsten in der Beborstungsmaschine vorzugsweise einem Borstenbündel.

Es werden vorliegend vorzugsweise konventionelle extrudierte Borsten verarbeitet. Es kann sich hierbei etwa um zylindrische Borsten oder um zugespitzte Borsten handeln. Die Verarbeitung der zugespitzten Borsten kann auf mehrere Weisen erfolgen. Zum einen kann die Verarbeitung so erfolgen, wie in der EP 2 130 454 A1 beschrieben (d.h. Abrunden der Borsten beziehungsweise Abschleifen der Ätzfäden / Restfäden, um eine kleinste Spitze zu schaffen, die grösser ist als die grösste Toleranz des entsprechend verwendeten Beborstungswerkzeugs).

Es muss jedoch nicht zwingend eine zusätzliche Bearbeitung der Borsten zur Erstellung der Fertigungstauglichkeit erfolgen, da die Borsten weniger bewegt werden als im bekannten AFT-Verfahren (insbesondere werden die Borstenbündel nicht mehr bewegt, wenn sie im Borstenloch des Werkzeugs sind, so dass die Gefahr eines Verklemmens kleiner ist). Die zugespitzten Borsten können wie zylindrische Borsten im Prozess gehandhabt werden (ggf. unter Anpassung der Verarbeitungsmaschine im Bereich des Stoffkanals bzgl. der Position des Drückers, vgl. hierzu EP 2 130 454 A1).

In einer weiteren Variante können zylindrische und zugespitzte Borsten in einem Borstenbündel gemischt werden (d.h. jedes Bündel ist gemischt). Es kann aber auch nur ein einzelnes Bündel gemischt sein.

Es können in diesem Sinne auch andere Borstentypen in ein Borstenbündel gemischt werden. Z.B. sind das unterschiedliche Querschnittformen und/oder unterschiedliche Durchmesser und/oder unterschiedliche Materialien und/oder unterschiedliche Borstenlängen und/oder unterschiedlichen Farben etc.

Borstenbündel bestehend aus unterschiedlichen Borstentypen sind nicht homogen durchmischt, sondern verfügen vorzugsweise über einzelne Zonen von Borsten der verschiedenen Typen.

Es können zusätzlich auch Reinigungs-/Massageelemente vorgesehen sein, welche beispielsweise in der Form von Lamellen, Noppen, etc., von hinten eingespritzt werden bzw. im Formschluss eingebracht werden. Es sind auch Kombinationen möglich.

Im Hinblick auf die Querschnittsformen der Borstenbündel wird auf die vorstehenden Ausführungen zu den Borstenlöchern verwiesen. Die Borstenbündel haben vorzugsweise denselben Querschnitt wie die Borstenlöcher.

Hinsichtlich der Borstenlängen sind verschiedene Längen in einem Borstenbündel möglich. Durch das Mischen von Borsten und die Positionierung der Borsten im Borstenloch im Werkzeug, kann beispielsweise eine Kontur geschaffen werden wie sie etwa aus EP 2 420 156 A1 beziehungsweise EP 2 420 157 A1 bekannt ist. Ein Teil der Borsten kann dabei zugespitzt und höherstehend ausgeführt sein und ein anderer Teil der Borsten kann zylindrisch und tieferstehend ausgeführt sein.

In einer weiteren Variante können die Borstenbündel in einem Winkel α relativ zu dem Borstenträger angeordnet sein. Der Winkel α ist grundsätzlich abhängig von der Lage der Borstenbündel einander gegenüber.

Einzelne konventionelle, extrudierte Borsten können auch innerhalb des Bündels unterschiedliche Winkel zum Borstenträger einnehmen.

Bezüglich der Ausrichtung der Borstenbündel gibt es keine grossen Beschränkungen. Die Borstenbündel können entsprechend nach vorne, nach hinten, nach links oder nach rechts geneigt sein, sie können aber auch kombiniert daraus ausgerichtet sein. Beispiele für Formen, die sich auf diese Weise bilden können werden nachstehend dargestellt.

Eine Möglichkeit besteht in einer igelartigen Orientierung des Einzelbündels (z.B. in Querrichtung, wobei die Borstenbündel in einem Winkelbereich ϕ von maximal 120° ausgerichtet sind, d.h. sie sind bezüglich ihres Winkels zur Senkrechten im Bereich -60° zu 0° zu +60° ausgerichtet). Diese Ausrichtung kann längs-, quer- oder generell in irgendeiner Richtung passieren, sie kann aber muss nicht symmetrisch sein. Die Bündelverteilung muss auch nicht regelmässig sein.

Eine weitere Möglichkeit besteht in einer kegelstumpfartigen Ausrichtung (d.h. auf dem Kopf stehend) mit einem Kranz aus geneigten Borstenbündeln (keine lückenlose Kontur) oder aber Form des Einzelbündels (hier liegt etwa eine fächerartige Ausgestaltung vor, wobei das Borstenloch in mindestens einer Dimension kleiner ist als die Dimension am freien Ende des Bündels bzw. der Borsten).

Die Länge der konventionellen, extrudierten Borsten beträgt bevorzugt von 3 mm bis 18 mm, weiter vorzugsweise von 7 mm bis 14 mm.

Die Beborstungsdichte im Borstenbündel auf dem Borstenträger bzw. Kopfplättchen beträgt 10 Borsten pro mm² bis 300 Borsten pro mm² (vorzugsweise von 20 Borsten pro mm² bis 80 Borsten pro mm²).

Bevorzugte Winkel α der Borsten gegenüber dem Borstenträger liegen zwischen 45° und 90°, weiter vorzugsweise zwischen 70° und 90°.

Der Schmelzteppich kann so gestaltet sein, dass die Schmelze der Borsten (bzw. der Borstenenden) einen Oberflächenanteil am fertigen Produkt ausbildet. Dem Schmelzteppich kann Stabilität durch die Über- bzw. Umspritzmasse (Abdeckung) gegeben werden (beispielsweise wird nur ein Teil des Schmelzteppichs umspritzt (z.B. der Rand). In diesem Fall muss die Borstenschmelze ausreichend dick gestaltet werden, um ein Halten innerhalb des Schmelzteppichs zu erreichen sowie um die Gefahr eines Brechens des Schmelzteppichs zu vermeiden.

### Fertiger Bürstenproduktkopf

Der fertige Bürstenproduktkopf (Kopfteil bzw. Borstenträger) weist bevorzugt die im Folgenden aufgeführten Maße auf.

Die Schichtdicke des Borstenträgers beträgt von 0,3 mm bis 2 mm, vorzugsweise von 0,4 mm bis 1,3 mm (entspricht regelmässig der Verbindungsflächen- bzw. Verbindungsstückhöhe) .

Die Schichtdicke des Schmelzteppichs beträgt von 0,1 mm bis 0,8 mm, weiter vorzugsweise von 0,2 mm bis 0,4 mm.

Die Schichtdicke der Abdeckung (Umspritzung) beträgt von 0,5 mm bis 5 mm, vorzugsweise von 0,5 mm bis 3 mm. Eine Variation der Schichtdicke der Abdeckung über die Länge des Kopfteils ist allerdings möglich.

Der Kopfteil als Ganzes ist grundsätzlich dünn ausgeführt, er kann aber auch eine variable Dicke aufweisen. Bevorzugt beträgt die Dicke des Kopfteils von 2 mm bis 6 mm, weiter vorzugsweise von 2,5 mm bis 4 mm.

Die Schichtdickenverhältnisse betragen bei einem normalen Aufbau: Borstenträger von 25% bis 35%; Schmelzteppich von 15% bis 25%; Abdeckung von 40% bis 60%.

Bei dünnem Aufbau betragen die Schichtdickenverhältnisse: Borstenträger von 15% bis 25%; Schmelzteppich von 15% bis 25%; Abdeckung von 50 % bis 70%.

An sehr flexiblen Stellen betragen die Schichtdickenverhältnisse: Borstenträger von 25% bis 35%; Schmelzteppich von 25% bis 35%; Abdeckung von 30% bis 55%.

Die Kopfteil- bzw. Borstenträger-Abmessungen sind wie folgt: Länge (freies Kopfteilende bis Halsansatz) von 25 mm bis 45 mm, weiter vorzugsweise von 30 mm bis 40 mm. Breite von 10 mm bis 18 mm, weiter vorzugsweise von 12 mm bis 16 mm. Höhe von 2 mm bis 6 mm, weiter vorzugsweise von 2,5 mm bis 4 mm (vgl. oben).

Die Abmessungen des Gesamtprodukts sind wie folgt: Länge von 100 mm von 240 mm, weiter vorzugsweise von 140 mm bis 200 mm. Breite von 10 mm bis 20 mm, weiter vorzugsweise von 12 mm bis 18 mm. Höhe von 10 mm bis 35 mm, weiter vorzugsweise von 15 mm bis 25 mm (d.h. wenn auf einer Fläche aufliegend).

Die Gesamtfläche des Borstenträgers (entspricht in etwa Kopfteilbreite x Kopfteillänge im Endprodukt) beträgt vorzugsweise von 150 mm² bis 600 mm², besonders bevorzugt von 300 mm² bis 500 mm².

Die Gesamtfläche der Borstenlöcher (summiert) beträgt vorzugsweise von 50 mm² bis 200 mm², besonders bevorzugt von 80 mm² bis 150 mm².

Das Verhältnis der Fläche der Borstenlöcher zur Fläche der Borstentraggeometrie beträgt vorzugsweise von 1:6 bis 1: 1,2 besonders bevorzugt von 1:4 bis 1:1,5 (das Verhältnis ist generell höher als bei AFT da keine Schweissabstände vorhanden sind).

### Abdeckung

Die Abdeckung dient generell zum Abdecken und zur Sicherung des Schmelzteppichs. Sie ist grundsätzlich immer vorhanden, das Material der Abdeckung wird entsprechend nach dem Beborsten aufgebracht.

Die Abdeckung besteht stets aus mindestens einer Komponente vorzugsweise einer Weichmaterialkomponente, es sind allerdings auch um ein Hartmaterial oder dem Material für gespritzte Borsten handeln. Des Weiteren sind auch Kombinationen mit den oben erwähnten Materialien möglich, zum Beispiel eine Kombination von Weichmaterialkomponenten und/oder Hartmaterialkomponenten und/oder Materialien für gespritzte Borsten (Beispiele für bevorzugte Materialien siehe oben).

In Kombination mit dem Aufbringen der Abdeckung können etwa auch Reinigungs-/Massageelemente und/oder gespritzte Borsten und/oder ein Zungenreiniger am Bürstenproduktkopf bereitgestellt werden.

Beim Einsatz einer Weichkomponente werden vorzugsweise weich-elastische Reinigungs-/ Massageelemente auf der Vorderseite und/oder der Rückseite und/oder auf dem Begrenzungsrand des Borstenträgers gebildet. Als konkrete Beispiele seien genannt Lamellen, Noppen/Finger oder Zungenreiniger.

Das Weichmaterial kann jeweils in einem Spritzgiessschritt oder in mehreren Spritzgiessschritten sowie an mehreren Stellen mit einem oder mehreren Anspritzpunkten des Bürstenprodukts bzw. des Borstenträgers aufgebracht werden.

Wenn der Borstenträger einstückig mit dem Griffteil und dem Halsteil hergestellt wird, ergeben sich folgende Möglichkeiten:
Vorzugsweise werden beim Spritzen der Abdeckung auch seitlich am Zahnbürstenkopf weichelastische Zonen aus Weichmaterial gebildet, welche das Verletzungspotential reduzieren.

Das Weichmaterial kann in Form von seitlichen Elementen oder Strukturen am Kopfteil angeordnet werden (d.h. in Längsrichtung links und/oder rechts) oder aber am vorderen, freien Ende des Kopfteils (etwa in Form von Dämpfungselementen am vorderen Ende). Beispiele für mögliche Elemente umfassen seitliche Reinigungselemente (d.h. Reinigungselemente wirken in Querrichtung, wie beispielsweise Rippen) oder aber von der Seite her abstehende Reinigungselemente des Borstenfeldes (d.h. in Borstenrichtung, so dass die Reinigungselemente in Borstenrichtung wirken, wie zum Beispiel Lamellen oder Gummizylinder). Zusätzlich kann das Weichmaterial etwa Reinigungselemente auf der Vorderseite bilden oder es kann

Weichmaterial rund um den Kopfteil angebracht sein.

Das Weichmaterial kann rund um das Kopfteil angeordnet sein. Und zwar unter anderem auch auf der Vorderseite, zusätzlich zu den Seitenflächen (ggf. kann bereits beim Erstellen des Borstenträgers mit den Borstenlöchern die Vorderseite mit Weichmaterial versehen werden, nicht jedoch in den Borstenlöchern drin, höchstens als geschnittene Schicht im Bereich der Lochöffnung). Es können aber auf jeder Seite des Kopfteils Elemente aus Weichmaterial gebildet werden (zum Beispiel Reinigungselemente).

Das Weichmaterial kann auch das Halsteil gezogen werden, um beispielsweise die Flexibilität des Halsteils zu erhöhen, um hier einen Dämpfer oder eine Abdeckung zu schaffen oder aber um Reinigungselemente bis in das Halsteil zu ziehen.

Dämpfungselemente können so gestaltet sein, dass sie direkt auf dem Borstenträger aufliegen/verbunden sind oder dass sie nur an gewissen Stellen verbunden sind. Wenn die Dämpfungselemente nur an gewissen Stellen verbunden sind, ist es so, dass der Feder-/Dämpfungseffekt verbessert wird, weil die Knautschzone grösser wird.

Das Weichmaterial kann auch eine Zone im Griffteil bilden. Diese Variante wird oft ausgeführt in Kombination mit der Variante «Weichmaterial in den Halsteil ziehen», da das Halsteil auf dem Weg vom Kopfteil zum Griffteil des Bürstenprodukts liegt. In diesem Fall wird mit dem Weichmaterial im Halsteil eine Oberflächenzone gebildet. Eine Weichmaterialkomponente mit Funktion im Kopfteil liefert eine weitere Griffkomponente (d.h. das Griffteil bekommt eine zusätzliche Materialkomponente). Die zusätzliche Komponente des Griffteils kann mit der Komponente des Kopfteils gespritzt werden). In einer Variante wird eine Kombination mit Weichmaterial von einem Anspritzpunkt im Griff mit weichelastischen Massage- /Reinigungselementen (wie z.B. Lamellen) im Kopfteil realisiert.

Zonen aus Weichmaterial und/oder Material für gespritzte Borsten können konventionelle, extrudierte Borsten berühren, stützen, umschliessen und/oder durchdringen.

Im Folgenden werden Varianten für Weichmaterialapplikationen angegeben, welche auch möglich sind, wenn der Borstenträger wie oben hergestellt wird oder separat hergestellt wird.

Das Weichmaterial bildet Reinigungselemente auf der Vorderseite des Borstenträgers und zwar etwa in Form eines möglicherweise hohlen, nachgiebigen Reinigungs- /Massageelements aus Weichmaterial. Das Reinigungs- /Massageelements ist vorzugsweise gegen die Kopfteilrückseite offen, seine Endfläche liegt vorzugsweise im Borstenfeld und kann glatt, strukturiert, oder in der Art von (mehreren) Lamellen oder Reinigungsstrukturen ausgestaltet sein. Das Element ist vorzugsweise leicht konisch geformt (etwa als Trompetenform). Die Herstellung von Reinigungs- /Massageelementen erfolgt durch Spritzgiessen und zwar entweder vor oder nach dem Verankern der konventionellen, extrudierten Borsten am Borstenträger.

Es können auch mehrere Weichmaterialsektionen/-zonen gebildet werden, d.h. zwei oder mehrere Weichmaterialkomponenten, bilden zwei oder mehrere Sektionen/Zonen im Bürstenproduktkopf aus.

Des Weiteren können auch gefederte Borstenbündel vorgesehen werden. Dabei wird jeweils ein einzelnes oder einige wenige Borstenbündel für sich verbunden und aufgeschmolzen und bilden nur in sich einen zusammenhängenden Borstenteppich. Beim Schmelzen wird eine Schmelzgeometrie (z.B. eine Kugel) gebildet, welche sich nicht mit dem Borstenträger verbindet. Die Rückseite des Borstenträgers wird mit Weichmaterial umspritzt, wobei kein Weichmaterial zwischen die Borstenschmelze und den Borstenträger gelangt. Auf diese Weise können die Borstenbündel relativ zu dem Borstenträger federnd auf dem Weichmaterial bewegt werden.

Folgende Anspritzpunkte kommen für das Umspritzmaterial zur Herstellung der Abdeckung der Borstenschmelze in Frage: Position im Kopfteil (für beide Varianten, d.h. Borstenträger einstückig mit Griff- und Halsteil bzw. Borstenträger separat hergestellt (Kopfplättchen)); Position im Hals (für Variante Borstenträger einstückig mit Griff- und Halsteil hergestellt) und im Griffteil (für Variante Borstenträger einstückig mit Griff- und Halsteil hergestellt).

Der jeweilige Anspritzpunkt kann von einer weiteren Materialkomponente überdeckt werden beziehungsweise die durch an einem Anspritzpunkt angespritzte Materialkomponente kann einen anderen Anspritzpunkt überdecken, so dass quasi Ebenen von Anspritzpunkten (sowie damit entsprechende Materialebenen) erzeugt werden.

In einer Variante kann die Abdeckung auch durch die Montage eines Abdeckteils, zum Beispiel eines Deckels, erzeugt werden.

Dabei kann lediglich der Deckel montiert werden oder aber es wird vor der Montage Material in Form eines Safety-Shots auf den Schmelzteppich aufgebracht. Bei dem Safety-Shot wird in der Regel eine kleine Menge an Material verwendet (es kann aber auch eine volle Komponente gespritzt werden), um einen sicheren Halt bzw. eine Abdichtung zu gewährleisten. Vorzugsweise wird als Material Weichmaterial eingesetzt. Natürlich kann auch Hartmaterial oder Material für gespritzte Borsten verwendet werden.

Das Abdeckteil bzw. der Deckel wird separat hergestellt und zwar in Form eines Ein- oder Mehrkomponentenkunststoffteils. Es kann sich bei dem Abdeckteil aber auch um ein Nicht-Kunststoffteil (z.B. ein Einlegeteil) handeln. Das Abdeckteil kann eigenstabil sein oder nicht.

Das Abdeckteil kann durch Aufschweissen - das heisst Montieren und Verschweissen - aufgebracht werden. Dieser Vorgang entspricht im Prinzip einem umgekehrten AFT-Vorgang, d.h. anstatt des Borstentragplättchens wird das Abdeckteil verschweisst (wobei jedoch die zuvor beschriebenen Nachteile des Schweissens im Zusammenhang mit AFT bleiben).

Das Abdeckteil kann aber auch mittels Einpressen montiert werden, d.h. nach dem Aufschmelzen der Borsten (sowie eventuell nach einem Safety-Shot). Eine sichere Halterung kann bereitgestellt werden durch Nocken (mit Klick-Fixierung) oder aber durch Pressung.

Das Abdeckteil kann grundsätzlich auch mittels Umspritzung montiert werden. Varianten: Safety-Shot/Montage/Umspritzen oder Montage/Umspritzen. Der Halt wird durch das Umspritzen erzeugt. Es kann eine komplette Umspritzung erfolgen oder aber auch nur eine teilweise Umspritzung (beispielsweise am Begrenzungsrand).

Das Abdeckteil kann auch noch zusätzliche Features aufweisen. Zum Beispiel Reinigungs-/Massageelemente, die sich von der Rückseite auf die Vorderseite des Bürstenprodukts erstrecken (etwa entsprechende Elemente die durch eine Ausnehmung im Borstenträger bzw. im Borstenfeld Schmelzteppich geführt sind). In Frage kommen zudem chemische und/oder biologische Wirkstoffe direkt im Deckel oder aber ein Spiegel oder aber eine Folie (etwa mit Bild etc.).

### Weitere Spezifische Eigenschaften

Bei der Variante bei welcher der Borstenträger einstückig mit dem Hals- und Griffteil hergestellt wird, weist das Griffteil (ohne Borsten) von 1 K (K=Materialkomponente) bis X K (wobei X eine natürliche Zahl von 2 bis 10 ist), vorzugsweise von 1 K bis 4 K auf. Bei Materialkomponenten mit Ursprung im Kopf und welche in das Griffteil gezogen sind, von 0 K bis X K, vorzugsweise von 0 K bis 2 K. Die Anzahl der Materialkomponenten im Griffteil im Endprodukt betragen vorzugsweise von 1 K bis X K, weiter vorzugsweise von 1 K bis 6 K.

Dabei kann ein Bürstenproduktgrundkörper (d.h. Griffteil, Halsteil und Borstenträger bzw. Kopfteil) für mehrere verschiedene Bürstenprodukte verwendet werden. Der Aufbau kann wie folgt sein: der Grundkörper umfasst 1 K; das Borstenfeld kann mehrere Varianten mit gleichen Bündelpositionen umfassen, wobei Variabilität bezüglich Borstenmaterial, Borstenart, Borstenfarbe, Borstenlänge, Borstenwinkel etc. herrscht (d.h. wie im Rahmen der vorliegenden Anmeldung beschrieben); ein Safety-Shot kann nach Bedarf vorgesehen sein (kann Teil des Umspritzkörpers sein); der Umspritzkörper bildet keine weiteren Elemente sondern ist nur Abdeckung oder der Umspritzkörper bildet Reinigungselemente der Vorderseite und/oder der Rückseite oder aber der Umspritzkörper bildet eine Griffkomponente (Kombinationen der vorgenannten Möglichkeiten sind auch möglich).

Ein Vorteil hierbei ist, dass die konkrete Ausgestaltung erst spät im Prozess festgelegt werden muss, nämlich erst beim Einführen der Borsten.

Als mögliches weiteres Material im Borstenfeldbereich, welches direkt mit dem Griff gespritzt wird, kommt eine zusätzliche Weichkomponente, eine zusätzliche Hartmaterial und/oder ein Material zur Herstellung von gespritzten Borsten in Betracht (Materialien siehe oben). Die zusätzliche(n) Komponente(n) werden vor dem Beborsten direkt am Griffteil und am Bürstenproduktkopf angebracht. Beispiele für solche Elemente sind Reinigungs-/Massageelemente (z.B. in Form von Lamellen, Noppen) und/oder gespritzte Borsten. Die Anforderungen richten sich jeweils nach der konkreten Anwendung des Produktes. Für die Lagerung kann es dabei spezifische Anforderungen geben, damit die Elemente nicht beschädigt werden. So kann beispielsweise ein Tray mit definierten Haltepositionen und entsprechenden Freiräumen zum Einsatz kommen.

Grundsätzlich können einfache Spritzgiesswerkzeuge verwendet werden (Werkzeuge mit vielen Komponenten sind komplizierter und teurer). Durch weiteres Spritzgiessen im Anschluss an das Beborsten ist es möglich, weitere Spritzgiesskomponenten zu integrieren. Es kann beispielsweise mit einem Zwei-Komponenten-Werkzeug ein Vier-Komponenten-Bürstenprodukt gestaltet werden (z.B. ein 2 K Bürstenproduktgriff kombiniert mit einem Borstenträger mit einer 2 K Abdeckung, wobei die 2 K Abdeckung wie beschrieben zusätzlich in den Bürstenproduktgriff gezogen werden kann).

Im Hinblick auf die Variante bei der der Borstenträger separat hergestellt wird, gibt es wiederum zwei Möglichkeiten.

Erstens kann der Borstenträger beziehungsweise das Kopfteil mit einer Standard-Schnittstellengeometrie hergestellt werden und so auf verschiedene Griffe montiert werden. Dabei ist der Borstenträger beispielsweise am hinteren Ende oder am hinteren Ende sowie auf Teilen der linken und rechten Seite mit einer Schnittstellengeometrie ausgestattet. Andererseits kann die Schnittstellengeometrie auch rund um den Borstenträger an den Seitenrändern liegen; am Griffkörper ist entsprechend ein Rahmenelement gestaltet, wobei der Borstenträger in das Rahmenelement eingelegt werden kann und wobei die Fixierung etwa durch Umspritzen, Einklicken, Kleben oder Schweissen insbesondere Ultraschallschweissen erfolgt. Eine weitere Möglichkeit entspricht der Verwendung der AFT-Technologie. Dabei wird der Borstenträger bzw. das Kopfplättchen das bereits mit Borsten, etc. besetzt ist und auf der Rückseite mit mindestens dem Safety-Shot versehen ist. Im Kopfteil des Grundkörpers befindet sich eine beckenförmige, tellerartige Aussparung in welche der Borstenträger bzw. das Kopfplättchen eingesetzt werden kann. Der Borstenträger bzw. das Kopfplättchen besitzt an den Seitenrändern auf der Rückseite eine Schnittstellengeometrie beziehungsweise Kante, welche in die beckenförmige, tellerartige Aussparung eingesetzt als Mittel für die Ultraschall-Verbindung dient. Der Borstenträger bzw. das Kopfplättchen liegen beim Einsetzen in der Aussparung auf dieser Schnittstellengeometrie auf und beim Verschweissen dienen diese Elemente als Verbindungselement bzw. als Energiekonzentrator sowie Materialreservoir für zu verflüssigendes Material. Weitere Fixierungsvarianten umfassen etwa Einklicken, wie genannt Schweissen, insbesondere Ultraschallschweissen, oder Kleben.

Zweitens kann der Bürstengriff (sowie ggf. das Halsteil) komplett am Borstenträger angespritzt werden. Hierfür wird der Borstenträger beborstet und anschliessend umspritzt; mit dem Umspritzen wird dann auch der Bürstengriff angespritzt und ausgeformt.

Für beide vorerwähnten Varianten (Borstenträger einstückig mit dem Hals- und Griffteil hergestellt bzw. Borstenträger separat hergestellt) können in einer weiteren Ausführungsform konventionelle, extrudierte Borsten auf der Vorder- und auf der Rückseite des Bürstenprodukts angeordnet sein. Hierzu müssen zwei Borstenträger vorhanden sein, wobei die Borstenträger jeweils alleinstehend sind oder auch einer mit einem Bürstenproduktgriff versehen ist. Jeder Borstenträger wird dabei für sich einzeln behandelt, d.h. die Borsten werden jeweils eingeführt und verschmolzen. Eventuell kann auch ein Safety-Shot für eine Abdeckung vorgesehen sein (in der Regel aber nur, wenn zwischen den Borstenträgern beim Zusammenfügen Freiräume entstehen). Die Borstenträger werden nämlich bevorzugt Rücken an Rücken aneinandergelegt und verbunden (Verbindungsmöglichkeiten wie oben erwähnt: Schweissen, Umspritzen etc.). Auf diese Weise entsteht entweder ein fertiges Bürstenprodukt oder ein fertiger Borstenträger.

Im Übrigen können auch (vorgefertigte) Montageteile im Borstenfeld eingebaut sein. Diese werden erst nach der Fertigstellung des restlichen Borstenfeldes (inklusive Umspritzen) montiert.

### Verfahren

Im Folgenden werden bevorzugte Ausgestaltungen und Aspekte zu den einzelnen Verfahrensschritten und -varianten zur Herstellung eines Bürstenprodukts im Rahmen der vorliegenden Erfindung angegeben.

Herstellung des Borstenträgers:
Es wird entweder der Grundkörper des Bürstenprodukts mitsamt dem Borstenträger spritzgegossen oder es wird ein separater bzw. alleinstehender Borstenträger (vorzugsweise in Form eines Kopfplättchens) spritzgegossen.

Das Spritzgiessen kann dabei inline (d.h. als direkt verketteter Prozess) oder offline (d.h. etwa mit einer Zwischenlagerung verknüpft) erfolgen.

Bereitstellen der Borsten/Borstenbündel:
Die Borsten werden vorzugsweise zunächst verrundet. Anschliessend werden einzelne Borstenbündel separiert und in Borstenausnehmungen eines Stanzwerkzeugs eingeführt.

In diesem Zusammenhang besteht die Möglichkeit einen variablen Kreisbogen (Variabilität der Menge der Borsten die in einem Schritt zugeführt werden) zu verwenden, und zwar insbesondere dann, wenn verschiedene konventionelle, extrudierte (Borsten-) Filamentarten eingesetzt werden sollen oder verschiedene Borstenloch-Grössen bestückt werden. Der Kreisbogen wird vorzugsweise während des Prozesses eingestellt, d.h. während die konventionellen, extrudierten Borsten für ein Borstenfeld bereitgestellt werden (für Borstenbündel mit unterschiedlicher Anzahl von Borsten). Ein Fassen/Abtrennen von konventionellen, extrudierten Borsten in der Beborstungsmaschine entspricht hierbei vorzugsweise einem Borstenbündel.

Vorliegend wird, verglichen mit dem konventionellen AFT-Verfahren, keine Trichterplatte verwendet. Dies bedeutet, dass die Borstenbündel gleich so, wie sie vom Kreisbogen her bereitgestellt werden, vollständig sind. Die Anzahl der Borsten in einem Borstenbündel kann dabei in einem maschinenspezifischen Bereich variiert werden.

Beispiele für Unterschiedscharakteristika bei den Filamentarten (konventionelle, extrudierte Borsten) umfassen etwa die Borstenform (zylindrisch, zugespitzt oder abgerundet etc.), die Form des Borstenquerschnittes, die Borstenfarbe, der Borstendurchmesser, die Borstenhärte sowie die Borstenmaterialarten.

In einer Variante kann, bevor die Borsten in die Borstenausnehmung im Werkzeug geschoben werden, auch der folgende Ablauf vorgesehen werden: es wird zunächst eine kleine Menge von Borsten gefasst/abgetrennt und in Warteposition gehalten; zeitgleich wird eine zweite kleine Menge von Borsten gefasst/abgetrennt; anschliessend werden die erste und die zweite kleine Menge von Borsten zusammengeführt und dann in das Borstenloch bzw. die Öffnung eingeführt.

Dies kann aber auch mit dem o.g. variablen Kreisbogen ausgeführt werden, was mehr Spielraum erlaubt.

Spezifisches zur Werkzeugbeladung:
Für die Zuführung der Borsten bzw. Borstenbündel zur Beladung des Werkzeugs gibt es grundsätzlich zwei Möglichkeiten.

Einmal werden die konventionellen, extrudierten Borsten bzw. Borstenbündel von vorne eingeführt, d.h. von der späteren Vorderseite des Bürstenprodukts her durch den Borstenträger (also zunächst vergleichbar mit den bekannten AFT-Maschinen - nur dass am Ende der Borstenträger nicht verschweisst werden muss, sondern ein Umspritzen der Rückseite erfolgt).

In der bevorzugten Variante werden allerdings die bereitgestellten Borsten bzw. Borstenbündel von der Befestigungsseite (d.h. von der späteren Rückseite des Bürstenprodukts) her durch den Borstenträger hindurchgeführt. Die von der Separierung kommenden konventionellen, extrudierten Borsten bzw. Borstenbündel werden also durch den Borstenträger hindurch in das Werkzeug eingeführt. Hierfür sind vorzugsweise an den Borstenlöchern des Borstenträgers Einlaufschrägen realisiert, damit die Borsten störungsfrei geführt werden können.

Profilierung bzw. Einstellung der Borstenlänge:
Grundsätzlich sei zunächst angemerkt, dass das Werkzeug, das die konventionellen, extrudierten Borsten für die Verarbeitung aufnimmt Ausnehmungen aufweist, welche entsprechend der gewünschten Profilierung ausgestaltet sind (d.h. die Profilierung erfolgt etwa durch verschieden tiefe Ausnehmungen).

Mit anderen Worten, die Profilierung wird über die Tiefe bzw. Form der Borstenausnehmungen im Werkzeug erzeugt. Das Werkzeug selbst führt vorliegend also keine Bewegung aus, sondern ist als starres Teil aufgebaut (d.h. im Gegensatz zum AFT-Verfahren sind hier grundsätzlich keine verfahrbaren (Profil-) Stifte vorgesehen). Die Gestaltung der Geometrie des Borstenbündels erfolgt also in der Borstenausnehmung des Werkzeugs.

Varianten im Werkzeugaufbau:
In einer ersten Variante sind die Borstenausnehmungen in einer ersten Platte vorgesehen. Die erste Platte weist eine Schnittstelle zu einer zweiten Platte auf, welche nicht eben ist. Die Unebenheit der zweiten Platte ergibt dabei die Profilierung der Borsten bzw. Borstenbündel, indem sie die Borstenausnehmungen abschliesst. Ein derartiges Werkzeug ist einfach in der Herstellung der beiden Teile, weist aber nur eine eingeschränkte Variabilität auf.

In einer zweiten Variante sind die Borstenausnehmungen in einem Werkzeugteil (bzw. einer Platte) vorgesehen, wobei die zur Verfügung stehende Ausnehmungslänge bzw. das Endprofil über (i.d.R. stationäre) Stifte mit unterschiedlicher Länge definiert wird. Die Stifte werden dabei auf der den Einführöffnungen für die Borstenbündel entgegengesetzten Seite des Werkzeugteils in die Ausnehmungen eingesetzt und können so einfach gewechselt werden. Es kann auf diese Weise eine hohe Variabilität erreicht werden, allerdings ist die Herstellung solcher Werkzeugteile komplexer.

In einer weiteren Variante sind die Borstenausnehmungen im Werkzeugteil (bzw. einer Platte) vorgesehen, wobei keine Stifte wie in der zweiten Variante vorgesehen sind. Die Borstenausnehmungen sind als Sacklöcher ohne Variabilität gestaltet. Das Borstenfeld ist so wie das Werkzeug, ansonsten muss ein neues Werkzeug geschaffen werden.

Schneiden der Borsten:
Grundsätzlich sei angemerkt, dass da die Borsten vorzugsweise bereits gerundet sind, nur am entgegengesetzten (d.h. unbearbeiteten) Borstenende geschnitten werden kann.

In einer ersten Variante sind die Borsten bereits abgelängt, wenn sie in das Werkzeug eingeführt werden (d.h. die eingeführten Borsten sind ggf. in verschiedenen Längen vorhanden).

Bevor die konventionellen, extrudierten Borsten in die Borstenausnehmung des Werkzeugs eingeführt werden, müssen sie quasi Gruppe für Gruppe geschnitten werden. Dies kann einmal vor der Separierung mittels Kreisbogen geschehen oder aber nach der Separierung (d.h. sozusagen «auf dem Weg» im Kreisbogen), wenn nur ein Borstenbündel separiert vorliegt und zwar bevorzugt kurz vor dem Einführen in die Borstenausnehmung des Werkzeugs (kurz vor dem Schieben bzw. dem Positionieren über der Borstenausnehmung).

In einer anderen Variante können die konventionellen, extrudierten Borsten bzw. Borstenbündel auch abgelängt werden, wenn sie in das Werkzeug bzw. die Borstenausnehmungen eingebracht sind (und die Befestigungsenden der Borsten sozusagen überstehen). Als geometrische Möglichkeiten beim Schneiden bieten sich dann eine Längs- und/oder Querprofilierung an, wodurch die Mengenverteilung der Borstenschmelze im Schmelzbad bzw. im Schmelzteppich gesteuert werden kann, da die zu schmelzende Menge an Borsten variiert.

Es besteht allerdings auch die Möglichkeit, dass keine Ablängung der konventionellen, extrudierten Borsten erfolgt, d.h. das überschüssiges Material bzw. die überstehenden Befestigungsenden der Borsten werden (lediglich) verschmolzen. Hierbei kann ein relativ dicker Schmelzteppich gebildet werden, wobei überschüssiges Material ggf. entfernt bzw. abgestanzt wird.

Als Schneideverfahren kommen in Betracht: Schneiden mittels heissem Draht, Schneiden durch Fräsen (z.B. alle Befestigungsenden mit einem Fräser bearbeiten, wobei ggf. eine Geometrie gefräst werden kann (d.h. verschiedene Höhen der rückseitigen Borstenenden gegenüber der Trägerstruktur) sowie Schneiden mittels einer Klinge.

Befestigen der Borsten/Aufschmelzen der rückseitigen Borstenenden:
Bevorzugt werden hierfür die Borstenenden werden aufgeschmolzen und gegen den Borstenträger gepresst. Hierbei gilt es zu beachten, dass das der Schmelzteppich dicht sein muss, damit später eine sachgemässe Überspritzung erfolgen kann. Das Aufschmelzen kann etwa durch Schweissen (berührungslos oder berührend) erfolgen bzw. durch einen Heizstempel oder Heizstrahler.

Der Pressvorgang wird mittels des (Heiz-) Stempels ausgeführt. Die Oberflächengeometrie des Stempels sollte so beschaffen sein, dass der Verlauf der Schmelzmasse gut gesteuert werden kann. In der Regel weist der Stempel eine stetige, geschlossene Fläche auf, welche parallel zum Borstenträger ausgerichtet ist.

In einer Variante kann allerdings die Stempelfläche mit Aussparungen bzw. mit einem Profil gegenüber dem Borstenträger versehen sein. Auf diese Weise kann die Schmelzverteilung gesteuert werden. Es können etwa Stellen mit mehr Schmelze und Stellen mit weniger Schmelze geschaffen werden (hierdurch wird eine Topographie bzw. ein Höhenprofil des Schmelzteppichs erstellt). Dieses kann gewellt oder aber konkav oder konvex bombiert sein. Andere Formen, wie etwa ein gezacktes oder zinnenförmiges Profil sind denkbar.

Optional kann die Stempelfläche aber auch Aussparungen aufweisen, die sich während dem Schmelzen mit Borstenschmelze füllen. Auf diese Weise kann ggf. überschüssige Schmelze abgeführt werden. Das Schmelzmaterial bleibt in den Aussparungen haften und es erfolgt ggf. eine spezielle Bewegung des Stempels weg von der Schmelze. Allerdings müssen die Aussparungen nach jedem Schmelzvorgang geleert werden beispielsweise durch Ausbürsten.

Der Stempel ist vorzugsweise aus mehreren Teilen aufgebaut. Insbesondere ist vorzugsweise die Berührungsoberfläche mit der Schmelze aus mehreren Teilen gebildet. Dies ist einfach in der Herstellung und gewährleistet eine gute Wechselbarkeit der einzelnen Teile). Zudem ist so der Grundstempel nutzbar für verschiedene Stempelformen (z.B. wird bei einem dreiteiligen Stempel das mittlere Element je nach Bürstenprodukt ausgetauscht). Der Stempel ist weiter vorzugsweise federnd gelagert, um Toleranzen auszugleichen.

Bei einem mehrteiligen Stempel kann auch jedes Element einzeln bzw. für sich selbst gefedert sein. Der Druck wird so angepasst an die Kontur bzw. den gewünschten Verlauf der Borstenschmelze.

Bevorzugt sind die Schritte Schmelzen und Pressen kombiniert (d.h. in einem Heizstempel). Vorzugsweise wird der Stempel verhältnismässig schnell bewegt. Weiter vorzugsweise wird der Stempel immer geheizt (aber nur dort wo geheizt werden muss). Durch eine solche kurze und rasche Schmelzung wird der Borstenträger wenig oder gar nicht verformt, was im Hinblick auf die Passung vorteilhaft ist.

In einer weiteren Variante kann sich das Borstenmaterial untereinander verbinden. Dies ist z.B. dann der Fall, wenn alle konventionellen, extrudierten Borsten bzw. Borstenbündel des Borstenfelds aus demselben Material gebildet sind oder wenn zueinander affine Materialien verwendet werden. Wenn jedoch nicht miteinander kompatible Materialien gewählt werden, kommt keine Verbindung des Borstenmaterials untereinander zustande.

Das Borstenmaterial und das Material des Borstenträgers verbinden sich im Regelfall nicht, d.h. die Materialien sind meist so gewählt, dass sie nicht miteinander kompatibel sind (es entsteht kein Materialschluss). Es kann allerdings ein Formschluss gebildet werden und zwar beispielsweise durch vorstehende Strukturen wie Zapfen oder Zylinder am Borstenträger, welche auch aufgeschmolzen werden und so für den Schmelzteppich jeweils Anker bilden (sog. Opferstrukturen).

In einer weiteren Variante werden bereits fertig verbundene Borstenbündel zugefördert und in den Borstenträger intergiert (d.h. in die Borstenlöcher oder in Hülsen in oder am Borstenträger). Auf diese Weise ist kein Aufschmelzen der Borstenenden im Werkzeug mehr nötig bzw. eine Fixierung kann über einen Safety-Shot (d.h. Überspritzen mit wenig Material oder aber mit einer vollen Komponente) erfolgen.

Abdecken der Rückseite:
Bei der Über- bzw. Umspritzung des Kopfteils wird insbesondere die Borstenschmelze mit Weichmaterial (bevorzugt), mit Hartmaterial oder Material für gespritzte Borsten überdeckt. Hierdurch wird ein besserer Halt bzw. eine bessere Abstützung des Schmelzteppichs gewährleistet.

Der Schmelzteppich hat beim Spritzgiessen eine Abdichtfunktion und verhindert das Durchtreten des Abdeckmaterials während dem Überspritzungsprozess durch den Borstenträger. Insofern darf der Spritzdruck nicht zu hoch sein, da ansonsten z.B. ein Überspritzen im Bereich der Borsten auftreten könnte, d.h. dass z.B. Abdeckmaterial (ungewollt) zwischen Borsten und Borstenträger gelangt bzw. den Schmelzteppich durchbricht.

Der Vorteil des Umspritzens besteht gegenüber dem AFT-Verfahren darin, dass zwischen Schmelzteppich und Griffteil kein Hohlraum gebildet wird. Zudem ist generell der Spritzdruck von Weichmaterial tiefer als jener von Hartmaterial, so dass bei Verwendung von Weichmaterial weniger Probleme mit Überspritzungen auftreten.

Nach dem Überspritzen ist das Bürstenprodukt dann funktionsfertig.

In einer Prozessvariante wird der Bürstenkopf mit bereits angeschmolzenen Borsten in ein Spritzgiesswerkzeug eingelegt, d.h. es wird ein separater Prozess gestartet mit einer Spritzgiessmaschine neben der Stanzmaschine. Dies kann Inline (direkte Verknüpfung mit Stanzmaschine) oder Offline (Prozess separat von Stanzmaschine mit Zwischenlagerung) erfolgen. Beim Inline-Prozess bildet das Stanzwerkzeug direkt einen Teil des Spritzgiesswerkzeugs.

Das Abdeckmaterial ist vorzugsweise mit dem Material des Griffkörpers kompatibel (d.h. die beiden Materialien gehen einen Materialschluss ein); es ist aber grundsätzlich auch möglich, eine formschlüssige Verbindung z.B. mittels Hinterschnitten, Ausnehmungen und Umspritzungen vorzusehen.

Das Abdeckmaterial ist in der Regel mit dem Material der Borstenschmelze inkompatibel, d.h. diese Materialien gehen keine Verbindung/Materialschluss ein. Das Abdeckmaterial kann aber auch Verbindungshilfen enthalten, die eine Verbindung mit dem Material der Borstenschmelze ermöglichen.

Der Spritzdruck zum Aufbringen des Abdeckmaterials beträgt von 200 bar bis 1000 bar, vorzugsweise von 300 bar bis 500 bar.

Als Abdeckmaterial werden bevorzugt Weichmaterialien verwendet, da diese meist tiefere Verarbeitungsdrücke als Hartmaterialien aufweisen (mehr Giessen als Spritzen). Es können auch Hartmaterialkomponenten oder Materialien für gespritzte Borsten eingesetzt werden, diese müssen aber einen sehr geringen Verarbeitungsdruck aufweisen.

Es sind grundsätzlich Einkomponenten- oder Mehrkomponenten-Spritzgiessprozesse möglich (z.B. für verschiedene Farben, Safety-Shot und/oder Reinigungselemente etc.).

Für die Abdeckung auch kann ein wasserlösliches Polymermaterial eingesetzt werden, welches sich beim Gebrauch (d.h. im Zusammenspiel mit Wasser) auflöst oder teilweise auflöst (wie es etwa in der EP 1 639 913 A1 beschrieben ist). Einerseits kann auf diese Weise ein Wirkstoff abgegeben werden oder aber es kann eine Indikatorfunktion realisiert werden (z.B. für einen fälligen Zahnbürstenkopf-Wechsel).

In der Regel werden jedoch Weichmaterialien bevorzugt, weitere Weichmaterialien können der obigen Aufzählung entnommen werden.

In einer weiteren Variante kann ein Forming-Shot mit der Aufbringung eines wasserlöslichen Polymer Materials kombiniert werden. Dabei wird zunächst die Abdeckung in Form des Safety-Shots gespritzt (diese darf sich nicht auflösen, da sie zur Sicherung der Borsten dient) und anschliessend wird das wasserlösliche Polymer Material als Forming-Shot gespritzt.

In einer weiteren Variante wird zum Abdecken der Rückseite zunächst ein Safety-Shot ausgeführt und anschliessend ein Forming-Shot (d.h. es wird auch zweimal spritzgegossen).

Mit dem Safety-Shot wird wiederum die Borstenschmelze bzw. der Schmelzteppich abgedeckt. Das Material (vorzugsweise Weichmaterial) wird mit geringem Verarbeitungsdruck aufgebracht. Ziel ist das Fixieren der Borstenschmelze bzw. der Borsten gegenüber dem Borstenträger, der Safety-Shot kann beispielsweise auch am Endprodukt sichtbare Oberflächen beinhalten.

Mit dem Forming-Shot erfolgt anschliessend eine Überspritzung oder mindestens eine teilweise Überspritzung des Safety-Shots. Hier kann ein Material mit einem höheren Verarbeitungsdruck aufgebracht werden, da mögliche Ritzen im Schmelzteppich bereits durch den Safety-Shot abgedichtet wurden. Es können im Rahmen des Forming-Shots auch Reinigungsstrukturen auf der Vorderseite oder der Rückseite (etwa Zungenreiniger) geformt werden.

In einer noch weiteren Variante kann das zweimalige Spritzgiessen im Co-Injection-Verfahren ausgeführt werden. D.h. das Abdecken und alles Weitere erfolgt in einem Schritt in derselben Werkzeugkavität. Die erste Komponente (vorzugsweise ein Weichmaterial) wird mit niedrigem Druck gespritzt und repräsentiert quasi den Safety-Shot. Die zweite Komponente wird mit hohem Druck gespritzt (wenn die erste Komponente bereits teilweise erstarrt ist und abdichtet) und repräsentiert quasi den Forming-Shot. Auf diese Weise kann ein spezielles Design bzw. Dekoration erreicht werden sowie eine spezielle Soft-Touch-Oberfläche im Kopf-Bereich.

Das Co-Injection-Verfahren kommt insbesondere dann zur Anwendung, wenn der Borstenträger einstückig mit dem Grundkörper des Bürstenprodukts gebildet ist. Der Anspritzpunkt kann im Kopf- oder im Griffteil sein.

Die vorliegende Erfindung wird im Folgenden beispielhaft anhand von bevorzugten Ausführungsformen, welche in den beigefügten Zeichnungen illustriert und beschrieben werden, veranschaulicht.

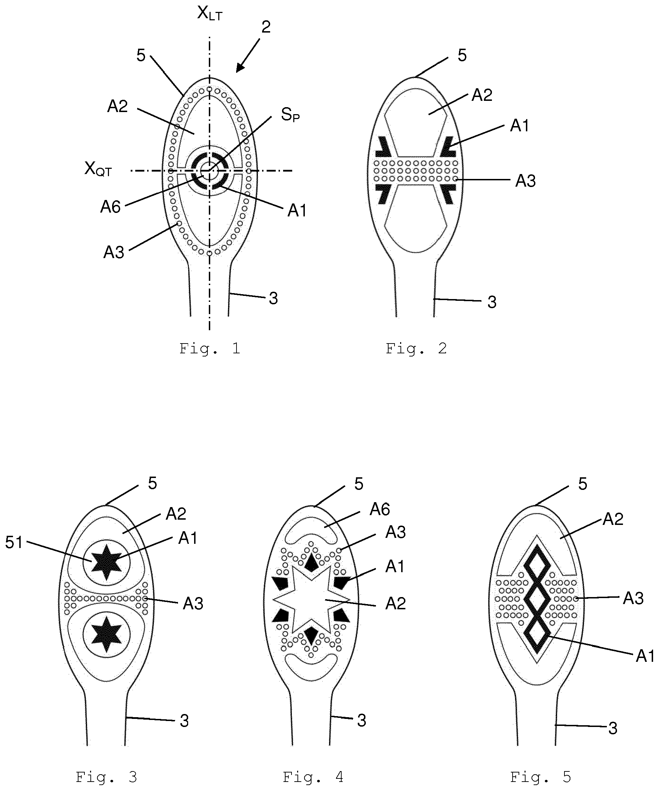

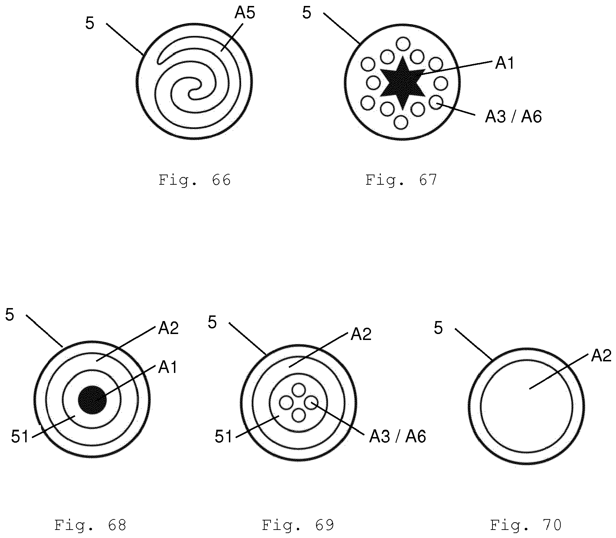

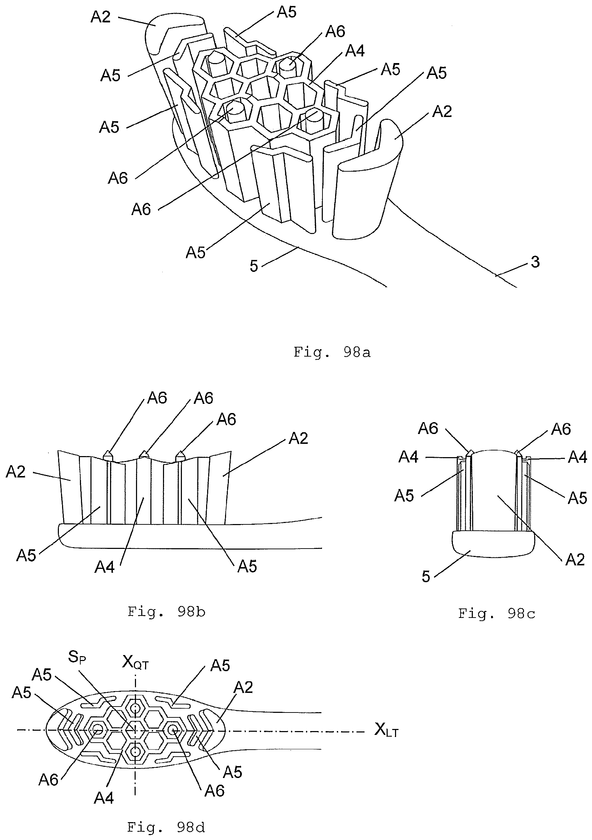

Insbesondere können die in diesen bevorzugten Ausführungsformen beschriebenen Reinigungselemente bzw. Bündelformen auch in andern Anordnungen, Grössen, Ausführungsformen oder auf anderen Bürstenkopfgrössen und oder Formen verwendet werden und die Reinigungselemente bzw. Bündelformen können sich allenfalls in deren Lage, Menge und Anzahl auf dem Bürstenkopf unterscheiden ohne den Rahmen der Erfindung zu verlassen. Beispielsweise können Reinigungselemente bzw. Bündelformen der Fig. 1 -55 und 97 - 99 nicht nur als Bürstenköpfe für manuelle Zahnbürsten konzipiert werden, sondern, der Grösse und Kopfform entsprechend, auch als Aufsteckköpfe für elektrische Zahnbürsten oder Aufsteckköpfe für Gesichtsbürsten konzipiert werden. Es versteht sich, dass dann die Anzahl, Lage, Form und Grösse der Reinigungselemente bzw. Bündelformen der Kopfform bzw. Kopfgrösse angepasst werden muss. Umgekehrt können die Reinigungselemente bzw. Bündelformen der Fig. 66 -79 und 101 - 114 nicht nur als Bürstenköpfe für elektrische Zahnbürsten sondern der Grösse und Kopfform angepasst auch als Bürstenköpfe für manuelle Zahnbürsten oder Aufsteckköpfe für Gesichtsbürsten konzipiert werden. Ausführungsformen gemäß der Erfindung sind nur auf den Figuren 98a-d gezeigt.

Es zeigen:
- **Fig. 1 - 5:**: beispielhafte Borstenträger der Kategorie A;
- **Fig. 6 - 9:**: beispielhafte Borstenträger der Kategorie B;
- **Fig. 10 - 13**:: beispielhafte Borstenträger der Kategorie C;
- **Fig. 14** - **19:**: beispielhafte Borstenträger der Kategorie D;
- **Fig. 20** - **24:**: beispielhafte Borstenträger der Kategorie E;
- **Fig. 25** - **28:**: beispielhafte Borstenträger der Kategorie F;
- **Fig. 29:**: einen beispielhaften Borstenträger der Kategorie G;
- **Fig. 30 - 32:**: beispielhafte Borstenträger der Kategorie H;
- **Fig. 33 - 36:**: beispielhafte Borstenträger der Kategorie I;
- **Fig. 37 - 40:**: beispielhafte Borstenträger der Kategorie J;
- **Fig. 41 -47:**: beispielhafte Borstenträger der Kategorie K;
- **Fig. 48 - 51:**: beispielhafte Borstenträger der Kategorie L;
- **Fig. 52 - 55:**: beispielhafte Borstenträger der Kategorie M;
- **Fig. 56a - b:**: die Wirkungsweise einer bevorzugten Ausführungsform einer Halte-/Pressvorrichtung für das HT-Verfahren im Querschnitt;
- **Fig. 57a - b:**: die Wirkungsweise einer Ausführungsform einer Halte-/Pressvorrichtung für das HT-Verfahren für die Erzeugung eines schräggestellten Bündels im Querschnitt;
- **Fig. 58a - b:**: Borstenträger-Grundkörper mit Materialreservoir im Borstenträger für die Erzeugung eines regelmässigen Fächers im Querschnitt;
- **Fig. 59a - b:**: die Erzeugung eines regelmässigen Fächers im Grundkörper gemäss Fig. 58a - b im Querschnitt;
- **Fig. 60a - b:**: die Erzeugung eines Fächers mit stärkerem Zentrum im Querschnitt;
- **Fig. 61a - b:**: eine Ausführungsform für das HT-Verfahren für die Erzeugung eines schräggestellten Bündels durch ein asymmetrisches Materialreservoir im Querschnitt;
- **Fig. 62a - b:**: eine Ausführungsform eines Bündels mit zweiter Komponente am Montageende;
- **Fig. 63:**: exponierte Schmelze (im AFT-Verfahren hergestellt);
- **Fig. 64:**: exponierte Schmelze (im HT-Verfahren hergestellt);
- **Fig. 65:**: Werkzeug zur Herstellung von exponierter Schmelze (im AFT-Verfahren);
- **Fig. 66** - **70:**: beispielhafte (runde) Borstenträger für Single Tuft Zahnbürsten;
- **Fig. 71** - **79:**: beispielhafte (runde) Borstenträger für Nagellack-Applikatoren;
- **Fig. 80** - **84:**: beispielhafte Borstenträger für Mascara-Applikatoren;
- **Fig. 85a:**: die Vorderseite einer Ausführungsform eines Grundkörpers bzw. Griffkörpers mit Borstenträger in perspektivischer Ansicht;
- **Fig. 85b:**: die Rückseite des Grundkörpers bzw. Griffkörpers mit Borstenträger gemäss Fig. 85a in perspektivischer Ansicht;
- **Fig. 85c:**: eine Draufsicht auf die Vorderseite eines Grundkörpers bzw. Griffkörpers mit Borstenträger gemäss Fig. 85a;
- **Fig. 85d:**: eine Draufsicht auf die Rückseite eines Grundkörpers bzw. Griffkörpers mit Borstenträger gemäss Fig. 85b;
- **Fig. 85e:**: eine Seitenansicht eines Grundkörpers bzw. Griffkörpers mit Borstenträger gemäss Fig. 85a;
- **Fig. 85f:**: eine Querschnittsansicht durch einen Borstenträger entlang der Linie F -F in Fig. 85c;
- **Fig. 85g:**: eine seitliche Querschnittsansicht durch einen Borstenträger entlang der Längsachse X in Fig. 85c (Detailansicht);
- **Fig. 86a:**: eine perspektivische Ansicht der Rückseite eines Grundkörpers bzw. Griffkörpers gemäss Fig. 85b mit beborstetem Borstenträger und aufgeschmolzenen rückseitigen Borstenenden;
- **Fig. 86b:**: eine Draufsicht auf die Rückseite eines Grundkörpers bzw. Griffkörpers gemäss Fig. 86a;
- **Fig. 86c:**: eine Querschnittsansicht eines Borstenträgers gemäss Fig. 86a (gezeigt ist nur die Schnittebene);
- **Fig. 86d:**: eine seitliche Querschnittsansicht eines Borstenträgers gemäss Fig.86b (gezeigt ist nur die Schnittebene);
- **Fig. 87a:**: eine perspektivische Ansicht der Vorderseite eines Bürstenprodukts mit Abdeckung;
- **Fig. 87b:**: eine perspektivische Ansicht der Rückseite eines Bürstenprodukts mit Abdeckung gemäss Fig. 87a;
- **Fig. 87c:**: eine Draufsicht auf die Vorderseite eines Bürstenprodukts gemäss Fig. 87a;
- **Fig. 87d:**: eine Draufsicht auf die Rückseite eines Bürstenprodukts gemäss Fig. 87a;
- **Fig. 87e:**: eine Seitenansicht eines fertigen Bürstenprodukts gemäss Fig. 87a;
- **Fig. 87f:**: eine Querschnittsansicht eines Borstenträgers gemäss Fig.87a (gezeigt ist nur die Schnittebene);
- **Fig. 87g:**: eine seitliche Querschnittsansicht eines Borstenträgers gemäss Fig.87a (gezeigt ist nur die Schnittebene);
- **Fig. 88a:**: eine perspektivische Ansicht der Rückseite eines Borstenträgers, welcher separat vom Grundkörper bzw. Griffkörper hergestellt wurde;
- **Fig. 88b:**: eine perspektivische Ansicht der Rückseite eines Borstenträgers gemäss Fig. 88a mit Beborstung und aufgeschmolzenen rückseitigen Borstenenden;
- **Fig. 88c:**: eine perspektivische Ansicht der Rückseite eines Borstenträgers gemäss Fig. 88b mit Abdeckung;
- **Fig. 88d:**: eine perspektivische Ansicht der Vorderseite eines Grundkörpers bzw. Griffkörpers, welcher separat vom Borstenträger hergestellt wurde;
- **Fig. 88e:**: eine perspektivische Ansicht der Vorderseite eines Grundkörpers bzw. Griffkörpers mit montiertem Borstenträger;
- **Fig. 89a:**: eine perspektivische Ansicht der Rückseite einer weiteren Ausführungsform mit gespaltenem Kopfteil bzw. Borstenträger;
- **Fig. 89b:**: eine perspektivische Ansicht der Rückseite des gespaltenen Kopfteils bzw. Borstenträgers gemäss Fig. 89a mit Beborstung und aufgeschmolzenen rückseitigen Borstenenden;
- **Fig. 89c:**: eine perspektivische Ansicht der Rückseite des gespaltenen Kopfteils bzw. Borstenträgers gemäss Fig. 89b mit Abdeckung;
- **Fig. 89d:**: eine Draufsicht auf die Rückseite einer noch weiteren Ausführungsform mit kleeblattförmigen Kopfteil bzw. Borstenträger;
- **Fig. 90a:**: eine perspektivische Ansicht der Rückseite einer noch weiteren Ausführungsform mit einem Abschnitt mit reduzierter Materialstärke im Kopfteil bzw. Borstenträger;
- **Fig. 90b:**: eine perspektivische Ansicht der Rückseite des Kopfteils bzw. Borstenträgers nach Fig. 90a, wobei der Bereich mit reduzierter Materialstärke mit Abdeck- bzw. Weichmaterial ausgefüllt wurde (mit Dämpfungselementen am Rand);
- **Fig. 90c**: eine seitliche Querschnittsansicht entlang der Linie B - B in Fig. 90b;
- **Fig. 91a:**: eine seitliche Querschnittsansicht einer noch weiteren Ausführungsform mit einem in Längsrichtung gewellten Borstenträger (gezeigt ist nur die Schnittebene);
- **Fig. 91b:**: eine seitliche Querschnittsansicht des Borstenträgers gemäss Fig. 91a mit variabel orientierter Beborstung und gewellter Abdeckung (gezeigt ist nur die Schnittebene);
- **Fig. 91c:**: eine seitliche Querschnittsansicht einer noch weiteren Ausführungsform mit einem in Längsrichtung konvex gewölbten Borstenträger (gezeigt ist nur die Schnittebene);
- **Fig. 91d:**: eine seitliche Querschnittsansicht des Borstenträgers gemäss Fig. 91c mit Beborstung und gewellter Abdeckung (gezeigt ist nur die Schnittebene);
- **Fig. 92:**: eine noch weitere Ausführungsform analog Fig. 91d, wobei der Borstenträger rundum von Abdeck- bzw. Weichmaterial umschlossen ist (d.h. auch am Rand und auf der Vorderseite) (gezeigt ist nur die Schnittebene);
- **Fig. 93a:**: eine noch weitere Ausführungsform mit an den Seiten des Borstenträgers ausgebildeten Reinigungselementen aus Abdeck- bzw. Weichmaterial (gezeigt ist nur die Schnittebene);
- **Fig. 93b:**: eine noch weitere Ausführungsform ähnlich zu Fig. 93a, wobei der Borstenträger rundum von Abdeck- bzw. Weichmaterial umschlossen ist (aber ohne seitliche Reinigungselemente) (gezeigt ist nur die Schnittebene);
- **Fig. 93c:**: eine noch weitere Ausführungsform ähnlich zu Fig. 93a, wobei der äussere Rand des Borstenträgers nur etwa bis zur halben Höhe des Begrenzungsrands von Abdeck- bzw. Weichmaterial umschlossen ist (ohne seitliche Reinigungselemente) (gezeigt ist nur die Schnittebene);
- **Fig. 93d:**: eine seitliche Querschnittsansicht der Ausführungsform gemäss Fig. 93c (gezeigt ist nur die Schnittebene);
- **Fig. 94a:**: eine seitliche Querschnittsansicht einer ersten Werkzeughälfte eines Werkzeugs zur Herstellung von Bürstenprodukten mit Borstenausnehmungen und (stationären) Stiften;
- **Fig. 94b:**: eine seitliche Querschnittsansicht der ersten Werkzeughälfte gemäss Fig. 94a mit eingelegtem Borstenträger bzw. Kopfplättchen;
- **Fig. 94c:**: eine seitliche Querschnittsansicht der ersten Werkzeugseite gemäss Fig. 94b mit eingeführten Borstenbündeln;
- **Fig. 94d:**: eine seitliche Querschnittsansicht der ersten Werkzeughälfte gemäss Fig. 94c mit aufgeschmolzenen Borstenenden;
- **Fig. 94e:**: eine seitliche Querschnittsansicht gemäss Fig. 94d mit aufgebrachter zweiter Werkzeughälfte mit Spritzgiesskavität;
- **Fig. 94f:**: eine seitliche Querschnittsansicht gemäss Fig. 94e mit gespritzter Abdeckung;
- **Fig. 95:**: den Ablauf des Verfahrens für die Variante bei der der Grundkörper bzw. Griffkörper des Bürstenprodukts zusammen mit dem Borstenträger (d.h. einstückig) gespritzt wird;
- **Fig. 96:**: den Ablauf des Verfahrens für die Variante bei der der Grundkörper bzw. Griffkörper des Bürstenprodukts und der Borstenträger getrennt voneinander (in zunächst zwei separaten Teilen) hergestellt bzw. gespritzt und später zusammengefügt werden;
- Fig. 97a - d:: einen weiteren beispielhaften Borstenträger der Kategorie F für eine manuelle Zahnbürste oder für eine Schallzahnbürste;
- Fig. 98a - d:: einen erfindungsgemäßen Borstenträger der Kategorie L für eine manuelle Zahnbürste oder für eine Schallzahnbürste;
- Fig. 99a - d:: einen weiteren beispielhaften Borstenträger der Kategorie K für eine manuelle Zahnbürste oder für eine Schallzahnbürste;
- Fig. 100:: einen weiteren beispielhaften Borstenträger für eine manuelle Zahnbürste oder für eine Schallzahnbürste mit einer Kombination von verschiedenen Langen Bündeln;
- Fig. 101-115:: weitere beispielhafte Borstenträger für eine oszillierende elektrische Zahnbürste;
- Fig. 116-123: weitere beispielhafte Borstenträger für manuelle oder elektrische Gesichtsbürsten.

Die **Fig. 1 bis 5** zeigen beispielhafte Borstenträger der Kategorie A.

In **Fig. 1** wird ein Kopfteil 2 für eine Zahnbürste veranschaulicht, welches einen Borstenträger 5 sowie ein Halsteil 3 umfasst. Der Borstenträger 5 weist eine Längsachse X_{LT} auf sowie eine Querachse X_{QT}. Die beiden Achsen schneiden sich in dem Schnittpunkt S_{P}.

Links von der Längsachse X_{LT} liegt im Wesentlichen der linke Trägerbereich, rechts von der Längsachse X_{LT} liegt im Wesentlichen der rechte Trägerbereich, oberhalb der Querachse X_{QT} liegt im Wesentlichen der obere Trägerbereich und unterhalb der Querachse X_{QT} liegt im Wesentlichen der untere Trägerbereich. Um den Schnittpunkt Sp der beiden Achsen herum wird im Wesentlichen der zentrale Trägerbereich aufgespannt. Es versteht sich, dass die einzelnen Trägerbereiche Überschneidungen aufweisen und so feiner unterteilt werden können, etwa in den linken oberen, den linken mittleren, den linken unteren, den rechten unteren, den rechten mittleren sowie den rechten oberen Trägerbereich. Der zentrale Trägerbereich kann sich je nach Einzelfall auch in den oberen, den unteren sowie den rechten und linken Trägerbereich ausdehnen. Der zentrale Trägerbereich kann aber auch zusammengestaucht ausgeprägt sein, wenn etwa im oberen und unteren Trägerbereich grossflächige Bündelgruppen angeordnet sind. Genauso kann der zentrale Bereich auch längs gestaucht werden, wenn etwa im linken und rechten Trägerbereich grossflächige Bündelgruppen angeordnet sind. Diese Ausführungen gelten für alle in den folgenden Figuren gezeigten Ausführungsformen für die erfindungsgemässen Borstenträger.

Die gezeigten Bündel in den Figuren können in Form und Grösse abweichen ohne den Rahmen der Erfindung zu verlassen. Wesentlich für eine optimale Reinigungs- und Pflegeleistung ist die entsprechende Anordnung.

Bei dem in **Fig. 1** gezeigten Borstenträger 5 sind der Aussenkontur des Borstenträgers folgend Mini-Bündel A3 vorgesehen, welche entsprechend in einer Formation bzw. Umrandung des Puck-Bündels angeordnet sind. Im oberen und unteren Trägerbereich sind spiegelsymmetrisch zu den beiden Achsen Puck-Bündel A2 angeordnet, welche zwischen sich einen, zentralen Trägerbereich definieren, welcher vier in Kreisform angeordnete Weichelementen und/oder eine Formation von gespritzten Borsten A1 aufweist, die wiederum ein Konventionelles Bündel A6 umschliessen. Die Weichelemente liegen innerhalb der Formation von Mini-Bündeln und zwischen 2 Puck-Bündeln. Ein Konventionelles Borstenbündel liegt zwischen den beiden Puck-Bündeln.

In der **Fig. 2** wird ein Borstenträger 5 veranschaulicht, welcher im oberen und unteren Trägerbereich, spiegelsymmetrisch zueinander angeordnete Puck-Bündel A2 aufweist. Die Puck-Bündel A2 weisen dabei eine annährend konusförmige Ausgestaltung auf mit einer oberen beziehungsweise unteren Abrundung (welche jeweils der Aussenkontur folgen). Zwischen den beiden Puck-Bündeln A2 sind im zentralen Trägerbereich Mini-Bündel A3 in einer Formation angeordnet, welche auch in den linken und rechten mittleren Trägerbereich hineinreicht. In den Freiräumen links und rechts oberhalb sowie links und rechts unterhalb der Mini-Bündel A3 sind Weichelemente und/oder Formationen von gespritzten Borsten A1 angeordnet. Die Formation von Mini-Bündeln ist teilweise von Weichelementen und/oder gespritzte Borsten umgeben.

Die Beschreibung der geometrischen Form(en) der einzelnen Gruppen von Reinigungselementen bezieht sich im Übrigen stets auf die in den Figuren gezeigte Draufsicht.

In der **Fig. 3** wird ein Borstenträger 5 illustriert, welcher wiederum jeweils im oberen und im unteren Trägerbereich je ein Puck-Bündel A2 aufweist, wobei beide Puck-Bündel A2 eine Ausnehmung 51 aufweisen, in welcher angeordnete Weichelemente und/oder Formationen von gespritzten Borsten A1 angeordnet sind. Zwischen den beiden Puck-Bündeln A2 ist im zentralen Bereich eine Formation von Mini-Bündeln A3 angeordnet, welche sich in den linken und rechten mittleren Trägerbereich erstreckt. Die die Formation bestehend aus Mini-Bündel nimmt einen wesentlichen Anteil des freien Platzes zwischen den Puck-Bündeln ein.

Die **Fig. 4** zeigt wiederum einen anderen Borstenträger 5, welcher ein im zentralen Trägerbereich ein Puck-Bündel A2 aufweist. In den Zwischenräumen von den einzelnen offenen Ausdehnungen des Puck-Bündels A2 sind Weichelemente und/oder Formationen von gespritzten Borsten A1 angeordnet, welche in der Zusammenschau wiederum eine Formation bilden. Oberhalb und unterhalb dieser beiden Formationen sind der Kontur folgend Mini-Bündel A3 angeordnet. Im vordersten sowie im hintersten Trägerbereich sind jeweils Konventionelle Bündel A6 angeordnet, welche jeweils der Kontur der Spitze des Borstenträgers beziehungsweise der Kontur des Übergangs zum Halsteil 3 mindestens teilweise folgen. Das Puck-Bündel ist zwischen Konventionellen Bündeln angeordnet. Mini-Bündel und Weichelemente und/oder Formationen von gespritzten Borsten sind zwischen Konventionellen Bündeln und Puck-Bündel angeordnet. Weichelemente und/oder Formationen von gespritzten Borsten sind zwischen den Mini-Bündeln und dem Puck-Bündel angeordnet.

Der in **Fig. 5** gezeigte Borstenträger 5 weist im oberen sowie im unteren Trägerbereich jeweils ein Puck-Bündel A2 auf, welches mit einer offenen Ausnehmung gegen die Borstenträger Zentrum ausgebildet ist. Die beiden Puck-Bündel A2 spannen so einen zentralen Trägerbereich zwischen sich auf, in welchem Weichelemente (bzw. ein Weichelement) und/oder gespritzte Borsten A1 angeordnet sind, welche im linken sowie im rechten Trägerbereich von Mini-Bündeln A3 jedenfalls teilweise umgeben ist. Die rautenförmige Konfiguration umfasst konkret drei in Längsrichtung miteinander verbundene Rautenelemente. Die Weichelemente (bzw. ein Weichelement) und/oder gespritzten Borsten werden teilweise von Mini-Bündeln und teilweise von Puck-Bündeln umgeben.

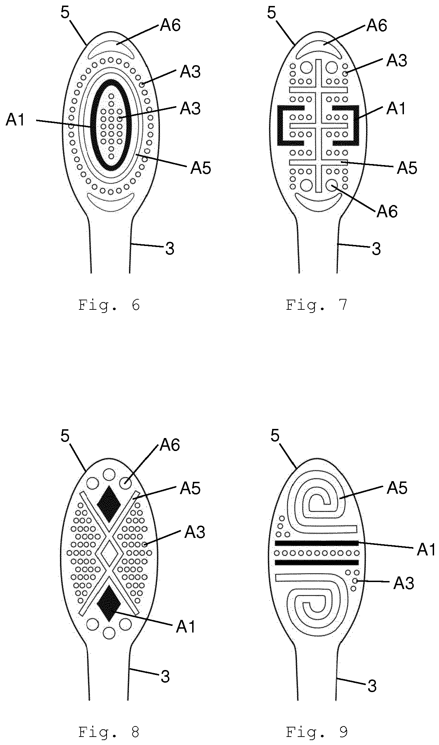

Die **Fig. 6 bis 9** zeigen beispielhafte Borstenträger der Kategorie B.

Dabei veranschaulicht die **Fig. 6** einen Borstenträger 5, welcher im zentralen Trägerbereich eine Weichelement mit einer Ausnehmung (bzw. einem Weichelement) und/oder gespritzten Borsten A1 aufweist, welche eine Formation von Mini-Bündeln A3 umschliessen. Das Weichelement (bzw. das eine Weichelement) und/oder gespritzte Borsten A1 werden ihrerseits umschlossen von einem grösseren, geschlossenen Langen Bündel A5. Dieses wird wiederum umschlossen von einer Formation von Mini-Bündeln A3, welche ihrerseits eine Umrandung ausbilden. Im vordersten sowie im hintersten Trägerbereich sind jeweils wieder Konventionelle Bündel A6 angeordnet, welche in Richtung der Borstenträgerspitze beziehungsweise Richtung des Halsteils 3 ausgerichtet bzw. gekrümmt sind.

Die **Fig. 7** veranschaulicht nun einen Borstenträger 5, welcher ein zentral angeordnetes, fischgrätenförmiges Langes Bündel A5 aufweist, welches sich in den oberen und in den unteren Trägerbereich erstreckt. Das Lange Bündel A5 weist dabei voneinander beabstandete Seitenarme auf. Im linken und rechten mittleren Trägerbereich sind jeweils einzelne Seitenarme mindestens teilweise umgeben von Weichelementen und/oder gespritzten Borsten. Zwischen den einzelnen Seitenarmen des Langen Bündels A5 können zudem Mini-Bündel A3 angeordnet, ebenso zwischen den mittleren Seitenarmen und den Weichelementen und/oder gespritzten Borsten. Des Weiteren sind im obersten und untersten Trägerbereich jeweils wieder konventionelle Bündel A6 angeordnet. Zwischen diesen bogenförmigen konventionellen Bündeln A6 und der oberen beziehungsweise unteren Seitenarmen des Langen Bündels A5 sind zudem weitere Konventionelle Bündel A6 sowie weitere Formationen von Mini-Bündeln A3 vorgesehen, wobei auch hier die Anordnungen jeweils spiegelsymmetrisch ausgebildet sind. Die Mini-Bündel sind zwischen den Seitenarmen des Langen Bündels angeordnet. Das Lange Bündel verläuft zwischen Konventionellen Bündeln. Das Lange Bündel verläuft bevorzugt zudem zwischen Weichelementen und/oder gespritzten Borsten.

Der in **Fig. 8** gezeigte Borstenträger 5 weist zunächst ein zentral angeordnetes, langes Bündel A5 auf, welches eine im Wesentlichen x-förmige Konfiguration mit einer geschlossenen Form in der Mitte ausbildet. Links und rechts von dem x-förmigen, langen Bündel A5 sind im Wesentlichen bis zur Aussenkontur des Borstenträgers gehend Mini-Bündel A3 angeordnet. In dem oberen und unteren Zwischenraum des x-förmigen Langen Bündels A5 sind jeweils Weichelemente und/oder Formationen von gespritzten Borsten A1 angeordnet. Im Gegensatz zu der Raute des x-förmigen, Langen Bündels A5, welche einen zentralen Freiraum lässt, sind die rautenförmig angeordneten Weichelemente und/oder gespritzten Borsten A1 ohne Freiraum, d.h. im Wesentlichen vollflächig ausgestaltet. Im obersten sowie im untersten Trägerbereich sind jeweils kreisförmige, Konventionelle Bündel A6 auf einer Bogenkurve angeordnet. Das Lange Bündel ist zwischen Konventionellen Bündeln angeordnet. Das Lange Bündel ist zwischen Mini-Bündeln angeordnet. Das Lange Bündel ist zwischen Weichelementen und/oder gespritzten Borsten A1 angeordnet. Das Lange Bündel verfügt über eine geschlossene Ausnehmung und besitzt mehrere freie Arme.

In **Fig. 9** wird ein Borstenträger 5 illustriert, welcher im oberen sowie im unteren Trägerbereich jeweils ein spiral- oder schneckenförmiges, Langes Bündel A5 aufweist, wobei diese beiden schneckenförmigen, Langen Bündel A5 punktsymmetrisch zueinander angeordnet sind. Im zentralen Trägerbereich sind zwei längliche, parallele Linien von Weichelementen und/oder gespritzten Borsten A1 vorgesehen. Das spiral- oder schneckenförmiges Lange Bündel folgt mindestens teilweise der Aussenkontur des Bürstenkopfes. Zwischen diesen beiden parallelen Linien sowie im linken oberen Trägerbereich sowie im rechten unteren Trägerbereich zwischen dem schneckenförmigen, Langen Bündel A5 und dem Weichelementen und/oder gespritzten Borsten A1 sind Mini-Bündel A3 angeordnet. Zwischen den Langen Bündeln sind Weichelemente angeordnet. Zwischen den Langen Bündeln sind bevorzugt zudem Mini-Bündel angeordnet.

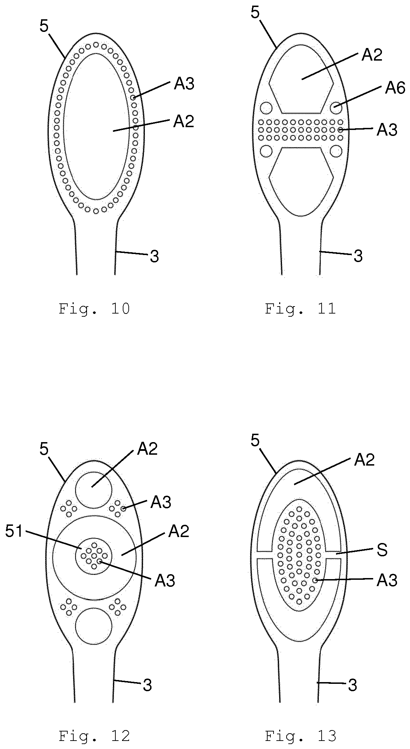

Die **Fig. 10 bis 13** zeigen beispielhafte Borstenträger der Kategorie C.

In **Fig. 10** wird ein Borstenträger 5 mit einem grossen, zentral angeordneten, ovalen Puck-Bündel A2 vorgesehen. Um dieses Puck-Bündel A2 herum sind in einer ovalen Formation, welche der Aussenkontur des Borstenträgers 5 folgt, Mini-Bündel A3 angeordnet.

Die **Fig. 11** veranschaulicht einen Borstenträger 5, welcher im oberen und im unteren Trägerbereich jeweils ein Puck-Bündel A2 aufweist. Die beiden Puck-Bündel A2 sind annährend Konus-förmig ausgebildet, mit einer oberen bzw. unteren Rundung (vgl. Fig. 2). Im zentralen Trägerbereich zwischen den beiden Puck-Bündeln A2 ist eine Formation von Mini-Bündeln A3 vorgesehen, welche sich auch in den linken und rechten mittleren Trägerbereich erstreckt. Auf der linken und rechten Seite oberhalb und unterhalb der rechteckförmigen Formation von Mini-Bündeln A3 sind jeweils noch kreisförmige, Konventionelle Bündel A6 vorgesehen.

Der Borstenträger 5 gemäss **Fig. 12** weist ein zentral angeordnetes, Kreisring- bzw. Donut-förmiges Puck-Bündel A2 auf. In der von dem Donut-förmigen Puck-Bündel A2 gebildeten Ausnehmung 51 ist eine Formation von Mini-Bündeln A3 vorgesehen. Oberhalb und unterhalb des Donut-förmigen Puck-Bündels A2 ist jeweils ein kleineres, Puck-Bündel A2 vorgesehen (alternativ kann hier auch ein grösseres Konventionelles Bündel A6 vorgesehen sein) und wobei jeweils im linken und rechten oberen sowie im linken und rechten unteren Bereich noch kleinere Formationen von Mini-Bündeln A3 vorgesehen sind.

Die **Fig. 13** illustriert einen Borstenträger 5 mit zwei einseitig offenen Puck-Bündeln A2 im unteren und oberen Trägerbereich, welche spiegelsymmetrisch zueinander angeordnet sind. In dem von ihnen umschlossenen zentralen Trägerbereich ist eine Formation von Mini-Bündeln A3 angeordnet. Der Spalt S zwischen den Hufeisenenden bleibt unbesetzt.

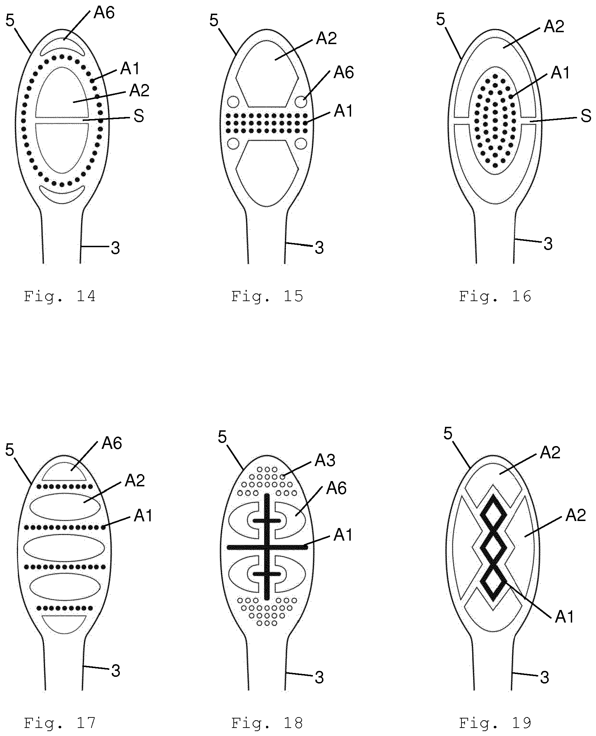

Die **Fig. 14 bis 19** zeigen beispielhafte Borstenträger der Kategorie D.

Der Borstenträger 5 gemäss **Fig. 14** umfasst zwei halbovalförmige Puck-Bündel A2, welche im zentralen Trägerbereich angeordnet und durch einen Spalt S voneinander getrennt sind. Der Spalt S bleibt unbesetzt. Um die beiden halbovalförmigen Puck-Bündel A2 herum ist eine ovale Formation bzw. Umrandung von Weichelementen und/oder gespritzten Borsten A1 vorgesehen. Im vordersten sowie im hintersten Trägerbereich ist jeweils ein Konventionelles Bündel A6 angeordnet. Weichelemente und/oder gespritzte Borsten sind zwischen den Puck-Bündeln und den Konventionellen Bündeln angebracht.

Der Borstenträger 5 gemäss **Fig. 15** umfasst wiederum zwei Puck-Bündel A2 mit jeweils einer nach oben bzw. nach unten gerichteten Abrundung (vgl. Fig. 2). In dem zentralen Bereich zwischen den beiden spiegelsymmetrisch angeordneten Puck-Bündeln A2 ist eine Formation Weichelementen und/oder gespritzten Borsten A1 vorgesehen. Im linken und rechten oberen sowie im linken und rechten unteren Bereich der rechteckförmigen Formation von Weichelementen und/oder gespritzten Borsten A1 ist jeweils noch ein punktförmiges, konventionelles Bündel A6 vorgesehen. Weichelementen und/oder gespritzten Borsten liegen zwischen den Puck-Bündeln.

Der Borstenträger, welcher in **Fig. 16** illustriert wird, weist zwei einseitig offene Puck-Bündel A2, eines im oberen Trägerbereich und eines im oberen Trägerbereich, auf, welche einen ovalen, zentralen Trägerbereich definieren, in welchem eine Formation an Weichelementen und/oder gespritzten Borsten A1 angeordnet ist. Der Spalt S zwischen den Puck-Bündeln bleibt unbesetzt. Die Formation an Weichelementen und/oder gespritzten Borsten ist im Wesentlichen von Puck-Bündeln umgeben.

Der Borstenträger 5 gemäss **Fig. 17** umfasst von oben nach unten gesehen ein, konventionelles Bündel A6, mehrere in Richtung der Querachse des Trägers sich ausdehnende Puck-Bündel A2 sowie ein unteres Konventionelles Bündel A6. Die konventionellen Bündel A6 sowie die Puck-Bündel A2 sind dabei jeweils einer Formation von Weichelementen und/oder gespritzten Borsten A1 voneinander getrennt. Die auf dem Bürstenkopf verteilten mehreren Puck-Bündel sind durch eine Formation von Weichelementen und/oder gespritzten Borsten A1 voneinander getrennt.

Der Borstenträger, welcher in **Fig. 18** illustriert wird, umfasst zunächst zentral angeordnete, antennenförmige Weichelemente (bzw. ein Weichelement) und/oder gespritzte Borsten. Die Antennenform besteht im Wesentlichen aus kreuzförmigen abstehenden Armen. Die beiden kreuzförmigen Geometrien werden dabei in - Querrichtung gesehen - von jeweils zwei einseitig offenen, Konventionellen Bündeln A6 umschlossen. Im oberen sowie im unteren Trägerbereich sind Formationen von Mini-Bündeln A3 in angeordnet. Die Weichelemente (bzw. ein Weichelement) und/oder gespritzte Borsten sind zwischen Formationen von Mini-Bündeln angeordnet.

Der in **Fig. 19** gezeigte Borstenträger 5 umfasst zunächst eine Formation aus Weichelementen (bzw. einem Weichelement) und/oder gespritzten Borsten A1. In dieser Ausgestaltungsform sind diese in Form von drei in Längsrichtung miteinander verbundenen Rauten ausgestaltet, wobei die Rauten jeweils einen unbesetzten Freiraum bilden. Alternativ kann der Freiraum mit einem Reinigungselement in dieser Schrift beschriebenen Reinigungselement besetzt sein. Um diese Rautenformation herum sind mehrere Puck-Bündel A2 angeordnet. In ihrer Aussenkontur bilden diese in etwa ein Oval bzw. folgen der Aussenkontur des Borstenträgers. An ihrer Innenseite aber folgen sie der Formation der Weichelemente (bzw. dem Weichelement) und/oder der gespritzten Borsten A1.

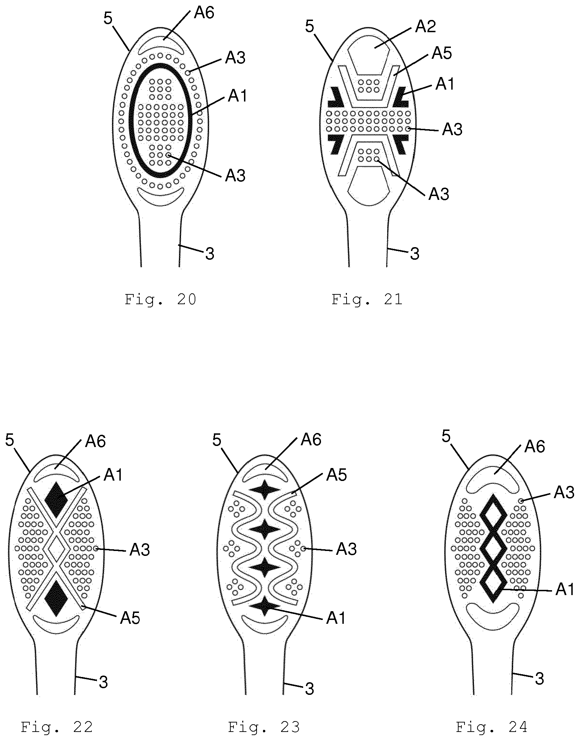

Die **Fig. 20 bis 24** zeigen beispielhafte Borstenträger der Kategorie E.

Der in **Fig. 20** gezeigte Borstenträger 5 umfasst ein zentral angeordnetes dünnes, geschlossenes Weichelement (bzw. einem Weichelement) und/oder eine Formation von gespritzten Borsten A1, welche(s) eine Formation an Mini-Bündeln A3 umschliesst. Um das Oval aus Weichelementen (bzw. einem Weichelement) und/oder gespritzten Borsten A1 herum ist wiederum ein Oval aus Mini-Bündeln A3 angeordnet. Am vordersten sowie am hintersten Ende des Borstenträgers 5 ist jeweils ein konventionelles Bündel A6 angeordnet. Das Weichelement und/oder eine Formation von gespritzten Borsten umschliesst eine Formation von Mini-Bündeln. Das Weichelement und/oder eine Formation von gespritzten Borsten werden zudem bevorzugt von Mini-Bündeln umschlossen.

Der Borstenträger gemäss **Fig. 21** umfasst im zentralen Trägerbereich eine Formation an Mini-Bündeln A3, welche sich in den linken und rechten mittleren Trägerbereich erstreckt. Spiegelsymmetrisch zur Querachse und nach aussen (d.h. nach vorne bzw. hinten) abstehend ist des Weiteren im oberen sowie im unteren Trägerbereich ist jeweils ein sich nach aussen öffnendes C-Profil-artiges Langes Bündel A5 angeordnet, wobei innerhalb dieses Langen Bündels A5 jeweils eine Formation an Mini-Bündeln A3 angeordnet ist. Im obersten sowie im untersten Trägerbereich ist jeweils wiederum ein kleineres Puck-Bündel A2 angeordnet, mit jeweils einer Abrundung, welche der Aussenkontur der Borstenträgerspitze bzw. der Aussenkontur des halbseitigen unteren Endes des Borstenträgers folgt. Links und rechts oberhalb sowie links und rechts unterhalb der rechteckförmigen Formation an Mini-Bündeln A3 sind Weichelemente und/oder Formationen von gespritzten Borsten A1 vorgesehen. Lange Bündel sind zwischen Formationen von Mini-Bündeln angeordnet. Lange Bündel sind zudem bevorzugt zwischen Puck-Bündeln angeordnet.

Der Borstenträger 5 gemäss **Fig. 22** weist zunächst wiederum ein X-förmiges, Langes Bündel A5 auf, welches in seinem mittleren Teil eine Raute mit einem unbesetzten Freiraum bildet. In dem oberen und in dem unteren Freiraum des X-förmigen, Langen Bündels A5 sind jeweils Weichelemente (bzw. ein Weichelement) und/oder gespritzten Borsten A1 vorgesehen. Das lange Bündel bildet im Zentrum einen Freiraum welcher leer sein kann oder mit einem Reinigungselement besetzt werden kann. In dem linken und rechten Freiraum des X-förmigen, Langen Bündels A5 sind Formationen von Minibündeln A3 bis hin zur linken und rechten Aussenkontur des Borstenträgers 5 angeordnet. Im obersten sowie im untersten Trägerbereich ist jeweils ein, Konventionelles Bündel A6 vorgesehen. Zwischen den abstehenden Armen des Langen Bündels sind Mini-Bündel angeordnet. Zwischen abstehenden Armen des Langen Bündels sind vorzugsweise weiter Weichelemente (bzw. ein Weichelement) und/oder gespritzte Borsten A1 vorgesehen.

In **Fig. 23** wird ein Borstenträger 5 illustriert, welcher entlang der Längsachse des Borstenträgers mehrere Weichelemente und/oder Formationen von gespritzten Borsten A1 aufweist. Links und rechts von diesen Weichelementen und/oder gespritzten Borsten A1 befindet sich jeweils zwischen den Zwischenräumen, den Sternformationen folgend, ein wellenförmiges Langes Bündel A5, wobei beide langen Bündel A5 spiegelsymmetrisch zueinander angeordnet sind. In den nach aussen liegenden Freiräumen der wellenförmigen Langen Bündel A5 sind jeweils kleine Formationen an Mini-Bündeln A3 angeordnet. Im obersten sowie im untersten Trägerbereich ist jeweils ein, konventionelles Bündel A6 angeordnet. Zwischen den beiden Langen Bündeln befinden sich Weichelemente und/oder Formationen von gespritzten Borsten. Sie ragen in die Freiräume der wellenförmigen Langen Bündel hinein. In den Freiräumen befinden sich Mini-Bündel.

Der in **Fig. 24** gezeigte Borstenträger 5 weist wiederum eine zentral angeordnetes Weichelemente (bzw. einem Weichelement) und/oder gespritzten Borsten A1 auf. Dieses Element nimmt eine Rautenformation ein, welches konkret aus drei miteinander verbundenen Rauten besteht, welche jeweils einen unbesetzten Freiraum umschliessen. Einer oder mehrere Freiräume können mit Reinigungselementen besetzt sein. Links und rechts von der Rautenformation sind Formationen von Mini-Bündeln A3 bis hin zur linken und rechten Aussenkontur des Borstenträgers 5 angeordnet. Im unteren sowie im oberen Trägerbereich ist jeweils ein etwas grösseres, Konventionelles Bündel A6 angeordnet.

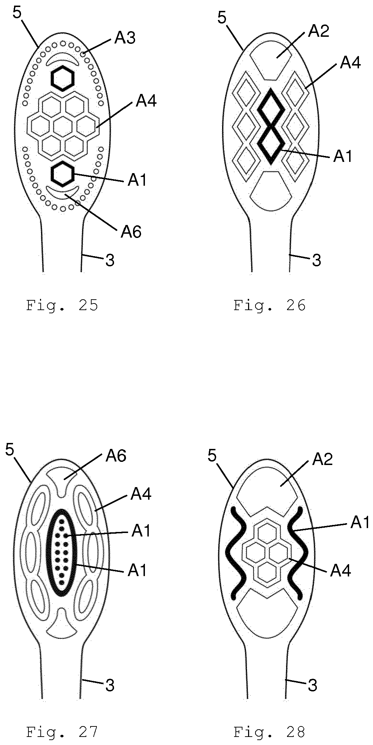

In den Fig. **25 bis 28** werden beispielhafte Borstenträger der Kategorie F gezeigt.

Die **Fig. 25** zeigt dabei einen Borstenträger 5 mit einem zentral angeordneten Raster-Bündel A4, welches sich aus mehreren wabenförmigen, polygonalen Strukturelementen zusammensetzt. Die von den wabenförmigen Strukturelementen gebildeten Freiräume sind unbesetzt. Die Freiräume könnten optional mit Reinigungselementen oder Formationen von Reinigungselementen (z.B. Mini-Bündel) besetzt sein. Oberhalb und unterhalb von dem Raster-Bündel A4 ist jeweils eine einzelne Wabe von Weichelementen (bzw. einem Weichelement) und/oder gespritzten Borsten A1 ausgebildet. Wiederum jeweils oberhalb und unterhalb dieser einzelnen Wabenform ist ein Konventionelles Bündel A6 angeordnet. Des Weiteren bilden im oberen sowie im unteren Trägerbereich Mini-Bündel A3 einen Anteil der Aussenkontur. Die Raster-Bündel sind zwischen Weichelementen (bzw. einem Weichelement) und/oder gespritzten Borsten A1 angeordnet. Die Raster-Bündel sind zudem bevorzugt zwischen Mini-Bündeln angeordnet.

In der in **Fig. 26** illustrierte Borstenträger 5 umfasst im zentralen Bereich eine Rautenformation aus Weichelementen (bzw. einem Weichelement) und/oder gespritzten Borsten A1, welche vorliegend von zwei miteinander in Längsrichtung verbundenen Rauten ausgebildet ist, wobei die Rauten jeweils einen unbesetzten Freiraum umschliessen. Der Freiraum kann optional mit Reinigungselementen besetzt sein. Auf der linken sowie auf der rechten Seite dieser Rautenformation aus Weichelementen und/oder gespritzten Borsten A1 ist jeweils eine Rautenformation aus einem Raster-Bündel A4 angeordnet, welche jeweils drei in Längsrichtung miteinander verbundene Rauten-Strukturelemente umfasst, welche ebenfalls einen unbesetzten Freiraum umschliessen. Auch diese Freiräume können optional mit Reinigungselementen besetzt sein. Die beiden Raster-Bündel A4 sind spiegelsymmetrisch zueinander angeordnet und das mittlere Rauten-Strukturelement ragt in den Zwischenraum zwischen den beiden Rauten aus den Weichelementen (bzw. dem Weichelement) und/oder gespritzten Borsten A1. Im oberen sowie im unteren Borstenträgerbereich ist jeweils ein kleineres Puck-Bündel A2 angeordnet, welches eine Abrundung aufweist, die der Aussenkontur der Borstenträgerspitze beziehungsweise der Kontur des unteren haltseitigen des Borstenträgers 5 folgt. Die Weichelemente (bzw. einem Weichelement) und/oder gespritzten Borsten A1 befinden sich zwischen den Raster-Bündeln. Die Raster-Bündel liegen zwischen zwei Puck-Bündeln.

In der **Fig. 27** wird des Weiteren ein Borstenträger 5 illustriert, welcher im zentralen Bereich ein dünnes Weichelement und/oder eine Formation von gespritzten Borsten A1 aufweist, welche(s) einen Freiraum umschliesst, welcher mit weiteren Weichelementen und/oder gespritzten Borsten A1 besetzt ist. Auf der linken sowie auf der rechten Seite ist jeweils ein Raster-Bündel A4 vorgesehen, welche aus ovalförmigen miteinander verbundenen Ring-Strukturelementen gebildet ist und jeweils der Aussenkontur des Borstenträgers folgt. Im oberen sowie im unteren Trägerbereich ist schliesslich noch ein Konventionelles Bündel A6 vorgesehen.

Der in **Fig. 28** illustrierte Borstenträger 5 weist ein zentral angeordnetes Raster-Bündel A4 auf, welches sich aus wabenförmigen, polygonalen Strukturelementen zusammensetzt. Oberhalb und unterhalb des wabenförmigen Raster-Bündels A4 sind jeweils Puck-Bündel A2 angeordnet, welche jeweils an ihren nach innen gerichteten Ende der oberen bzw. unteren Wabenstruktur folgen und welche an ihren nach aussen beziehungsweise zum Halsteil gerichteten Ende der Aussenkontur des Borstenträgers 5 folgen. Seitlich des wabenförmigen Raster-Bündels A4 ist links und rechts je ein wellenförmiges Element aus Weichelementen (bzw. einem Weichelement) und/oder Formationen von gespritzten Borsten A1 angeordnet, welches auf der Innenseite der Wabenstruktur folgt.

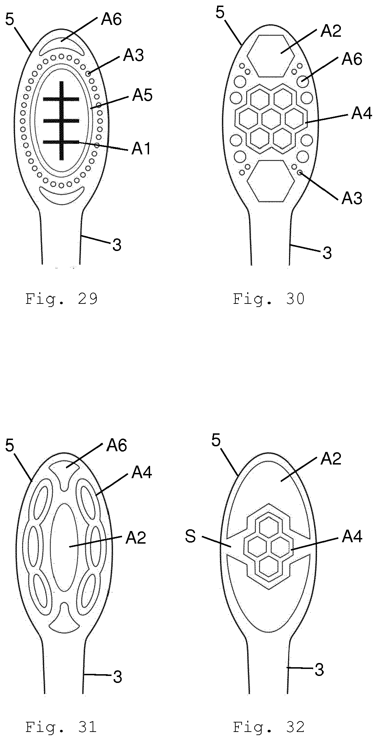

In der **Fig. 29** wird schliesslich ein Borstenträger 5 der Kategorie G gezeigt, welcher zunächst eine zentral angeordnete fischgrät-förmige Formation aus Weichelementen (bzw. einem Weichelement) und/oder Formation von gespritzten Borsten A1 aufweist. Diese ist umgeben von einem oval ausgebildeten dünnen, geschlossenen Langen Bündel A5, welches seinerseits umgeben ist von einer ovalen Formation aus Mini-Bündeln A3. Am obersten sowie am untersten Ende des Borstenträgers 5 ist jeweils wiederum ein konventionelles Bündel A6 angeordnet.

In den **Fig. 30 bis 32** werden nun beispielhafte Borstenträger der Kategorie H gezeigt.

In der **Fig. 30** ist dabei ein Borstenträger 5 dargestellt, welcher ein zentral angeordnetes Raster-Bündel A4 aufweist, welches sich aus mehreren wabenförmigen Strukturelementen zusammensetzt. Die Freiräume in den Strukturelementen können optional mit Reinigungselementen besetzt sein. Oberhalb und unterhalb des Raster-Bündels A4 ist jeweils ein Puck-Bündel A2 angeordnet. In den verbleibenden Zwischenräumen im linken und rechten oberen sowie im linken und rechten unteren Bereich des Borstenträgers 5 sind jeweils noch Mini-Bündel A3 und punktförmige Konventionelle Bündel A6 angeordnet.

Der in **Fig. 31** gezeigte Borstenträger 5 entspricht im Wesentlichen dem in **Fig. 27** gezeigten Borstenträger mit dem Unterschied, dass in seinem zentralen Bereich ein ovales Puck-Bündel A2 angeordnet ist. Das Puck-Bündel liegt zwischen den Raster-Bündeln.

Der in **Fig. 32** gezeigte Borstenträger 5 entspricht im Wesentlichen dem in **Fig. 28** gezeigten Borstenträger mit dem Unterschied, dass hier keine wellenförmigen Weichelemente und/oder Formationen von gespritzten Borsten A1 vorgesehen sind und daher die Puck-Bündel A2 sich jeweils noch etwas weiter in Richtung der Querachse des Borstenträgers erstrecken, wobei der zwischen ihnen gebildete Spalt S unbesetzt bleibt. Das Raster-Bündel liegt zwischen den Puck-Bündeln.

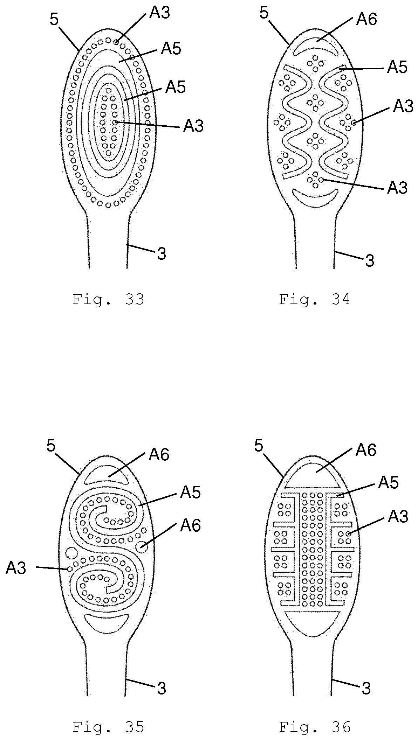

In den **Fig. 33 bis 36** werden nun beispielhafte Borstenträger der Kategorie I dargestellt.

Der in **Fig. 33** gezeigte Borstenträger 5 umfasst zunächst ein zentral angeordnetes, ovales, geschlossenes Langes Bündel A5, in dessen Freiraum eine Formation von Mini-Bündeln A3 angeordnet ist. Dieses Lange Bündel A5 ist von einem weiteren ovalen Langen Bündel A5 umschlossen, welches seinerseits wiederum von einer ovalen Formation von Mini-Bündeln A3 umschlossen ist. Das grössere Lange Bündel verfügt über einen sich ändernden Querschnitt, konkret an den oberen und unteren Extremitäten. Die Langen Bündel sind von Formationen von Mini-Bündeln umgeben.

Der in **Fig. 34** illustrierte Borstenträger 5 entspricht im Wesentlichen dem in **Fig. 23** gezeigten Borstenträger mit dem Unterschied, dass hier entlang der Längsachse keine Weichelemente und/oder gespritzten Borsten A1 vorgesehen sind, sondern kleine Formationen von Mini-Bündeln A3. Mini-Bündel sind erneut in den Öffnungen der Langen Bündel angeordnet.

In **Fig. 35** wird ein Borstenträger 5 veranschaulicht, welcher ein zentral angeordnetes Langes Bündel A5 in Form einer punktsymmetrischen (bzw. gegenläufigen) Doppelschnecke bzw. Doppelspirale aufweist. Auf der Innenseite folgen jeweils Mini-Bündel A3 der Kontur der Doppelschnecke. Im linken und rechten mittleren Bereich des Borstenträgers 5 ist jeweils ein kreisförmiges konventionelles Bündel A6 angeordnet. Im obersten sowie im untersten Trägerbereich ist wiederum jeweils ein Konventionelles Bündel A6 vorgesehen.

Der Borstenträger 5 gemäss **Fig. 36** umfasst entlang der Längsachse ausgerichtet eine Formation an Mini-Bündeln A3, an der auf der linken und rechten Seite jeweils ein nach aussen gerichtet kammförmiges Langes Bündel A5 angeordnet ist. In den von den beiden kammförmigen Langen Bündeln A5 definierten Zwischenräumen sind jeweils weitere Formationen an Mini-Bündeln A3 angeordnet. Im oberen sowie im unteren Trägerbereich ist jeweils etwa ein konventionelles Bündel A6 angeordnet.

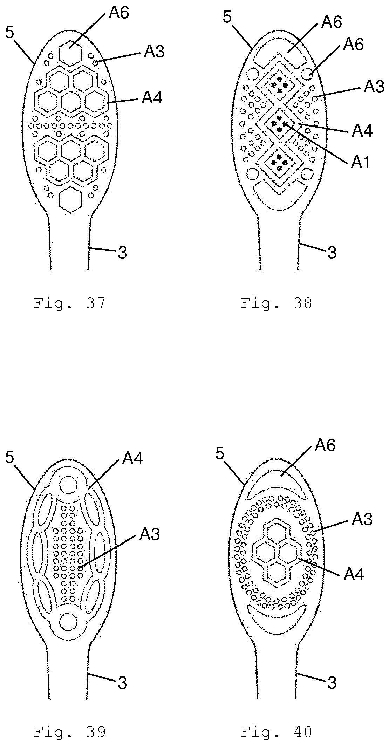

Die **Fig. 37 bis 40** veranschaulichen beispielhafte Borstenträger der Kategorie J.

In **Fig. 37** wird ein Borstenträger 5 veranschaulicht, welcher in seinem oberen und unteren Trägerteil jeweils ein Raster-Bündel A4 mit wabenförmigen Strukturelementen aufweist. Entlang der Querachse des Borstenträgers 5 sind Mini-Bündel A3 in etwa fischgrätartiger Formation angeordnet. Im oberen sowie im unteren Trägerbereich ist jeweils noch ein wabenförmiges bzw. sechseckiges konventionelles Bündel A6 angeordnet sowie gegebenenfalls noch einzelne Mini-Bündel A3.

**Fig. 38** veranschaulicht einen Borstenträger 5 mit einem zentral angeordneten Raster-Bündel A4 in Form von drei in Längsrichtung miteinander verbundenen Rauten-Strukturelementen, in deren Zwischenräumen jeweils Weichelemente und/oder Formationen von gespritzten Borsten A1 angeordnet sind. Links und rechts von dem Raster-Bündel A4 sind bis hin zur Aussenkontur des Borstenträgers 5 Formationen Mini-Bündel A3 vorgesehen. Im obersten sowie im untersten Trägerbereich ist jeweils ein konventionelles Bündel A6 vorgesehen, welches an seiner Innenseite der Kontur des Raster-Bündels A4 folgt. Im linken und rechten oberen sowie im linken und rechten unteren Bereich des Borstenträgers 5 kann zwischen den Konventionellen Bündeln A6 sowie den Mini-Bündeln A3 jeweils noch ein punktförmige Konventionelles Bündel A6 vorgesehen sein. Konventionelle Bündel dienen generell dazu, kleinere Lücken zwischen grösseren Bündeln oder Bündel-Formationen zu füllen.

Der Borstenträger 5 gemäss **Fig. 39** weist ein Raster-Bündel A4 auf, welches aus ring- bzw. (ovalen) kettenförmigen Strukturelementen gebildet ist und entlang der Aussenkontur des Borstenträgers 5 verläuft. Das Raster-Bündel ist geschlossen und bildet im Zentrum einen Freiraum. Das Raster-Bündel A4 umschliesst im zentralen Bereich eine Formation von Mini-Bündeln A3. Die von den einzelnen Strukturelementen des Raster-Bündels A4 umschlossenen Freiräume bleiben unbesetzt, können aber optional auch mit Reinigungselementen besetzt sein.

Der Borstenträger 5 gemäss **Fig. 40** weist in seinem zentralen Bereich ein Raster-Bündel A4 auf, welches sich aus wabenförmigen Strukturelementen zusammensetzt, und von einer geschlossenen Formation von Mini-Bündeln A3 umgeben ist. Die Formation von Mini-Bündeln bildet im Zentrum einen Freiraum. Der Freiraum ist mit einem Reinigungselement besetzt, im konkreten Fall hier mit einem Raster-Bündel Im oberen sowie im unteren Trägerbereich ist jeweils ein bogenförmiges, Konventionelles Bündel A6 angeordnet.

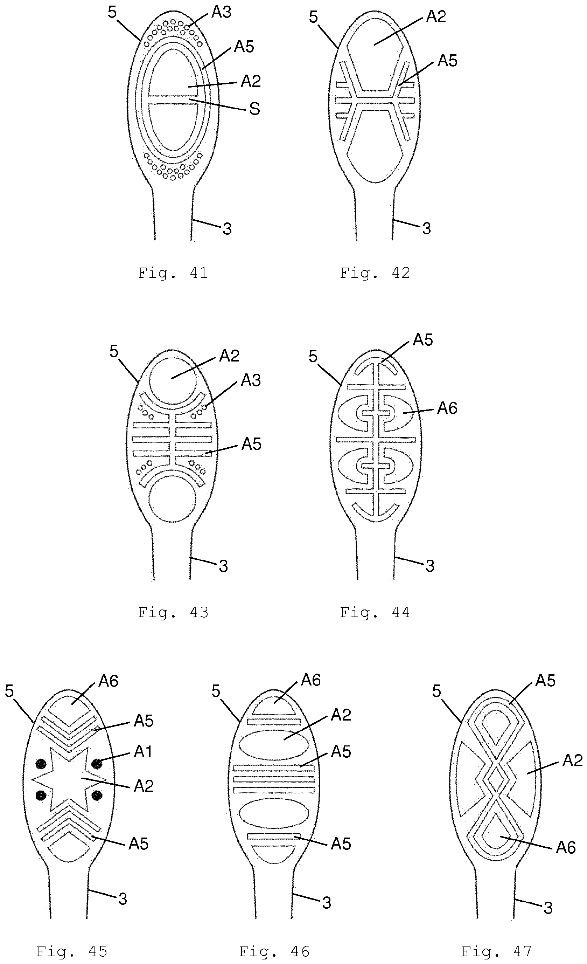

In den **Fig. 41 bis 47** werden nun beispielhafte Borstenträger der Kategorie K dargestellt.

Der Borstenträger gemäss **Fig. 41** weist im zentralen Bereich zwei Puck-Bündel A2 auf, welche spiegelsymmetrisch zueinander angeordnet sind und welche einen quer verlaufenden Spalt S zwischen sich ausbilden, welcher unbesetzt bleibt. Um die halbovalförmigen Puck-Bündel A2 herum verläuft ein geschlossenes Langes Bündel A5. Im oberen Trägerbereich sowie im unteren Trägerbereich sind jeweils Formationen von Mini-Bündeln A3 angeordnet, welche der Kontur der Borstenträgerspitze beziehungsweise des halsseitigen Endes des Borstenträgers folgen. Die Puck-Bündel befinden sich im zentralen Freiraum der durch das Lange Bündel gebildet wird.

Der Borstenträger gemäss **Fig. 42** umfasst im oberen sowie im unteren Trägerbereich jeweils ein Puck-Bündel A2, welches eine Abrundung aufweist, welche der Aussenkontur der Borstenträgerspitze beziehungsweise der Aussenkontur des halsseitigen Endes des Borstenträgers 5 folgt. Entlang der Querachse des Borstenträgers sowie im zentralen linken und rechten Bereich des Borstenträgers erstreckt sich ein antennenförmiges Langes Bündel A5 mit nach Aussen abstehenden Vorsprüngen, welche etwa bis zur Aussenkontur des Borstenträgers 5 reichen. Das Lange Bündel liegt zwischen den Puck-Bündeln.

In **Fig. 43** wird ein Borstenträger 5 illustriert mit einem zentral angeordneten Langen Bündel A5 in Fischgrätform, welches an seinem oberen sowie an seinem unteren Ende jeweils noch dem Puck Bündel folgende Geometrie aufweist. Im oberen sowie im unteren Trägerbereich ist jeweils ein kreisförmiges Puck-Bündel A2 angeordnet, welches der Geometrie des Langen Bündels A5 sowie der Aussenkontur des Borstenträgers folgt. Zwischen der sichelförmigen Geometrie des Langen Bündels A5 und der am nahesten Liegenden geraden Gräte des Langen Bündels A5 sind Mini-Bündel A3 in Bogenform angeordnet.

Der in **Fig. 44** veranschaulichte Borstenträger 5 entspricht in etwa dem in **Fig. 18** veranschaulichten Borstenträger mit dem Unterschied, dass hier die antennenartige Struktur durch ein Langes Bündel A5 gebildet wird und wobei das Lange Bündel A5 im oberen sowie im unteren Bereich des Trägers jeweils noch eine ankerförmige Geometrie aufweist, welche durch einen Quersteg von den quer ausgerichteten Konventionellen Bündeln A6 getrennt ist. Die Mini-Bündel A3 aus **Fig. 18** werde durch Strukturen des Langen Bündels A5 ersetzt.

Die **Fig. 45** stellt einen Borstenträger 5 dar mit einem im zentralen Trägerbereich angeordneten Puck-Bündel A2. In den auf der linken und rechten Trägerseite gebildeten Zwischenräumen des Puck-Bündels A2 sind jeweils kreisförmige Weichelemente und/oder Formationen von gespritzten Borsten A1 angeordnet. Mit dem oberen beziehungsweise unteren Zwischenraum des sternförmigen Puck-Bündels A2 sind jeweils zueinander parallele Lange Bündel A5 angeordnet. Im obersten und untersten Trägerbereich sind wiederum ausgerichtet mit den pfeilspitzenförmigen Langen Bündeln A5 bogenförmige (bzw. kreissegmentförmige), konventionelle Bündel A6 angeordnet. Das Puck-Bündel liegt zwischen mehreren Langen Bündeln.

Die **Fig. 46** veranschaulicht einen Borstenträger in dessen zentralem Bereich mehrere in Querrichtung parallel zueinander ausgerichtete streifenförmige Lange Bündel A5 angeordnet sind. Oberhalb und unterhalb dieser streifenförmigen Langen Bündel A5 ist jeweils ein querliegendes ovales Puck-Bündel A2 angeordnet. Weiterhin ist jeweils oberhalb beziehungsweise unterhalb des querliegenden Puck-Bündels A2 ein weiteres querliegendes streifenförmiges Langes Bündel A5 angeordnet. Im obersten sowie im untersten Trägerbereich sind dann jeweils wieder in etwa halbkreisförmige, konventionelle Bündel A6 angeordnet. Die Langen Bündel bilden generell bevorzugt Formationen von mehreren parallel angeordneten Elementen.

Der Borstenträger gemäss **Fig. 47** umfasst zunächst eine entlang der Längsachse ausgerichtete X-förmige Anordnung eines Langen Bündels A5, welches in der Mitte eine Raute bildet und an seinem oberen und unteren Ende eine der Aussenkontur des Trägers folgende Abrundung aufweist. Die oberen und unteren Bereiche des Langen Bündels A5 umschliessen dabei ein tropfenförmiges Konventionelles Bündel A6, wohingegen der zentrale Bereich des Langen Bündels A5 beziehungsweise die Raute einen unbesetzten Freiraum umschliesst. Links und rechts von dem Langen Bündel A5 ist jeweils ein Puck-Bündel A2 angeordnet, welches der Aussenkontur des Trägers folgt sowie an seiner innen gerichteten Seite der Kontur der Raute des Langen Bündels A5 folgt.

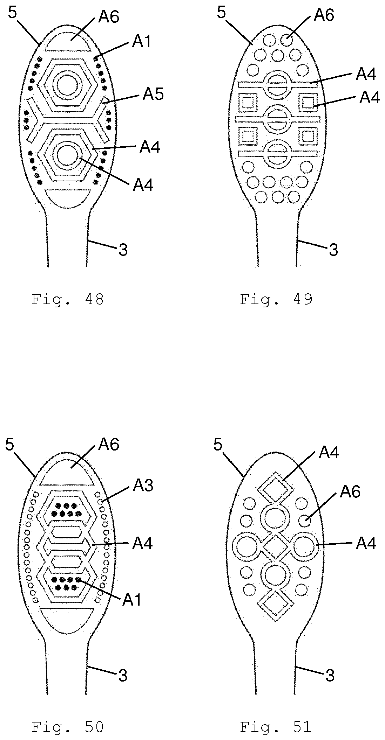

In den **Fig. 48 bis 51** werden nun beispielhafte Borstenträger der Kategorie L dargestellt.

Der Borstenträger gemäss **Fig. 48** in seinem zentralen Bereich entlang der Querachse ein etwa H-förmiges Langes Bündel A5 auf mit genkickten Seitenwänden. Der von den geknickten Seitenwänden definierte Freiraum ist mit punktförmig ausgebildeten Weichelementen und/oder gespritzten Borsten A1 besetzt. Oberhalb und unterhalb des H-förmigen Langen Bündels A5 sind Raster-Bündel A4 in Form von wabenförmigen beziehungsweise sechseckigen Raster-Bündel-Strukturelementen vorgesehen, welche jeweils ein einzelnes ringförmiges Raster-Strukturelement A4 umschliessen. Im oberen und unteren Trägerbereich ist jeweils ein etwa halbkreisförmiges konventionelles Bündel A6 angeordnet. In den linken und rechten oberen und unteren Bereichen des Borstenträgers sind wiederum der Aussenkontur folgend punktförmige Weichelemente und/oder Formationen von gespritzten Borsten A1 vorgesehen.

Der Borstenträger gemäss **Fig. 49** umfasst im zentralen Bereich drei Raster-Bündel A4 in Form von drei (getrennt) übereinanderliegenden ringförmigen Raster-Bündel-Strukturelementen mit einem durch sie hindurch verlaufenden Querbalken. Zwischen diesen Raster-Bündeln A4 sind jeweils im linken und rechten Trägerbereich einzelne quadratische Raster-Bündel A4 vorgesehen. Des Weiteren sind im oberen und unteren Trägerbereich noch mehrere punktförmige konventionelle Bündel A6 vorgesehen, welche der Aussenkontur folgen und den oberen und unteren Trägerbereich ausfüllen.

Der in **Fig. 50** veranschaulichte Borstenträger 5 umfasst in seinem zentralen Bereich mehrere ineinandergreifende bzw. ineinander verschlungenen wabenförmige Raster-Bündel A4 (Form in Form), wobei der durch die obere und die mittlere Wabe sowie durch die untere und die mittlere Wabe begrenzte Freiraum besetzt ist mit punktförmigen Weichelementen und/oder gespritzten Borsten A1. Links und rechts von dieser wabenförmigen Raster-Bündel-Struktur sind jeweils Mini-Bündel A3 angeordnet, welche der Aussenkontur des Borstenträgers folgen. Im oberen und unteren Trägerbereich ist jeweils ein in etwa halbkreisförmiges Konventionelles Bündel A6 vorgesehen.

Der Borstenträger 5 gemäss **Fig. 51** umfasst ein zentral angeordnetes Raster-Bündel A4 auf, in welchem einzelne rautenförmige beziehungsweise quadratische Strukturelemente abwechselnd verbunden sind mit ringförmigen Strukturelementen, sodass sich ein etwa kreuzförmiges Gesamtgebilde ergibt. In den linken und rechten oberen Zwischenräumen sowie den linken und rechten unteren Zwischenräumen sind jeweils noch punktförmige Konventionelle Bündel A6 angeordnet.

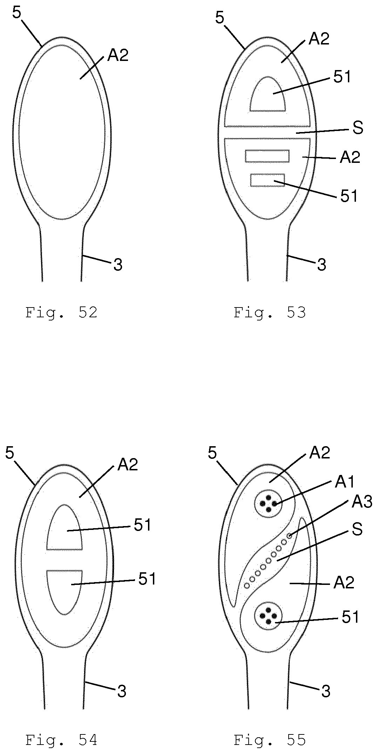

In den **Fig. 52 bis 55** werden nun beispielhafte Borstenträger der Kategorie M dargestellt.

In **Fig. 52** wird zunächst ein Borstenträger 5 gezeigt, welcher ein einziges grosses ovales Puck-Bündel A2 aufweist, welches die Borstenträgeroberfläche bis zur Aussenkontur ausfüllt.

In **Fig. 53** wird ein Borstenträger 5 gezeigt mit jeweils einem halbovalförmigen Puck-Bündel A2 im oberen sowie im unteren Trägerbereich. Dabei umschliesst das obere Puck-Bündel A2 eine Ausnehmung 51 in Form eines unbesetzten Freiraums, welcher ebenfalls halbovalförmig ausgebildet ist. Das untere halbovalförmige Puck-Bündel A2 umschliesst zwei rechteckige Ausnehmungen 51 je in Form eines rechteckigen Freiraums, welche ebenfalls unbesetzt bleiben. Der Spalt S zwischen den Puck-Bündeln A2 bleibt ebenfalls unbesetzt.

Der in **Fig. 54** veranschaulichte Borstenträger 5 weist nunmehr ein ovales Puck-Bündel A2 auf, welches zwei symmetrisch zueinander angeordnete ebenfalls halbovalförmige Ausnehmungen 51 umschliesst, sodass sich etwa entlang der Querachse des Borstenträgers ein Quersteg innerhalb des Puck-Bündels A2 ausbildet.

In **Fig. 55** wird schliesslich ein Borstenträger 5 gezeigt mit zwei tropfenförmigen Puck-Bündeln A2, von denen eines vom oberen Bereich (mit dem abnehmenden Ende) in den unteren Bereich hineinreicht und das andere vom unteren Bereich (mit dem abnehmenden Ende) in den oberen Bereich hineinreicht. Beide Puck-Bündel A2 umschliessen eine runde Ausnehmung 51, in welcher punktförmige Weichelemente und/oder Formationen von gespritzten Borsten A1 angeordnet sind. In dem zwischen den beiden tropfenförmigen Puck-Bündeln A2 definierten Freiraum/Spalt ist eine querverlaufende Formation von Mini-Bündeln A3 angeordnet.

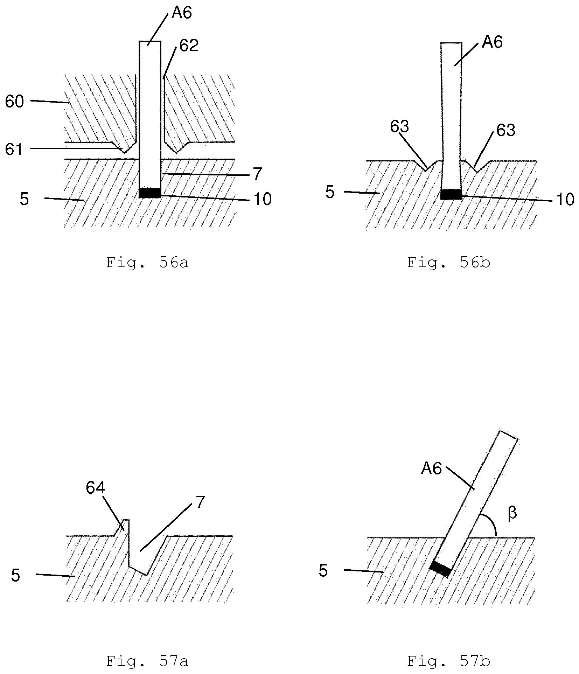

Die **Fig. 56** **a und b** illustrieren die Wirkungsweise einer bevorzugten Ausführungsform einer Halte-/Pressvorrichtung 60 im Zusammenhang mit dem Hot Tufting (HT)-Verfahren.

Die Halte-/Pressvorrichtung 60 (in Querschnittsansicht gezeigt) umfasst eine Aufnahme 62 für ein hier beispielhaft gezeigtes Konventionelles Bündel A6, welches mit seinem verschmolzenen Ende 10 in ein Sackloch 7 eines Borstenträgers 5 eingebracht wurde. Die Halte-/Pressvorrichtung 60 umfasst Vorsprünge 61, welche vorliegend zackenförmig ausgebildet sind und welche auf die unmittelbare Umgebung des Sacklochs 7 auf dem Borstenträger 5 ausgerichtet sind (vorzugsweise sind sie von der Aufnahme 62 ausgehend ausgebildet).

Die Vorsprünge 61 können wahlweise auch wulstförmig oder konusförmig, etc. ausgebildet sein.

Sie können des Weiteren parallel zueinander angeordnet sein oder aber sie können umlaufend ausgebildet sein.

Die Halte-/Pressvorrichtung 60 kann zudem ein (hier nicht gezeigtes) Heizelement zur Erwärmung des Borstenträgers 5 bzw. der Borstenträgeroberfläche aufweisen. Diese Halte-/Pressvorrichtung 60 ist in der Lage sowohl eine besonders gute seitliche Klemmung des Bündels A6 zu gewährleisten als auch eine besonders gute Verankerung im Bereich des verschmolzenen Endes 10 des Bündels A6.

Entscheidend ist, dass wie in **Fig. 56 b** zu sehen, die Vorsprünge 61 der Halte-/Pressvorrichtung 60 in der Lage sind, das zuvor ggf. von der Halte-/Pressvorrichtung 60 selbst erwärmte Material des Borstenträgers 5 im Bereich der unmittelbaren Umgebung des Sacklochs 7 derart in den Borstenträger 5 hinein zu drücken (Einkerbung 63 durch Verdrängung erzeugt), dass zunächst eine seitliche Klemmung des Bündels A6 im Bereich der Oberfläche des Borstenträgers 5 geschaffen wird. Darüber hinaus kann eine zusätzliche Verankerung für das Montageende des Bündels A6 (das heisst das Ende mit der aufgeschmolzenen Borste 10) erzielt werden, da die Verdrängung des Borstenträgermaterials tiefer wirkt als etwa bei einer ebenen Werkzeugstirnseite (aufgrund der zacken-, konus- oder wulstförmigen Ausgestaltung der Vorsprünge). Auf diese Weise wird ein besonders guter Halt beziehungsweise eine besonders gute Verankerung (bzw. Ausziehfestigkeit) der Borstenbündel innerhalb des Borstenträgers 5 erzielt.

In den **Fig. 57** **a und b** wird die Erzeugung eines schräg gestellten Bündels beispielhaft gezeigt am Konventionellen Bündel A6. Wie in **Fig. 57** **a** zu sehen, wird zuvor ein entformbares Sackloch 7 geschaffen, wodurch der Borstenträger 5 ein vorstehendes Materialreservoir 64 erhält. Dieses Materialreservoir 64 kann im erwärmten Zustand dann derart verdrückt beziehungsweise verpresst werden, dass das hier beispielhaft gezeigte Konventionelle Bündel A6 eine dauerhafte Schrägstellung erhält. Bevorzugte Neigungswinkel β für die Bündel betragen zwischen 85° und 50°, vorzugsweise zwischen 80° und 65°, gegenüber der Oberfläche des Borstenträgers 5.

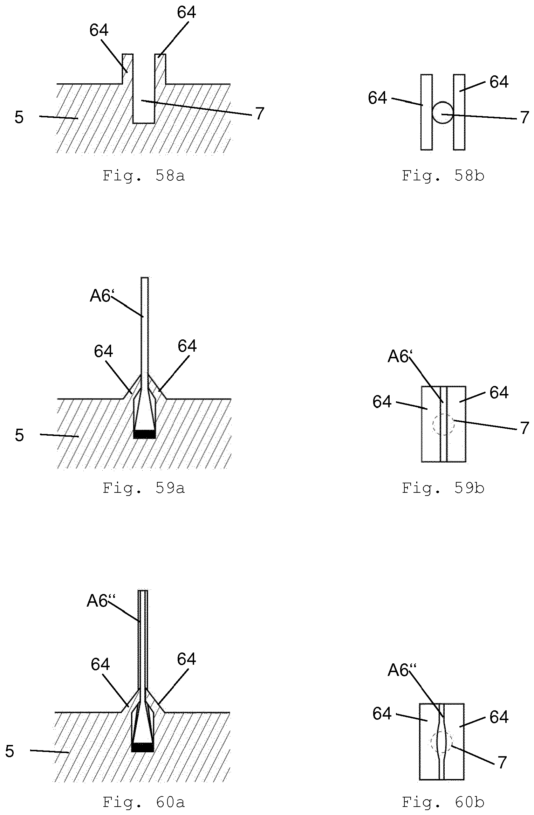

In den **Fig. 58** **a und b** wird ein Materialreservoir 64 auf einem Borstenträger 5 gezeigt, welches hier in Form von zwei länglichen Vorsprüngen 64 ausgebildet ist, welche sich, wie in der Draufsicht gemäss **Fig. 58b** zu sehen, zu beiden Seiten des Sacklochs 7 über dieses hinaus erstrecken.

Mittels dieser Grundkonstellation kann nun etwa ein rundes konventionelles Bündel A6 in verschiedene fächerartige Formen gebracht werden.

Wie in **Fig. 59a** illustriert, wurde ein konventionelles Bündel in das Sackloch 7 eingebracht und die beiden seitlichen Vorsprünge 64 des Materialreservoirs wurden seitlich gegen das Bündel gepresst, sodass ein regelmässiger Fächer entsteht, wie auch aus der **Fig. 59b** zu sehen ist (vergleiche Bezugszeichen A6').

Alternativ dazu kann, wie in den **Fig. 60** **a und b** gezeigt, auch ein Fächer mit einem stärkeren Zentrum mittels der beiden seitlichen Materialreservoirs 64 erzeugt werden. Wie in **Fig. 60b** veranschaulicht, werden hier die beiden Materialreservoirs seitlich stärker zusammengedrückt, wobei gleichzeitig um das Bündel herum ein etwas breiteres beziehungsweise stärkeres Zentrum entsteht (vergleiche Bezugszeichen A6"). Die breitere Auffächerung des entsprechenden Bündels A6" wird auch durch die Doppellinien in der **Fig. 60a** hervorgehoben.

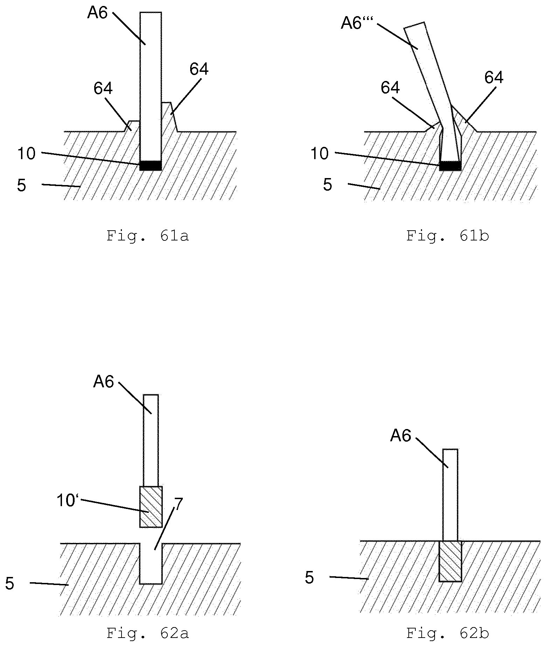

In den **Fig. 61a** **und b** wird nunmehr ein asymmetrisches Materialreservoir 64 gezeigt, welches - bei einem senkrecht angeordneten Sackloch 7 - zu einer Schrägstellung des hier beispielhaft gezeigten konventionellen Bündels A6 führt. Dadurch, dass hier die rechte Seitenwand des Material Reservoirs 64 etwas höher ist als die linke Seitenwand des Materialreservoirs 64, wird beim Verpressen beziehungsweise Verdrücken des erwärmten Borstenträgermaterials das Bündel nach links geknickt, wie in **Fig. 61b** gut zu sehen. Das Bündel A6‴ wird dabei entsprechend um die «kürzere» Seitenwand des Material Reservoirs 64 herum geknickt.

In den **Fig. 62a** **und b** wird nunmehr ein Bündel A6 veranschaulicht, welches an seinem unteren Montageende 10' anstelle einer Borstenschmelze eine Befestigungskomponente 10' aufweist. Die Befestigungskomponente kann dabei aus einem umspritzten Kunststoffmaterial bestehen, sie kann aber auch in Form einer Folie um das untere Ende des Bündels gelegt werden oder aber das untere beziehungsweise Montageende des Bündels kann in ein spezielles Fluid getaucht werden (zum Beispiel ein Wachs), um dann in das Sackloch 7 eingeführt zu werden.

Das fertig montierte Bündel A6 wird in **Fig. 62b** veranschaulicht. Mit dieser Ausführungsform kann die Haftung zwischen dem Bündel und dem Borstenträger 5 verbessert werden und es können Zwischenräume zwischen dem Bündel und dem Borstenträger komplett ausgefüllt werden. Zudem kann diese Ausführungsform genutzt werden, um etwa einen optischen Effekt in einem transparenten Borstenträger zu erzeugen.

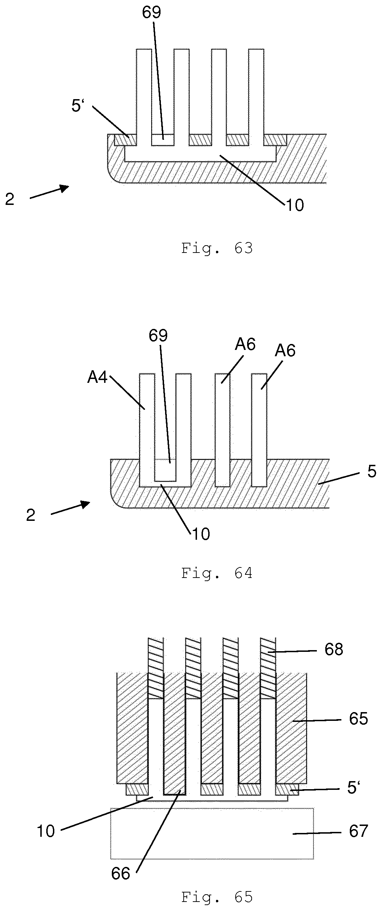

In der **Fig. 63** wird nun eine exponierte beziehungsweise freiliegende Schmelze 69 veranschaulicht, welche hier im AFT-Verfahren hergestellt wurde. Man erkennt das Kopfteil 2 mit dem montierten Trägerplättchen 5' sowie die durch das Trägerplättchen 5' hindurch ragenden Borstenbündel, welche an ihrem unteren Ende zu einer Borstenschmelze bzw. einem Borstenteppich 10 verschmolzen wurden.

Die exponierte beziehungsweise freiliegende Borstenschmelze 69 kommt gemäss dem AFT-Verfahren dadurch zustande, dass wie in **Fig. 65** gezeigt, ein spezielles Werkzeug 65 verwendet wird, welches insbesondere ein vorzugsweise stiftförmiges Freihalteelement 66 für eben die später freiliegende beziehungsweise exponierte Borstenschmelze 69 aufweist. Mit anderen Worten ist im Bereich der später freiliegenden Borstenschmelze im Trägerplättchen 5' eine Öffnung vorhanden, durch welche das Freihalteelement 66 hindurchgeht und so beim Erzeugen der Borstenschmelze 10 den entsprechenden Platz freihalten kann. Das heisst, die Borstenschmelze 10 beziehungsweise der gebildete Borstenschmelzteppich 10 ist an seiner Oberseite im Wesentlichen eben ausgebildet. Die Heizvorrichtung zum Verschmelzen der hinteren Borstenenden wird vorliegend mit dem Bezugszeichen 67 bezeichnet. In die Borsten beziehungsweise Borstenbündelöffnungen des Werkzeugs 65 sind zudem Stifte 68 eingebracht werden, welche für eine Profilierung der freien Borstenenden sorgen.

In der **Fig. 64** wird die freiliegende Borstenschmelze beziehungsweise exponierte Borstenschmelze 69 wie sie gemäss dem HT-Verfahren erzeugt wird, veranschaulicht. Hier wurde etwa mit der Halte-/Pressvorrichtung 60 ein rundes Raster-Bündel A4 in den entsprechend vorgeformten Borstenträger 5 eingesetzt. Auch hier kann das Werkzeug ein korrespondierendes Freihalteelement aufweisen.

Aufgrund der freiliegenden bzw. exponierten Schmelze kann mehr Bewegungsspielraum für die umgebenden Borsten- bzw. Borstenbündel geschaffen werden.

Die **Fig. 66 bis 70** veranschaulichen beispielhafte (runde) Borstenträger für Single-Tuft-Anwendungen, insbesondere Single-Tuft-Zahnbürsten. Single-Tuft-Zahnbürsten sind Zahnbürsten mit einem sehr kleinen Bürstenkopf, welche insbesondere zur Reinigung von Weisheitszähnen, Zahnsäumen sowie von schiefstehenden Zähnen verwendet werden, wofür sie eine besonders hohe Reinigungseffizienz aufweisen.

In der **Fig. 66** wird ein Borstenträger 5 für etwa eine Single-Tuft-Zahnbürste veranschaulicht, welcher ein schneckenförmiges, Langes Bündel A5 aufweist, welches sich im Wesentlichen über die gesamte Oberfläche des Borstenträgers 5 ausdehnt.

In der **Fig. 67** wird ein weiterer Borstenträger 5 veranschaulicht, in dessen zentralen Bereich eine sternförmige Anordnung von Weichelementen (bzw. einem Weichelement) und/oder gespritzten Borsten A1 vorgesehen ist. Diese sternförmige Anordnung wird umgeben von Mini-Bündeln A3 und / oder punktförmigen, Konventionellen Bündeln A6, welche der sternförmigen Kontur folgen.

In **Fig. 68** wird ein weiterer Borstenträger 5 veranschaulicht. Dieser weist im zentralen Bereich eine punkt- bzw. kreisförmige Anordnung von Weichelementen (bzw. einem Weichelement) und/oder gespritzten Borsten A1 auf, welche umschlossen ist von einem Kreisring-förmigen bzw. einem Donut-förmigen Puck-Bündel A2. Zwischen der punktförmigen Anordnung und dem Puck-Bündel A2 bzw. im Puck Bündel A2 wird vorzugsweise eine Ausnehmung 51 gebildet, für eine bessere Beweglichkeit der Borsten.

In **Fig. 69** wird ein weiterer Borstenträger 5 veranschaulicht. Hier sind im zentralen Bereich des Borstenträgers vier Mini-Bündel A3 und / oder punktförmige, Konventionelle Bündel A6 in quadratischer Formation angeordnet. Diese werden wiederum umgeben von einem Kreisring- bzw. Donut-förmigen Puck-Bündel A2, wobei auch hier durch die Ausnehmung 51 für Bewegungsspielraum bei den einzelnen Borsten gesorgt ist.

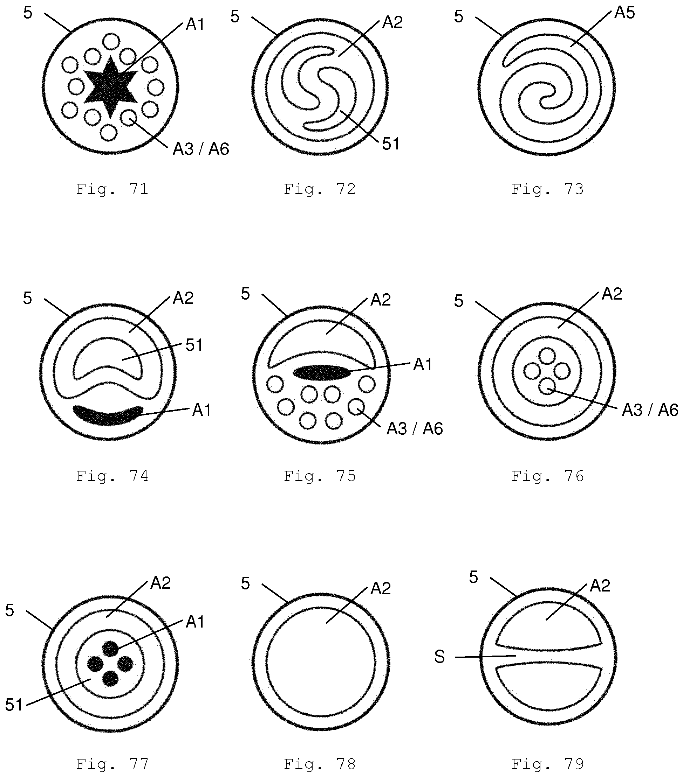

In der **Fig. 70** wird schliesslich noch ein weiterer Borstenträger 5 veranschaulicht. Dieser weist ein grosses, kreisförmiges Puck-Bündel A2 auf, welches sich im Wesentlichen über seine gesamte Oberfläche ausdehnt. In den **Fig. 71 bis 79** werden nun beispielhaft (runde) Borstenträger für insbesondere Nagellack-Applikatoren gezeigt.

Der in **Fig. 71** gezeigte Borstenträger 5 entspricht dabei dem in **Fig. 67** gezeigten Borstenträger.

In **Fig. 72** wird ein Borstenträger 5 für Nagellack-Applikatoren veranschaulicht, welcher ein grosses, kreisrundes Puck-Bündel A2 aufweist, welches sich im Wesentlichen über die gesamte Oberfläche des Borstenträgers 5 erstreckt. Innerhalb des Puck-Bündels A2 sind zwei in etwa nierenförmige Ausnehmungen 51 vorgesehen, welche gegenläufig bzw. punktsymmetrisch zueinander angeordnet sind.

In der **Fig. 73** wird ein weiterer Borstenträger für Nagellack-Applikatoren gezeigt, welcher ein schneckenförmiges Langes Bündel A5 aufweist, welches sich im Wesentlichen über die gesamte Oberfläche des Borstenträgers erstreckt (d.h. entsprechend der **Fig. 66****).**

In **Fig. 74** wird ein weiterer Borstenträger 5 illustriert, welcher ein Puck-Bündel A2 in Form eines eingedrückten Kreisringes aufweist, mit einer entsprechenden Ausnehmung 51. Gegenüberliegend von der Einbuchtung des Puck-Bündels A2 ist eine bogenförmige Anordnung von Weichelementen (bzw. einem Weichelement) und/oder gespritzten Borsten A1 vorgesehen.

Die **Fig. 75** zeigt einen weiteren Borstenträger 5, welcher in seinem zentralen Trägerbereich eine ovale Anordnung von Weichelementen (bzw. einem Weichelement) und/oder gespritzten Borsten aufweist. Oberhalb davon ist ein grösseres bogenförmiges Puck-Bündel A2 angeordnet, welches der Kontur des Ovals folgt. Unterhalb des Ovals sind mehrere Mini-Bündel A3 und / oder punktförmige, Konventionelle Bündel A6 angeordnet, welche der Aussenkontur des Borstenträgers 5 sowie dem Oval folgen.

Der in **Fig. 76** gezeigte Borstenträger für insbesondere Nagellack-Applikatoren entspricht der in **Fig. 69** gezeigten Ausführungsform.

Der in **Fig. 77** gezeigte Borstenträger 5 für Nagellack-Applikatoren entspricht im Wesentlichen den Ausführungsformen gemäss **Fig. 69** sowie **Fig. 76****,** mit dem Unterschied, dass im zentralen Bereich anstelle von Mini-Bündeln A3 bzw. Konventionellen Bündeln A6 punktförmige, weichelastische Elemente und/oder gespritzte Borsten A1 in einer in etwa quadratischen Formation angeordnet sind.

Der in **Fig. 78** gezeigte Borstenträger 5 für insbesondere Nagellack-Applikatoren entspricht der in **Fig. 70** gezeigten Ausführungsform, d.h. mit einem grossen, kreisförmigen Puck-Bündel, welches sich im Wesentlichen über die gesamte Oberfläche des Borstenträgers erstreckt.

In **Fig. 79** wird schliesslich eine Ausführungsform eines Borstenträgers 5 für insbesondere Nagellack-Applikatoren veranschaulicht, welche zwei zueinander spiegelsymmetrisch angeordnete, Kreissegment-förmige Puck-Bündel A2 aufweist, wobei deren Grundseite bzw. Sehne eine leichte, konvexe Wölbung aufweist. Der Spalt zwischen den beiden Puck-Bündeln A2 bleibt unbesetzt und ist entsprechend leicht konkav gewölbt.

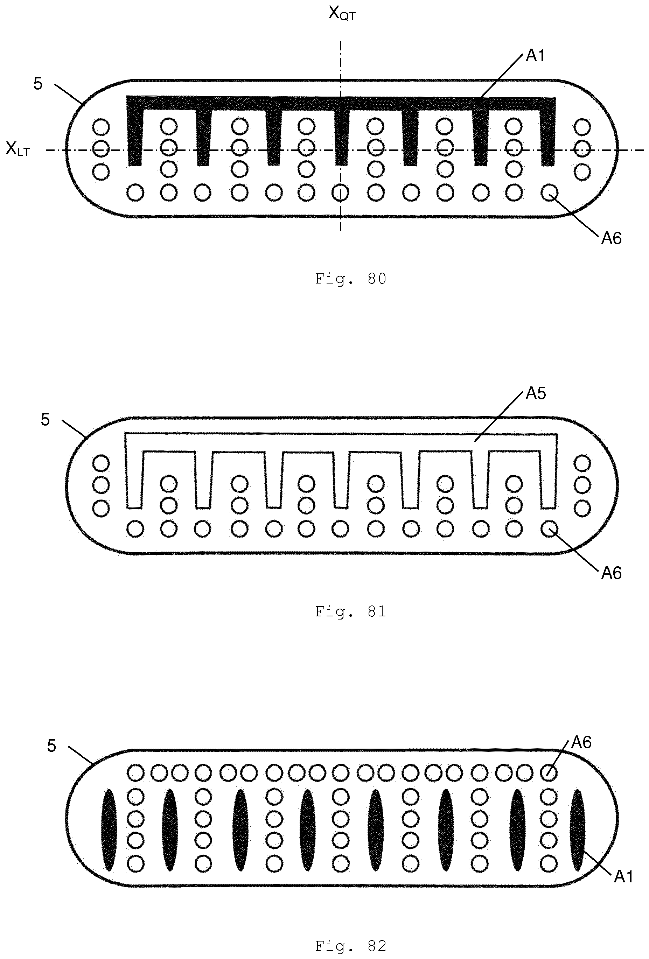

In den **Fig. 80 bis 84** werden noch beispielhafte Borstenträger für insbesondere Mascara-Applikatoren illustriert.

Die Borstenträger 5 sind dabei länglich mit abgerundeten Seitenteilen ausgebildet.

Der in **Fig. 80** gezeigte Borstenträger 5 weist zunächst eine nach innen gerichtete kammförmige Anordnung von Weichelementen und/oder gespritzten Borsten A1 auf (die «Zinken» reichen dabei etwas über die Längsachse X_{LT} hinaus). In diese Struktur greift eine gegenläufig ausgebildete kammförmige Anordnung aus einzelnen punktförmigen, Konventionellen Bündeln A6 ein, wobei die Seitenteile der kammförmigen Anordnung aus punktförmigen, Konventionellen Bündeln A6 die äusseren Seitenteile der kammförmigen Anordnung von Weichelementen und/oder gespritzten Borsten A1 umgeben.

Der in **Fig. 81** gezeigte Borstenträger 5 entspricht im Wesentlichen der Ausführungsform gemäss **Fig. 80****,** mit dem Unterschied, dass anstelle der kammförmigen Anordnung aus Weichelementen und/oder gespritzten Borsten A1 ein kammförmiges Langes Bündel A5 vorgesehen ist.

Der in **Fig. 82** gezeigte Borstenträger 5 für insbesondere Mascara-Applikatoren weist eine kammförmige Anordnung aus einzelnen punktförmigen Konventionellen Bündeln A6 auf, wobei sich die einzelnen «Zinken» des Kammes im Wesentlichen über die gesamte Breite des Borstenträgers 5 erstrecken. Zwischen den einzelnen Zinken sowie an den Aussenseiten sind jeweils ovale Anordnungen von weichelastischen Elementen und/oder gespritzten Borsten A1 vorgesehen.

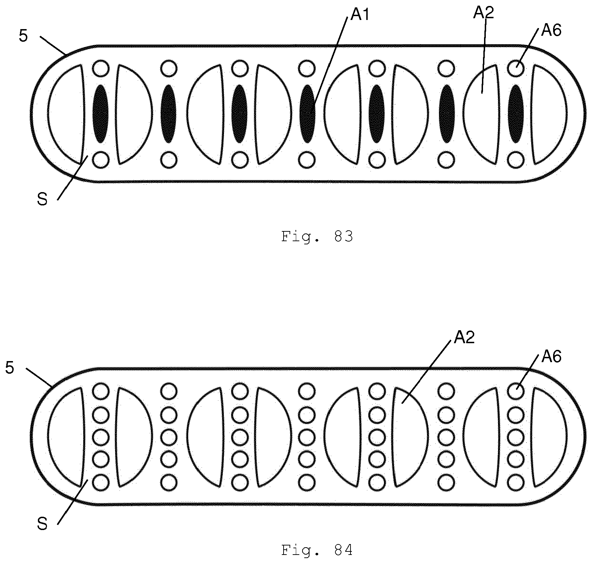

In **der** **Fig. 83** wird ein Borstenträger 5 für insbesondere Mascara-Applikatoren veranschaulicht, welcher mehrere Paare von zueinander spiegelsymmetrisch angeordneten (d.h. in Querrichtung des Borstenträgers 5) Kreissegmentförmigen Puck-Bündeln A2 aufweist, welche jeweils eine konvex gewölbte Grundseite bzw. Sehne haben. In dem Spalt S zwischen den beiden Puck-Bündeln A2 ist eine ovale Anordnung von Weichelementen und/oder gespritzten Borsten A1 vorgesehen sowie ober- und unterhalb davon je ein punktförmiges, Konventionelles Bündel A6. Auch zwischen den einzelnen Paaren von spiegelsymmetrischen Puck-Bündeln A2 sind entsprechende Anordnungen aus ovalen Weichelementen und/oder gespritzten Borsten A1 mit je einem punktförmigen, Konventionellen Bündel A6 oberhalb und unterhalb davon, vorgesehen.

Der in **Fig. 84** gezeigte Borstenträger 5 für insbesondere Mascara-Applikatoren entspricht im Wesentlichen der in **Fig. 83** gezeigten Ausführungsform mit dem Unterschied, dass zwischen den jeweiligen Puck-Bündeln A2 bzw. den spiegelsymmetrisch angeordneten Puck-Bündel-Paaren jeweils eine reihenförmige Formation aus einzelnen punktförmigen Konventionellen Bündeln A6 angeordnet ist.

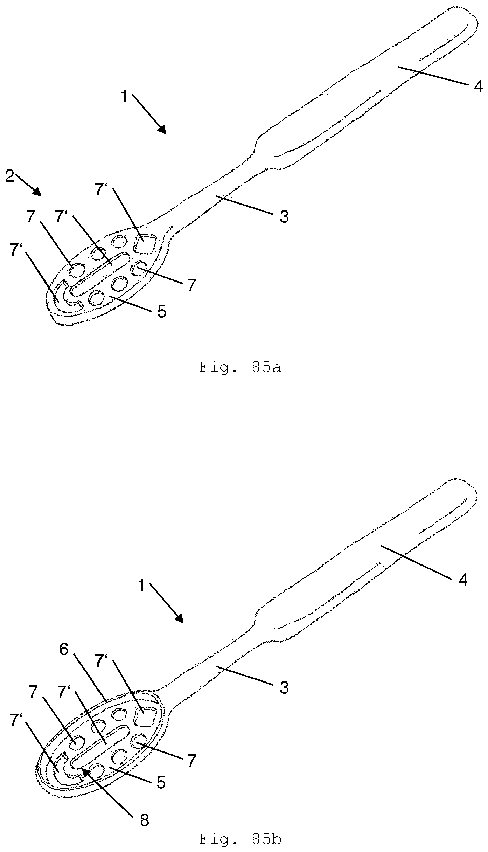

In den **Fig. 85a** **bis g** wird ein Grundkörper 1 für ein Bürstenprodukt mit intergriert beziehungsweise einstückig mit dem Grundkörper 1 hergestelltem Borstenträger 5 veranschaulicht, wie er vom Spritzgiessen kommt.

Die **Fig. 85a** zeigt dabei die Vorderseite des Grundkörpers 1. Der Grundkörper 1 umfasst das Kopfteil 2, das Griffteil 4 sowie das Halsteil 3, welches das Kopfteil 2 mit dem Griffteil 4 verbindet. Das Kopfteil 2 seinerseits umfasst den Borstenträger 5, welcher mit (runden) Borstenlöchern 7 beziehungsweise Öffnungen 7' versehen ist, welche zur Aufnahme von (runden) Borstenbündeln 9 beziehungsweise von Borstenbündeln 9" mit anderer Geometrie, etwa in Gestalt von gebogenen, länglichen oder eckigen Borstenbündeln oder aber Borstenbündeln mit vergrösserter Fläche, dienen.

In der vorliegenden Ausführungsform sind beispielhaft sechs Borstenlöcher 7 für runde Borstenbündel 9 vorgesehen sowie drei Öffnungen 7', welche wiederum beispielhaft vorgesehen sind für ein gebogenes Borstenbündel 9", ein längliches Borstenbündel 9" sowie ein viereckiges Borstenbündel 9". Es können natürlich unterschiedliche Anzahlen und Anordnungen von Borstenlöchern 7 bzw. Öffnungen 7' und Borstenbündeln 9 sowie Borstenbündeln 9" vorgesehen sein, ohne den Rahmen der vorliegenden Erfindung zu verlassen.

In **Fig. 85b** wird nun die Rückseite eines Grundkörpers 1 gezeigt. Hierbei erkennt man insbesondere den Begrenzungsrand 6, welcher an der äusseren Ausdehnung des Borstenträgers 5 verläuft und den Borstenträger nach aussen hin abschliesst. Der umlaufende Begrenzungsrand 6 und der Borstenträger 5 bilden auf diese Weise eine Art Becken, d.h. eine Borstenträgeraussparung, in welcher später die Borstenschmelze vorzugsweise komplett und das Abdeckmaterial mindestens teilweise aufgenommen werden können.

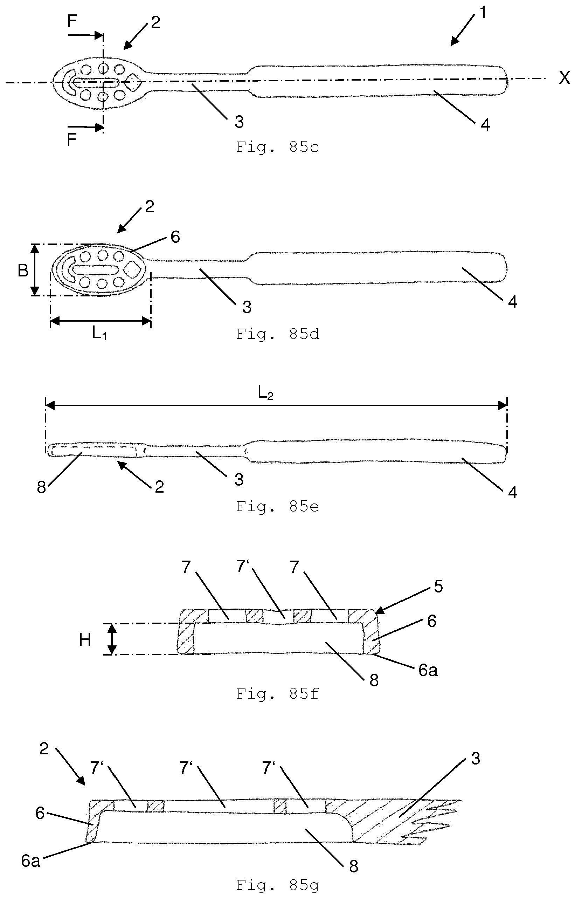

Die **Fig. 85c** stellt eine Draufsicht auf die Vorderseite eines Grundkörpers 1 dar. Man erkennt insbesondere die Längsachse X des Grundkörpers 1. In der rückseitigen Ansicht gemäss **Fig. 85d** wird die Breite B und die Länge L1 des Kopfteils 2 des

Grundkörpers angegeben (die bevorzugten Werte hierfür sind in der vorstehenden allgemeinen Beschreibung angegeben). Man erkennt hier wiederum den umlaufenden Begrenzungsrand 6.

Die Länge L2 des Grundkörpers 1 wird in der **Fig. 85e** bezeichnet (die bevorzugten Werte hierfür sind ebenfalls der vorstehenden allgemeinen Beschreibung zu entnehmen). Man erkennt insbesondere, gestrichelt dargestellt, die beckenförmige Borstenträgeraussparung 8 für die spätere Aufnahme der kompletten Borstenschmelze und mindestens eines Teils des Abdeckmaterials.

Die **Fig. 85f** entspricht einer Querschnittsansicht entlang der Linie F-F in **Fig. 85c****.** Man erkennt die beckenförmige Aussparung 8, den Begrenzungsrand 6, die Höhe H des Begrenzungsrands 6 (bevorzugte Werte siehe allgemeine Beschreibung oben) sowie die Borstenlöcher 7 beziehungsweise die Öffnung 7'.

Ein Längsschnitt entlang der Achse X gemäss **Fig. 85c** durch das Kopfteil 2 beziehungsweise den Borstenträger 5 des Grundkörpers 1 wird in **Fig. 85g** als Detailansicht gezeigt. Man erkennt wiederum den Begrenzungsrand 6, die Borstenträgeraussparung 8 und die Borstenlöcher 7 beziehungsweise die Öffnung 7' (hier für das längliche Borstenbündel 7', das viereckige Borstenbündel 7' und das gebogene Borstenbündel 7') und das Halsteil 3. Das freie Ende 6a des Begrenzungsrand (bzw. die Unterkante des Begrenzungsrandes) fluchtet dabei vorzugsweise mit der Unterseite des Halsteils 3.

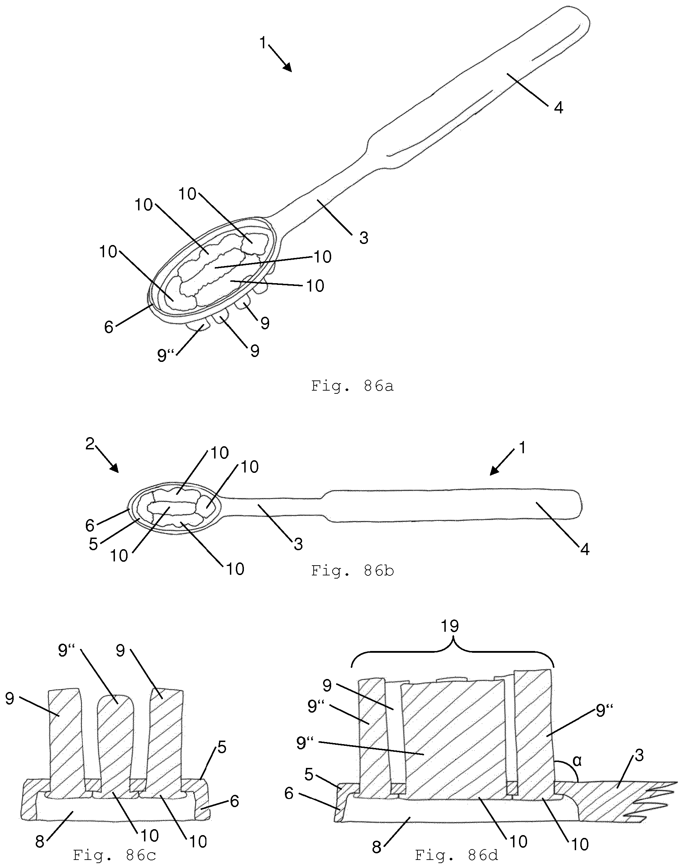

In den **Fig. 86a bis 86d** wird nun der Grundkörper 1 gemäss den **Fig. 85a bis 85g** nach dem Einführen der Borsten und dem Aufschmelzen der Borstenenden der Borstenbündel 9 beziehungsweise der Borstenbündel 9" gezeigt.

Die **Fig. 86a und 86b** zeigen dabei die Rückseite des Grundkörpers 1, wobei im Bereich der vom Begrenzungsrand 6 umschlossenen Borstenträgerfläche die einzelnen aneinander angrenzenden Schmelzteppiche 10 der verschmolzenen Borstenenden der Borstenbündel 9 beziehungsweise Borstenbündel 9" zu erkennen sind. Die einzelnen Schmelzteppiche 10 können aber auch ganz ineinander übergehen oder sie können als räumlich voneinander getrennte Flächen ausgebildet werden.

In der Querschnittsansicht gemäss **Fig. 86c** erkennt man, wie in der Borstenausträgerausnehmung 8 die einzelnen Schmelzteppiche der Borstenbündel 9 beziehungsweise Borstenbündel 9" eine Art Verankerung gegenüber dem Borstenträger 5 bilden und dass der Begrenzungsrand 6 deutlich höher ist als die Schmelzteppiche 10. **Fig. 86d** veranschaulicht das Borstenfeld 19, welches sich aus den Borstenbündeln 9" und den Borstenbündeln 9 zusammensetzt. Auch hier ist die Verankerung mittels der einzelnen Schmelzteppiche 10 gut zu erkennen. In der Regel stehen die Borstenbündel 9 beziehungsweise die Borstenbündel 9" senkrecht zur Oberfläche des Borstenträgers; mit dem Winkel α wird allerdings angedeutet, dass auch eine Schrägstellung der Borstenbündel 9 und Borstenbündel 9" vorgesehen sein kann. Entsprechende Werte hierfür sind wiederum in der vorstehenden allgemeinen Beschreibung angegeben.

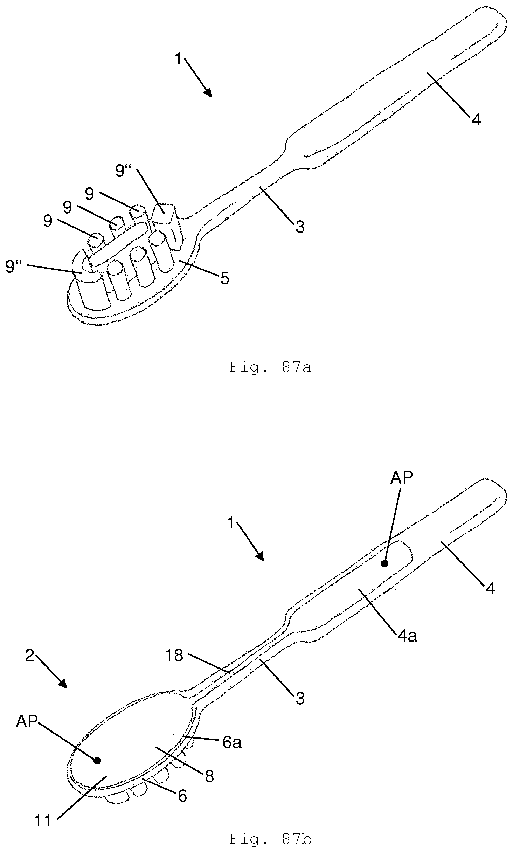

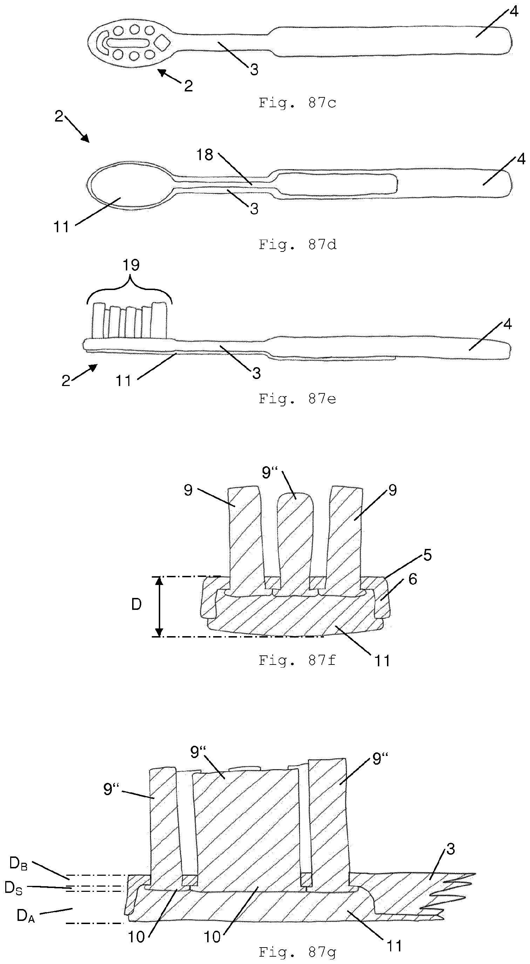

Die **Fig. 87a bis 87g** zeigen nun ein fertiges Bürstenprodukt mit der gespritzten Abdeckung. Auf der Vorderseite des Borstenträgers 5 gemäss

**Fig. 87a** erkennt man wiederum die einzelnen Borstenbündel 9 beziehungsweise Borstenbündel 9". Die rückseitige Ansicht gemäss **Fig. 87b** zeigt nun das auf die Borstenschmelze 10 beziehungsweise die Schmelzteppiche 10 aufgespritzte Abdeckmaterial 11, welches die Borstenträgeraussparung 8 in etwa bis zur Unterkante 6a des Begrenzungsrands 6 auffüllt (oder ggf. etwas darüber hinaus). Das Abdeckmaterial 11 verläuft über einen entsprechenden Kanal 18 bis in das Griffteil 4 hinein (der Kanal ist in Fig. 1 und Fig. 2 nicht gezeigt), wo es eine entsprechende Aufnahmeausnehmung 4a ausfüllt beziehungsweise bedeckt. Mit anderen Worten, das Abdeckmaterial 11 ist sowohl im Kopfteil 2 als auch im Halsteil 3 sowie im Griffteil 4 vorhanden. Der Anspritzpunkt AP für das Abdeckmaterial ist bevorzugt im Bereich des Kopfteils 2 oder aber im Bereich des Griffteils 4 vorgesehen (ein Anspritzpunkt im Halsteil 3 ist aber auch denkbar). Zwei Möglichkeiten von Anspritzpunkten AP sind in Fig. 3b gezeigt, realisiert wird aber vorzugsweise nur einer pro Material/Kavität.

Wie in **Fig. 87c** zu erkennen, befindet sich kein Abdeckmaterial auf der Vorderseite des fertigen Bürstenprodukts. In der Seitenansicht gemäss **Fig. 87e** erkennt man wiederum das Borstenfeld 19 mit einem in Längsrichtung zinnenartig ausgebildeten Profil (d.h. mit unregelmässig alternierend höher- und tieferstehenden Borstenbündeln 9 beziehungsweise Borstenbündeln 9"). Auf der Unterseite erkennt man, dass Abdeckung 11 sogar etwas absteht von dem Kopfteil 2 beziehungsweise dem Halsteil 3 sowie dem Griffteil 4. D.h. auch im Bereich des Kopfteils 2 steht die Abdeckung 11 etwas über den Begrenzungsrand 6 bzw. dessen Unterkante 6a hinaus. Dies wird nochmals veranschaulicht in der **Fig. 87f****,** wo die Gesamtdicke D des Kopfteils 2 des fertigen Bürstenprodukts angegeben wird.

In der **Fig. 87g** wird der Schichtaufbau des fertigen Kopfteils 2 angegeben mit D_{B} für die Schichtdicke des Borstenträgers 5 (ohne den Begrenzungsrand 6), D_{S} für die Schichtdicke der Borstenschmelze 10 beziehungsweise Schmelzteppiche 10 sowie mit D_{A} für die Schichtdicke der Abdeckung 11. Die bevorzugten Werte für die Dicke des Kopfteils beziehungsweise der einzelnen Schichtdicken sowie für die Verhältnisse der Schichtdicken zueinander sind in der vorstehenden allgemeinen Beschreibung angegeben.

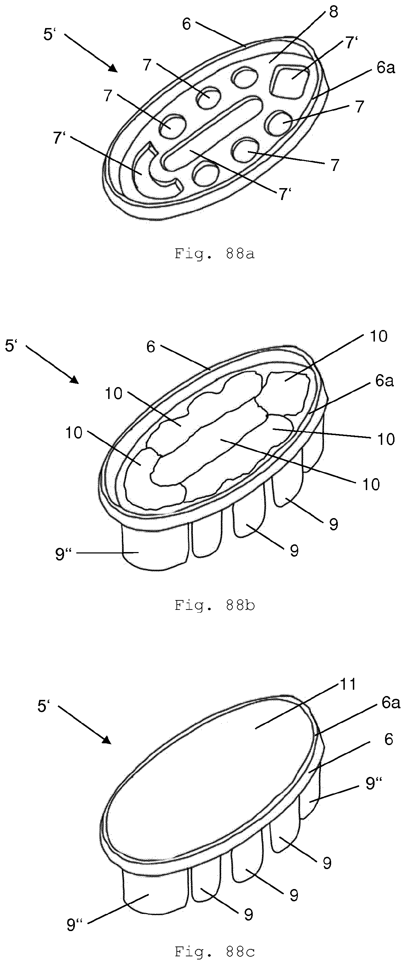

Die **Fig. 88a** **bis c** illustrieren nun eine Ausführungsform, in welcher der Borstenträger und der Grundkörper getrennt voneinander hergestellt und anschliessend zusammengefügt werden. In **Fig. 88a** wird der separate Borstenträger 5' in Form eines Kopfplättchens dargestellt. Der Borstenträger 5' bzw. das Kopfplättchen umfasst ebenfalls einen Begrenzungsrand 6 und die entsprechenden Borstenlöcher 7 beziehungsweise Öffnungen 7 für die Borstenbündel 9 beziehungsweise Borstenbündel 9".

In **Fig. 88b** sind wiederum die Borstenbündel 9 und die Borstenbündel 9" in den Borstenträger 5' eingebracht und mit ihren rückwärtigen Enden aufgeschmolzen, sodass sich wiederum die Schmelzteppiche 10 ergeben. In **Fig. 88c** ist schliesslich wiederum die Abdeckung 11 auf die Borstenschmelze beziehungsweise die Borstenschmelzteppiche 10 aufgespritzt und füllt im Wesentlichen die Borstenträgeraussparung 8 voll aus und kann gegebenenfalls wiederum auch etwas über den Begrenzungsrand 6 bzw. dessen Unterkante 6a hinausstehen.

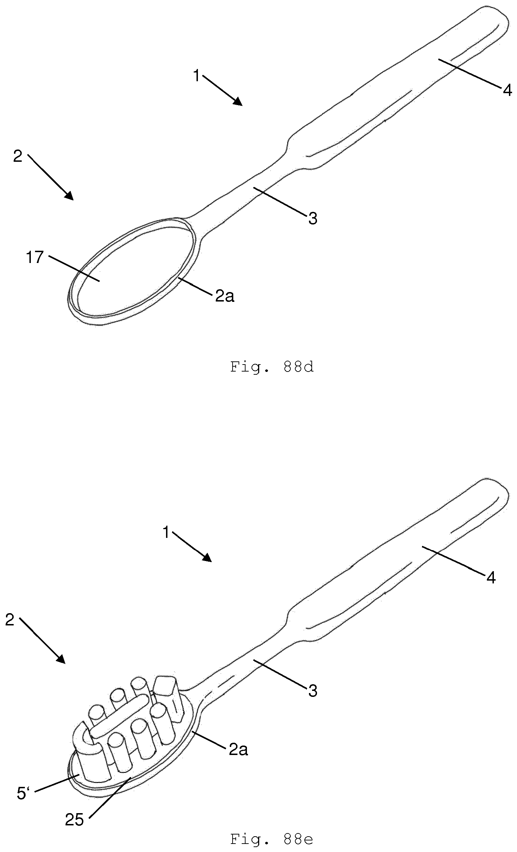

**Fig. 88d** zeigt nun den separat hergestellten Grundkörper 1 für diese Ausführungsform. Dieser umfasst wiederum ein über ein Halsteil 3 mit dem Griffteil 4 verbundenes Kopfteil 2. Das Kopfteil 2 ist vorliegend allerdings in Form eines Rahmens 2a ausgebildet, welcher eine ringförmige Öffnung 17 umschliesst. In den Rahmen 2a des Kopfteils 2 beziehungsweise in die ringförmige Öffnung 17 wird der Borstenträger 5' eingebracht, wie es in **Fig. 88e** veranschaulicht ist. Der Rahmen 2a ist korrespondierend mit dem Borstenträger 5' ausgebildet, sodass der Borstenträger 5' beispielsweise in den Rahmen eingeklickt, mit diesem verschweisst oder verklebt werden kann. Eine weitere Möglichkeit besteht darin, dass der Borstenträger 5' zunächst lose bzw. mit Formschluss in den Rahmen 2a eingelegt wird und anschliessend nochmals mit einer Abdeckkomponente überspritzt wird.

Es besteht grundsätzlich auch die Möglichkeit, dass die ringförmige Öffnung 17 nicht durchgehend ist, sondern einen Boden aufweist, sodass der Borstenträger 5' wieder in eine Borstenträgeraussparung eingesetzt wird; das Abdeckmaterial würde also nicht die Rückseite des Kopfteils 2 bilden (d.h. ausser für die ebenfalls denkbare Variante, dass der Boden Öffnungen aufweist).

Die Schnittstelle 25 zwischen dem Borstenträger 5' und dem Rahmenelement 2a ist in der gezeigten Ausführungsform umlaufend gezeigt, es ist allerdings auch möglich, dass die Schnittstelle 25 beziehungsweise die Schnittstellengeometrie nur abschnittweise an den Seiten und/oder dem freien beziehungsweise hinteren Ende des Kopfteils 2 ausgebildet ist.

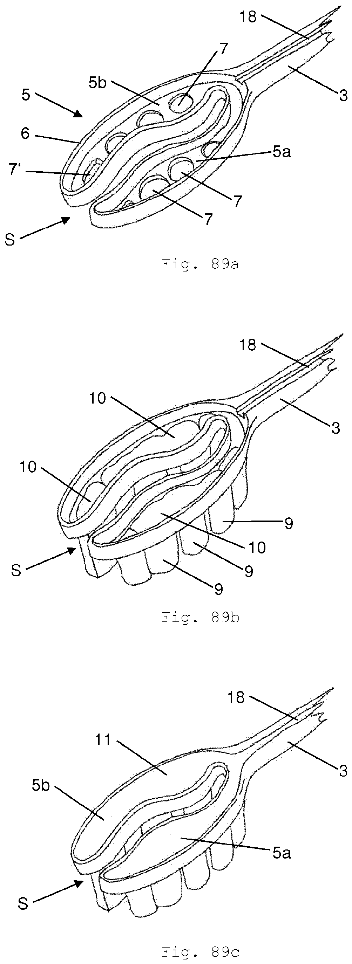

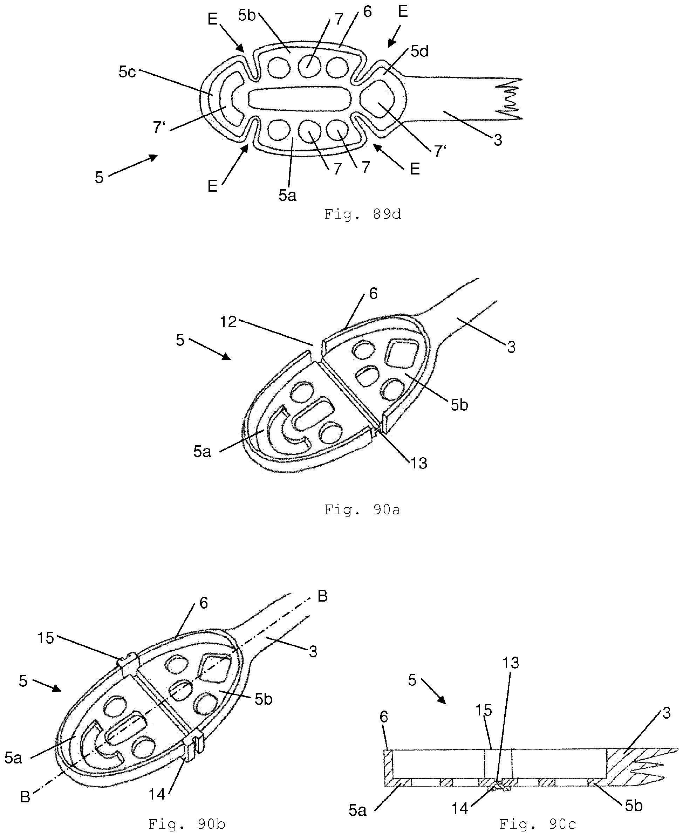

In den **Fig. 89a bis 89c** **sowie in** **Fig. 89d** werden nun verschiedene Borstenträgervarianten dargestellt, welche in der Regel einstückig mit dem Grundkörper hergestellt sind. Der in der **Fig. 89a** gezeigte Borstenträger 5 weist einen Spalt S auf, welcher beispielsweise wellenförmig vom freien Ende des Borstenträgers bis beinah zu dessen rückwärtigem Ende hin verläuft und den Borstenträger 5 so in zwei Borstenträgerteilsegmente 5a und 5b bzw. Flügel teilt. In den Borstenträgerteilsegmenten 5a, 5b sind wiederum Borstenlöcher 7 beziehungsweise Öffnungen 7' für Borstenbündel 9 bzw. Borstenbündel 9" vorgesehen. Auch hier werden die rückwärtigen Borstenenden etwa mittels eines Heizstempels aufgeschmolzen, sodass sich entsprechende Schmelzteppiche 10 bilden, welche anschliessend wiederum mit Abdeckmaterial 11 überspritzt werden (vgl. **Fig. 89b und 89c****).** Auch in dieser Ausführungsform kann wiederum das Abdeckmaterial über einen Kanal 18 im Halsteil 3 bis in das Griffteil 4 verlaufen. Es können allerdings auch zwei oder mehr Spalte vorgesehen sein. Der bzw. die Spalte können auch gerade, zackenförmig oder zinnenförmig verlaufen, je nachdem was für ein Grad an Flexibilität gewünscht bzw. benötigt wird. Es besteht auch die Möglichkeit, dass im Spalt flexible Stege angeordnet sind, welche die einzelnen Teilsegmente miteinander verbinden.

In der Ausführungsform gemäss **Fig. 89d** weist der Borstenträger 5 vier schräg nach innen gerichtete Einkerbungen E auf, welche dem Borstenträger 5 eine Kleeblatt-förmige Gestalt verleihen und ihn entsprechend in die vier Teilsegmente 5a, 5b, 5c und 5d aufteilen. Dabei sind die seitlichen Borstenträgerteilsegmente 5a und 5b (mit den Borstenlöchern 7) etwas grösser ausgebildet als das vordere Borstenträgerteilsegment 5c (mit dem gebogenen Öffnung 7') beziehungsweise das hintere Borstenträgerteilsegment 5d (mit der etwa rechteckigen Öffnung und welches in das Halsteil 3 übergeht). Durch die flügelartige Ausbildung der «freien» Borstenträgerteilsegmente 5a, 5b und 5c wird wiederum eine besondere Flexibilität des Borstenträgers 5 bereitgestellt, welche in der Anwendung zu verbesserten Reinigungseffekten führt. Die Einkerbungen E können dabei auch unterschiedlich lang ausgeführt werden. Des Weiteren können die Einkerbungen E auch noch stärker nach innen gerichtet sein, so dass sie sich etwa im Zentrum des Borstenträgers 5 schneiden.

In den **Fig. 90a bis 90c** wird eine Borstenträgervariante veranschaulicht, bei der ein Filmscharnier beziehungsweise ein Bereich mit verringerter Materialdicke vorhanden ist und weiter auch der Begrenzungsrand unterbrochen ist.

Das Filmscharnier 13 teilt dabei, wie in **Fig. 90a** zu sehen, den Borstenträger 5 in ein vorderes Borstenträgerteilsegment 5a und ein hinteres Borstenträgerteilsegment 5b. Im Bereich des Filmscharniers 13 weist der Begrenzungsrand 6 des Borstenträgers 5 Unterbrechungen 12 auf, damit die entsprechende Flexibilität, welche mittels des Filmscharniers 13 bereitgestellt wird, voll zum Tragen kommt. Das Filmscharnier 13 kann auf seiner Ober- wie auch auf seiner Unterseite mit Abdeckmaterial versehen sein, welches, wie in etwa **Fig. 90b** zu sehen, auch im Bereich der Unterbrechung 12 im Begrenzungsrand vorhanden sein kann und dort z.B. seitliche Dämpfungselemente 15 ausbildet. Sichtbar ist, in Fig. 6b, dass das Filmscharnier 13 nur auf der Vorderseite bereits mit Weichmaterial überdeckt ist. Auf der Rückseite kann ebenfalls eine Überdeckung vorgesehen werden, beispielsweise mit dem Safety- oder dem Forming-Shot. **Fig. 90c** zeigt eine seitliche Schnittansicht dieser Ausführungsform entlang der Linie C -C in Fig. 6b. Gut erkennbar ist das Filmscharnier 13, welches auf der Vorderseite mit Weichmaterial 14 überdeckt ist und auf der Rückseite (noch) nicht mit Weichmaterial überdeckt ist.

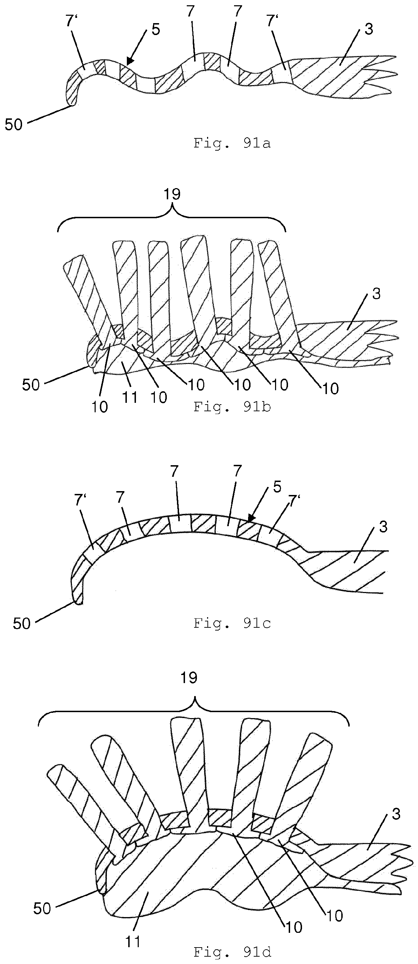

In den **Fig. 91a bis 91d** werden weitere Ausführungsformen für Borstenträger gezeigt mit verschiedenen Längsprofilen im Querschnitt. So weist der in **Fig. 91a** gezeigte Borstenträger 5 ein gewelltes Längsprofil auf mit Borstenlöcher 7 beziehungsweise Öffnungen 7', welche sowohl in den Hügeln als auch den Tälern der Wellenstruktur (sowie dazwischen) angeordnet sein können. Die hinterste Öffnung 7' ist hier fast bereits im Halsteil 3 angeordnet. Manche der Borstenlöcher 7 beziehungsweise Öffnungen 7' weisen eine Schrägstellung auf, was wie in **Fig. 91b** zu sehen, zu einem Borstenfeld 19 führt, welches nach vorne geneigte Borstenbündel beziehungsweise Borstenbündel aufweist sowie geradestehende Borstenbündel und gegebenenfalls auch rückwärts geneigte Borstenbündel aufweist. Das freie Ende 50 des Borstenträgers 5 ist vorliegend nach unten gebogen, d.h. zur Rückseite des Borstenträgers 5 hin. Ausführungsformen mit nach oben gebogenen freien Ende 50 sind denkbar.

Gemäss **Fig. 91b** ist auch das Abdeckmaterial 11 auf der Rückseite des Borstenträgers 5 gewellt ausgeführt und steht etwas über das freie Ende 50 des Borstenträgers 5 hinaus. Entsprechend bildet natürlich auch die Borstenschmelze 10 beziehungsweise die einzelnen Schmelzteppiche 10 ein in Längsrichtung gewelltes Profil aus. Das Abdeckmaterial 11 ist vorzugsweise, wie zu sehen, bis in das Halsteil 3 (sowie ggf. den Griffteil) gezogen.

**Fig. 91c** zeigt eine weitere Ausführungsform eines Borstenträgers 5 mit einem anderen Längsprofil. Hier ist die Vorderseite des Borstenträgers 5 konvex gewölbt, sodass sich wie in **Fig. 91d** veranschaulicht, eine Igel-förmige Anordnung für das Borstenfeld 19 ergibt. Das heisst die Borstenbündel beziehungsweise Borstenbündel, welche in Längsrichtung gesehen zum Halsteil 3 hin angeordnet sind, weisen eine Rückwärts-Neigung auf, wohingegen die zum freien Ende 50 des Borstenträgers 5 hin angeordneten Borstenbündel eine Vorwärtsneigung aufweisen und die im mittleren Bereich des Borstenträgers 5 angeordneten Borstenbündel stehen im Wesentlichen senkrecht vom Borstenträger 5 ab. Seitlich betrachtet passiert dasselbe - Borstenbündel, welche in Querrichtung gesehen links von der Längsachse angeordnet sind, weisen eine Neigung nach links auf, wohingegen die in Querrichtung gesehen rechts von der Längsachse angeordnet sind, eine Neigung nach rechts aufweisen. Im mittleren Bereich d.h. im Bereich der Längsachse angeordnete Borstenbündel stehen im Wesentlichen senkrecht vom Borstenträger 5 ab Die Borstenschmelze beziehungsweise Borstenschmelzteppiche 10 weisen in Längsrichtung gesehen ein entsprechend gewölbtes Profil auf. Auch hier steht das Abdeckmaterial 11 über das freie Ende 50 des Borstenträgers 5 hinaus und weist ein gewelltes Längsprofil auf. Die wellenförmige Ausführung des Abdeckmaterials kann beispielsweise als Zungenreiniger oder als Massageelement dienen.

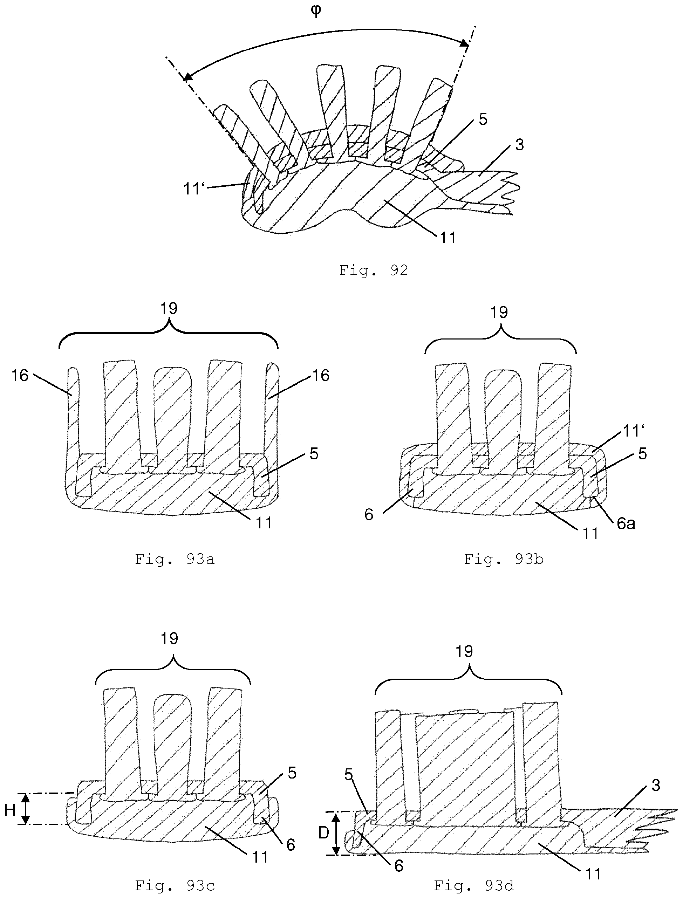

In **Fig. 92** wird mit dem Winkel ϕ der Winkelbereich angegeben, in welchem das Borstenfeld 19, wie auch in Fig. 7d, vorzugsweise angeordnet ist. Die bevorzugten Werte sind für den Winkel ϕ sind in der vorstehenden allgemeinen Beschreibung angegeben. Der Unterschied zu der Ausführungsform gemäss **Fig. 91d** besteht darin, dass hier auf der Vorderseite des Borstenträgers 5 ein (zusätzliches) Abdeckmaterial 11' vorgesehen ist, welches regelmässig vor der Beborstung aufgebracht wird. Hierbei kann es sich wiederum um eine Weich- und/oder Hartmaterialkomponente handeln. Vorzugsweise wird allerdings eine Weichmaterialkomponente verwendet. Das Abdeckmaterial 11' reicht vom Halsteil 3 bis fast zum freien Ende des Borstenträgers 5. Allerdings ist hier das wiederum wellenförmig aufgebrachte Abdeckmaterial der Rückseite auch um das freie Ende 50 des Borstenträgers 5 herumgespritzt, so dass es auf der Vorderseite des Borstenträgers mit dem Abdeckmaterial 11 der Rückseite zusammenkommt. Das Abdeckmaterial 11 ist vorzugsweise, wie zu sehen, bis in das Halsteil 3 (sowie ggf. das Griffteil) gezogen.

Weitere Anordnungsvarianten für das Abdeckmaterial auf der Vorder- beziehungsweise Rückseite eines Borstenträgers 5 werden in den **Fig. 93a bis 93d** gezeigt. In der Ausführungsform gemäss **Fig. 93a** bildet das Abdeckmaterial 11 der Rückseite an den Seitenflächen des Borstenträgers 5 längliche Reinigungselemente 16 aus, welche ähnlich weit wie die einzelnen Borstenbündel vom Borstenträger 5 abstehen und das Borstenfeld 19 insoweit ergänzen. In der Ausführungsform gemäss **Fig. 93b** erstreckt sich das Abdeckmaterial 11' der Vorderseite bis auf die Unterkante 6a des Begrenzungsrandes 6 längs des Borstenträgers 5, wo es mit dem Abdeckmaterial 11 der Rückseite zusammenkommt. Beide Abdeckmaterialien 11 beziehungsweise 11'stehen also über den Begrenzungsrand hervor, sodass eine vollständige Umhüllung des Borstenträgers 5 ausgebildet wird.

Die **Fig. 93c** veranschaulicht eine Ausführungsform, bei der das Abdeckmaterial 11 der Rückseite um den Begrenzungsrand 6 des Borstenträgers herumgespritzt bzw. -gezogen ist und zwar etwa bis zur Rückseite des Borstenträgers. Auf diese Weise kann ein umlaufendes seitliches Dämpfungselement gebildet werden. Es können auf diese Weise aber auch mehrere voneinander beabstandete seitliche Dämpfungselemente ausgebildet werden. Diese dienen dem Schutz des Mundgewebes, können aber auch eine Reinigungs- und/oder Massagefunktion übernehmen.

Die **Fig. 93d** zeigt entsprechend einen Längsschnitt der Ausführungsform gemäss **Fig. 93c****,** wobei man erkennt, dass das Abdeckmaterial 11 der Rückseite auch am freien Ende 50 des Borstenträgers bis etwa zur halben Höhe D des Kopfteils gezogen ist und dort ein vorderes Dämpfungselement ausbildet beziehungsweise mehrere voneinander beabstandete Dämpfungselemente. Auch hier ist wiederum das Abdeckmaterial 11 bis in das Halsteil 3 (und ggf. das Griffteil 4) hineingezogen.

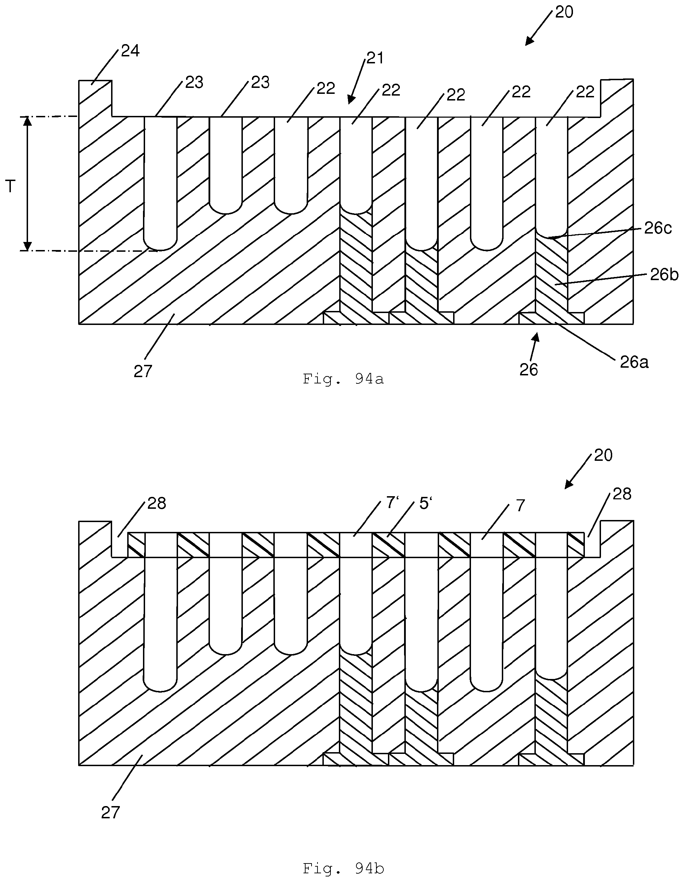

In den **Fig. 94a bis 94e** wird schliesslich noch ein Werkzeug (Stanz-/Spritzgiesswerkzeug) zur Herstellung eines Bürstenproduktes veranschaulicht.

In **Fig. 94a** wird eine erste Werkzeughälfte 20 gezeigt, welche einen Werkzeugkörper 27 aufweist. An der Oberseite weist die erste Werkzeughälfte 20 bzw. der Werkzeugkörper 27 einen Rand 24 auf, welcher eine Einlegeaussparung 21 definiert, in welche später ein Borstenträger zum Zwecke der Beborstung eingelegt werden kann. Im Bereich der Einlegeaussparung 21 sind mehrere Borstenausnehmungen 22 in den Werkzeugkörper 27 eingebracht. Die Borstenausnehmungen 22 weisen jeweils entsprechende Borsteneinlassöffnungen 23 auf. Die Borstenausnehmungen 22 können jeweils unterschiedliche Tiefen T aufweisen, damit entsprechende Borstenprofile herstellbar sind. Um die Variabilität der ersten Werkzeughälfte zu erhöhen, können alle oder zumindest einige der Borstenausnehmungen 22 durchgehend ausgebildet sein, wobei bei diesen durchgehenden Borstenausnehmungen dann von der Unterseite der ersten Werkzeughälfte 20 her Stifte 26 eingesetzt werden können, um die Tiefe der so gebildeten Borstenausnehmungen variabel gestalten zu können. Die Stifte 26 umfassen jeweils einen Stiftkopf 26a sowie einen in der Länge variabel gestaltbaren Stiftschaft 26b. Das freie Stiftende 26c weist beispielsweise eine konkave Rundung zur Aufnahme der entsprechenden Borstenbündel auf. Der Stiftkopf 26a korrespondiert vorzugsweise mit entsprechenden Ausnehmungen im Werkzeugkörper 27, so dass die Stifte bündig mit der Unterseite der ersten Werkzeughälfte abschliessen.

In **Fig. 94b** wurde nun ein Borstenträger 5' (hier beispielhaft ein separat vom Griff hergestellter Borstenträger, das Werkzeug ist aber ebenso einsetzbar für die Variante mit einstückig hergestelltem Grundkörper) in der Einlegeaussparung 21 platziert. Die entsprechenden Borstenlöcher bzw. Öffnungen 7, 7' fluchten mit den Borsteneinlassöffnungen 23 der Borstenausnehmungen 22. An den Seiten links und rechts verbleiben vorzugsweise jeweils freie Bereiche 28 der Einlegeaussparungen 21. Dies ist insbesondere dann der Fall, wenn der Borstenträger 5' an den Seiten mit Abdeckmaterial umspritzt werden soll.

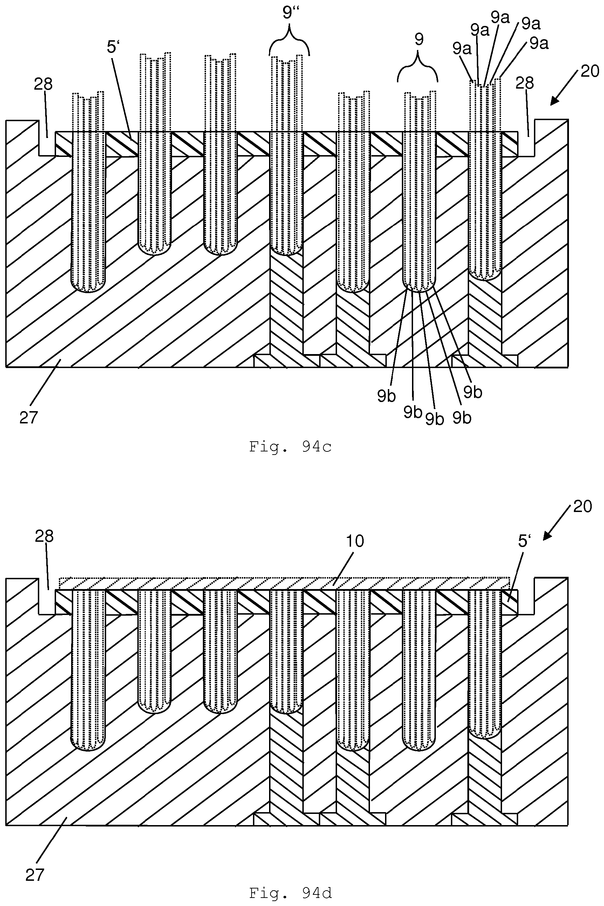

In **Fig. 94c** sind nun die durch die (lediglich beispielhaft gewählten) Borstenlöcher bzw. Öffnungen 7, 7' im Borstenträger 5' hindurch in die Borstenausnehmungen 22 eingeführten Borstenbündel 9" bzw. Borstenbündel 9 zu sehen. Die Befestigungsenden 9a stehen dabei über die Oberfläche des Borstenträgers 5' hervor. Die freien Enden 9b der einzelnen Borsten 9' sind in den konkaven Rundungen der Stifte 26 innerhalb der Borstenausnehmungen 22 aufgenommen.

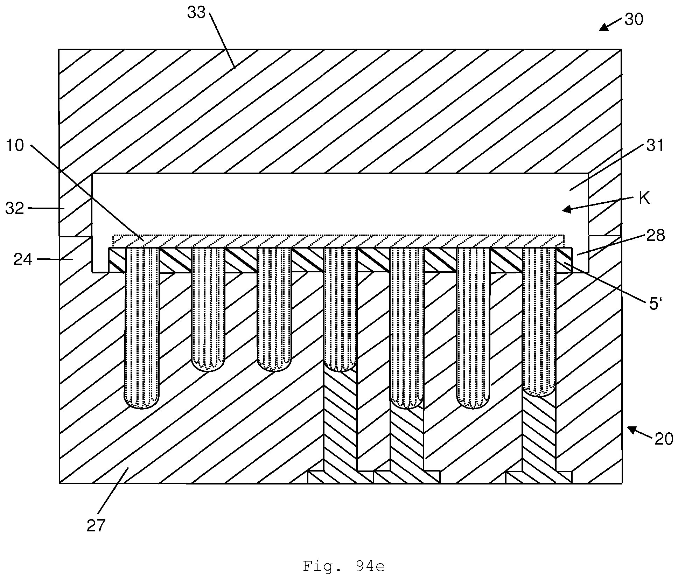

In **Fig. 94d** wurden nun etwa mittels eines Heizstempels die (rückwärtigen) Borstenbefestigungsenden 9a auf die Oberseite des Borstenträgers 5' aufgeschmolzen, so dass der Schmelzteppich 10 gebildet wurde. Anschliessend wird - wie in **Fig. 94e** gezeigt - eine zweite Werkzeughälfte 30 auf die erste Werkzeughälfte 20 aufgebracht. Die zweite Werkzeughälfte 30 umfasst einen Werkzeugkörper 33 und definiert einen Hohlraum 31, welcher zusammen mit den freien Bereichen 28 der ersten Werkzeughälfte die Spritzgiesskavität K ausbildet. Der Rand 32 der zweiten Werkzeughälfte schliesst vorzugsweise bündig mit dem Rand 24 der ersten Werkzeughälfte ab.

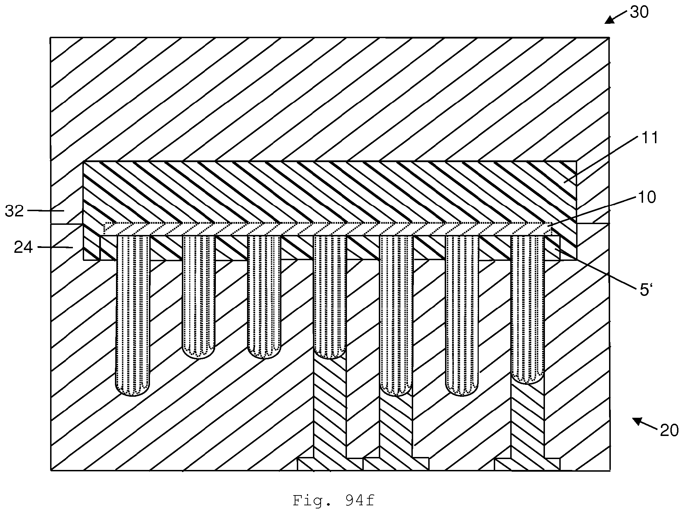

Wie in **Fig. 94f** gezeigt, wird nun in einem Spritzgiessschritt das Abdeckmaterial 11 für die Rückseite in die Spritzgiesskavität K eingespritzt, welches die Spritzgiesskavität K vollständig ausfüllt, wobei der Schmelzteppich 10 sowie die Seiten des Borstenträgers 5' von dem Abdeckmaterial 11 umgeben sind. Der Borstenträger 5' bzw. das Kopfplättchen ist nun fertig und kann aus dem Werkzeug 20, 30 entnommen werden. Das Werkzeug 20, 30 ist für beide Varianten (separat hergestellter Borstenträger bzw. Grundkörper sowie einstückig hergestellter Grundkörper) einsetzbar, gegebenenfalls mit entsprechenden Modifikationen zur Aufnahme bzw. zum Anspritzen eines Halsteils.

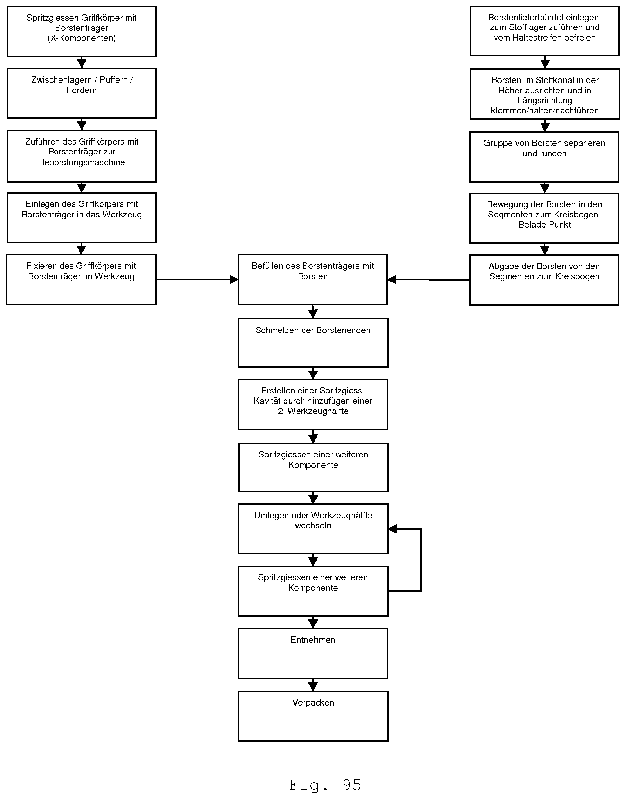

In **Fig. 95** wird ein Ablaufschema für die Variante des Verfahrens dargestellt, bei der der Grundkörper (bzw. der Griffkörper) des Bürstenproduktes zusammen mit dem Borstenträger gespritzt wird (d.h. einstückig). Für weitere Details und Optionen hinsichtlich der einzelnen Verfahrensschritte bzw. Parameter wird auf die obige allgemeine Beschreibung verwiesen.

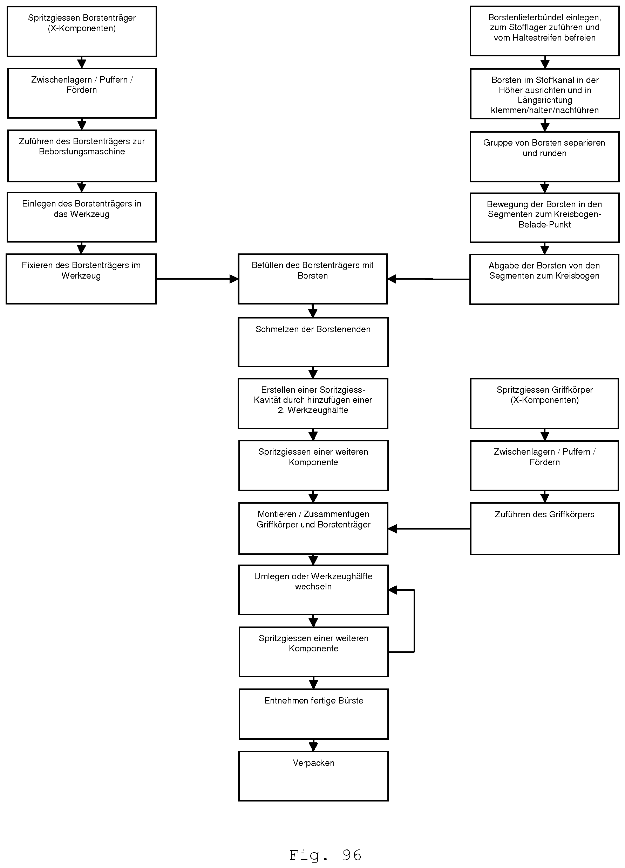

Die **Fig. 96** zeigt schliesslich ein Ablaufschema für das Verfahren mit der Variante, bei der der Grundkörper (bzw. Griffkörper - beide Begriffe sind vorliegend synonym verwendbar) des Bürstenproduktes und der Borstenträger getrennt voneinander (d.h. in zunächst zwei separaten Teilen) hergestellt werden. Bezüglich weiterer Details und Optionen hinsichtlich der einzelnen Verfahrensschritte bzw. Parameter wird wiederum auf die obige allgemeine Beschreibung verwiesen.

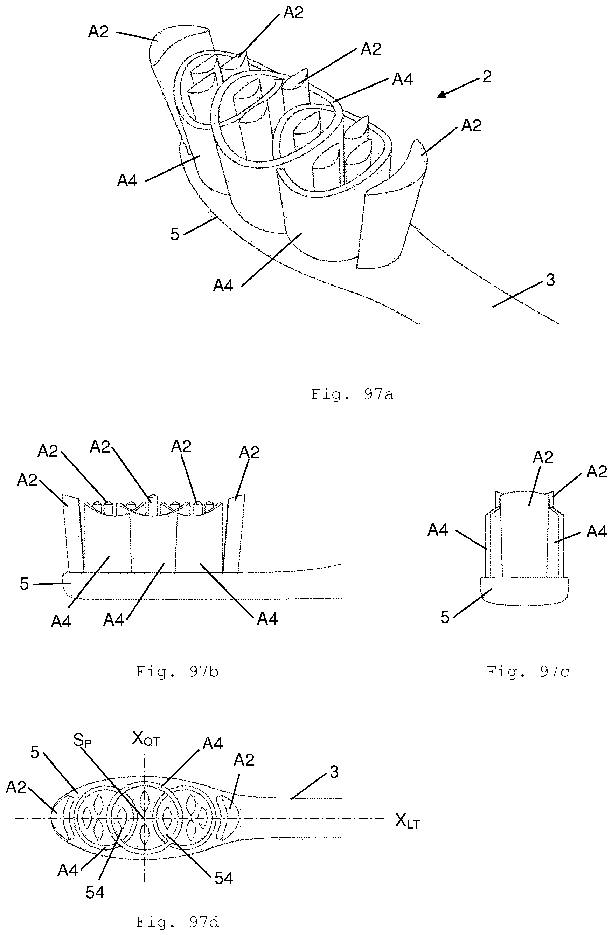

Die Ausführungsform gemäss **Fig. 97a** - **d** betrifft generell Borstenträger, bei welchen oben und unten je ein Puck-Bündel A2 angeordnet ist und dazwischen ineinander verschränkte Raster-Bündel A4 angeordnet sind, welche zusätzlich mit einem oder mehreren Puck-Bündeln A2 gefüllt sein können.

**Fig. 97a** zeigt eine perspektivische Ansicht eines Kopfteils 2 für eine manuelle Zahnbürste oder für eine Schallzahnbürste, welches einen Borstenträger 5 und ein Halsteil 3 umfasst. Wie in der Draufsicht gemäss **Fig. 97d** zu sehen, weist der Borstenträger 5 (wie auch in den vorherigen Ausführungsformen) eine Längsachse X_{LT} und eine Querachse X_{QT} auf. Die beiden Achsen schneiden sich in dem Schnittpunkt S_{P}. Links von der Längsachse X_{LT} liegt im Wesentlichen der linke Trägerbereich, rechts von der Längsachse X_{LT} liegt im Wesentlichen der rechte Trägerbereich, oberhalb der Querachse X_{QT} liegt im Wesentlichen der obere Trägerbereich und unterhalb der Querachse X_{QT} liegt im Wesentlichen der untere Trägerbereich. Um den Schnittpunkt Sp der beiden Achsen herum wird im Wesentlichen der zentrale Trägerbereich aufgespannt.

Es versteht sich, dass die einzelnen Trägerbereiche Überschneidungen aufweisen und so feiner unterteilt werden können, etwa in den linken oberen, den linken mittleren, den linken unteren, den rechten unteren, den rechten mittleren sowie den rechten oberen Trägerbereich.

Der zentrale Trägerbereich kann sich je nach Einzelfall auch in den oberen, den unteren sowie den rechten und linken Trägerbereich ausdehnen. Der zentrale Trägerbereich kann aber auch zusammengestaucht ausgeprägt sein, wenn etwa im oberen und unteren Trägerbereich grossflächige Bündelgruppen angeordnet sind. Genauso kann der zentrale Bereich auch längs gestaucht werden, wenn etwa im linken und rechten Trägerbereich grossflächige Bündelgruppen angeordnet sind.

Diese Ausführungen gelten für alle in den folgenden Figuren gezeigten Ausführungsformen für die Borstenträger. Die gezeigten Bündel in den Figuren können in Form und Grösse abweichen ohne den Rahmen der Erfindung zu verlassen. Wesentlich für eine optimale Reinigungs- und Pflegeleistung ist die entsprechende Anordnung.

Der in den **Fig. 97a** - **d** gezeigte Borstenträger 5 weist im oberen sowie im unteren Trägerbereich jeweils ein bogenförmiges Puck-Bündel A2 auf. Zwischen den beiden Puck-Bündeln A2 ist zentral ein Raster-Bündel A4 angeordnet, welches aus drei Raster-Bündel-Strukturelementen in Form von drei ineinander verschränkten Ringen gebildet ist. Der zentral angeordnete Ring des Raster-Bündels A4 weist dabei den grössten Durchmesser auf und bildet jeweils einen Überschneidungsbereich 54 mit dem im oberen sowie mit dem im unteren Trägerbereich angeordneten Ring. Der obere und der untere Ring bilden keinen Überschneidungsbereich miteinander. Ausführungsformen, bei denen auch der obere und der untere Ring des Rasterbündels A4 einen Überschneidungsbereich bilden sind allerdings denkbar. Im unteren Ring des Raster-Bündels A4 sind insgesamt vorzugsweise vier weitere Puck-Bündel A2 angeordnet, wobei eines dieser Puck-Bündel A2 im Überschneidungsbereich mit dem mittleren Ring angeordnet ist. Auch im oberen Ring des Raster-Bündels A4 sind insgesamt vorzugsweise vier weitere Puck-Bündel A2 angeordnet, wobei eines dieser Puck-Bündel A2 wiederum im Überschneidungsbereich 52 mit dem mittleren Ring angeordnet ist. Im mittleren Ring sind ebenfalls bevorzugt vier weitere Puck-Bündel A2 angeordnet, wobei je eines davon im Überschneidungsbereich 52 mit dem oberen bzw. mit dem unteren Ring angeordnet ist. Die insgesamt vorzugsweise zehn weiteren Puck-Bündel A2 weisen eine im Wesentlichen elliptische Form auf.

In der Seitenansicht gemäss **Fig. 97b** erkennt man, dass die drei Ringe des Raster-Bündels A4 seitlich entlang ihrer Oberkante eine konkave Wölbung aufweisen, wobei die von ihnen umschlossenen weiteren Puck-Bündel A2 teilweise über die Oberkante der Ringe hervorragen. Dabei ragen die im mittleren _Ring mittig angeordneten weiteren Puck-Bündel A2 am weitesten hervor. Die im oberen und unteren Trägerbereich angeordneten bogenförmigen Puck-Bündel A2 sind gemäss der Seitenansicht nach **Fig. 97b** nach innen abgeschrägt.

In der Vorderansicht gemäss **Fig. 97c** erkennt man, dass die Puck-Bündel A2 im mittleren Ring etwas breiter ist als das obere bogenförmige Puck-Bündel A2. Des Weiteren erkennt man wiederum, dass der mittlere Ring einen grösseren Durchmesser aufweist als der obere Ring. Das obere und das untere bogenförmige Puck-Bündel stehen jeweils über das Raster-Bündel A4 sowie vorzugsweise über die weiteren Puck-Bündel A2 hervor oder sind zumindest gleich hoch.

Die Ausführungsform gemäss **Fig. 98a** **- d** betrifft generell Borstenträger mit einem Puck-Bündeln A2 im oberen sowie einem Puck-Bündel A2 im unteren Trägerbereich, wobei diese Puck-Bündel A2 die äussere Schale des Borstenfeldes darstellen. Es folgen Lange Bündel A5 in verschiedenen Formen sowie im Zentrum ein Raster-Bündel A4, wobei jedenfalls in manchen Leerräumen des Raster-Bündels A4 Konventionelle Bündel A6 eingebracht sein können.

Der in den **Fig. 98a** - **d** gezeigte erfindungsgemäße Borstenträger 5 weist im oberen sowie im unteren Trägerbereich jeweils ein bogenförmiges, an der Innenseite jeweils eingekerbtes, Puck-Bündel A2 auf. Zwischen den beiden Puck-Bündeln A2 ist wiederum zentral ein wabenförmiges Raster-Bündel A4 angeordnet, welches vorliegend vorzugsweise aus neun sechseckigen Raster-Bündel-Strukturelementen gebildet ist. In Längsrichtung gesehen weist dieses Raster-Bündel A4 ein, zwei, drei, zwei und ein Sechseck(e) auf. Die Sechsecke sind an den Seiten miteinander verbunden und überschneiden sich nicht. Die Wabenstruktur des Raster-Bündels A4 ist spiegelsymmetrisch zur Querachse X_{QT} sowie zur Längsachse X_{LT} des Borstenträgers 5 angeordnet, wobei die jeweils zwei bzw. die drei Sechsecke quer nebeneinander angeordnet sind. Zwischen dem oberen und dem unteren Puck-Bündel A2 und dem Raster-Bündel A4 sind zwei pfeilspitzenförmigen Lange Bündel A5 angeordnet, welche jeweils mit der Einkerbung des oberen bzw. des unteren Puck-Bündels A2 korrespondieren. Vier weitere Lange Bündel A5, welche in etwa S- oder blitzförmig ausgebildet sind, sind jeweils in den freien Bereichen seitlich neben dem Raster-Bündel A4 angeordnet. In dem mittleren linken sowie in dem obersten und untersten Sechseck des Raster-Bündels A4 sind jeweils Konventionelle Bündel A6 angeordnet. Es können aber auch in allen sechseckigen Raster-Bündel-Strukturelementen Konventionelle Bündel A6 vorgesehen sein.

Wie in der Seitenansicht gemäss **Fig. 98b** zu sehen, sind die beiden Puck-Bündel A2 jeweils nach innen abgeschrägt. Auch die S- oder blitzförmigen Langen Bündel A5 sind jeweils nach innen abgeschrägt, wohingegen das Raster-Bündel A4 ein dachartiges seitliches Profil aufweist. Die Konventionellen Bündel A6 stehen über das Raster-Bündel A6 sowie über die Langen Bündel A5 hervor und können an ihrem freien Ende zugespitzt sein.

In der Vorderansicht gemäss **Fig. 98c** sind das obere Puck-Bündel A2, die beiden oberen S- oder blitzförmigen Langen Bündel A5, die Spitzen der Konventionellen Bündel A6 sowie ein Teil des dachförmigen Profils des Raster-Bündels A4 zu sehen.

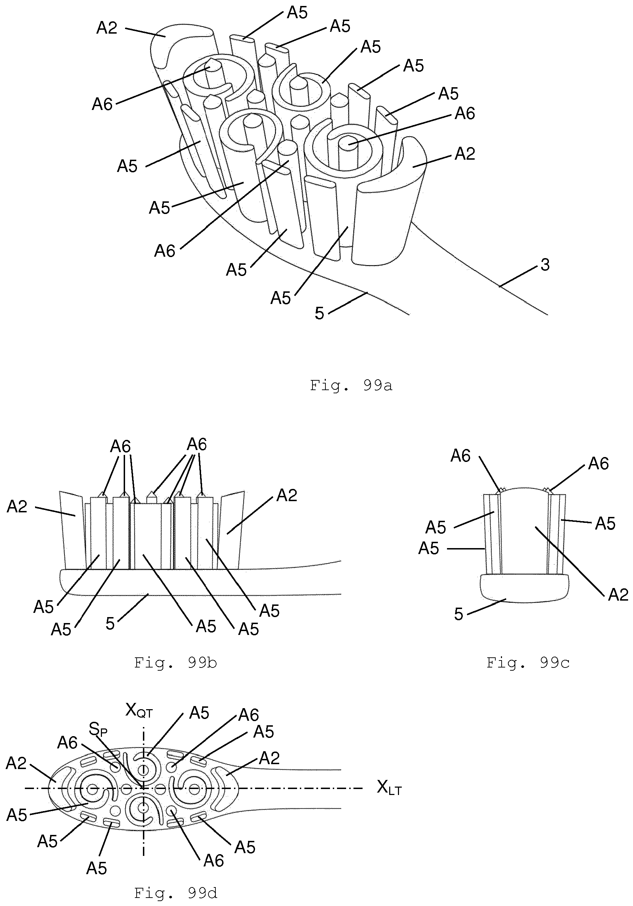

Die Ausführungsform gemäss **Fig. 99a** - **d** betrifft generell Borstenträger mit einem Puck-Bündel A2 oben und unten sowie mit ein paar Langen Bündeln A5, welche den äusseren Ring des Borstenfeldes bilden. Weitere spiralförmig geschwungene Lange Bündel A5 mit einem Konventionellen Bündel A6 im Zentrum bilden weitere Elemente, zwischen denen weitere Konventionelle Bündel A6 angeordnet sein können.

Der Borstenträger 5 gemäss den **Fig. 99a** - **d** weist im oberen sowie im unteren Trägerbereich jeweils ein bogenförmiges Puck-Bündel A2 auf. Zwischen den beiden Puck-Bündeln A2 sind mehrere Lange Bündel A5 in Form von elliptischen Zylindern, mehrere spiralförmig gewundene Lange Bündel A5 sowie mehrere Konventionelle Bündel A6 vorgesehen.

Jeweils zwei Lange Bündel A5 in Form von elliptischen Zylindern sind dabei entlang der seitlichen Ränder des Borstenträgers 5 im oberen rechten und linken sowie im unteren rechten und linken Bereich des Borstenträgers 5 angeordnet. Oberhalb des unteren Puck-Bündels A2 sowie unterhalb des oberen Puck-Bündels A2 ist jeweils ein spiralförmig gewundenes Langes Bündel A5 angeordnet, welches jeweils ein Konventionelles Bündel A6 umschliesst. Diese beiden spiralförmig gewundenen Langen Bündel A5 sind in etwa punktsymmetrisch zum Schnittpunkt S_{P} angeordnet.

Um die spiralförmig gewundenen Langen Bündel A5 herum sind - zum mittleren Bereich des Borstenträgers 5 hin - jeweils noch drei Konventionelle Bündel 6 vorgesehen. Dazwischen, im mittleren Bereich des Borstenträgers 5, sind nebeneinander zwei weitere spiralförmig gewundene Lange Bündel A5 angeordnet, welche jeweils wiederum ein Konventionelles Bündel A6 umschliessen. Diese beiden spiralförmig gewundenen Langen Bündel A5 sind in etwa punktsymmetrisch zum Schnittpunkt S_{P} angeordnet.

In der Seitenansicht gemäss **Fig. 99b** erkennt man, dass die beiden Puck-Bündel A2 nach innen abgeschrägt sind. Die Langen Bündel A5 in Form von elliptischen Zylindern sind etwa länger als die spiralförmig gewundenen Langen Bündel A5. Die Spitzen der Konventionellen Bündel A6 stehen etwas über die Langen Bündel A5 in Form von elliptischen Zylindern hervor.

Die Vorderansicht gemäss **Fig. 99c** zeigt das obere Puck-Bündel A2, die Langen Bündel A5 in Form von elliptischen Zylindern sowie die Spitzen der seitlich von der Längsachse X_{LT} gelegenen Konventionellen Bündel A6.

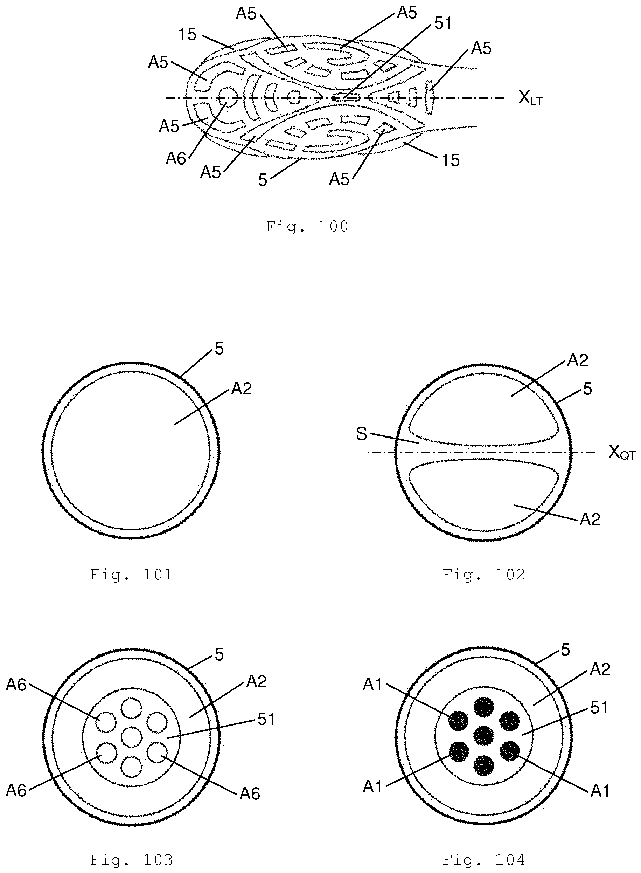

Die Ausführungsform gemäss **Fig. 100** betrifft generell Borstenträger, welche Kombinationen von verschiedenartig geformten Langen Bündeln A5 aufweist, welche von einem mittelkreuzartigen Element unterteilt werden und eine insgesamt symmetrische Anordnung aufweisen.

Der in **Fig. 100** gezeigte Borstenträger 5 weist eine Kombination von verschiedenen Langen Bündeln A5 auf. Im Wesentlichen zentral auf dem Borstenträger 5 angeordnet ist dabei ein X-förmiges Langes Bündel A5 mit vorzugsweise einem Freiraum 51 in der Mitte. Entlang der bogenförmigen Seitenwände des X-förmigen Langen Bündels A5 sind mehrere einzelne Lange Bündel A5 mit rechteckiger Form spiegelsymmetrisch zur Längsachse X_{LT} des Borstenträgers 5 angeordnet. Zwischen diesen vorzugsweise fünf rechteckigen Langen Bündeln A5 und dem Seitenrand des Borstenträgers ist jeweils noch ein hakenförmiges Langes Bündel A5 angeordnet, wobei auch die beiden hakenförmigen Langen Bündel A5 spiegelsymmetrisch zur Längsachse X_{LT} des Borstenträgers 5 angeordnet sind.

Im unteren Trägerbereich, d.h. im Bereich der unteren Einkerbung des X-förmigen Langen Bündels A5 sind bevorzugt quer zur Längsachse X_{LT} drei weitere rechteckförmige Lange Bündel A5 mit in Richtung des unteren Borstenträgerendes zunehmender Breite angeordnet. Im oberen Trägerbereich, d.h. im Bereich der oberen Einkerbung des X-förmigen Langen Bündels A5 sind ebenfalls bevorzugt quer zur Längsachse X_{LT} drei im Wesentlichen rechteckförmige Lange Bündel A5 mit in Richtung des oberen Borstenträgerendes zunehmender Breite angeordnet. Diese Langen Bündel A5 können ggf. eine leichte Krümmung aufweisen. Am oberen Ende des Borstenträgers 5 sind, spiegelbildlich zur Längsachse X_{LT} zwei gebogene Lange Bündel A5 angeordnet, welche ein kreisförmiges oder ovales Langes Bündel A5 einschliessen. An den Seitenrändern des Borstenträgers 5 sind des Weiteren bevorzugt Dämpfungselemente bzw. Stossdämpfer 15 aus Weichmaterial vorgesehen.

Vorliegend könnten allerdings kleinere Lange Bündel A5 beispielsweise im vorderen Bereich, im mittleren Bereich, in den hinteren seitlichen Bereichen oder im hinteren mittleren Bereich auch als Konventionelle Bündel ausgeführt werden.

In den **Fig. 101** - **115** werden runde Borstenträger 5 für oszillierende elektrische Zahnbürsten gezeigt.

Die Ausführungsform gemäss **Fig. 101** betrifft generell Borstenträger mit einem Puck-Bündel A2.

Der in **Fig. 101** gezeigte Borstenträger weist dabei ein grosses rundes Puck-Bündel A2 auf, welches beinahe die gesamte Oberfläche des Borstenträgers 5 bedeckt.

Die Ausführungsform gemäss **Fig. 102** betrifft generell Borstenträger mit zwei Puck-Bündeln A2 und einem Spalt S dazwischen.

Der in **Fig. 102** gezeigte Borstenträger weist zwei im Wesentlichen nierenförmige Puck-Bündel A2 auf, welche spiegelbildlich zur Querachse X_{QT} des Borstenträgers 5 angeordnet sind. Zwischen den beiden Puck-Bündeln A2 wird ein Spalt S gebildet.

Die Ausführungsform gemäss **Fig. 103** betrifft generell Borstenträger mit einem Ring aus einem Puck-Bündel A2 mit darin eingelassenen weiteren Elementen, wie beispielsweise Konventionellen Bündeln A6 oder Mini-Bündeln A3.

Der Borstenträger 5 nach **Fig. 103** weist ein ringförmiges Puck-Bündel A2 auf, welches einen Freiraum 51 umschliesst, in welchem vorzugsweise sieben runde Bereiche mit Konventionellen Bündeln A6 sternförmig angeordnet sind. Anstelle der Konventionellen Bündel A6 können aber auch Mini-Bündel A3 vorgesehen sein.

Die Ausführungsform gemäss **Fig. 104** betrifft generell Borstenträger mit einem Ring aus einem Puck-Bündel A2 mit darin eingelassenen weiteren Elementen wie beispielsweise Weichelementen und/oder gespritzten Borsten A1. Der Borstenträger 5 gemäss **Fig. 104** weist ebenfalls ein ringförmiges Puck-Bündel A2 auf, welches einen Freiraum 51 umschliesst. In dem Freiraum 51 sind vorzugsweise sieben runde Bereiche mit Weichelementen und/oder gespritzten Borsten A1 sternförmig angeordnet.

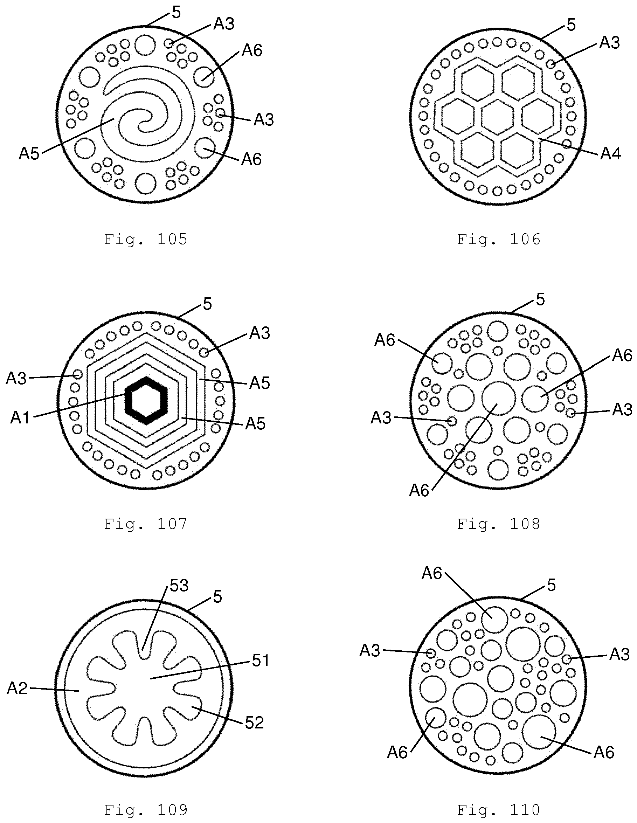

Die Ausführungsform gemäss **Fig. 105** betrifft generell Borstenträger mit einem Langen Bündel A5 in Spiralform, welches umgeben ist von Konventionellen Bündeln A6 und/oder Mini-Bündeln A3.

In **Fig. 105** wird ein Borstenträger 5 mit einem zentral angeordneten spiralförmigen Langen Bündel A5 gezeigt. Das spiralförmige Lange Bündel A5 ist umgeben von Gruppen von Mini-Bündeln A3 sowie von einzelnen Konventionellen Bündeln A6. Die Gruppen von Mini-Bündeln A3 und einzelnen Konventionellen Bündeln A6 sind dabei abwechselnd um das spiralförmige Lange Bündel A5 herum angeordnet. Die Gruppen von Mini-Bündeln A3 umfassen dabei vorzugsweise fünf Mini-Bündel. Insgesamt sind vorzugsweise sechs Konventionelle Bündel A6 vorgesehen und sechs Gruppen von Mini-Bündeln A3.

Die Ausführungsform gemäss **Fig. 106** betrifft generell Borstenträger mit einem Raster-Bündel A4 im Zentrum, welches von Mini-Bündeln umgeben ist.

In **Fig. 106** wird ein Borstenträger 5 mit einem zentral angeordneten wabenförmigen Raster-Bündel A4 gezeigt. Das Raster-Bündel A4 weist insgesamt vorzugsweise sieben sechseckige Raster-Bündel-Strukturelemente auf, wobei das zentrale Raster-Bündel-Strukturelement von sechs weiteren sechseckigen Raster-Bündel-Strukturelementen umgeben ist, so dass sich eine zusammenhängende Wabenform ergibt. Das Raster-Bündel A4 ist umgeben von einem Ring aus einzelnen Mini-Bündeln A3.

Die Ausführungsform gemäss **Fig. 107** betrifft generell Borstenträger mit mehreren ineinander liegenden Langen Bündeln A5 in Form von Sechsecken, wobei ein innerstes Element ein Weichelement und/oder gespritzten Borsten A1 mit derselben Form umfasst und wobei die ganze Struktur von Mini-Bündeln A3 umgeben ist.

In **Fig. 107** wird ein Borstenträger 5 mit einem zentral angeordneten sechseckigen Weichelement und/oder gespritzten Borsten A1 gezeigt, welches in Form einer einzelnen Wabe vorliegt. Dieses Weichelement und/oder gespritzten Borsten A1 ist umgeben von einem Langen Bündel A5, welches ebenfalls in Form einer einzelnen sechseckigen Wabe vorliegt. Dieses wiederum ist umgeben von einem weiteren Langen Bündel A5, welches ebenfalls in Form einer einzelnen sechseckigen Wabe vorliegt. Dieses weitere Langen Bündel A5ist umgeben von einem Ring aus einzelnen Mini-Bündeln A3, welcher ggf. an den Spitzen des weiteren Langen Bündels A5 unterbrochen wird.

Die Ausführungsform gemäss **Fig. 108** betrifft generell Borstenträger mit einer sternförmigen Anordnung von Konventionellen Bündeln A6, welche von Mini-Bündeln A3 ergänzt wird.

Der in **Fig. 108** gezeigte Borstenträger 5 umfasst eine sternförmige Anordnung von einzelnen Konventionellen Bündeln A6. Dabei weist das zentral auf dem Borstenträger 5 angeordnete Konventionelle Bündel A6 vorzugsweise den grössten Durchmesser auf und ist weiter vorzugsweise umgeben von sechs weiteren Konventionellen Bündeln A6 mit etwas kleinerem Durchmesser. Diese sind ihrerseits umgeben von sechs nochmals weiteren Konventionellen Bündeln A6 mit einem nochmals kleineren Durchmesser. Zwischen diesen sechs nochmals weiteren Konventionellen Bündeln A6 sind jeweils Gruppen aus vorzugsweise fünf einzelnen Mini-Bündeln A3 angeordnet. In den Freiräumen zwischen den Konventionellen Bündeln A6 können weitere einzelne Mini-Bündel A3 angeordnet sein. Es ist auch denkbar, dass die inneren Konventionellen Bündel A6 mindestens teilweise als Puck-Bündel A2 ausgestaltet werden.

Die Ausführungsform gemäss **Fig. 109** betrifft generell Borstenträger mit Puck-Bündeln A2, welche eine Ausnehmung/einen Freiraum 51 im Zentrum aufweisen.

Der in **Fig. 109** gezeigte Borstenträger 5 weist ein Puck-Bündel A2 mit einem zentral angeordneten Freiraum 51 auf. Der Freiraum ist krakenförmig ausgebildet, so dass das Puck-Bündel A2 entsprechende Einbuchtungen 52 und Ausbuchtungen 53 aufweist. Vorzugsweise weist das Puck-Bündel acht Ein- und Ausbuchtungen auf.

Die Ausführungsform gemäss **Fig. 110** betrifft generell Borstenträger mit Konventionellen Bündeln A6 in verschiedenen Grössen und/oder Mini-Bündeln A3, wobei die Bündel zufällig angeordnet sind.

Der in **Fig. 110** gezeigte Borstenträger 5 umfasst dieselben Bündelarten wie der Borstenträger gemäss **Fig. 108****,** d.h. Konventionelle Bündel A6 mit verschieden grossen Durchmessern und Mini-Bündel A3, welche einzeln oder in Gruppen angeordnet sein können. Vorliegend sind Konventionelle Bündel A6 mit drei verschieden grossen Durchmessern vorgesehen. Die räumliche Anordnung der Konventionellen Bündel A6 und der Mini-Bündel A3 folgt in dieser Ausführungsform keinem bestimmten Muster, sondern ist rein zufällig. Es ist auch hier denkbar, dass die Konventionellen Bündel A6 mindestens teilweise als Puck-Bündel A2 ausgestaltet werden.

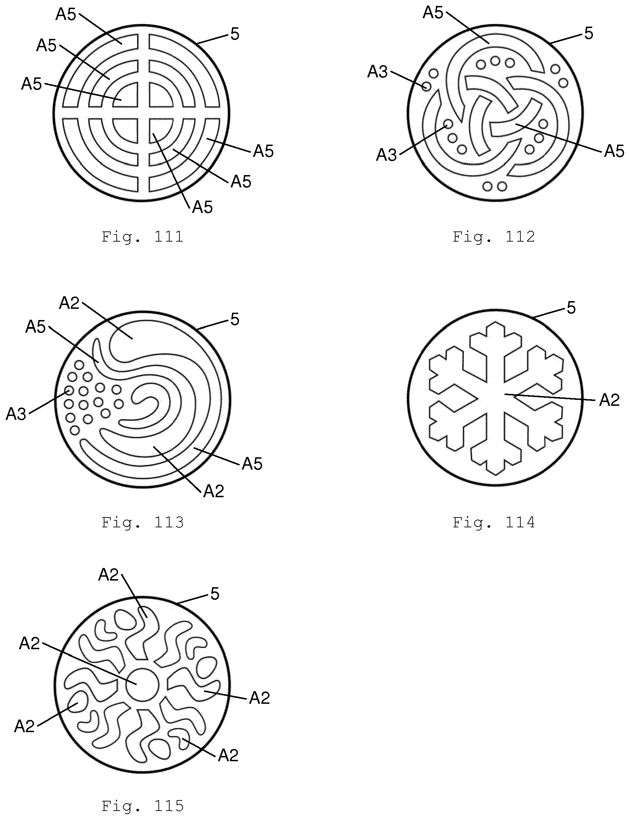

Die Ausführungsform gemäss **Fig. 111** betrifft generell Borstenträger mit verschiedenen Langen Bündeln A5, welche konzentrisch angeordnet sind, wobei die Langen Bündel A5 jeweils im Wesentlichen einen Kreissektor der Borstenträgeroberfläche abdecken. Vorzugsweise werden drei, vier oder fünf Kreissektoren gebildet.

In **Fig. 111** wird ein Borstenträger 5 dargestellt, welcher aus mehreren Langen Bündeln A5 besteht. Die Langen Bündel A5 sind dabei als bogenförmige Elemente ausgebildet, welche konzentrisch zueinander angeordnet sind. Dabei werden vier Kreissektoren gebildet, in welchen jeweils drei bogenförmige Elemente bzw. Lange Bündel A5 konzentrisch zueinander angeordnet sind. Die jeweils innen liegenden Langen Bündel A5 sind vorzugsweise in Form eines Viertelkreises ausgebildet. Die einzelnen Langen Bündel A5 sind bevorzugt gleichmässig zueinander beabstandet.

Vorliegend könnten allerdings kleinere Lange Bündel A5 beispielsweise im Mittleren Bereich auch als Konventionelle Bündel ausgeführt werden.

Die Ausführungsform gemäss **Fig. 112** betrifft generell Borstenträger mit Langen Bündeln A5 in zwei verschiedenen Grössen, welche ähnlich der Form eines Kelten-Musters angeordnet sind.

Der in **Fig. 112** gezeigte Borstenträger 5 umfasst Lange Bündel A5 sowie vorzugsweise auch Mini-Bündel A3. Die Langen Bündel A5 sind bogen- oder auch sichelförmig ausgebildet und liegen vorzugsweise in zwei verschiedenen Grössen, d.h. zwei verschiedenen Bogenlängen, vor. Die Langen Bündel A5 sind dabei in Form eines Kelten-Musters angeordnet, wobei in den Freiräumen einzelne oder kleinere Gruppen (vorzugsweise Zweier- oder Dreier-Gruppen) von Mini-Bündeln angeordnet sind. Die kürzeren Langen Bündel A5 sind dabei zentral angeordnet und gegeneinander verdreht und werden von den grösseren Langen Bündeln A5 umschlossen, welche ebenfalls gegeneinander verdreht sind. Die Bogenrundungen der Langen Bündel A5 zeigen dabei jeweils nach aussen.

Die Ausführungsform gemäss **Fig. 113** betrifft generell Borstenträger mit Langen Bündeln A5, welche in Puck-Bündel A2 übergehen und ineinandergeschlungen sind. Mini-Bündel A3 füllen vorzugsweise verbleibende Leerräume aus.

In **Fig. 113** wird ein Borstenträger 5 veranschaulicht, welcher Lange Bündel A5 umfasst, welche in Puck-Bündel A2 übergehen. Diese kombinierten Bündel sind zudem ineinander verschlungen. Vorliegend sind drei Lange Bündel A5 vorgesehen. Die Freiräume werden von mehreren Mini-Bündeln A3 ausgefüllt.

Die Ausführungsform gemäss **Fig. 114** betrifft generell Borstenträger mit einem Puck-Bündel A2 in Form einer Schneeflocke.

Der Borstenträger nach **Fig. 114** umfasst ein Puck-Bündel A2 welches in Form einer Schneeflocke mit vorzugsweise sechs Armen mit jeweils drei freien Enden ausgebildet ist.

Die Ausführungsform gemäss **Fig. 115** betrifft generell Borstenträger mit verschiedenen Formen von Puck-Bündeln A2, welche in einer Anordnung kombiniert werden.

In **Fig. 115** wird ein Borstenträger gezeigt, welcher mehrere unterschiedlich geformte Puck-Bündel A2 aufweist. Ein rundes Puck-Bündel A2 ist dabei zentral auf dem Borstenträger angeordnet und von mehreren S-förmigen und von innen nach aussen ausgerichteten Puck-Bündeln A2 umgeben. Zwischen den S-förmigen Puck-Bündeln sind im äusseren Bereich des Borstenträgers 5 kleinere runde und/oder nierenförmige Puck-Bündel A2 angeordnet. Vorliegend sind vorzugsweise vier Paare von im Wesentlichen spiegelbildlich zueinander ausgebildeten S-förmigen Puck-Bündeln A2 vorgesehen, welche zwei kleinere runde und/oder nierenförmige Puck-Bündel A2 zwischen sich aufnehmen.

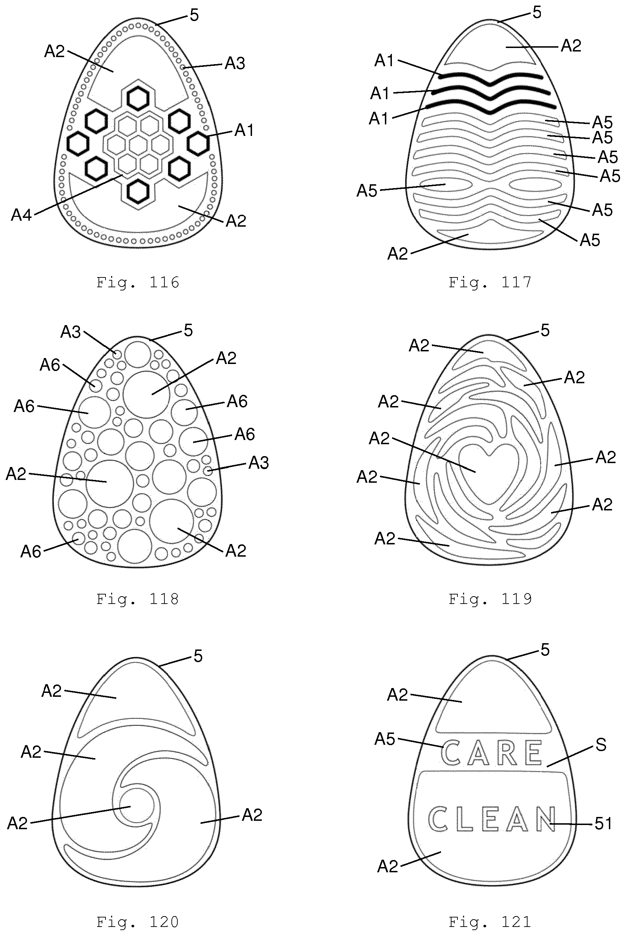

Die **Fig. 116** - **123** zeigen schliesslich ovale oder eiförmige Borstenträger für Gesichtsbürsten, welche manuell oder elektrisch betrieben werden können.

Die Ausführungsform gemäss **Fig. 116** betrifft generell Borstenträger mit zwei grösseren Puck-Bündeln A2, einem vorne und einem hinten, welche ein wabenförmiges Raster-Bündel A4 aus mehreren Raster-Bündel-Strukturelementen umrahmen, welches wiederum sich in Weichelementen und/oder gespritzten Borsten A1 fortsetzt, welche gleichartig zu den Raster-Bündel-Strukturelementen ausgebildet sind. Um die genannte Struktur herum sind Mini-Bündel A3 als quasi durchgehender Rahmen angeordnet.

Der Borstenträger 5 nach **Fig. 116** zeigt ein zentral angeordnetes wabenförmiges Raster-Bündel A4. Das Raster-Bündel A4 weist insgesamt vorzugsweise sieben sechseckige Raster-Bündel-Strukturelemente auf, wobei das zentrale Raster-Bündel-Strukturelement von sechs weiteren sechseckigen Raster-Bündel-Strukturelementen umgeben ist, so dass sich eine zusammenhängende Wabenform ergibt. Das Raster-Bündel A4 ist umgeben von weiteren, vorzugsweise acht, sechseckigen Weichelementen und/oder gespritzten Borsten A1 in Form von einzelnen Waben. Davon sind bevorzugt jeweils drei sechseckige Weichelemente A1 seitlich von dem Raster-Bündel A4 angeordnet und jeweils eines ober- bzw. unterhalb des Raster-Bündels A4.

Am oberen und unteren Ende des Borstenträgers 5 ist jeweils ein Puck-Bündel A2 angeordnet. Das obere Puck-Bündel A2 ist bogenförmig ausgebildet und umrahmt das obere sechseckige Weichelement und/oder gespritzte Borsten A1. Das untere Puck-Bündel A2 ist ebenfalls bogenförmig ausgebildet und umrahmt das untere sechseckige Weichelement und/oder gespritzten Borsten A1 sowie die beiden unteren seitlichen sechseckigen Weichelemente A1. Entlang des äusseren Randes des Borstenträgers 5 verläuft ein durchgehender Rahmen aus einzelnen Mini-Bündeln A3, welcher ggf. von den äusseren seitlichen sechseckigen Weichelementen und/oder gespritzten Borsten A1 kurz unterbrochen wird.

Die Ausführungsform gemäss **Fig. 117** betrifft generell Borstenträger mit je einem Puck-Bündel A2, welches am vorderen und am hinteren Ende des Borstenträgers angeordnet ist. Dazwischen sind am vorderen Ende Weichelemente und/oder gespritzte Borsten A1 in Form von Lamellen und anschliessend daran ähnlich geformte Lange Bündel A5 angeordnet.

Der Borstenträger nach **Fig. 117** zeigt eine Lamellenstruktur, welche in einem oberen Bereich des Borstenträgers 5 mehrere, vorzugsweise drei, lamellenförmige Weichelemente und/oder gespritzten Borsten A1 aufweist. Unterhalb der lamellenförmigen Weichelemente und/oder gespritzten Borsten A1 schliessen sich mehrere, vorzugsweise vier, ebenfalls lamellenförmige Lange Bündel A5 an, welche gleichermassen ausgerichtet sind wie die lamellenförmigen Weichelemente und/oder gespritzten Borsten A1.

In einem unteren Bereich des Borstenträgers 5 sind weitere, vorzugsweise zwei, lamellenförmige Lange Bündel A5 angeordnet, welche spiegelsymmetrisch angeordnet sind zu den oberhalb angeordneten lamellenförmigen Langen Bündeln A5. Zwischen dem Paar von lamellenförmigen Langen Bündeln A5, welches sich direkt spiegelbildlich gegenüberliegt können noch zwei ovale Lange Bündel A5 angeordnet sein. Am oberen sowie am unteren Ende des Borstenträgers 5 werden die lamellenförmigen Langen Bündel A5 jeweils durch ein Puck-Bündel A2 begrenzt, welches an seiner Innenseite der Kontur der lamellenförmigen Weichelemente und/oder gespritzten Borsten A1 bzw. der lamellenförmigen Langen Bündel A5 folgt.

Die ovalen Langen Bündel A5 können auch als Puck-Bündel ausgestaltet sein.

Die Ausführungsform gemäss **Fig. 118** betrifft generell Borstenträger mit verschieden grossen Bündeln, welche in zufälliger Weise auf dem Borstenträger integriert sind. Dabei sind die kleinsten Bündel Mini-Bündel A3, es folgen verschiedene Grössen von Konventionellen Bündeln A6 sowie als grösstes Element eines oder mehrere Puck-Bündel A2.

In **Fig. 118** wird ein Borstenträger 5 gezeigt, bei dem Puck-Bündel A2, Mini-Bündel A3 sowie Konventionelle Bündel A6 in zufälliger Weise angeordnet sind. Die durchwegs runden Bündel weisen unterschiedliche Durchmesser bzw. unterschiedliche Grössen auf, wobei die Mini-Bündel A3 die kleinsten Bündel sind und die Puck-Bündel A2 die grössten Bündel. Bei den übrigen Bündeln handelt es sich um Konventionelle Bündel A6, welche in mehreren, vorzugsweise vier, Grössen vorliegen.

Die Ausführungsform gemäss **Fig. 119** betrifft generell Borstenträger mit verschieden geformten und verschieden grossen Puck-Bündeln A2, welche als Borstenfeld um ein Puck-Bündel A2 in Herzform herum angeordnet sind.

In **Fig. 119** wird ein Borstenträger 5 gezeigt, bei dem zentral ein herzförmiges Puck-Bündel A2 angeordnet ist, welches von weiteren verschieden geformten Puck-Bündeln A2 umgeben ist. Die weiteren Puck-Bündel A2 weisen im Wesentlichen gebogene Formen auf und sind etwa schalenartig um das herzförmige Puck-Bündel A2 herum angeordnet.

Die Ausführungsform gemäss **Fig. 120** betrifft generell Borstenträger auf welchem mehrere Puck-Bündeln A2 angeordnet sind. Im oberen Bereich ein grosses Puck-Bündel A2 in Form eines Deltas. Darunter ein kreisrundes Puck-Bündel A2, welches von zwei Puck-Bündeln A2 in Ying-Yang-Form umgeben ist.

Der Borstenträger 5 nach **Fig. 120** zeigt ein zentral angeordnetes rundes Puck-Bündel A2, welches von zwei Ying-Yang-förmig angeordneten Puck-Bündeln A2 umgeben ist. Am oberen Ende des Borstenträgers 5 ist korrespondierend mit der Ying-Yang-Form ein deltaförmiges Puck-Bündel A2 angeordnet.

Die Ausführungsform gemäss **Fig. 121** betrifft generell Borstenträger, bei welchen oben und unten je ein Puck-Bündel A2 angeordnet ist. Das untere Puck-Bündel A2 weist eine Ausnehmung 51 in Form eines Schriftzugs auf. Ein weiterer Schriftzug ist in Form von einem oder mehreren Langen Bündel(n) A5 zwischen den beiden Puck-Bündeln A2 angeordnet.

In **Fig. 121** wird ein Borstenträger 5 illustriert, welcher in seinem unteren Bereich ein Puck-Bündel A2 mit einer Ausnehmung 51 in Form eines Schriftzuges aufweist. Im oberen Bereich des Borstenträgers 5 ist ein weiteres Puck-Bündel A2 angeordnet. In dem Spalt S zwischen den beiden Puck-Bündeln A2 ist ein weiterer Schriftzug in Form von mehreren Langen Bündeln A5 angeordnet.

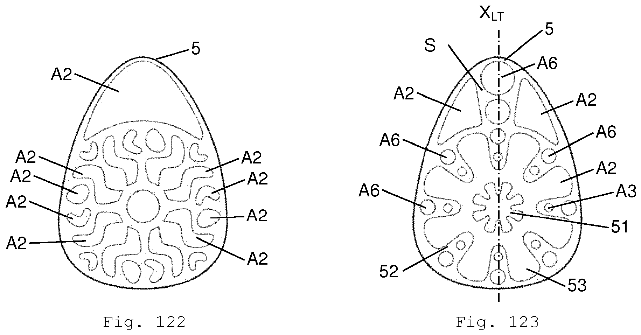

Die Ausführungsform gemäss **Fig. 122** betrifft generell Borstenträger, welche eine wenigstens teilweise symmetrische Anordnung von Puck-Bündeln A2 in verschiedenen Formen, wie etwa rund, oval, S-förmig und/oder nierenförmig, zum Gegenstand hat.

In **Fig. 122** wird ein Borstenträger veranschaulicht, welcher mehrere unterschiedlich geformte Puck-Bündel A2 aufweist. Ein rundes Puck-Bündel A2 ist dabei im Wesentlichen zentral auf dem Borstenträger 5 angeordnet und von mehreren S-förmigen und von innen nach aussen ausgerichteten Puck-Bündeln A2 umgeben. Zwischen den S-förmigen Puck-Bündeln sind im äusseren Bereich des Borstenträgers 5 kleinere runde und/oder nierenförmige Puck-Bündel A2 angeordnet. Vorliegend sind vorzugsweise vier Paare von in etwa spiegelbildlich zueinander ausgebildeten S-förmigen Puck-Bündeln A2 vorgesehen, welche zwei kleinere runde und/oder nierenförmige Puck-Bündel A2 zwischen sich aufnehmen. Am oberen Ende des Borstenträgers 5 ist zudem ein etwa deltaförmiges Puck-Bündel A2 angeordnet.

In **Fig. 123** wird schliesslich noch ein Borstenträger 5 gezeigt, welcher aus einer Kombination von Mini-Bündeln A3, Konventionellen Bündeln A6, Puck-Bündeln A2 und Puck-Bündeln mit Ausnehmung bzw. Freiraum 51 besteht. Der Borstenträger weist dabei ein im Wesentlichen zentral angeordnetes Puck-Bündel A2 mit einem im Wesentlichen zentral angeordneten Freiraum 51 auf. Das Puck-Bündel A2 und der Freiraum 51 sind krakenförmig ausgebildet. Das Puck-Bündel A2 weist entsprechende Einbuchtungen 52 und Ausbuchtungen 53 auf (sowohl im Freiraum 51 wie auch an seiner Aussenkante), wobei in den äusseren Einbuchtungen vorzugsweise je ein Mini-Bündel A3 und ein Konventionelles Bündel A6 angeordnet sind. Vorzugsweise weist das Puck-Bündel A2 aussen wie innen acht Ein- und Ausbuchtungen auf. Am oberen Ende des Borstenträgers 5 sind auf der linken sowie auf der rechten Seite je eine Hälfte eines etwa deltaförmigen Puck-Bündels A2 angeordnet. In dem Spalt S zwischen diesen beiden halb-deltaförmigen Puck-Bündeln A2 sind zwei Konventionelle Bündel A6 angeordnet. Dabei weist das Konventionelle Bündel A6 an der Spitze des Borstenträgers 5 bevorzugt einen grösseren Durchmesser auf als das darunter gelegene Konventionelle Bündel _A6. Die in den Einbuchtungen 52 angeordneten Konventionellen Bündel A6 weisen bevorzugt den kleinsten Durchmesser bei den Konventionellen Bündeln A6 auf. Weiter vorzugsweise sind im oberen Bereich des Borstenträgers 5 entlang der Längsachse X_{LT} mit aufsteigend grösserem Durchmesser angeordnet ein Mini-Bündel sowie drei Konventionelle Bündel, welche sich von der obersten Einbuchtung 52 bis in den Spalt S erstrecken.

Selbstverständlich sind die in dieser Schrift gezeigten Ausgestaltungs-Varianten beispielhaft. Im Rahmen der vorliegenden Erfindung können die einzelnen Ausprägungen und Elemente dieser Ausgestaltungsvarianten mit anderen Ausgestaltungsvarianten kombiniert werden und ohne den Rahmen dieser Erfindung zu verlassen.

Die gemachten Beschreibungen für spezifische Figuren lassen sich selbstverständlich auch auf andere Figuren übertragen, die gleiche oder ähnliche Ausprägungen zeigen und in welchen die Ausprägungen ggf. nicht im gleichen Detail beschrieben sind.

### Bezugszeichenliste:

- 1: Grundkörper
- 2: Kopfteil
- 2a: Rahmen
- 3: Halsteil
- 4: Griffteil
- 4a: Aufnahmeausnehmung (im Griffteil)
- 5: Borstenträger
- 5a: Borstenträgerteilsegment
- 5b: Borstenträgerteilsegment
- 5c: Borstenträgerteilsegment
- 5d: Borstenträgerteilsegment
- 5': Borstenträger bzw. Kopfplättchen
- 6: Begrenzungsrand
- 6a: freies Ende bzw. Unterkante Begrenzungsrand
- 7: Borstenlöcher (rund)
- 7': Öffnungen (andere Formen)
- 8: Borstenträgeraussparung
- 9: Borstenbündel (rund)
- 9': Borsten (einzeln)
- 9": Borstenbündel (andere Formen)
- 9a: Befestigungsenden
- 9b: freie Enden
- 10: Borstenschmelze/Schmelzteppich/Schmelzbad
- 10': alternatives bzw. modifiziertes Montageende
- 11: Abdeckmaterial (Rückseite)
- 11': Abdeckmaterial (Vorderseite)
- 12: Unterbrechung im Begrenzungsrand
- 13: Filmscharnier/Bereich mit reduzierter Materialdicke
- 14: Abdeckung Filmscharnier
- 15: Dämpfungselement
- 16: Reinigungselemente
- 17: ringförmige Öffnung
- 18: Kanal (im Halsteil)
- 19: Borstenfeld
- 20: erste Werkzeughälfte
- 21: Einlegeaussparung
- 22: Borstenausnehmungen
- 23: Borsteneinlassöffnungen
- 24: Rand (erste Werkzeughälfte)
- 25: Schnittstelle
- 26: Stift
- 26a: Stiftkopf
- 26b: Stiftschaft
- 26c: freies Stiftende / mit konkaver Rundung
- 27: Werkzeugkörper
- 28: freie Bereiche
- 30: zweite Werkzeughälfte
- 31: Hohlraum
- 32: Rand (zweite Werkzeughälfte)
- 33: Werkzeugkörper
- 50: freies Ende Borstenträger
- 51: Ausnehmung / Freiraum
- 52: Einbuchtungen
- 53: Ausbuchtungen
- 54: Überschneidungsbereich
- 60: Halte-/Presswerkzeug
- 61: Vorsprünge
- 62: Bündelaufnahme
- 63: Einkerbung durch Verdrängung
- 64: Materialreservoir
- 65: Werkzeug (für exponierte Schmelze)
- 66: Freihalteelement
- 67: Heizelement (AFT)
- 68: Profilstifte
- 69: freiliegende bzw. exponierte Borstenschmelze
- A1: Weichelemente und/oder gespritzte Borsten
- A2: Puck-Bündel
- A3: Mini-Bündel
- A4: Raster-Bündel
- A5: Lange Bündel
- A6: Konventionelle Bündel
- AP: mögliche Anspritzpunkte für die Abdeckung
- A1': regelmässiges Fächer
- A1": Fächer mit stärkerem Zentrum A1‴schräges bzw. abgeknicktes Bündel
- B: Breite Borstenträger/Kopfteil (bzw. Kopfplättchen)
- D: Gesamtdicke Kopfteil (fertiges Bürstenprodukt)
- D_{A}: Schichtdicke Abdeckung
- D_{B}: Schichtdicke Borstenträger
- D_{S}: Schichtdicke Borstenschmelze/Schmelzteppich
- E: Einkerbungen
- H: Höhe Begrenzungsrand
- K: Spritzgiesskavität
- L₁: Länge Kopfteil
- L₂: Länge Grundkörper
- S: Spalt
- Sp: Schnittpunkt der Achsen
- T: Tiefe Borstenausnehmungen
- X: Längsachse
- X_{LT}: Längsachse Borstenträger
- X_{QT}: Querachse Borstenträger
- α: Winkel
- β: Neigungswinkel (Borsten)
- ϕ: Winkelbereich

## Patentansprüche

1. Bürstenprodukt, insbesondere Zahnbürste, aufweisend einen Grundkörper mit
einem Kopfteil (2) mit einer Vorder- und einer Rückseite, welches einen Borstenträger (5) mit einer Längsachse (X_{LT}) und einer Querachse (X_{QT}) sowie einem davon abstehenden Borstenfeld (19) umfasst, wobei das Borstenfeld (19) von zumindest einer Gruppe von Reinigungselementen (A1, A2, A3, A4, A5, A6) gebildet wird;
einem Griffteil (4); sowie
einem das Kopfteil (2) mit dem Griffteil (4) verbindenden Halsteil (3); wobei
der Borstenträger (5) ankerlos beborstet ist und wobei der Borstenträger (5) im Wesentlichen einen zentralen Trägerbereich, einen oberen Trägerbereich, einen unteren Trägerbereich, einen rechten Trägerbereich sowie einen linken Trägerbereich aufweist, in welchen die Gruppen von Reinigungselementen (A1, A2, A3, A4, A5, A6) angeordnet sind, wobei
im zentralen Trägerbereich die Reinigungselemente einer Gruppe von Reinigungselementen (A1, A2, A3, A4, A5, A6) im Wesentlichen symmetrisch angeordnet sind, im oberen Trägerbereich die Reinigungselemente einer Gruppe von Reinigungselementen (A1, A2, A3, A4, A5, A6) oberhalb der Querachse (X_{QT}) des Borstenträgers angeordnet sind, im unteren Trägerbereich die Reinigungselemente einer Gruppe von Reinigungselementen (A1, A2, A3, A4, A5, A6) unterhalb der Querachse (X_{QT}) des Borstenträgers angeordnet sind, im rechten Trägerbereich die Reinigungselemente einer Gruppe von Reinigungselementen (A1, A2, A3, A4, A5, A6) rechts von der Längsachse (X_{LT}) des Borstenträgers angeordnet sind und im linken Trägerbereich die Reinigungselemente einer Gruppe von Reinigungselementen (A1, A2, A3, A4, A5, A6) links von der Längsachse (X_{LT}) des Borstenträgers angeordnet sind, wobei
das Borstenfeld (19) von vier verschiedenen Gruppen von Reinigungselementen (A2, A4, A5, A6) gebildet wird, wobei die erste von den vier Gruppen von Reinigungselementen Puck-Bündel (A2) umfasst, die zweite von den vier Gruppen von Reinigungselementen Raster-Bündel (A4) umfasst, die dritte von den vier Gruppen von Reinigungselementen Lange Bündel (A5) umfasst und die vierte von den vier Gruppen von Reinigungselementen Konventionelle Bündel (A6) umfasst, wobei
die Raster-Bündel der zweiten von den vier Gruppen von Reinigungselementen (A4) eine aus Borsten gebildete raster- oder wabenförmige Struktur aufweisen, wobei die Seitenwände dieser Struktur eine Breite von höchstens 12 Borsten, vorzugsweise von höchstens 8 Borsten und besonders bevorzugt von höchstens 5 Borsten aufweisen, wobei die Raster-Bündel der zweiten von den vier Gruppen von Reinigungselementen (A4) spiegelsymmetrisch zur Längsachse (X_{LT}) des Borstenträgers (5) im zentralen Trägerbereich angeordnet sind, und wobei jedenfalls die Raster-Bündel (A4) aneinander liegende Borsten aufweisen.

2. Bürstenprodukt gemäss Anspruch 1, **dadurch gekennzeichnet, dass** in jedem der Trägerbereiche eine oder mehrere der Gruppen von Reinigungselementen ( A2, A4, A5, A6) angeordnet sein können.

3. Bürstenprodukt gemäss einem der Ansprüche 1 bis 2, **dadurch gekennzeichnet, dass** die Puck-Bündel der ersten Gruppe von Reinigungselementen (A2) eine Fläche auf dem Borstenträger (5, 5') von zumindest 25 mm², vorzugsweise zumindest 50 mm² und besonders bevorzugt von zumindest 75 mm² einnehmen.

4. Bürstenprodukt gemäss einem der Ansprüche 1 bis 3, **dadurch gekennzeichnet, dass** die Langen Bündel der dritten Gruppe von Reinigungselementen (A5) eine zusammenhängende Struktur aus zumindest 6 Picks, vorzugsweise zumindest 10 Picks und besonders bevorzugt zumindest 15 Picks umfassen.

5. Bürstenprodukt gemäss einem der Ansprüche 1 bis 4, **dadurch gekennzeichnet, dass** die Konventionellen Bündel der vierten Gruppe von Reinigungselementen (A6) höchstens 5 Picks, vorzugsweise 3 Picks und besonders bevorzugt 1 Pick umfassen.

6. Bürstenprodukt gemäss einem der Ansprüche 1 bis 5, **dadurch gekennzeichnet, dass** das Kopfteil (2), das Griffteil (4) und/oder das Halsteil (3) aus mindestens einer Hart- und/oder einer oder mehreren Weichmaterialkomponenten gebildet ist bzw. sind.

7. Bürstenprodukt gemäss Anspruch 6, **dadurch gekennzeichnet, dass** die Hartmaterialkomponente(n) aus Styrolpolymerisaten wie Styrolacrylnitril (SAN), Polystyrol (PS), Acrylnitrilbutadienstyrol (ABS), Styrolmethylmethacrylat (SMMA) oder Styrolbudien (SB); Polyolefinen wie Polypropylen (PP) oder Polyethylen (PE) (vorzugsweise auch in Form von High Density Polyethylen (HDPE) oder Low Density Polyethylen (LDPE)); Polyestern wie Polyethylenterephthalat (PET) in Form von säuremodifiziertem Polyethylenteraphthalat (PETA) oder glycolmodifiziertem Polyethylenterephthalat(PETG), Polybutylenterephthalat (PBT), säuremodifiziertem Polycyclohexylendimethylenterephthalat (PCT-A) oder glycolmodifiziertem Polycyclohexylendimethylenterephthalat (PCT-G); Cellulosederivaten wie Celluloseacetat (CA), Celluloseacetobutyrat (CAB), Celluloseproprionat (CP), Celluloseacetatphthalat (CAP) oder Cellulosebutyrat (CB); Polyamiden (PA) wie PA 6.6, PA 6.10 oder PA 6.12; Polymethylmethacrylat (PMMA); Polycarbonat (PC); Polyoxymethylen (POM); Polyvinychlorid (PVC); Polyurethan (PUR) und/oder aus Polyamid (PA) gebildet ist bzw. sind.

8. Bürstenprodukt gemäss Anspruch 6, **dadurch gekennzeichnet, dass** die Hartmaterialkomponente aus Polypropylen (PP) mit einem Elastizitätsmodul von 1000 bis 2400 N/mm², vorzugsweise von 1200 bis 2000 N/mm² und besonders bevorzugt von 1300 bis 1800 N/mm² gebildet ist.

9. Bürstenprodukt gemäss Anspruch 6, **dadurch gekennzeichnet, dass** die Weichmaterialkomponente(n) aus einem thermoplastischem Styrolelastomer (TPE-S) (vorzugsweise einem Styrolethylenbutylenstyrolcopolymer (SEBS) oder Styrolbutadienstyrolcopolymer (SBS)); einem thermoplastischem Polyurethanelastomer (TPE-U); einem thermoplastischem Polyamidelastomer (TPE-A); einem thermoplastischem Polyolefinelastomer (TPE-O); thermoplastischem Polyesterelastomer (TPE-E) und/oder Silikonen gebildet ist bzw. sind.

## Claims

1. Brush product, in particular a toothbrush, comprising a main body having a head part (2) which has a front side and a rear side and which has a bristle carrier (5) having a longitudinal axis (X_{LT}) and a transverse axis (X_{QT}) and a bristle field (19) protruding therefrom, wherein the bristle field (19) is formed by at least one group of cleaning elements (A1, A2, A3, A4, A5, A6);
a handle part (4); and
a neck part (3) which connects the head part (2) to the handle part (4); wherein
the bristle carrier (5) is provided with bristles in an anchorless manner and wherein the bristle carrier (5) substantially has a central carrier region, an upper carrier region, a lower carrier region, a right-hand carrier region and a left-hand carrier region in which the groups of cleaning elements (A1, A2, A3, A4, A5, A6) are arranged, wherein
in the central carrier region the cleaning elements of a group of cleaning elements (A1, A2, A3, A4, A5, A6) are arranged substantially symmetrically, in the upper carrier region the cleaning elements of a group of cleaning elements (A1, A2, A3, A4, A5, A6) are arranged above the transverse axis (X_{QT}) of the bristle carrier, in the lower carrier region the cleaning elements of a group of cleaning elements (A1, A2, A3, A4, A5, A6) are arranged below the transverse axis (X_{QT}) of the bristle carrier, in the right-hand carrier region the cleaning elements of a group of cleaning elements (A1, A2, A3, A4, A5, A6) are arranged to the right of the longitudinal axis (X_{LT}) of the bristle carrier, and in the left-hand carrier region the cleaning elements of a group of cleaning elements (A1, A2, A3, A4, A5, A6) are arranged to the left of the longitudinal axis (X_{LT}) of the bristle carrier, wherein
the bristle field (19) is formed by four different groups of cleaning elements (A2, A4, A5, A6), wherein the first of the four groups of cleaning elements comprises puck bundles (A2), the second of the four groups of cleaning elements comprises grid bundles (A4), the third of the four groups of cleaning elements comprises long bundles (A5) and the fourth of the four groups of cleaning elements comprises conventional bundles (A6), wherein the grid bundles of the second of the four groups of cleaning elements (A4) have a grid or honeycomb structure formed from bristles, wherein the lateral walls of this structure have a width of at most 12 bristles, preferably at most 8 bristles and particularly preferably at most 5 bristles, wherein
the grid bundles of the second of the four groups of cleaning elements (A4) are arranged mirror-symmetrically with respect to the longitudinal axis (X_{LT}) of the bristle carrier (5) in the central carrier region, and wherein the grid bundles (A4) have bristles which abut one another in any case.

2. Brush product according to claim 1, **characterized in that** one or more of the groups of cleaning elements (A2, A4, A5, A6) can be arranged in each of the carrier regions.

3. Brush product according to either claim 1 or claim 2, **characterized in that** the puck bundles of the first group of cleaning elements (A2) occupy an area on the bristle carrier (5, 5') of at least 25 mm², preferably at least 50 mm² and particularly preferably at least 75 mm².

4. Brush product according to any of claims 1 to 3, **characterized in that** the long bundles of the third group of cleaning elements (A5) comprise a contiguous structure of at least 6 picks, preferably at least 10 picks and particularly preferably at least 15 picks.

5. Brush product according to any of claims 1 to 4, **characterized in that** the conventional bundles of the fourth group of cleaning elements (A6) comprise at most 5 picks, preferably 3 picks and particularly preferably 1 pick.

6. Brush product according to any of claims 1 to 5, **characterized in that** the head part (2), the handle part (4) and/or the neck part (3) is or are formed from at least one hard material component and/or one or more soft material components.

7. Brush product according to claim 6, **characterized in that** the hard material component(s) is or are formed from styrene polymerizates such as styrene acrylonitrile (SAN), polystyrene (PS), acrylonitrile butadiene styrene (ABS), styrene methyl methacrylate (SMMA) or styrene butadiene (SB); polyolefins such as polypropylene (PP) or polyethylene (PE) (preferably also in the form of high density polyethylene (HDPE) or low density polyethylene (LDPE)); polyesters such as polyethylene terephthalate (PET) in the form of acid-modified polyethylene terephthalate (PETA) or glycol-modified polyethylene terephthalate (PETG), polybutylene terephthalate (PBT), acid-modified polycyclohexylene dimethylene terephthalate (PCT-A) or glycol-modified polycyclohexylene dimethylene terephthalate (PCT-G); cellulose derivatives such as cellulose acetate (CA), cellulose acetate butyrate (CAB), cellulose proprionate (CP), cellulose acetate phthalate (CAP) or cellulose butyrate (CB); polyamides (PA) such as PA 6.6, PA 6.10 or PA 6.12; polymethyl methacrylate (PMMA); polycarbonate (PC); polyoxymethylene (POM); polyvinyl chloride (PVC); polyurethane (PUR) and/or from polyamide (PA).

8. Brush product according to claim 6, **characterized in that** the hard material component is formed from polypropylene (PP) with a modulus of elasticity of from 1000 to 2400 N/mm², preferably from 1200 to 2000 N/mm² and particularly preferably from 1300 to 1800 N/mm².

9. Brush product according to claim 6, **characterized in that** the soft material component(s) is or are formed from a thermoplastic styrene elastomer (TPE-S) (preferably a styrene ethylene butylene styrene copolymer (SEBS) or styrene butadiene styrene copolymer (SBS)); a thermoplastic polyurethane elastomer (TPE-U); a thermoplastic polyamide elastomer (TPE-A); a thermoplastic polyolefin elastomer (TPE-O); a thermoplastic polyester elastomer (TPE-E) and/or silicones.

## Revendications

1. Produit de brosse, en particulier brosse à dents, présentant un corps de base comportant une partie de tête (2) comportant une face avant et une face arrière et comprenant un support de poils (5) comportant un axe longitudinal (X_{LT}) et un axe transversal (X_{QT}) ainsi qu'un champ de poils (19) faisant saillie à partir de celui-ci, le champ de poils (19) étant formé par au moins un groupe d'éléments de nettoyage (A1, A2, A3, A4, A5, A6) ;
une partie de manche (4) ; ainsi que
une partie de col (3) reliant la partie de tête (2) à la partie de manche (4) ;
le support de poils (5) étant garni de poils sans ancrage et le support de poils (5) présentant sensiblement une zone de support centrale, une zone de support supérieure, une zone de support inférieure, une zone de support droite ainsi qu'une zone de support gauche, dans lesquelles les groupes d'éléments de nettoyage (A1, A2, A3, A4, A5, A6) sont disposés,
les éléments de nettoyage d'un groupe d'éléments de nettoyage (A1, A2, A3, A4, A5, A6) étant disposés de manière sensiblement symétrique dans la zone de support centrale, les éléments de nettoyage d'un groupe d'éléments de nettoyage (A1, A2, A3, A4, A5, A6) étant disposés au-dessus de l'axe transversal (X_{QT}) du support de poils dans la zone de support supérieure, les éléments de nettoyage d'un groupe d'éléments de nettoyage (A1, A2, A3, A4, A5, A6) étant disposés en dessous de l'axe transversal (X_{QT}) du support de poils dans la zone de support inférieure, les éléments de nettoyage d'un groupe d'éléments de nettoyage (A1, A2, A3, A4, A5, A6) étant disposés à droite de l'axe longitudinal (X_{LT}) du support de poils dans la zone de support droite, et les éléments de nettoyage d'un groupe d'éléments de nettoyage (A1, A2, A3, A4, A5, A6) étant disposés à gauche de l'axe longitudinal (X_{LT}) du support de poils dans la zone de support gauche,
le champ de poils (19) étant formé de quatre groupes différents d'éléments de nettoyage (A2, A4, A5, A6), le premier des quatre groupes d'éléments de nettoyage comprenant des paquets en demi-cercles (A2), le deuxième des quatre groupes d'éléments de nettoyage comprenant des paquets en grille (A4), le troisième des quatre groupes d'éléments de nettoyage comprenant des paquets longs (A5) et le quatrième des quatre groupes d'éléments de nettoyage comprenant des paquets conventionnels (A6),
les paquets en grille du deuxième des quatre groupes d'éléments de nettoyage (A4) présentant une structure en forme de grille ou de nid d'abeilles formée de poils, les parois latérales de ladite structure présentant une largeur d'au plus 12 poils, de préférence d'au plus 8 poils et de manière particulièrement préférée d'au plus 5 poils,
les paquets en grille du deuxième des quatre groupes d'éléments de nettoyage (A4) étant disposés symétriquement en miroir par rapport à l'axe longitudinal (X_{LT}) du support de poils (5) dans la zone de support centrale, et, dans tous les cas, les paquets en grille (A4) présentant des poils adjacents les uns aux autres.

2. Produit de brosse selon la revendication 1, **caractérisé en ce qu'**un ou plusieurs des groupes d'éléments de nettoyage (A2, A4, A5, A6) peuvent être disposés dans chacune des zones de support.

3. Produit de brosse selon l'une des revendications 1 à 2, **caractérisé en ce que** les paquets en demi-cercles du premier groupe d'éléments de nettoyage (A2) occupent une surface sur le support de poils (5, 5') d'au moins 25 mm², de préférence d'au moins 50 mm² et de manière particulièrement préférée d'au moins 75 mm².

4. Produit de brosse selon l'une des revendications 1 à 3, **caractérisé en ce que** les paquets longs du troisième groupe d'éléments de nettoyage (A5) comprennent une structure cohésive d'au moins 6 pics, de préférence d'au moins 10 pics et de manière particulièrement préférée d'au moins 15 pics.

5. Produit de brosse selon l'une des revendications 1 à 4, **caractérisé en ce que** les paquets conventionnels du quatrième groupe d'éléments de nettoyage (A6) comprennent au plus 5 pics, de préférence 3 pics et de manière particulièrement préférée 1 pic.

6. Produit de brosse selon l'une des revendications 1 à 5, **caractérisé en ce que** la partie de tête (2), la partie de manche (4) et/ou la partie de col (3) sont formées à partir d'au moins un composant en matériau dur et/ou un ou plusieurs composants en matériau souple.

7. Produit de brosse selon la revendication 6, **caractérisé en ce que** le ou les composants en matériau dur sont formés à partir de polymères de styrène tels que le styrène acrylonitrile (SAN), le polystyrène (PS), l'acrylonitrile butadiène styrène (ABS), le styrène méthyl méthacrylate (SMMA) ou le styrène budiène (SB) ; de polyoléfines telles que le polypropylène (PP) ou le polyéthylène (PE) (de préférence également sous forme de polyéthylène à haute densité (HDPE) ou de polyéthylène à basse densité (LDPE)) ; de polyesters tels que le polyéthylène téréphtalate (PET) sous forme de polyéthylène téréphtalate modifié à l'acide (PETA) ou de polyéthylène téréphtalate modifié au glycol (PETG), le polybutylène téréphtalate (PBT), le polycyclohexylène diméthylène téréphtalate modifié à l'acide (PCT-A) ou le polycyclohexylène diméthylène téréphtalate modifié au glycol (PCT-G) ; de dérivés de cellulose tels que l'acétate de cellulose (CA), l'acétate butyrate de cellulose (CAB), le propionate de cellulose (CP), l'acétate phtalate de cellulose (CAP) ou le butyrate de cellulose (CB) ; de polyamides (PA) tels que PA 6.6, PA 6.10 ou PA 6.12 ; de polyméthacrylate de méthyle (PMMA) ; de polycarbonate (PC) ; de polyoxyméthylène (POM) ; de chlorure de polyvinyle (PVC) ; de polyuréthane (PUR) et/ou de polyamide (PA).

8. Produit de brosse selon la revendication 6, **caractérisé en ce que** le composant en matériau dur est formé à partir de polypropylène (PP) comportant un module d'élasticité de 1 000 à 2 400 N/mm², de préférence de 1 200 à 2 000 N/mm² et de manière particulièrement préférée de 1 300 à 1 800 N/mm².

9. Produit de brosse selon la revendication 6, **caractérisé en ce que** le ou les composants en matériau souple sont formés à partir d'un élastomère thermoplastique de styrène (TPE-S) (de préférence un copolymère styrène-éthylène-butylène-styrène (SEBS) ou un copolymère styrène-butadiène-styrène (SBS)) ; d'un élastomère thermoplastique de polyuréthane (TPE-U) ; d'un élastomère thermoplastique de polyamide (TPE-A) ; d'un élastomère thermoplastique de polyoléfine (TPE-O) ; d'un élastomère thermoplastique de polyester (TPE-E) et/ou de silicone.
